(19) **Europäisches Patentamt / European Patent Office / Office européen des brevets**

(11) **EP 2 564 518 B1**

(12) **EUROPEAN PATENT SPECIFICATION**

(45) Date of publication and mention of the grant of the patent:
**16.03.2022 Bulletin 2022/11**

(21) Application number: **11775332.7**

(22) Date of filing: **02.05.2011**

(51) International Patent Classification (IPC):
**H04B 7/04** *(2017.01)*

(52) Cooperative Patent Classification (CPC):
**H04B 7/0639; H04B 7/0456; H04B 7/0478; H04B 7/0482**

(86) International application number:
**PCT/KR2011/003272**

(87) International publication number:
**WO 2011/136627 (03.11.2011 Gazette 2011/44)**

(54) **MULTIPLE INPUT MULTIPLE OUTPUT COMMUNICATION SYSTEM USING CODEBOOK CORRESPONDING TO EACH REPORTING MODE**

**MIMO-KOMMUNIKATIONSSYSTEM MIT EINEM DEM JEWEILIGEN BERICHTSMODUS ENTSPRECHENDEN CODEBOOK**

**SYSTÈME DE COMMUNICATION ENTRÉE MULTIPLE SORTIE MULTIPLE UTILISANT UN LIVRE DE CODES CORRESPONDANT À CHAQUE MODE DE RAPPORT**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.04.2011 KR 20110031200**
**30.12.2010 US 428348 P**
**01.10.2010 US 388736 P**
**16.08.2010 US 373942 P**
**21.06.2010 US 356768 P**
**17.06.2010 US 355681 P**
**30.04.2010 US 329634 P**

(43) Date of publication of application:
**06.03.2013 Bulletin 2013/10**

(60) Divisional application:
**21188034.9 / 3 920 427**

(73) Proprietor: **Samsung Electronics Co., Ltd.**
**Suwon-si, Gyeonggi-do 443-742 (KR)**

(72) Inventors:
• **CHOI, Jun Il**
**Seoul 137-069 (KR)**
• **CLERCKX, Bruno**
**Seoul 137-070 (KR)**
• **KIM, Ki Il**
**Yongin-si**
**Gyeonggi-do 446-907 (KR)**

(74) Representative: **Nederlandsch Octrooibureau**
**P.O. Box 29720**
**2502 LS The Hague (NL)**

(56) References cited:
WO-A1-2009/096708    US-A1- 2008 094 281
US-A1- 2009 006 925    US-A1- 2009 189 812
US-A1- 2009 262 695    US-A1- 2010 074 353

• HUAWEI: "Downlink 8TX codebook", 3GPP DRAFT; R1-101066 DOWNLINK 8TX CODEBOOK, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. San Francisco, USA; 20100222, 16 February 2010 (2010-02-16), XP050418635, [retrieved on 2010-02-16]

- TEXAS INSTRUMENTS: "Possible Refinement on 8Tx Codebook Design", 3GPP DRAFT; R1-102104 TI 8TX MIMO, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Beijing, china; 20100412, 6 April 2010 (2010-04-06), XP050419422, [retrieved on 2010-04-06]
- FUJITSU: "8 Tx Codebook for LET-Advanced", 3GPP DRAFT; R1-101024, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. San Francisco, USA; 20100222, 16 February 2010 (2010-02-16), XP050418598, [retrieved on 2010-02-16]
- CATT: "Codebook design for 8Tx DL MIMO", 3GPP DRAFT; R1-100890, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. San Francisco, USA; 20100222, 16 February 2010 (2010-02-16), XP050418493, [retrieved on 2010-02-16]

## Description

### Technical Field

The following description relates to a multiple input multiple output (MIMO) communication system using a codebook, and more particularly, to codebooks corresponding to respective reporting modes used by a transmitter and a receiver included in a MIMO communication system.

### Background Art

A multiple input multiple output (MIMO) communication system may include a transmitter and at least one receiver. For example, the MIMO communication system may include a base station and at least one terminal. In a downlink, the base station may perform a functionality as the transmitter, and each of the at least one terminal may perform a functionality as the receiver.

The transmitter or the receiver operating in the MIMO communication system may include a plurality of antennas, and may transmit and receive data using the plurality of antennas. A wireless channel may be formed between each transmit antenna of the transmitter and each receive antenna of the receiver. The transmitter and the receiver may share information associated with the wireless channel, thereby achieving a high data rate.

In a closed-loop MIMO communication system, feedback information to be shared between the transmitter and the receiver may include a rank indicator indicating a preferred rank of the receiver, a precoding matrix indicator indicating a preferred precoding matrix, channel quality information indicating a quality of a wireless channel, and the like. The receiver may select one of matrices or vectors included in a codebook using a predefined codebook, and may feed back an index of the selected matrix or vector as the precoding matrix indicator.

Document HUAWEI: "Downlink 8TX codebook", 3GPP DRAFT; R1-101066 discloses a dual index and double codebook structure.

Document TEXAS INSTRUMENTS: "Possible Refinement on 8Tx Codebook Design", 3GPP DRAFT; R1-102104 discloses a second (short-term) codebook that is made dependent upon the choice of a first precoding matrix.

Document FUJITSU: "8 Tx Codebook for LET-Advanced", 3GPP DRAFT; R1-101024  discloses a codebook design for 8Tx DL MIMO which includes the codebook size for different ranks and codebook construction suitable for practical antenna deployments.

Document CATT: "Codebook design for8Tx DL MIMO", 3GPP DRAFT; R1-100890 discloses a 8Tx codebook with double-level structure is introduced, which is unitary, 8PSK alphabet, nested, and constant modulus.

### Disclosure of Invention

### Solution to Problem

The invention is set out in the independent claims whereas preferred embodiments are outlined in the dependent claims.

### Brief Description of Drawings

FIG. 1 is a diagram illustrating an example of a multiple input multiple output (MIMO) communication system.
FIG. 2 is a diagram illustrating an example of a communication method of a receiver and a transmitter that share channel information using a single codebook.
FIG. 3 is a diagram illustrating an example of a relationship between two codebooks and a precoding matrix.
FIG. 4 is a diagram illustrating an example of a communication method of a receiver and a transmitter that share channel information using two codebooks.
FIG. 5 is a diagram illustrating an example of a communication method of a receiver and a transmitter that operate in a physical uplink control channel (PUCCH) 1-1 sub-mode 2.
FIG. 6 is a diagram illustrating an example of a communication method of a receiver and a transmitter that operate in PUCCH 2-1 sub-modes 1 and 2.
Throughout the drawings and the detailed description, unless otherwise described, the same drawing reference numerals should be understood to refer to the same elements, features, and structures. The relative size and depiction of these elements may be exaggerated for clarity, illustration, and convenience.

**Mode for the Invention**

The invention is defined by the appended claims.

The following detailed description is provided to assist the reader in gaining a comprehensive understanding of the methods, apparatuses, and/or systems described herein. Accordingly, various changes, modifications, and equivalents of the methods, apparatuses, and/or systems described herein may be suggested to those of ordinary skill in the art. Also, description of well-known functions and constructions may be omitted for increased clarity and conciseness.

Hereinafter, embodiments will be described in detail with reference to the accompanying drawings.

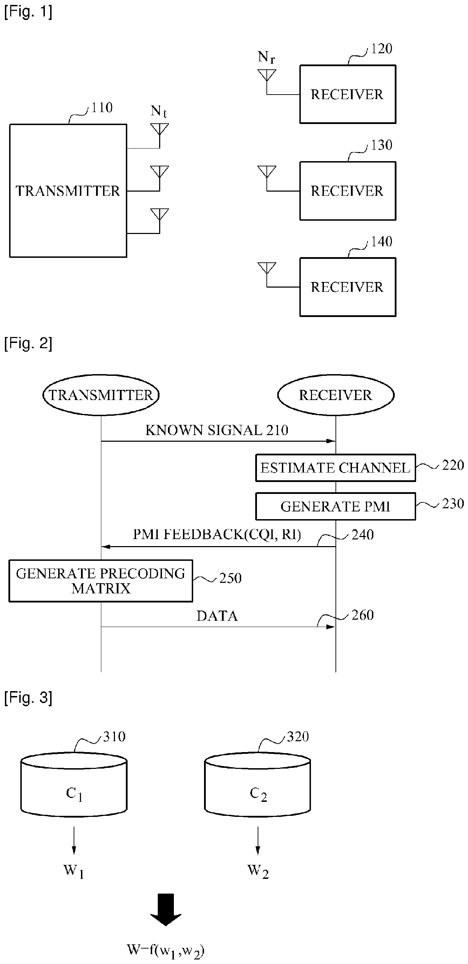

FIG. 1 illustrates an example of a multiple input multiple output (MIMO) communication system.

Referring to FIG. 1, the MIMO communication system may include a transmitter 110 and a plurality of receivers 120, 130, and 140.

$N_t$ transmit antennas may be installed in the transmitter 110. The transmitter 110 may function as a base station in a downlink, and may function as a terminal in an uplink. $N_r$ receive antennas may be installed in the receivers 120, 130, and 140. Each of the receivers 120, 130, and 140 may function as a terminal in the downlink, and may function as a base station in the uplink. Hereinafter, embodiments will be described based on an operation of the transmitter 110 and the receivers 120, 130, and 140 in the downlink. The embodiments may be applicable to the uplink.

Channels may be formed between the transmitter 110 and the receivers 120, 130, and 140. Data may be transmitted from the transmitter 110 to the receivers 120, 130, and 140 via the channels. The transmitter 110 may precode at least one data stream using a precoding matrix, enhancing a performance of the MIMO communication system. A data stream may also be referred to as data.

The transmitter 110 may generate or determine a more accurate precoding matrix by verifying information associated with channel direction and information associated with channel quality. Information associated with the channel direction and information associated with the channel quality may be one example of channel information. Information associated with the channel direction may include a precoding matrix indicator.

For example, the transmitter 110 and the receivers 120, 130, and 140 may share the precoding matrix indicator using a codebook. The codebook may include a plurality of codewords. Each of the plurality of codewords may correspond to a vector or a matrix. A size of the codebook may correspond to a number of codewords. For example, a 3-bit codebook may include eight codewords, and a 4-bit codebook may include 16 codewords.

Each of the receivers 120, 130, and 140 may select a single codeword from the plurality of codewords, and may generate an indicator of the selected codeword as a precoding matrix indicator. The precoding matrix indicator may be fed back to the transmitter 110. The transmitter 110 may verify a codeword indicated by the precoding matrix indicator, using the codebook. The transmitter 110 may generate or determine an optimal precoding matrix based on the codeword corresponding to the precoding matrix indicator.

A dimension of a precoding matrix may be dependent on a rank of the transmitter 110. The rank of the transmitter 110 may correspond to a number of data streams desired to be transmitted or a number of layers of the transmitter 110.

FIG. 2 illustrates an example of a communication method of a receiver and a transmitter that share channel information using a single codebook.

Referring to FIG. 2, at 210, the transmitter may transmit a well-known signal to the receiver. The well-known signal may be a pilot signal.

At 220, the receiver may estimate a channel formed from the transmitter to the receiver based on the well-known signal.

At 230, the receiver may select, from a codebook, a codeword suitable for the estimated channel and generate a precoding matrix indicator including an index of the selected codeword. In this example, the same codebook may be stored in both the transmitter and the receiver.

At 240, the receiver may feed back a precoding matrix indicator to the transmitter. The receiver may also feed back channel quality information and a rank indicator.

At 250, the transmitter may generate or determine an optimal precoding matrix based on the fed back precoding matrix indicator. At 260, the transmitter may transmit data using the precoding matrix.

The communication method of the transmitter and the receiver when the transmitter and the receiver use the same single codebook is described above with reference to FIG. 2. According to embodiments, two codebooks may be used for the receiver and the transmitter to share two precoding matrix indicators.

Hereinafter, it is assumed that a first codebook $C_1$ and a second codebook $C_2$ are present, and two codebooks are stored in the receiver and the transmitter, respectively. It is also assumed that a precoding matrix W is finally recommended by the receiver and is used by the transmitter.

FIG. 3 illustrates an example of a relationship between two codebooks and a precoding matrix.

Referring to FIG. 3, both a transmitter and a receiver may store a first codebook $C_1$ 310 and a second codebook $C_2$ 320. The receiver may select a preferred first codeword $W_1$ from the first codebook $C_1$ 310, and may select a preferred second codeword $W_2$ from the second codebook $C_2$ 320. A first precoding matrix indicator may be fed back to the transmitter as an index of the preferred first codeword $W_1$, and a second precoding matrix indicator may be fed back to the transmitter as an index of the preferred second codeword $W_2$.

Based on the first precoding matrix indicator and the second precoding matrix indicator, the transmitter may find the preferred first codeword $W_1$ from the first codebook $C_1$ 310, and may find the preferred second codeword $W_2$ from the second codebook $C_2$ 320. The transmitter may determine a precoding matrix $W=f(W_1, W_2)$ based on the preferred first codeword $W_1$ and the preferred second codeword $W_2$.

In $W=f(W_1, W_2)$, a function f may be variously defined. For example, $W=f(W_1, W_2)=W_2W_1$ or $W=f(W_1, W_2)=W_1W_2$ may be defined.

$W_1$ corresponds to the preferred first codeword of the receiver corresponding to the first precoding matrix indicator selected by the receiver from the first codebook $C_1$. $W_2$ corresponds to the preferred second codeword of the receiver corresponding to the second precoding matrix indicator of the receiver selected from the second codebook $C_2$. The first codebook $C_1$ or the first precoding matrix indicator may be used to indicate a property of a channel in a wideband including a plurality of subbands, or to indicate a long-term property of the channel. The second codebook $C_2$ or the second precoding matrix indicator may be used to indicate a property of a channel in a subband or to indicate a short-term property of the channel.

In $W=f(W_1, W_2)=W_2W_1$, W may have a dimension of $N_t$ x R and $W_1$ may have a dimension of $N_t$ x R. W2 may have a dimension of $N_t$ x $N_t$. In $W=f(W_1, W_2)=W_1W_2$, W may have a dimension of $N_t$ x R and $W_1$ and $W_2$ may have a variety of dimensions based on R. Here, R corresponds to a rank and indicates a number of data streams or a number of layers.

Hereinafter, the first codebook $C_1$ including candidates of $W_1$ and the second codebook $C_2$ including candidates of $W_2$ when the transmitter includes eight transmit antennas will be defined with respect to each of various ranks. Since $W_1$ is indicated by a combination of $W_1$ and $W_2$, to define the candidates of $W_1$ and the candidates of $W_2$ may be equivalent to define candidates of W. In addition to the first codebook $C_1$ and the second codebook $C_2$, the candidates of W may also be defined.

Design of rank 1 codebook when the transmitter includes eight transmit antennas:

In dual polarized channels, a precoding matrix in one subband may be expressed by,

$$\mathbf{W} = \frac{\sqrt{2}}{2} \left[ \begin{array}{c} \sqrt{2-|\alpha|^2}\,\mathbf{A} \\ \alpha\mathbf{B} \end{array} \right]$$

A and B may correspond to unit norm vectors having a dimension of $N_t/2$ x 1 and may independently perform beamforming in each polarization. Each polarization may appear as an effectively single antenna after beamforming is performed in each polarization using A and B. To design codebooks with respect to A and B may be dependent on statistical properties of a channel in each polarization. Without further assumption with respect to properties, A and B may account for subband/short-term information and wideband/long-term information.

Beamforming of polarizations may be performed by vector $\left[ \begin{array}{c} \sqrt{2-|\alpha|^2} \\ \alpha \end{array} \right]$ . Here, $\alpha$ corresponds to a complex scalar and may account for a phase difference and a magnitude difference. The phase difference between the polarizations may typically correspond to a short-term property and the magnitude difference may correspond to a function of the subband/short-term property and wideband/long-term property. A cross-polarization discrimination factor is generally referred to as XPD of a channel. XPD indicates a wideband/long-term property of a dual polarization channel and a mean value with respect to $\alpha$ may vary.

In general, A and B may be selected to be different from each other. However, when an interval between antennas is relatively close and each angle spread is relatively low, a beamforming vector with respect to a first polarization and a beamforming vector with respect to a second polarization may be regarded to be identical to each other. Since beamforming is invariant over a phase shift, $\mathbf{B} = e^{j\theta}\mathbf{A}$ may be established. Here, a selection of $\phi$ may not affect the performance of the dual polarization channel. When the interval between antennas is close, A, B, and $\phi$ may be associated with wideband/long-term properties of a channel. Accordingly, a precoding matrix in a subband may be expressed by,

$$W = \frac{\sqrt{2}}{2}\begin{bmatrix} \sqrt{2-|\alpha|^2}\,A \\ \alpha e^{j\phi}A \end{bmatrix} = \frac{\sqrt{2}}{2}\begin{bmatrix} \sqrt{2-|\alpha|^2}\,I_{n_t/2} & \\ & \alpha I_{n_t/2} \end{bmatrix}\begin{bmatrix} A \\ e^{j\phi}A \end{bmatrix}$$

For an appropriate design of A, discrete Fourier transformation (DFT) vectors may be used. In the above equation, a last equal mark may remind a structure of $W_2 W_1$. A subband/short-term matrix may be expressed by

$$W_2 = \begin{bmatrix} \sqrt{2-|\alpha|^2}\,I_{n_t/2} & \\ & \alpha I_{n_t/2} \end{bmatrix}$$

A wideband/long-term matrix may be expressed by

$$W_1 = \frac{\sqrt{2}}{2}\begin{bmatrix} A \\ e^{j\phi}A \end{bmatrix}$$

In a special case where $e^{j\theta} = 1$.

$$W \overset{(a)}{=} \frac{\sqrt{2}}{2}\begin{bmatrix} \sqrt{2-|\alpha|^2}\,I_{n_t/2} & \\ & \alpha I_{n_t/2} \end{bmatrix}\begin{bmatrix} A \\ A \end{bmatrix}$$

$$\overset{(b)}{=} \frac{\sqrt{2}}{2}\begin{bmatrix} \sqrt{2-|\alpha|^2} \\ \alpha \end{bmatrix}\otimes A$$

$$\overset{(c)}{=} \frac{\sqrt{2}}{2}\begin{bmatrix} A & \\ & A \end{bmatrix}\begin{bmatrix} \sqrt{2-|\alpha|^2} \\ \alpha \end{bmatrix}$$

As shown in the above equation, in the special case where $e^{j\theta} = 1$, many equivalent methods may be used to express the same precoding matrix. For example, in the above equation, (a) corresponds to a method of using the structure of $W_2 W_1$, (b) corresponds to a method of using Kronecker product, and (c) corresponds to a method of using a structure of $W_1 W_2$.

When the interval between antennas is close, the precoding matrix may be expressed using the aforementioned equations in a single polarization channel. In this example, $\alpha = 1$, a value of $\phi$ may be A-dependent and be selected to obtain DFT vectors for eight transmit antennas. For example, $W_2$ may correspond to an identity matrix and $W_1$ may provide a wideband precoding matrix of DFT vectors. Contrast to dual polarization channels, the selection of $\phi$ may affect the performance of single polarization channels.

According to the structure of $W_2 W_1$ shown in

$$W = \frac{\sqrt{2}}{2} \begin{bmatrix} \sqrt{2-|\alpha|^2}\, A \\ \alpha e^{j\phi} A \end{bmatrix} = \frac{\sqrt{2}}{2} \begin{bmatrix} \sqrt{2-|\alpha|^2}\, I_{n_t/2} & \\ & \alpha I_{n_t/2} \end{bmatrix} \begin{bmatrix} A \\ e^{j\phi} A \end{bmatrix}$$

, the wideband/long-term matrix $\begin{bmatrix} A \\ e^{j\phi} A \end{bmatrix}$ may have a significantly robust physical meaning. That is, in its given $N_t$ x 1 dimension, the wideband/long-term matrix may be equivalent to a rank and thus, may provide a direct insight to a rank 1 wideband PMI structure. Also, in the aforementioned $W_2 W_1$ structure, a structure $\begin{bmatrix} A \\ A \end{bmatrix}$ may not be associated with the rank and may not provide any information associated with a wideband PMI structure.

A full utilization of power amplifiers may be used as an important design criterion. When only a phase shift keying (PSK) is used to decrease the complexity of PMI search, there is a need to constrain a precoding matrix. It may be assumed that the precoding matrix becomes constant modulus and $|\alpha| = 1$. In this scenario, $\alpha$ may use a subband/long-term property with respect to a phase shift between polarizations.

Design of rank 2 codebook when the transmitter includes eight transmit antennas:

A rank 2 precoding matrix may include two orthogonal columns, which may be expressed by

$$W^{(1)} = \frac{\sqrt{2}}{2} \begin{bmatrix} \sqrt{2-|\alpha_1|^2}\, I_{n_t/2} & \\ & \alpha_1 I_{n_t/2} \end{bmatrix} \begin{bmatrix} A_1 \\ B_1 \end{bmatrix}$$

$$W^{(2)} = \frac{\sqrt{2}}{2} \begin{bmatrix} \sqrt{2-|\alpha_2|^2}\, I_{n_t/2} & \\ & \alpha_2 I_{n_t/2} \end{bmatrix} \begin{bmatrix} A_2 \\ B_2 \end{bmatrix}$$

The full utilization of power in each antenna may force $|\alpha_1|^2 + |\alpha_2|^2 = 2$, and may establish $\alpha_2 = \sqrt{2-|\alpha|^2}\, e^{j\delta}$ with $\alpha_1 = \alpha$. In this example, the following equations may be expressed.

$$W^{(1)} = \frac{\sqrt{2}}{2} \begin{bmatrix} \sqrt{2-|\alpha|^2}\, I_{n_t/2} & \\ & \alpha I_{n_t/2} \end{bmatrix} \begin{bmatrix} A_1 \\ B_1 \end{bmatrix}$$

$$\mathbf{W}^{(2)} = \frac{\sqrt{2}}{2} \begin{bmatrix} |\alpha|\mathbf{I}_{n_t/2} & \\ & \sqrt{2-|\alpha|^2}\, e^{j\delta}\mathbf{I}_{n_t/2} \end{bmatrix} \begin{bmatrix} \mathbf{A}_2 \\ \mathbf{B}_2 \end{bmatrix}$$

To obtain mutually orthogonal columns, $\mathbf{A}_1^H \mathbf{A}_2 = 0$ and $\mathbf{B}_1^H \mathbf{B}_2 = 0$ may be sufficient. $A_1$, $A_2$, $B_1$, and $B_2$ may be approximated by two dominant eigenvectors of $N_t \times N_t$ covariance matrix. Many combinations may be used for design of the precoding matrix, which may cause great overheard. In a scenario with a narrow interval between antennas, $A_1$=A, A2=A, $\mathbf{B}_1 = e^{j\phi_1}\mathbf{A}$, and $\mathbf{B}_2 = e^{j\phi_2}\mathbf{A}$. A cross-polarized setup may help achievement of rank 2 transmission in a configuration where the interval between antennas is narrow.

Parameters $\phi_1$ and $\phi_2$ may be selected to guarantee so that W(1) and W(2) may

$$\phi_2 = \phi + \pi$$

.

The rank 2 precoding matrix may be expressed by

$$\mathbf{W} = \frac{1}{\sqrt{2}} \begin{bmatrix} \mathbf{W}^{(1)} & \mathbf{W}^{(2)} \end{bmatrix}$$

$$= \frac{1}{2} \begin{bmatrix} \sqrt{2-|\alpha|^2}\,\mathbf{A} & |\alpha|\mathbf{A} \\ \alpha e^{j\phi}\mathbf{A} & -\sqrt{2-|\alpha|^2}\, e^{j\delta} e^{j\phi}\mathbf{A} \end{bmatrix}$$

The precoding matrix may be expressed using the W2W1 structure, as follows:

$$\mathbf{W} = \frac{1}{\sqrt{2}} \begin{bmatrix} \mathbf{W}^{(1)} & \mathbf{W}^{(2)} \end{bmatrix}$$

$$= \frac{1}{2} \begin{bmatrix} \sqrt{2-|\alpha|^2}\,\mathbf{A} & |\alpha|\mathbf{A} \\ \alpha e^{j\phi}\mathbf{A} & -\sqrt{2-|\alpha|^2}\, e^{j\delta} e^{j\phi}\mathbf{A} \end{bmatrix}$$

$$= \frac{1}{2} \begin{bmatrix} \mathbf{A} & \\ & e^{j\phi}\mathbf{A} \end{bmatrix} \begin{bmatrix} \sqrt{2-|\alpha|^2} & |\alpha| \\ \alpha & -\sqrt{2-|\alpha|^2}\, e^{j\delta} \end{bmatrix}$$

In this equation, and

$$\mathbf{W}_1 = \begin{bmatrix} \mathbf{A} & \\ & e^{j\phi}\mathbf{A} \end{bmatrix}$$

$$\mathbf{W}_2 = \frac{1}{2}\begin{bmatrix} \sqrt{2-|\alpha|^2} & |\alpha| \\ \alpha & -\sqrt{2-|\alpha|^2}e^{j\delta} \end{bmatrix}.$$

The precoding matrix may be expressed using a variety of methods. For example, the precoding matrix may be expressed by

$$\mathbf{W} = \frac{1}{\sqrt{2}}\begin{bmatrix} \mathbf{W}^{(1)} & \mathbf{W}^{(2)} \end{bmatrix}$$

$$= \frac{1}{2}\begin{bmatrix} \sqrt{2-|\alpha|^2}\mathbf{A} & |\alpha|\mathbf{A} \\ \alpha e^{j\phi}\mathbf{A} & -\sqrt{2-|\alpha|^2}e^{j\delta}e^{j\phi}\mathbf{A} \end{bmatrix}$$

$$= \begin{bmatrix} \sqrt{2-|\alpha|^2} & |\alpha| \\ \alpha & -\sqrt{2-|\alpha|^2}e^{j\delta} \end{bmatrix} \circ \begin{bmatrix} \frac{1}{2}\begin{bmatrix} \mathbf{A} & \mathbf{A} \\ e^{j\phi}\mathbf{A} & -e^{j\phi}\mathbf{A} \end{bmatrix} \end{bmatrix}$$

In this equation, o corresponds to Hardmard product, and

$$\mathbf{W}_1 = \frac{1}{2}\begin{bmatrix} \mathbf{A} & \mathbf{A} \\ e^{j\phi}\mathbf{A} & -e^{j\phi}\mathbf{A} \end{bmatrix},$$

and

$$\mathbf{W}_2 = \begin{bmatrix} \sqrt{2-|\alpha|^2} & |\alpha| \\ \alpha & -\sqrt{2-|\alpha|^2}e^{j\delta} \end{bmatrix}.$$

When $|\alpha| = 1$ is assumed to maintain the precoding matrix as constant modulus, and to maintain a PSK alphabet, the rank 2 precoding matrix may include two orthogonal columns $\mathbf{W}^{(1)}$ and $\mathbf{W}^{(2)}$. Each column may satisfy the structure of the rank 1 precoding matrix, for example, as follows:

$$\mathbf{W}^{(1)} = \frac{\sqrt{2}}{2}\left[\begin{matrix} \sqrt{2-|\alpha|^2}\,\mathbf{I}_{n_t/2} & \\ & \alpha\mathbf{I}_{n_t/2} \end{matrix}\right]\left[\begin{matrix} \mathbf{A} \\ e^{j\phi_1}\mathbf{A} \end{matrix}\right]$$

$$\mathbf{W}^{(2)} = \frac{\sqrt{2}}{2}\left[\begin{matrix} \sqrt{2-|\alpha|^2}\,\mathbf{I}_{n_t/2} & \\ & \alpha\mathbf{I}_{n_t/2} \end{matrix}\right]\left[\begin{matrix} \mathbf{A} \\ e^{j\phi_2}\mathbf{A} \end{matrix}\right]$$

Two rank 1 precoding matrices may be differentiated using only the parameter $\phi$. The parameters $\phi_1$ and $\phi_2$ may be selected to guarantee that W(1) and W(2) are orthogonal to each other. When $\phi_1 = \phi$ and $\phi_2 = \phi + \pi$, the rank 2 precoding matrix may be expressed by

$$\mathbf{W} = \frac{1}{\sqrt{2}}\left[\begin{matrix} \mathbf{W}^{(1)} & \mathbf{W}^{(2)} \end{matrix}\right]$$

$$= \frac{1}{2}\left[\begin{matrix} \sqrt{2-|\alpha|^2}\,\mathbf{I}_{n_t/2} & \\ & \alpha\mathbf{I}_{n_t/2} \end{matrix}\right]\left[\begin{matrix} \mathbf{A} & \mathbf{A} \\ e^{j\phi}\mathbf{A} & -e^{j\phi}\mathbf{A} \end{matrix}\right].$$

Wideband/long-term matrix $W_1$ may correspond to a wideband precoding matrix and may be given as

$$\mathbf{W}_1 = \frac{1}{2}\left[\begin{matrix} \mathbf{A} & \mathbf{A} \\ e^{j\phi}\mathbf{A} & -e^{j\phi}\mathbf{A} \end{matrix}\right].$$

A subband matrix $W_2$ may be expressed by

$$\mathbf{W}_2 = \left[\begin{matrix} \sqrt{2-|\alpha|^2}\,\mathbf{I}_{n_t/2} & \\ & \alpha\mathbf{I}_{n_t/2} \end{matrix}\right].$$

The selection of $\phi$ may not affect the performance of the wideband precoding matrix W1 in dual polarization channels, however, may have a strong influence in single polarization channels. The parameter $\phi$ may be selected so that W1 may have excellent performance even in single polarization channels.

In a special case where $e^{j\phi} = 1$

$$\mathbf{W} \overset{(a)}{=} \frac{1}{2} \begin{bmatrix} \sqrt{2-|\alpha|^2}\,\mathbf{I}_{n_t/2} & \\ & \alpha\mathbf{I}_{n_t/2} \end{bmatrix} \begin{bmatrix} \mathbf{A} & \mathbf{A} \\ \mathbf{A} & -\mathbf{A} \end{bmatrix}$$

$$\overset{(b)}{=} \frac{\sqrt{2}}{2} \begin{bmatrix} \sqrt{2-|\alpha|^2}\,\mathbf{I}_{n_t/2} & \\ & \alpha\mathbf{I}_{n_t/2} \end{bmatrix} \mathbf{U}_{rot} \begin{bmatrix} \mathbf{A} & 0 \\ 0 & \mathbf{A} \end{bmatrix}$$

$$\overset{(c)}{=} \frac{1}{2} \begin{bmatrix} \sqrt{2-|\alpha|^2} & \sqrt{2-|\alpha|^2} \\ \alpha & -\alpha \end{bmatrix} \otimes \mathbf{A}$$

$$\overset{(d)}{=} \frac{1}{2} \begin{bmatrix} \mathbf{A} & \\ & \mathbf{A} \end{bmatrix} \begin{bmatrix} \sqrt{2-|\alpha|^2} & \sqrt{2-|\alpha|^2} \\ \alpha & -\alpha \end{bmatrix} .$$

In the special case where $e^{j\phi} = 1$, many equivalent methods may be used to express the same precoding matrix. For example, in the above equation, (a) corresponds to a method of using the structure of $W_2W_1$, (b) corresponds to a method of using a rotated block diagonal structure, (c) corresponds to a method of using Kronecker product, and (d) corresponds to a method of using the structure of $W_1W_2$.

Design of rank 3 codebook when the transmitter includes eight transmit antennas:

A rank 3 precoding matrix may be obtained by simply extending a structure induced with respect to the rank 1 precoding matrix and the rank 2 precoding matrix. By adding, to the rank 2 precoding matrix, a column orthogonal to the rank 2 precoding matrix, the rank 3 precoding matrix may be obtained as follows:

$$\mathbf{W} = \frac{1}{\sqrt{3}} \begin{bmatrix} \mathbf{W}^{(1)} & \mathbf{W}^{(2)} & \mathbf{W}^{(3)} \end{bmatrix}$$

$$= \frac{1}{\sqrt{3}\sqrt{2}} \begin{bmatrix} \sqrt{2-|\alpha|^2}\,\mathbf{I}_{n_t/2} & \\ & \alpha\mathbf{I}_{n_t/2} \end{bmatrix} \begin{bmatrix} \mathbf{A} & \mathbf{A} & \mathbf{B} \\ e^{j\varphi}\mathbf{A} & -e^{j\varphi}\mathbf{A} & e^{j\varphi}\mathbf{B} \end{bmatrix}$$

or

$$\mathbf{W} = \frac{1}{\sqrt{3}} \begin{bmatrix} \mathbf{W}^{(1)} & \mathbf{W}^{(2)} & \mathbf{W}^{(3)} \end{bmatrix}$$

$$= \frac{1}{\sqrt{3}\sqrt{2}} \begin{bmatrix} \sqrt{2-|\alpha|^2}\,\mathbf{I}_{n_t/2} & \\ & \alpha\mathbf{I}_{n_t/2} \end{bmatrix} \begin{bmatrix} \mathbf{A} & \mathbf{A} & \mathbf{B} \\ e^{j\varphi}\mathbf{A} & -e^{j\varphi}\mathbf{A} & -e^{j\varphi}\mathbf{B} \end{bmatrix}$$

In this example, A and B may be orthogonal to each other.

Design of rank 4 codebook when the transmitter includes eight transmit antennas:

Similarly with respect to rank 4, a rank 4 precoding matrix may be expressed using two rank 2 precoding matrices as follows:

$$\mathbf{W} = \frac{1}{\sqrt{4}}\begin{bmatrix} \mathbf{W}^{(1)} & \mathbf{W}^{(2)} & \mathbf{W}^{(3)} & \mathbf{W}^{(4)} \end{bmatrix}$$

$$= \frac{1}{\sqrt{4}\sqrt{2}}\begin{bmatrix} \sqrt{2-|\alpha|^2}\mathbf{I}_{n_t/2} & \\ & \alpha\mathbf{I}_{n_t/2} \end{bmatrix}\begin{bmatrix} \mathbf{A} & \mathbf{A} & \mathbf{B} & \mathbf{B} \\ e^{j\varphi}\mathbf{A} & -e^{j\varphi}\mathbf{A} & e^{j\varphi}\mathbf{B} & -e^{j\varphi}\mathbf{B} \end{bmatrix}$$

In this example, A and B may be orthogonal to each other.

Design of rank r codebook when the transmitter includes eight transmit antennas:

With respect to rank r codebook, the precoding matrix may be expressed as follows:
When r is an odd number,

$$\mathbf{W} = \frac{1}{\sqrt{r}}\begin{bmatrix} \mathbf{W}^{(1)} & \mathbf{W}^{(2)} & ... & \mathbf{W}^{(r)} \end{bmatrix}$$

$$= \frac{1}{\sqrt{r}\sqrt{2}}\begin{bmatrix} \sqrt{2-|\alpha|^2}\mathbf{I}_{n_t/2} & \\ & \alpha\mathbf{I}_{n_t/2} \end{bmatrix}\begin{bmatrix} \mathbf{A} & \mathbf{A} & ... & \mathbf{C} \\ e^{j\varphi}\mathbf{A} & -e^{j\varphi}\mathbf{A} & ... & e^{j\varphi}\mathbf{C} \end{bmatrix}$$

or

$$\mathbf{W} = \frac{1}{\sqrt{r}}\begin{bmatrix} \mathbf{W}^{(1)} & \mathbf{W}^{(2)} & ... & \mathbf{W}^{(r)} \end{bmatrix}$$

$$= \frac{1}{\sqrt{r}\sqrt{2}}\begin{bmatrix} \sqrt{2-|\alpha|^2}\mathbf{I}_{n_t/2} & \\ & \alpha\mathbf{I}_{n_t/2} \end{bmatrix}\begin{bmatrix} \mathbf{A} & \mathbf{A} & ... & \mathbf{C} \\ e^{j\varphi}\mathbf{A} & -e^{j\varphi}\mathbf{A} & ... & -e^{j\varphi}\mathbf{C} \end{bmatrix}$$

When r is an even number,

$$\mathbf{W} = \frac{1}{\sqrt{r}}\begin{bmatrix} \mathbf{W}^{(1)} & \mathbf{W}^{(2)} & ... & \mathbf{W}^{(r-1)} & \mathbf{W}^{(r)} \end{bmatrix}$$

$$= \frac{1}{\sqrt{r}\sqrt{2}}\begin{bmatrix} \sqrt{2-|\alpha|^2}\mathbf{I}_{n_t/2} & \\ & \alpha\mathbf{I}_{n_t/2} \end{bmatrix}\begin{bmatrix} \mathbf{A} & \mathbf{A} & ... & \mathbf{C} & \mathbf{C} \\ e^{j\varphi}\mathbf{A} & -e^{j\varphi}\mathbf{A} & ... & e^{j\varphi}\mathbf{C} & -e^{j\varphi}\mathbf{C} \end{bmatrix}$$

In this example, A, B, ..., C may be orthogonal to each other.

Observation

The following collusion may be made. That is, the minimum requirement for achieving the excellent performance of a recommended precoding matrix may follow as:

$$W = W_2 W_1$$

Here, an outer matrix $W_1$ corresponds to a unitary precoding matrix that is an element of a first codebook $C_1$ and has a dimension of $N_t$ x R. For each rank, $W_1$ may be expressed as follows:
Rank 1:

$$\mathbf{W}_1 = \frac{\sqrt{2}}{2} \begin{bmatrix} \mathbf{A} \\ e^{j\phi}\mathbf{A} \end{bmatrix}$$

$$\mathbf{W}_1 = \frac{1}{2} \begin{bmatrix} \mathbf{A} & \mathbf{A} \\ e^{j\phi}\mathbf{A} & -e^{j\phi}\mathbf{A} \end{bmatrix}$$

Rank r:

- when r is an odd number:

$$\mathbf{W}_1 = \frac{1}{\sqrt{r}\sqrt{2}} \begin{bmatrix} \mathbf{A} & \mathbf{A} & \dots & \mathbf{C} \\ e^{j\phi}\mathbf{A} & -e^{j\phi}\mathbf{A} & \dots & e^{j\phi}\mathbf{C} \end{bmatrix}$$

or

$$\mathbf{W}_1 = \frac{1}{\sqrt{r}\sqrt{2}} \begin{bmatrix} \mathbf{A} & \mathbf{A} & \dots & \mathbf{C} \\ e^{j\phi}\mathbf{A} & -e^{j\phi}\mathbf{A} & \dots & -e^{j\phi}\mathbf{C} \end{bmatrix}$$

- when r is an even number:

$$\mathbf{W}_1 = \frac{1}{\sqrt{r}\sqrt{2}} \begin{bmatrix} \mathbf{A} & \mathbf{A} & \dots & \mathbf{C} & \mathbf{C} \\ e^{j\phi}\mathbf{A} & -e^{j\phi}\mathbf{A} & \dots & e^{j\phi}\mathbf{C} & -e^{j\phi}\mathbf{C} \end{bmatrix}$$

A, B,..., C may be orthogonal to each other, or may be DFT vectors.
An inner matrix $W_2$ may correspond to a diagonal matrix that is an element of a second codebook $C_2$ and has a dimension of $N_t$ x $N_t$. For example,

$$W_2 = \begin{bmatrix} \sqrt{2-|\alpha|^2}\, \mathbf{I}_{n_t/2} \\ \alpha \mathbf{I}_{n_t/2} \end{bmatrix} \text{ with } |\alpha| = 1 .$$

Extension

In the aforementioned observation, highly correlated channels may be assumed. Feedback overhead required for reporting $W_2$ and $W_1$ with a sufficient accuracy may not be used. To provide some design flexibilities, and to provide balanced feedback overheard and high feedback accuracy with respect to $W_2$ and $W_1$, a previous observation may be extended as follows:

$$W = W_2 W_1$$

In this example, an outer matrix $W_1$ corresponds to a unitary precoding matrix that is an element of a first codebook $C_1$ and has a dimension of $N_t$ x R. For each rank, $W_1$ may be expressed as follows:

Rank 1:

$$\mathbf{W}_1 = \frac{\sqrt{2}}{2} \begin{bmatrix} \mathbf{A} \\ e^{j\phi}\mathbf{A} \end{bmatrix}$$

Rank 2:

$$\mathbf{W}_1 = \frac{1}{2} \begin{bmatrix} \mathbf{A} & \mathbf{A} \\ e^{j\phi}\mathbf{A} & -e^{j\phi}\mathbf{A} \end{bmatrix}$$

Rank r:

- when r is an odd number:

$$\mathbf{W}_1 = \frac{1}{\sqrt{r}\sqrt{2}} \begin{bmatrix} \mathbf{A} & \mathbf{A} & ... & \mathbf{C} \\ e^{j\phi}\mathbf{A} & -e^{j\phi}\mathbf{A} & ... & e^{j\phi}\mathbf{C} \end{bmatrix}$$

or

$$\mathbf{W}_1 = \frac{1}{\sqrt{r}\sqrt{2}} \begin{bmatrix} \mathbf{A} & \mathbf{A} & ... & \mathbf{C} \\ e^{j\phi}\mathbf{A} & -e^{j\phi}\mathbf{A} & ... & -e^{j\phi}\mathbf{C} \end{bmatrix}$$

- when r is an even number:

$$\mathbf{W}_1 = \frac{1}{\sqrt{r}\sqrt{2}} \begin{bmatrix} \mathbf{A} & \mathbf{A} & \dots & \mathbf{C} & \mathbf{C} \\ e^{j\phi}\mathbf{A} & -e^{j\phi}\mathbf{A} & \dots & e^{j\phi}\mathbf{C} & -e^{j\phi}\mathbf{C} \end{bmatrix}$$

A, B, ..., C may be orthogonal to each other, or may be DFT vectors.

An inner matrix $W_2$ may correspond to a diagonal matrix that is an element of a second codebook $C_2$ and has a dimension of $N_t$ x $N_t$. For example,

$$\mathbf{W}_2 = \begin{bmatrix} \sqrt{2-|\alpha|^2}\,\Theta & \mathbf{0}_{4x4} \\ \mathbf{0}_{4x4} & \alpha\Theta \end{bmatrix} \quad \text{with} \quad |\alpha| = 1.$$

In $W_2$, $\Theta$ corresponds to a 4x4 matrix, and may be defined as $\Theta = diag\{1, e^{j\pi\theta}, e^{j2\pi\theta}, e^{j3\pi\theta}\}$. $diag(a, b, c, d)$ corresponds to a diagonal matrix that includes a, b, c, and d as diagonal elements. $\Theta$ enables tracking of a spatial correlation structure, for example, a DFT structure in a subband level above antennas 0 through 3, and above antennas 4 through 7. In this example, in a dual polarization case, the antennas 0 through 3 may generate one polarization, and the antennas 4 through 7 may generate another polarization. In a single polarization case, all the antennas may generate the same polarization.

$\alpha$ corresponds to a complex scalar and may process dual polarization or single polarization based on a small antennal interval. $\alpha$ may be selected within a subband level, for example, within a set of 1, j, $e^{j4\pi\theta}$ For example, in a single polarization case, $W_2$ may have a structure of $\mathbf{W}_2 = diag\{1, e^{j\pi\theta}, e^{j2\pi\theta}, e^{j3\pi\theta}, e^{j4\pi\theta}, e^{j5\pi\theta}, e^{j6\pi\theta}, e^{j7\pi\theta}\}$ In a dual polarization case, $\alpha$ may be selected as 1 or j.

Codebook suggestions

Prior to suggesting codebooks, 4xr DFT matrices may be defined as follows:

$$\mathrm{DFT}_1 = \frac{1}{2}\begin{bmatrix} 1 & 1 & 1 & 1 \\ 1 & j & -1 & -j \\ 1 & -1 & 1 & -1 \\ 1 & -j & -1 & j \end{bmatrix},$$

$$\mathrm{DFT}_2 = diag\{1, e^{j\pi/4}, j, e^{j3\pi/4}\}\mathrm{DFT}_1$$

,

$$\mathrm{DFT}_3 = diag\{1, e^{j\pi/8}, e^{j2\pi/8}, e^{j3\pi/8}\}\mathrm{DFT}_1$$

,

$$\mathrm{DFT}_4 = diag\{1, e^{j3\pi/8}, e^{j6\pi/8}, e^{j9\pi/8}\}\mathrm{DFT}_1 ,$$

Suggestion 1: 4-bit codebook for each rank for $W_1$

In suggestion 1, the first codebook $C_1$ for rank r where r=1, ... , 6 may include 16 4-bit elements or codewords. The first codebook $C_1$ for rank r where r = 7, 8 may include four elements.

*Codebook $C_1$*

The first codebook $C_1$ for rank r may be expressed as $C_{1,r}$.
A first codebook $C_{1,1}$ for rank 1 may be obtained by employing columns 1 through 16 of the following matrix:

$$\mathrm{V}_1 = \frac{\sqrt{2}}{2}\begin{bmatrix} \mathrm{DFT}_1 & \mathrm{DFT}_2 & \mathrm{DFT}_3 & \mathrm{DFT}_4 \\ \mathrm{DFT}_1 & -\mathrm{DFT}_2 & j\mathrm{DFT}_3 & -j\mathrm{DFT}_4 \end{bmatrix}$$

The 16 column vectors may correspond to DFT vectors for eight transmit antennas.
A first codebook $C_{1,2}$ for rank 2 may include the following 16 matrices:

$$C_{1,2} = \left\{ \frac{1}{2}\begin{bmatrix} D_{1,k} & D_{1,k} \\ D_{1,k} & -D_{1,k} \end{bmatrix}, \frac{1}{2}\begin{bmatrix} D_{2,k} & D_{2,k} \\ D_{2,k} & -D_{2,k} \end{bmatrix}, \frac{1}{2}\begin{bmatrix} D_{3,k} & D_{3,k} \\ jD_{3,k} & -jD_{3,k} \end{bmatrix}, \frac{1}{2}\begin{bmatrix} D_{4,k} & D_{4,k} \\ jD_{4,k} & -jD_{4,k} \end{bmatrix} \right., k = 1,...,4$$

In this example, $D_{m,k}$ corresponds to a $k^{th}$ column of $DFT_m$. For example, $D_{1,k}$ corresponds to a $k^{th}$ column of $DFT_1$, $D_{2,k}$ corresponds to a $k^{th}$ column of $DFT_2$, $D_{3,k}$ corresponds to a $k^{th}$ column of $DFT_3$, and $D_{4,k}$ corresponds to a $k^{th}$ column of $DFT_4$.
The first codebook $C_{1,2}$ may be obtained by using a first codebook for rank 1 and by adding up orthogonal columns based on

$$\mathbf{W}_1 = \frac{1}{2}\begin{bmatrix} \mathbf{A} & \mathbf{A} \\ e^{j\phi}\mathbf{A} & -e^{j\phi}\mathbf{A} \end{bmatrix}.$$

A first codebook $C_{1,3}$ for rank 3 may include the following 16 matrices:

Example 1)

$$C_{1,3} = \left\{ \frac{1}{\sqrt{3}\sqrt{2}}\begin{bmatrix} D_{1,k} & D_{1,k} & D_{1,m} \\ D_{1,k} & -D_{1,k} & D_{1,m} \end{bmatrix}, \frac{1}{\sqrt{3}\sqrt{2}}\begin{bmatrix} D_{2,k} & D_{2,k} & D_{2,m} \\ D_{2,k} & -D_{2,k} & D_{2,m} \end{bmatrix}, \frac{1}{\sqrt{3}\sqrt{2}}\begin{bmatrix} D_{3,k} & D_{3,k} & D_{3,m} \\ jD_{3,k} & -jD_{3,k} & jD_{3,m} \end{bmatrix}, \frac{1}{\sqrt{3}\sqrt{2}}\begin{bmatrix} D_{4,k} & D_{4,k} & D_{4,m} \\ jD_{4,k} & -jD_{4,k} & jD_{4,m} \end{bmatrix} \right\}$$

In this example, k=1,..4 and m=k mod 4+1.

Example 2)

$$C_{1,3} = \left\{ \frac{1}{\sqrt{3}\sqrt{2}} \begin{bmatrix} D_{1,k} & D_{1,k} & D_{1,m} \\ D_{1,k} & -D_{1,k} & -D_{1,m} \end{bmatrix}, \frac{1}{\sqrt{3}\sqrt{2}} \begin{bmatrix} D_{2,k} & D_{2,k} & D_{2,m} \\ D_{2,k} & -D_{2,k} & -D_{2,m} \end{bmatrix}, \frac{1}{\sqrt{3}\sqrt{2}} \begin{bmatrix} D_{3,k} & D_{3,k} & D_{3,m} \\ jD_{3,k} & -jD_{3,k} & -jD_{3,m} \end{bmatrix} \frac{1}{\sqrt{3}\sqrt{2}} \begin{bmatrix} D_{4,k} & D_{4,k} & D_{4,m} \\ jD_{4,k} & -jD_{4,k} & -jD_{4,m} \end{bmatrix} \right\}$$

In this example, k=1,...4 and m=k mod 4 +1.
Other examples may also be used. For example, m may be given to be different from above, and k may also be given to be different from above. For example, various combinations of k and m may be given as (k,m)={(1,2),(1,3),(1,4),(2,3)}.
A first codebook $C_{1,4}$ for rank 4 may include the following 16 matrices:

Example 1)

$$C_{1,4} = \left\{ \frac{1}{\sqrt{4}\sqrt{2}} \begin{bmatrix} D_{1,k} & D_{1,k} & D_{1,m} & D_{1,m} \\ D_{1,k} & -D_{1,k} & D_{1,m} & -D_{1,m} \end{bmatrix}, \frac{1}{\sqrt{4}\sqrt{2}} \begin{bmatrix} D_{2,k} & D_{2,k} & D_{2,m} & D_{2,m} \\ D_{2,k} & -D_{2,k} & D_{2,m} & -D_{2,m} \end{bmatrix}, \frac{1}{\sqrt{4}\sqrt{2}} \begin{bmatrix} D_{3,k} & D_{3,k} & D_{3,m} & D_{3,m} \\ jD_{3,k} & -jD_{3,k} & jD_{3,m} & -jD_{3,m} \end{bmatrix} \frac{1}{\sqrt{4}\sqrt{2}} \begin{bmatrix} D_{4,k} & D_{4,k} & D_{4,m} & D_{4,m} \\ jD_{4,k} & -jD_{4,k} & jD_{4,m} & -jD_{4,m} \end{bmatrix} \right\}$$

In this example, k=1,0004 and m=k mod 4 +1.
Example 2) m may be given to be different from above, and k may also be given to be different from above. For example, various combinations of k and m may be given as (k,m)={(1,2),(1,3),(1,4),(2,3)}. Other examples may also be used.
A first codebook $C_{1,5}$ for rank 5 may include the following 16 matrices:

Example 1)

$$C_{1,5} = \left\{ \begin{array}{l} \dfrac{1}{\sqrt{5}\sqrt{2}} \begin{bmatrix} D_{1,k} & D_{1,k} & D_{1,m} & D_{1,m} & D_{1,n} \\ D_{1,k} & -D_{1,k} & D_{1,m} & -D_{1,m} & D_{1,n} \end{bmatrix}, \\[3em] \dfrac{1}{\sqrt{5}\sqrt{2}} \begin{bmatrix} D_{2,k} & D_{2,k} & D_{2,m} & D_{2,m} & D_{2,n} \\ D_{2,k} & -D_{2,k} & D_{2,m} & -D_{2,m} & D_{2,n} \end{bmatrix}, \\[3em] \dfrac{1}{\sqrt{5}\sqrt{2}} \begin{bmatrix} D_{3,k} & D_{3,k} & D_{3,m} & D_{3,m} & D_{3,n} \\ jD_{3,k} & -jD_{3,k} & jD_{3,m} & -jD_{3,m} & jD_{3,n} \end{bmatrix}, \\[3em] \dfrac{1}{\sqrt{5}\sqrt{2}} \begin{bmatrix} D_{4,k} & D_{4,k} & D_{4,m} & D_{4,m} & D_{4,n} \\ jD_{4,k} & -jD_{4,k} & jD_{4,m} & -jD_{4,m} & jD_{4,n} \end{bmatrix} \end{array} \right\}$$

A combination of k,m, and n may be selected from {(1,2,3),(1,2,4),(1,3,4),(2,3,4)}.

Example 2)

$$C_{1,5} = \left\{ \begin{array}{l} \dfrac{1}{\sqrt{5}\sqrt{2}} \begin{bmatrix} D_{1,k} & D_{1,k} & D_{1,m} & D_{1,m} & D_{1,n} \\ D_{1,k} & -D_{1,k} & D_{1,m} & -D_{1,m} & -D_{1,n} \end{bmatrix}, \\[3em] \dfrac{1}{\sqrt{5}\sqrt{2}} \begin{bmatrix} D_{2,k} & D_{2,k} & D_{2,m} & D_{2,m} & D_{2,n} \\ D_{2,k} & -D_{2,k} & D_{2,m} & -D_{2,m} & -D_{2,n} \end{bmatrix}, \\[3em] \dfrac{1}{\sqrt{5}\sqrt{2}} \begin{bmatrix} D_{3,k} & D_{3,k} & D_{3,m} & D_{3,m} & D_{3,n} \\ jD_{3,k} & -jD_{3,k} & jD_{3,m} & -jD_{3,m} & -jD_{3,n} \end{bmatrix}, \\[3em] \dfrac{1}{\sqrt{5}\sqrt{2}} \begin{bmatrix} D_{4,k} & D_{4,k} & D_{4,m} & D_{4,m} & D_{4,n} \\ jD_{4,k} & -jD_{4,k} & jD_{4,m} & -jD_{4,m} & -jD_{4,n} \end{bmatrix} \end{array} \right\}$$

A combination of k,m, and n may be selected from {(1,2,3),(1,2,4),(1,3,4),(2,3,4)}.
A first codebook $C_{1,6}$ for rank 6 may include the following 16 matrices:

$$C_{1,6} = \left\{ \begin{array}{l} \dfrac{1}{\sqrt{6}\sqrt{2}} \begin{bmatrix} D_{1,k} & D_{1,k} & D_{1,m} & D_{1,m} & D_{1,n} & D_{1,n} \\ D_{1,k} & -D_{1,k} & D_{1,m} & -D_{1,m} & D_{1,n} & -D_{1,n} \end{bmatrix}, \\[2em] \dfrac{1}{\sqrt{6}\sqrt{2}} \begin{bmatrix} D_{2,k} & D_{2,k} & D_{2,m} & D_{2,m} & D_{2,n} & D_{2,n} \\ D_{2,k} & -D_{2,k} & D_{2,m} & -D_{2,m} & D_{2,n} & -D_{2,n} \end{bmatrix}, \\[2em] \dfrac{1}{\sqrt{6}\sqrt{2}} \begin{bmatrix} D_{3,k} & D_{3,k} & D_{3,m} & D_{3,m} & D_{3,n} & D_{3,n} \\ jD_{3,k} & -jD_{3,k} & jD_{3,m} & -jD_{3,m} & jD_{3,n} & -jD_{3,n} \end{bmatrix}, \\[2em] \dfrac{1}{\sqrt{6}\sqrt{2}} \begin{bmatrix} D_{4,k} & D_{4,k} & D_{4,m} & D_{4,m} & D_{4,n} & D_{4,n} \\ jD_{4,k} & -jD_{4,k} & jD_{4,m} & -jD_{4,m} & jD_{4,n} & -jD_{4,n} \end{bmatrix} \end{array} \right\}$$

A combination of k,m, and n may be selected from {(1,2,3),(1,2,4),(1,3,4),(2,3,4)}.

A first codebook $C_{1,7}$ for rank 7 may include the following four matrices:

Example 1)

$$C_{1,7} = \left\{ \begin{array}{l} \dfrac{1}{\sqrt{7}\sqrt{2}} \begin{bmatrix} D_{1,k} & D_{1,k} & D_{1,m} & D_{1,m} & D_{1,n} & D_{1,n} & D_{1,p} \\ D_{1,k} & -D_{1,k} & D_{1,m} & -D_{1,m} & D_{1,n} & -D_{1,n} & D_{1,p} \end{bmatrix}, \\[2em] \dfrac{1}{\sqrt{7}\sqrt{2}} \begin{bmatrix} D_{2,k} & D_{2,k} & D_{2,m} & D_{2,m} & D_{2,n} & D_{2,n} & D_{2,p} \\ D_{2,k} & -D_{2,k} & D_{2,m} & -D_{2,m} & D_{2,n} & -D_{2,n} & D_{2,p} \end{bmatrix}, \\[2em] \dfrac{1}{\sqrt{7}\sqrt{2}} \begin{bmatrix} D_{3,k} & D_{3,k} & D_{3,m} & D_{3,m} & D_{3,n} & D_{3,n} & D_{3,p} \\ jD_{3,k} & -jD_{3,k} & jD_{3,m} & -jD_{3,m} & jD_{3,n} & -jD_{3,n} & jD_{3,p} \end{bmatrix}, \\[2em] \dfrac{1}{\sqrt{7}\sqrt{2}} \begin{bmatrix} D_{4,k} & D_{4,k} & D_{4,m} & D_{4,m} & D_{4,n} & D_{4,n} & D_{4,p} \\ jD_{4,k} & -jD_{4,k} & jD_{4,m} & -jD_{4,m} & jD_{4,n} & -jD_{4,n} & jD_{4,p} \end{bmatrix} \end{array} \right\}$$

(k,m,n,p)=(1,2,3,4).

Example 2)

$$C_{1,7} = \left\{ \begin{array}{l} \dfrac{1}{\sqrt{7}\sqrt{2}} \begin{bmatrix} D_{1,k} & D_{1,k} & D_{1,m} & D_{1,m} & D_{1,n} & D_{1,n} & D_{1,p} \\ D_{1,k} & -D_{1,k} & D_{1,m} & -D_{1,m} & D_{1,n} & -D_{1,n} & -D_{1,p} \end{bmatrix}, \\[4mm] \dfrac{1}{\sqrt{7}\sqrt{2}} \begin{bmatrix} D_{2,k} & D_{2,k} & D_{2,m} & D_{2,m} & D_{2,n} & D_{2,n} & D_{2,p} \\ D_{2,k} & -D_{2,k} & D_{2,m} & -D_{2,m} & D_{2,n} & -D_{2,n} & -D_{2,p} \end{bmatrix}, \\[4mm] \dfrac{1}{\sqrt{7}\sqrt{2}} \begin{bmatrix} D_{3,k} & D_{3,k} & D_{3,m} & D_{3,m} & D_{3,n} & D_{3,n} & D_{3,p} \\ jD_{3,k} & -jD_{3,k} & jD_{3,m} & -jD_{3,m} & jD_{3,n} & -jD_{3,n} & -jD_{3,p} \end{bmatrix}, \\[4mm] \dfrac{1}{\sqrt{7}\sqrt{2}} \begin{bmatrix} D_{4,k} & D_{4,k} & D_{4,m} & D_{4,m} & D_{4,n} & D_{4,n} & D_{4,p} \\ jD_{4,k} & -jD_{4,k} & jD_{4,m} & -jD_{4,m} & jD_{4,n} & -jD_{4,n} & -jD_{4,p} \end{bmatrix} \end{array} \right\}$$

(k,m,n,p)=(1,2,3,4).

A first codebook $C_{1,8}$ for rank 8 may include the following four matrices:

$$C_{1,8} = \left\{ \dfrac{1}{\sqrt{8}\sqrt{2}} \begin{bmatrix} D_1 & D_1 \\ D_1 & -D_1 \end{bmatrix}, \dfrac{1}{\sqrt{8}\sqrt{2}} \begin{bmatrix} D_2 & D_2 \\ D_2 & -D_2 \end{bmatrix}, \dfrac{1}{\sqrt{8}\sqrt{2}} \begin{bmatrix} D_3 & D_3 \\ jD_3 & -jD_3 \end{bmatrix}, \dfrac{1}{\sqrt{8}\sqrt{2}} \begin{bmatrix} D_4 & D_4 \\ jD_4 & -jD_4 \end{bmatrix} \right\}$$

*Codebook $C_2$*

A number of codewords to be assigned to $\Theta$ and $\alpha$ may need to be carefully investigated.
Example 1) For example, when a single bit is assigned to $\Theta$ and $\alpha$, the second codebook C2 may be expressed as follows:

- For rank 2:

$$\alpha \in \left\{ e^{j4\pi\theta_i} \right\}$$

With respect to and $\Theta_i$ where i=1,2, when a second codebook for rank 1 including a first codeword and a seond codeword is assumed as $C_{2,1\ldots2}$ ,

$$C_{2,1\ldots2} = \left\{ \begin{bmatrix} \Theta_1 & 0_{4x4} \\ 0_{4x4} & e^{j4\pi\theta_1}\Theta_1 \end{bmatrix}, \begin{bmatrix} \Theta_2 & 0_{4x4} \\ 0_{4x4} & e^{j4\pi\theta_2}\Theta_2 \end{bmatrix} \right\}.$$

In this example, $\theta_1 = \dfrac{1}{16}$ , $\theta_2 = \dfrac{-1}{16}$ .

With respect to $\alpha\in\{1,-1\}$ and $\Theta = I$ , when the second codebook for rank 1 including a third codeword and a fourth codeword is assumed as $C_{2,3\ldots4}$,

$$C_{2,3...4} = \left\{ \begin{bmatrix} \mathbf{I}_4 & 0_{4x4} \\ 0_{4x4} & \mathbf{I}_4 \end{bmatrix}, \begin{bmatrix} \mathbf{I}_4 & 0_{4x4} \\ 0_{4x4} & -\mathbf{I}_4 \end{bmatrix} \right\}.$$

- For ranks 2, 3, and 4:
  With respect to $\alpha \in \{1\}$ and $\Theta$, where i=1, 2, when a second codebook for ranks 2, 3, and 4 including a first codeword and a second codeword is assumed as $C_{2,1...2}$,

$$C_{2,1...2} = \left\{ \begin{bmatrix} \Theta_1 & 0_{4x4} \\ 0_{4x4} & \Theta_1 \end{bmatrix}, \begin{bmatrix} \Theta_2 & 0_{4x4} \\ 0_{4x4} & \Theta_2 \end{bmatrix} \right\}.$$

Example 2) A size of the second codebook may be extended to three bits by extending the aforementioned example 1).

- For rank 1:

$$\alpha \in \left\{ 1, e^{j4\pi\theta_i} \right\}$$

With respect to and $\Theta_i$ where i=1,2, when the second codebook for rank 1 including four codewords is assumed as $C_{2,1...4}$

$$C_{2,1...4} =$$
$$\left\{ \begin{bmatrix} \Theta_1 & 0_{4x4} \\ 0_{4x4} & e^{j4\pi\theta_1}\Theta_1 \end{bmatrix}, \begin{bmatrix} \Theta_2 & 0_{4x4} \\ 0_{4x4} & e^{j4\pi\theta_2}\Theta_2 \end{bmatrix}, \begin{bmatrix} \Theta_1 & 0_{4x4} \\ 0_{4x4} & \Theta_1 \end{bmatrix}, \begin{bmatrix} \Theta_2 & 0_{4x4} \\ 0_{4x4} & \Theta_2 \end{bmatrix} \right\}$$

- For ranks 2, 3, and 4:
  With respect to $\alpha \in \{1\}$ and $\Theta_i$ where i=1,2, when the second codebook for ranks 2, 3, and 4 including first through fourth codewords is assumed as $C_{2,1...4}$

$$C_{2,1...4} = \left\{ \begin{bmatrix} \Theta_1 & 0_{4x4} \\ 0_{4x4} & \Theta_1 \end{bmatrix}, \begin{bmatrix} \Theta_2 & 0_{4x4} \\ 0_{4x4} & \Theta_2 \end{bmatrix}, \begin{bmatrix} \Theta_3 & 0_{4x4} \\ 0_{4x4} & \Theta_3 \end{bmatrix}, \begin{bmatrix} \Theta_4 & 0_{4x4} \\ 0_{4x4} & \Theta_4 \end{bmatrix} \right\}.$$

In this example, $\theta_1 = \frac{1}{16}, \theta_2 = \frac{-1}{16}, \theta_3 = \frac{1}{8}, \theta_4 = \frac{-1}{8}$.

With respect to $\alpha \in \{1, j\}$ and $\Theta = I$, when the second codebook for ranks 2, 3, and 4 including fifth through sixth codewords is assumed as $C_{2,5...6}$,

$$C_{2,5...6} = \left\{ \begin{bmatrix} \mathbf{I} & 0_{4x4} \\ 0_{4x4} & \mathbf{I} \end{bmatrix}, \begin{bmatrix} \mathbf{I} & 0_{4x4} \\ 0_{4x4} & j\mathbf{I} \end{bmatrix} \right\}.$$

$$\theta_3 = \frac{1}{8} \quad \theta_4 = \frac{-1}{8}$$

With respect to $\theta_3 = \frac{1}{8}$, $\theta_4 = \frac{-1}{8}$ with $\alpha \in \{j\}$, when the second codebook for ranks 2, 3, and 4 including seventh through eighth codewords is assumed as

$$C_{2,7\ldots8} = \left\{ \begin{bmatrix} \Theta_3 & 0_{4x4} \\ 0_{4x4} & j\Theta_3 \end{bmatrix}, \begin{bmatrix} \Theta_4 & 0_{4x4} \\ 0_{4x4} & j\Theta_4 \end{bmatrix} \right\}$$

$C_{2,7\ldots8}$,

Suggestion 2: Maximum 4-bit codebook for each rank for $W_1$

In suggestion 2, the first codebook for rank r where r=1, .. 2 may include 16 elements, the first codebook for rank r where r = 3, 4 may include eight elements, and the first codebook for rank r where r = 5, 6, 7, 8 may include four elements.

The above 64 entries may be divided into four subsets each including 16 entries. To indicate one of the subsets, two bits may be used. The two bits may indicate a rank corresponding to the selected subset among rank 1, rank 2, rank 3-4, and rank 5-8.

*Codebook $C_1$*

A first codebook $C_1$ for rank r may be indicated as $C_{1,r}$.

A rank 1 first codebook $C_{1,1}$ may be obtained by employing columns 1 through 16 of the following matrix:

$$V_1 = \frac{\sqrt{2}}{2} \begin{bmatrix} DFT_1 & DFT_2 & DFT_3 & DFT_4 \\ DFT_1 & -DFT_2 & jDFT_3 & -jDFT_4 \end{bmatrix}$$

The column vectors 1 through 16 may correspond to DFT vectors for eight transmit antennas.

A rank 2 first codebook $C_{1,2}$ may include the following 16 matrices:

$$C_{1,2} = \left\{ \frac{1}{2}\begin{bmatrix} D_{1,k} & D_{1,k} \\ D_{1,k} & -D_{1,k} \end{bmatrix}, \frac{1}{2}\begin{bmatrix} D_{2,k} & D_{2,k} \\ D_{2,k} & -D_{2,k} \end{bmatrix}, \frac{1}{2}\begin{bmatrix} D_{3,k} & D_{3,k} \\ jD_{3,k} & -jD_{3,k} \end{bmatrix}, \frac{1}{2}\begin{bmatrix} D_{4,k} & D_{4,k} \\ jD_{4,k} & -jD_{4,k} \end{bmatrix}, \right. \\ \left. k = 1, \ldots, 4 \right\}$$

In this example, $D_{m,k}$ corresponds to a $k^{th}$ column of $DFT_m$. For example, $D_{1,k}$ corresponds to a $k^{th}$ column of $DFT_1$, $D_{2,k}$ corresponds to a $k^{th}$ column of $DFT_2$, $D_{3,k}$ corresponds to a $k^{th}$ column of $DFT_3$, and $D_{4,k}$ corresponds to a $k^{th}$ column of $DFT_4$.

The rank 2 first codebook $C_{1,2}$ may be obtained by using the rank 1 first codebook and adding orthogonal columns based on

$$W_1 = \frac{1}{2}\begin{bmatrix} A & A \\ e^{j\phi}A & -e^{j\phi}A \end{bmatrix}$$

.

A rank 3 first codebook C1,3 may include the following eight matrices:

Example 1)

$$C_{1,3} = \left\{ \begin{array}{l} \dfrac{1}{\sqrt{3}\sqrt{2}} \begin{bmatrix} D_{1,k} & D_{1,k} & D_{1,m} \\ D_{1,k} & -D_{1,k} & D_{1,m} \end{bmatrix}, \\[2em] \dfrac{1}{\sqrt{3}\sqrt{2}} \begin{bmatrix} D_{2,k} & D_{2,k} & D_{2,m} \\ D_{2,k} & -D_{2,k} & D_{2,m} \end{bmatrix}, \\[2em] \dfrac{1}{\sqrt{3}\sqrt{2}} \begin{bmatrix} D_{3,k} & D_{3,k} & D_{3,m} \\ jD_{3,k} & -jD_{3,k} & jD_{3,m} \end{bmatrix}, \\[2em] \dfrac{1}{\sqrt{3}\sqrt{2}} \begin{bmatrix} D_{4,k} & D_{4,k} & D_{4,m} \\ jD_{4,k} & -jD_{4,k} & jD_{4,m} \end{bmatrix} \end{array} \right\}$$

In this example, k=1, 2 and m=k+2.

Example 2)

$$C_{1,3} = \left\{ \begin{array}{l} \dfrac{1}{\sqrt{3}\sqrt{2}} \begin{bmatrix} D_{1,k} & D_{1,k} & D_{1,m} \\ D_{1,k} & -D_{1,k} & -D_{1,m} \end{bmatrix}, \\[2em] \dfrac{1}{\sqrt{3}\sqrt{2}} \begin{bmatrix} D_{2,k} & D_{2,k} & D_{2,m} \\ D_{2,k} & -D_{2,k} & -D_{2,m} \end{bmatrix}, \\[2em] \dfrac{1}{\sqrt{3}\sqrt{2}} \begin{bmatrix} D_{3,k} & D_{3,k} & D_{3,m} \\ jD_{3,k} & -jD_{3,k} & -jD_{3,m} \end{bmatrix}, \\[2em] \dfrac{1}{\sqrt{3}\sqrt{2}} \begin{bmatrix} D_{4,k} & D_{4,k} & D_{4,m} \\ jD_{4,k} & -jD_{4,k} & -jD_{4,m} \end{bmatrix} \end{array} \right\}$$

In this example, k=1, 2 and m=k+2.

Example 3)

$$C_{1,3} = \left\{ \frac{1}{\sqrt{3}\sqrt{2}} \begin{bmatrix} D_{1,k} & D_{1,k} & D_{1,m} \\ D_{1,k} & -D_{1,k} & D_{1,m} \end{bmatrix}, \frac{1}{\sqrt{3}\sqrt{2}} \begin{bmatrix} D_{2,k} & D_{2,k} & D_{2,m} \\ D_{2,k} & -D_{2,k} & D_{2,m} \end{bmatrix} \right\}$$

or

$$C_{1,3} = \left\{ \frac{1}{\sqrt{3}\sqrt{2}} \begin{bmatrix} D_{1,k} & D_{1,k} & D_{1,m} \\ D_{1,k} & -D_{1,k} & -D_{1,m} \end{bmatrix}, \frac{1}{\sqrt{3}\sqrt{2}} \begin{bmatrix} D_{2,k} & D_{2,k} & D_{2,m} \\ D_{2,k} & -D_{2,k} & -D_{2,m} \end{bmatrix} \right\}$$

In this example, k=1,...,4 and m=k mod 4 +1.

Example 4)

$$C_{1,3} = \left\{ \frac{1}{\sqrt{3}\sqrt{2}} \begin{bmatrix} D_{1,k} & D_{1,k} & D_{1,m} \\ D_{1,k} & -D_{1,k} & D_{1,m} \end{bmatrix}, \frac{1}{\sqrt{3}\sqrt{2}} \begin{bmatrix} D_{2,k} & D_{2,k} & D_{2,m} \\ D_{2,k} & -D_{2,k} & D_{2,m} \end{bmatrix} \right\}$$

or

$$C_{1,3} = \left\{ \frac{1}{\sqrt{3}\sqrt{2}} \begin{bmatrix} D_{1,k} & D_{1,k} & D_{1,m} \\ D_{1,k} & -D_{1,k} & -D_{1,m} \end{bmatrix}, \frac{1}{\sqrt{3}\sqrt{2}} \begin{bmatrix} D_{2,k} & D_{2,k} & D_{2,m} \\ D_{2,k} & -D_{2,k} & -D_{2,m} \end{bmatrix} \right\}$$

In this example, (k,m)={(1,2),(1,3),(1,4),(2,3)}.
In addition to examples 1) through 4), other examples may also be employed.
A rank 4 first codebook C1,4 may include the following eight matrices:

Example 1)

$$C_{1,4} = \left\{ \begin{array}{l} \frac{1}{\sqrt{4}\sqrt{2}} \begin{bmatrix} D_{1,k} & D_{1,k} & D_{1,m} & D_{1,m} \\ D_{1,k} & -D_{1,k} & D_{1,m} & -D_{1,m} \end{bmatrix}, \\[2ex] \frac{1}{\sqrt{4}\sqrt{2}} \begin{bmatrix} D_{2,k} & D_{2,k} & D_{2,m} & D_{2,m} \\ D_{2,k} & -D_{2,k} & D_{2,m} & -D_{2,m} \end{bmatrix}, \\[2ex] \frac{1}{\sqrt{4}\sqrt{2}} \begin{bmatrix} D_{3,k} & D_{3,k} & D_{3,m} & D_{3,m} \\ jD_{3,k} & -jD_{3,k} & jD_{3,m} & -jD_{3,m} \end{bmatrix}, \\[2ex] \frac{1}{\sqrt{4}\sqrt{2}} \begin{bmatrix} D_{4,k} & D_{4,k} & D_{4,m} & D_{4,m} \\ jD_{4,k} & -jD_{4,k} & jD_{4,m} & -jD_{4,m} \end{bmatrix} \end{array} \right\}$$

In this example, k=1, 2 and m=k+2.

Example 2)

$$C_{1,4} = \left\{ \begin{array}{l} \dfrac{1}{\sqrt{4\sqrt{2}}} \begin{bmatrix} D_{1,k} & D_{1,k} & D_{1,m} & D_{1,m} \\ D_{1,k} & -D_{1,k} & D_{1,m} & -D_{1,m} \end{bmatrix}, \\[2ex] \dfrac{1}{\sqrt{4\sqrt{2}}} \begin{bmatrix} D_{2,k} & D_{2,k} & D_{2,m} & D_{2,m} \\ D_{2,k} & -D_{2,k} & D_{2,m} & -D_{2,m} \end{bmatrix}, \\[2ex] \dfrac{1}{\sqrt{4\sqrt{2}}} \begin{bmatrix} D_{3,k} & D_{3,k} & D_{3,m} & D_{3,m} \\ jD_{3,k} & -jD_{3,k} & jD_{3,m} & -jD_{3,m} \end{bmatrix}, \\[2ex] \dfrac{1}{\sqrt{4\sqrt{2}}} \begin{bmatrix} D_{4,k} & D_{4,k} & D_{4,m} & D_{4,m} \\ jD_{4,k} & -jD_{4,k} & jD_{4,m} & -jD_{4,m} \end{bmatrix} \end{array} \right\}$$

In this example, $(k,m)=\{(1,2),(1,3)\}$.

Example 3)

$$C_{1,4} =$$

$$\left\{ \begin{array}{l} \dfrac{1}{\sqrt{4\sqrt{2}}} \begin{bmatrix} D_{1,k} & D_{1,k} & D_{1,m} & D_{1,m} \\ D_{1,k} & -D_{1,k} & D_{1,m} & -D_{1,m} \end{bmatrix}, \\[2ex] \dfrac{1}{\sqrt{4\sqrt{2}}} \begin{bmatrix} D_{2,k} & D_{2,k} & D_{2,m} & D_{2,m} \\ D_{2,k} & -D_{2,k} & D_{2,m} & -D_{2,m} \end{bmatrix} \end{array} \right\}$$

In this example, $(k,m)=\{(1,2),(1,3),(1,4),(2,3)\}$.
In addition to examples 1) through 4), other examples may also be employed.
The rank 5 first codebook $C_{1,5}$ may include the following four matrices:

Example 1)

$$C_{1,5} = \left\{ \dfrac{1}{\sqrt{5\sqrt{2}}} \begin{bmatrix} D_{1,k} & D_{1,k} & D_{1,m} & D_{1,m} & D_{1,n} \\ D_{1,k} & -D_{1,k} & D_{1,m} & -D_{1,m} & D_{1,n} \end{bmatrix} \right\}$$

In this example, $(k,m,n)=\{(1,2,3),(1,2,4),(1,3,4),(2,3,4)\}$.

Example 2)

$$C_{1,5} = \left\{ \frac{1}{\sqrt{5}\sqrt{2}} \begin{bmatrix} D_{1,k} & D_{1,k} & D_{1,m} & D_{1,m} & D_{1,n} \\ D_{1,k} & -D_{1,k} & D_{1,m} & -D_{1,m} & -D_{1,n} \end{bmatrix} \right\}$$

In this example, (k,m,n)={(1,2,3),(1,2,4),(1,3,4),(2,3,4)}.

Example 3)

$$C_{1,5} = \left\{ \begin{matrix} \frac{1}{\sqrt{5}\sqrt{2}} \begin{bmatrix} D_{1,k} & D_{1,k} & D_{1,m} & D_{1,m} & D_{1,n} \\ D_{1,k} & -D_{1,k} & D_{1,m} & -D_{1,m} & D_{1,n} \end{bmatrix}, \\ \frac{1}{\sqrt{5}\sqrt{2}} \begin{bmatrix} D_{2,k} & D_{2,k} & D_{2,m} & D_{2,m} & D_{2,n} \\ D_{2,k} & -D_{2,k} & D_{2,m} & -D_{2,m} & D_{2,n} \end{bmatrix} \end{matrix} \right\}$$

In this example, (k,m,n)={(1,2,3),(1,2,4)}.

Example 4)

$$C_{1,5} = \left\{ \begin{matrix} \frac{1}{\sqrt{5}\sqrt{2}} \begin{bmatrix} D_{1,k} & D_{1,k} & D_{1,m} & D_{1,m} & D_{1,n} \\ D_{1,k} & -D_{1,k} & D_{1,m} & -D_{1,m} & D_{1,n} \end{bmatrix}, \\ \frac{1}{\sqrt{5}\sqrt{2}} \begin{bmatrix} D_{2,k} & D_{2,k} & D_{2,m} & D_{2,m} & D_{2,n} \\ D_{2,k} & -D_{2,k} & D_{2,m} & -D_{2,m} & D_{2,n} \end{bmatrix}, \\ \frac{1}{\sqrt{5}\sqrt{2}} \begin{bmatrix} D_{3,k} & D_{3,k} & D_{3,m} & D_{3,m} & D_{3,n} \\ jD_{3,k} & -jD_{3,k} & jD_{3,m} & -jD_{3,m} & jD_{3,n} \end{bmatrix}, \\ \frac{1}{\sqrt{5}\sqrt{2}} \begin{bmatrix} D_{4,k} & D_{4,k} & D_{4,m} & D_{4,m} & D_{4,n} \\ jD_{4,k} & -jD_{4,k} & jD_{4,m} & -jD_{4,m} & jD_{4,n} \end{bmatrix} \end{matrix} \right\}$$

In this example, (k,m,n)={(1,2,3)}.
A rank 6 first codebook $C_{1,6}$ may include the following four matrices:

Example 1)

$$C_{1,6} = \left\{ \frac{1}{\sqrt{6}\sqrt{2}} \begin{bmatrix} D_{1,k} & D_{1,k} & D_{1,m} & D_{1,m} & D_{1,n} & D_{1,n} \\ D_{1,k} & -D_{1,k} & D_{1,m} & -D_{1,m} & D_{1,n} & -D_{1,n} \end{bmatrix} \right\}$$

In this example, (k,m,n)={(1,2,3),(1,2,4),(1,3,4),(2,3,4)}.

Example 2)

$$C_{1,6} = \left\{ \begin{array}{l} \frac{1}{\sqrt{6}\sqrt{2}} \begin{bmatrix} D_{1,k} & D_{1,k} & D_{1,m} & D_{1,m} & D_{1,n} & D_{1,n} \\ D_{1,k} & -D_{1,k} & D_{1,m} & -D_{1,m} & D_{1,n} & -D_{1,n} \end{bmatrix}, \\ \frac{1}{\sqrt{6}\sqrt{2}} \begin{bmatrix} D_{2,k} & D_{2,k} & D_{2,m} & D_{2,m} & D_{2,n} & D_{2,n} \\ D_{2,k} & -D_{2,k} & D_{2,m} & -D_{2,m} & D_{2,n} & -D_{2,n} \end{bmatrix} \end{array} \right\}$$

In this example, (k,m,n)={(1,2,3),(1,2,4)}.

Example 3)

$$C_{1,6} = \left\{ \begin{array}{l} \frac{1}{\sqrt{6}\sqrt{2}} \begin{bmatrix} D_{1,k} & D_{1,k} & D_{1,m} & D_{1,m} & D_{1,n} & D_{1,n} \\ D_{1,k} & -D_{1,k} & D_{1,m} & -D_{1,m} & D_{1,n} & -D_{1,n} \end{bmatrix}, \\ \frac{1}{\sqrt{6}\sqrt{2}} \begin{bmatrix} D_{2,k} & D_{2,k} & D_{2,m} & D_{2,m} & D_{2,n} & D_{2,n} \\ D_{2,k} & -D_{2,k} & D_{2,m} & -D_{2,m} & D_{2,n} & -D_{2,n} \end{bmatrix}, \\ \frac{1}{\sqrt{6}\sqrt{2}} \begin{bmatrix} D_{3,k} & D_{3,k} & D_{3,m} & D_{3,m} & D_{3,n} & D_{3,n} \\ jD_{3,k} & -jD_{3,k} & jD_{3,m} & -jD_{3,m} & jD_{3,n} & -jD_{3,n} \end{bmatrix}, \\ \frac{1}{\sqrt{6}\sqrt{2}} \begin{bmatrix} D_{4,k} & D_{4,k} & D_{4,m} & D_{4,m} & D_{4,n} & D_{4,n} \\ jD_{4,k} & -jD_{4,k} & jD_{4,m} & -jD_{4,m} & jD_{4,n} & -jD_{4,n} \end{bmatrix} \end{array} \right\}$$

In this example, (k,m,n)={(1,2,3)}.
A rank 7 first codebook $C_{1,7}$ may include the following four matrices:

Example 1)

$$C_{1,7} = \left\{ \begin{array}{l} \dfrac{1}{\sqrt{7}\sqrt{2}} \begin{bmatrix} D_{1,k} & D_{1,k} & D_{1,m} & D_{1,m} & D_{1,n} & D_{1,n} & D_{1,p} \\ D_{1,k} & -D_{1,k} & D_{1,m} & -D_{1,m} & D_{1,n} & -D_{1,n} & D_{1,p} \end{bmatrix}, \\ \dfrac{1}{\sqrt{7}\sqrt{2}} \begin{bmatrix} D_{2,k} & D_{2,k} & D_{2,m} & D_{2,m} & D_{2,n} & D_{2,n} & D_{2,p} \\ D_{2,k} & -D_{2,k} & D_{2,m} & -D_{2,m} & D_{2,n} & -D_{2,n} & D_{2,p} \end{bmatrix}, \\ \dfrac{1}{\sqrt{7}\sqrt{2}} \begin{bmatrix} D_{3,k} & D_{3,k} & D_{3,m} & D_{3,m} & D_{3,n} & D_{3,n} & D_{3,p} \\ jD_{3,k} & -jD_{3,k} & jD_{3,m} & -jD_{3,m} & jD_{3,n} & -jD_{3,n} & jD_{3,p} \end{bmatrix}, \\ \dfrac{1}{\sqrt{7}\sqrt{2}} \begin{bmatrix} D_{4,k} & D_{4,k} & D_{4,m} & D_{4,m} & D_{4,n} & D_{4,n} & D_{4,p} \\ jD_{4,k} & -jD_{4,k} & jD_{4,m} & -jD_{4,m} & jD_{4,n} & -jD_{4,n} & jD_{4,p} \end{bmatrix} \end{array} \right\}$$

In this example, (k,m,n, p)={(1,2,3,4)}.

Example 2)

$$C_{1,7} = \left\{ \begin{array}{l} \dfrac{1}{\sqrt{7}\sqrt{2}} \begin{bmatrix} D_{1,k} & D_{1,k} & D_{1,m} & D_{1,m} & D_{1,n} & D_{1,n} & D_{1,p} \\ D_{1,k} & -D_{1,k} & D_{1,m} & -D_{1,m} & D_{1,n} & -D_{1,n} & -D_{1,p} \end{bmatrix}, \\ \dfrac{1}{\sqrt{7}\sqrt{2}} \begin{bmatrix} D_{2,k} & D_{2,k} & D_{2,m} & D_{2,m} & D_{2,n} & D_{2,n} & D_{2,p} \\ D_{2,k} & -D_{2,k} & D_{2,m} & -D_{2,m} & D_{2,n} & -D_{2,n} & -D_{2,p} \end{bmatrix}, \\ \dfrac{1}{\sqrt{7}\sqrt{2}} \begin{bmatrix} D_{3,k} & D_{3,k} & D_{3,m} & D_{3,m} & D_{3,n} & D_{3,n} & D_{3,p} \\ jD_{3,k} & -jD_{3,k} & jD_{3,m} & -jD_{3,m} & jD_{3,n} & -jD_{3,n} & -jD_{3,p} \end{bmatrix}, \\ \dfrac{1}{\sqrt{7}\sqrt{2}} \begin{bmatrix} D_{4,k} & D_{4,k} & D_{4,m} & D_{4,m} & D_{4,n} & D_{4,n} & D_{4,p} \\ jD_{4,k} & -jD_{4,k} & jD_{4,m} & -jD_{4,m} & jD_{4,n} & -jD_{4,n} & -jD_{4,p} \end{bmatrix} \end{array} \right\}$$

In this example, (k,m,n,p)=(1,2,3,4).
A rank 8 first codebook C1,8 may include the following four matrices:

$$C_{1,8} = \left\{ \begin{array}{l} \dfrac{1}{\sqrt{8}\sqrt{2}} \begin{bmatrix} D_1 & D_1 \\ D_1 & -D_1 \end{bmatrix}, \dfrac{1}{\sqrt{8}\sqrt{2}} \begin{bmatrix} D_2 & D_2 \\ D_2 & -D_2 \end{bmatrix}, \\ \dfrac{1}{\sqrt{8}\sqrt{2}} \begin{bmatrix} D_3 & D_3 \\ jD_3 & -jD_3 \end{bmatrix}, \dfrac{1}{\sqrt{8}\sqrt{2}} \begin{bmatrix} D_4 & D_4 \\ jD_4 & -jD_4 \end{bmatrix} \end{array} \right\}$$

*Codebook $C_2$*

The second codebook C2 may be the same as in suggestion 1.

Suggestion 3: Maximum 4-bit codebook for each rank for $W_1$.

Suggestion 3 relates to the structure of $W_1W_2$. In suggestion 3, the first codebook $C_1$ for rank r where r=1, 2 may include 16 elements, the first codebook $C_1$ for rank r where r = 3, 4 may include eight elements, and the first codebook $C_1$ for rank r where r = 5, 6, 7, 8 may include four elements.

The above 64 entries may be divided into four subsets each including 16 entries. To indicate one of the subsets, two bits may be used. The two bits may indicate a rank corresponding to the selected subset among rank 1, rank 2, rank 3-4, and rank 5 -8.

*Codebook $C_1$*

The first codebook $C_1$ for rank r may be indicated as $C_{1,r}$.
A first codebook $C_{1,(1,2)}$ for ranks 1 and 2 may be obtained by the following matrices:

$$\mathbf{B} = \begin{bmatrix} \mathbf{b}_0 & \mathbf{b}_1 & \cdots & \mathbf{b}_{31} \end{bmatrix} \quad ,$$

$$\left[ \mathbf{B} \right]_{1+m,1+n} = e^{j\frac{2\pi mn}{32}},$$

$$m = 0,1,2,3, n = 0,1,\cdots 31$$

$$\mathbf{X}^{(k)} \in \left\{ \frac{1}{2}\begin{bmatrix} \mathbf{b}_{2k \bmod 32} & \mathbf{b}_{(2k+1)\bmod 32} & \mathbf{b}_{(2k+2)\bmod 32} & \mathbf{b}_{(2k+3)\bmod 32} \end{bmatrix} : k = 0,1,\cdots,15 \right\}$$

$$\mathbf{W}_1^{(k)} = \begin{bmatrix} \mathbf{X}^{(k)} & \mathbf{0} \\ \mathbf{0} & \mathbf{X}^{(k)} \end{bmatrix}$$

$$C_{1,(1,2)} = \left\{ \mathbf{W}_1^{(0)}, \mathbf{W}_1^{(1)}, \mathbf{W}_1^{(2)}, \cdots, \mathbf{W}_1^{(15)} \right\}$$

In this example, $[\mathbf{B}]_{1+m,1+n}$ indicates an element present in an $(1+m)^{th}$ row and an $(1+n)^{th}$ column among elements belonging to B, and $b_z(z=0, 1, 2, .. , 31)$ corresponds to a $z^{th}$ column vector of the matrix B, and a mod b denotes a remainder when a is divided by b.
A first codebook $C_{1,(3,4)}$ for ranks 3 and 4 may be obtained by the following matrices:

$$\mathbf{B} = \begin{bmatrix} \mathbf{b}_0 & \mathbf{b}_1 & \cdots & \mathbf{b}_{31} \end{bmatrix} \quad ,$$

$$\left[ \mathbf{B} \right]_{1+m,1+n} = e^{j\frac{2\pi mn}{32}},$$

$$m = 0,1,2,3, n = 0,1,\cdots 31$$

$$\mathbf{X}^{(k)} \in \left\{ \frac{1}{2} \left[ \mathbf{b}_{4k\bmod 32} \quad \mathbf{b}_{(4k+1)\bmod 32} \quad \cdots \quad \mathbf{b}_{(4k+7)\bmod 32} \right] : k = 0,1,2,3,4,5,6,7 \right\}$$

$$\mathbf{W}_1^{(k)} = \begin{bmatrix} \mathbf{X}^{(k)} & \mathbf{0} \\ \mathbf{0} & \mathbf{X}^{(k)} \end{bmatrix}$$

$$C_{1,(3,4)} = \left\{ \mathbf{W}_1^{(0)}, \mathbf{W}_1^{(1)}, \mathbf{W}_1^{(2)}, \cdots, \mathbf{W}_1^{(7)} \right\}$$

A first codebook $C_{1,(5,6,7,8)}$ for ranks 5, 6,7, and 8 may be obtained by the following matrices:

$$\mathbf{X}^{(0)} = \frac{1}{2} \times \begin{bmatrix} 1 & 1 & 1 & 1 \\ 1 & j & -1 & -j \\ 1 & -1 & 1 & -1 \\ 1 & -j & -1 & j \end{bmatrix},$$

$$\mathbf{X}^{(1)} = diag\{1, e^{j\pi/4}, j, e^{j3\pi/4}\}\mathbf{X}^{(0)},$$

$$\mathbf{X}^{(2)} = diag\{1, e^{j\pi/8}, e^{j2\pi/8}, e^{j3\pi/8}\}\mathbf{X}^{(0)},$$

$$\mathbf{X}^{(3)} = diag\{1, e^{j3\pi/8}, e^{j6\pi/8}, e^{j9\pi/8}\}\mathbf{X}^{(0)}$$

$$\mathbf{W}_1^{(k)} = \left\{ \begin{bmatrix} \mathbf{X}^{(k)} & \mathbf{0} \\ \mathbf{0} & \mathbf{X}^{(k)} \end{bmatrix} \right\}, \ k=0,1,2,3$$

$$C_{1,(5,6,7,8)} = \left\{ \mathbf{W}_1^{(0)}, \mathbf{W}_1^{(1)}, \mathbf{W}_1^{(2)}, \mathbf{W}_1^{(3)} \right\}$$

*Codebook C$_2$*

The second codebook $C_2$ for rank r may be indicated as $C_{2,r}$.

A second codebook $C_{2,1}$ for rank 1 may be expressed by:

$$C_{2,1} = \left\{ \frac{1}{\sqrt{2}} \begin{bmatrix} \mathbf{Y} \\ \mathbf{Y} \end{bmatrix}, \frac{1}{\sqrt{2}} \begin{bmatrix} \mathbf{Y} \\ j\mathbf{Y} \end{bmatrix}, \frac{1}{\sqrt{2}} \begin{bmatrix} \mathbf{Y} \\ -\mathbf{Y} \end{bmatrix}, \frac{1}{\sqrt{2}} \begin{bmatrix} \mathbf{Y} \\ -j\mathbf{Y} \end{bmatrix} \right\}$$

$$\mathbf{Y} \in \left\{ \tilde{\mathbf{e}}_1, \tilde{\mathbf{e}}_2, \tilde{\mathbf{e}}_3, \tilde{\mathbf{e}}_4 \right\}$$

A second codebook $C_{2,2}$ for rank 2 may be expressed by:

$$C_{2,2} = \left\{ \frac{1}{\sqrt{2}\sqrt{2}} \begin{bmatrix} \mathbf{Y}_1 & \mathbf{Y}_2 \\ \mathbf{Y}_1 & -\mathbf{Y}_2 \end{bmatrix}, \frac{1}{\sqrt{2}\sqrt{2}} \begin{bmatrix} \mathbf{Y}_1 & \mathbf{Y}_2 \\ j\mathbf{Y}_1 & -j\mathbf{Y}_2 \end{bmatrix} \right\}$$

$$(\mathbf{Y}_1, \mathbf{Y}_2) \in \left\{ \begin{array}{l} (\tilde{\mathbf{e}}_1, \tilde{\mathbf{e}}_1), (\tilde{\mathbf{e}}_2, \tilde{\mathbf{e}}_2), (\tilde{\mathbf{e}}_3, \tilde{\mathbf{e}}_3), (\tilde{\mathbf{e}}_4, \tilde{\mathbf{e}}_4), \\ (\tilde{\mathbf{e}}_1, \tilde{\mathbf{e}}_2), (\tilde{\mathbf{e}}_2, \tilde{\mathbf{e}}_3), (\tilde{\mathbf{e}}_1, \tilde{\mathbf{e}}_4), (\tilde{\mathbf{e}}_2, \tilde{\mathbf{e}}_4) \end{array} \right\}$$

In this example, $\tilde{\mathbf{e}}_n$ corresponds to a selection vectors. An $n^{th}$ element of $\tilde{\mathbf{e}}_n$ may have a value of 1 with respect to ranks 1 and 2 and all of remaining elements may have a value of zero.

A second codebook C2,3 for rank 3 may be expressed by

$$C_{2,3} = \left\{ \frac{1}{\sqrt{3}\sqrt{2}} \begin{bmatrix} \mathbf{Y}_1 & \mathbf{Y}_2 \\ \mathbf{Y}_1 & -\mathbf{Y}_2 \end{bmatrix}, \frac{1}{\sqrt{3}\sqrt{2}} \begin{bmatrix} \mathbf{Y}_1 & \mathbf{Y}_2 \\ j\mathbf{Y}_1 & -j\mathbf{Y}_2 \end{bmatrix} \right\}$$

$$(\mathbf{Y}_1, \mathbf{Y}_2) \in \left\{ \begin{array}{l} (\mathbf{e}_1, [\mathbf{e}_1 \quad \mathbf{e}_5]), (\mathbf{e}_2, [\mathbf{e}_2 \quad \mathbf{e}_6]), \\ (\mathbf{e}_3, [\mathbf{e}_3 \quad \mathbf{e}_7]), (\mathbf{e}_4, [\mathbf{e}_4 \quad \mathbf{e}_8]), \\ (\mathbf{e}_5, [\mathbf{e}_1 \quad \mathbf{e}_5]), (\mathbf{e}_6, [\mathbf{e}_2 \quad \mathbf{e}_6]), \\ (\mathbf{e}_7, [\mathbf{e}_3 \quad \mathbf{e}_7]), (\mathbf{e}_8, [\mathbf{e}_4 \quad \mathbf{e}_8]) \end{array} \right\}$$

A second codebook $C_{2,4}$ for rank 4 may be expressed by

$$C_{2,4} = \left\{ \frac{1}{\sqrt{4}\sqrt{2}} \begin{bmatrix} \mathbf{Y} & \mathbf{Y} \\ \mathbf{Y} & -\mathbf{Y} \end{bmatrix}, \frac{1}{\sqrt{4}\sqrt{2}} \begin{bmatrix} \mathbf{Y} & \mathbf{Y} \\ j\mathbf{Y} & -j\mathbf{Y} \end{bmatrix} \right\}$$

$$\mathbf{Y} \in \left\{ \begin{bmatrix} \mathbf{e}_1 & \mathbf{e}_5 \end{bmatrix}, \begin{bmatrix} \mathbf{e}_2 & \mathbf{e}_6 \end{bmatrix}, \begin{bmatrix} \mathbf{e}_3 & \mathbf{e}_7 \end{bmatrix}, \begin{bmatrix} \mathbf{e}_4 & \mathbf{e}_8 \end{bmatrix} \right\}$$

In this example, $\mathbf{e}_n$ corresponds to a 8x1 selection vectors. An $n^{th}$ element of $e_n$ may have a value of 1 with respect to ranks 3 and 4, and all of remaining elements may have a value of zero.

A second codebook $C_{2,(5,0,7,8)}$ for ranks 5,6,7, and 8 may be obtained by the following matrices:

$$C_{2,5} = \frac{1}{\sqrt{5}\sqrt{2}} \begin{bmatrix} \tilde{\mathbf{e}}_1 & \tilde{\mathbf{e}}_1 & \tilde{\mathbf{e}}_2 & \tilde{\mathbf{e}}_2 & \tilde{\mathbf{e}}_3 \\ \tilde{\mathbf{e}}_1 & -\tilde{\mathbf{e}}_1 & \tilde{\mathbf{e}}_2 & -\tilde{\mathbf{e}}_2 & -\tilde{\mathbf{e}}_3 \end{bmatrix}$$

$$C_{2,6} = \frac{1}{\sqrt{6}\sqrt{2}} \begin{bmatrix} \tilde{\mathbf{e}}_1 & \tilde{\mathbf{e}}_1 & \tilde{\mathbf{e}}_2 & \tilde{\mathbf{e}}_2 & \tilde{\mathbf{e}}_3 & \tilde{\mathbf{e}}_3 \\ \tilde{\mathbf{e}}_1 & -\tilde{\mathbf{e}}_1 & \tilde{\mathbf{e}}_2 & -\tilde{\mathbf{e}}_2 & \tilde{\mathbf{e}}_3 & -\tilde{\mathbf{e}}_3 \end{bmatrix}$$

$$C_{2,7} = \frac{1}{\sqrt{7}\sqrt{2}} \begin{bmatrix} \tilde{\mathbf{e}}_1 & \tilde{\mathbf{e}}_1 & \tilde{\mathbf{e}}_2 & \tilde{\mathbf{e}}_2 & \tilde{\mathbf{e}}_3 & \tilde{\mathbf{e}}_3 & \tilde{\mathbf{e}}_4 \\ \tilde{\mathbf{e}}_1 & -\tilde{\mathbf{e}}_1 & \tilde{\mathbf{e}}_2 & -\tilde{\mathbf{e}}_2 & \tilde{\mathbf{e}}_3 & -\tilde{\mathbf{e}}_3 & \tilde{\mathbf{e}}_4 \end{bmatrix}$$

$$C_{2,8} = \frac{1}{\sqrt{8}\sqrt{2}} \begin{bmatrix} \tilde{\mathbf{e}}_1 & \tilde{\mathbf{e}}_1 & \tilde{\mathbf{e}}_2 & \tilde{\mathbf{e}}_2 & \tilde{\mathbf{e}}_3 & \tilde{\mathbf{e}}_3 & \tilde{\mathbf{e}}_4 & \tilde{\mathbf{e}}_4 \\ \tilde{\mathbf{e}}_1 & -\tilde{\mathbf{e}}_1 & \tilde{\mathbf{e}}_2 & -\tilde{\mathbf{e}}_2 & \tilde{\mathbf{e}}_3 & -\tilde{\mathbf{e}}_3 & \tilde{\mathbf{e}}_4 & -\tilde{\mathbf{e}}_4 \end{bmatrix}$$

In this example, corresponds to a 4 x 1 selection vectors. An $n^{th}$ element of may have a value of 1 with respect to ranks 5, 6, 7, and 8 and all of remaining elements may have a value of zero.

Hereinafter, digits of the first codebook $C_1$ for $W_1$ and the second codebook $C_2$ for $W_2$ will be described in detail. The overall codebook C for W that is defined by performing inner product between each of codewords of $C_1$ and each of codewords of $C_2$ will be described. That is, one of codewords belonging to the overall codebook C may be a precoding matrix W that is finally used by the transmitter.

Detailed digits of first codebook $C_1$

Hereinafter, ans(;,;,n) corresponds to an $n^{th}$ codeword in a first codebook corresponding to a corresponding transmission rank. Each of codewords may include a plurality of column vectors. For example, a first codeword ans(;,;,1) in the first codebook for ranks 1 and 2 may include eight column vectors.

- Rank 1 and 2

ans(:,:,1)=

columns 1-4

| | | | |
|---|---|---|---|
| 0.5000 | 0.5000 | 0.5000 | 0.5000 |
| 0.5000 | 0.4904 + 0.0975i | 0.4619 + 0.1913i | 0.4157 + 0.2778i |
| 0.5000 | 0.4619 + 0.1913i | 0.3536 + 0.3536i | 0.1913 + 0.4619i |
| 0.5000 | 0.4157 + 0.2778i | 0.1913 + 0.4619i | -0.0975 + 0.4904i |
| 0 | 0 | 0 | 0 |
| 0 | 0 | 0 | 0 |
| 0 | 0 | 0 | 0 |
| 0 | 0 | 0 | 0 |

columns 5-8

| | | | |
|---|---|---|---|
| 0 | 0 | 0 | 0 |
| 0 | 0 | 0 | 0 |
| 0 | 0 | 0 | 0 |
| 0 | 0 | 0 | 0 |
| 0.5000 | 0.5000 | 0.5000 | 0.5000 |
| 0.5000 | 0.4904 + 0.0975i | 0.4619 + 0.1913i | 0.4157 + 0.2778i |
| 0.5000 | 0.4619 + 0.1913i | 0.3536 + 0.3536i | 0.1913 + 0.4619i |
| 0.5000 | 0.4157 + 0.2778i | 0.1913 + 0.4619i | -0.0975 + 0.4904i |

ans(:,:,2) =

columns 1-4

| | | | |
|---|---|---|---|
| 0.5000 | 0.5000 | 0.5000 | 0.5000 |
| 0.4619 + 0.1913i | 0.4157 + 0.2778i | 0.3536 + 0.3536i | 0.2778 + 0.4157i |
| 0.3536 + 0.3536i | 0.1913 + 0.4619i | 0.0000 + 0.5000i | -0.1913 + 0.4619i |
| 0.1913 + 0.4619i | -0.0975 + 0.4904i | -0.3536 + 0.3536i | -0.4904 + 0.0975i |
| 0 | 0 | 0 | 0 |
| 0 | 0 | 0 | 0 |
| 0 | 0 | 0 | 0 |
| 0 | 0 | 0 | 0x |

columns 5-8

| | | | |
|---|---|---|---|
| 0 | 0 | 0 | 0 |
| 0 | 0 | 0 | 0 |
| 0 | 0 | 0 | 0 |
| 0 | 0 | 0 | 0 |
| 0.5000 | 0.5000 | 0.5000 | 0.5000 |
| 0.4619 + 0.1913i | 0.4157 + 0.2778i | 0.3536 + 0.3536i | 0.2778 + 0.4157i |
| 0.3536 + 0.3536i | 0.1913 + 0.4619i | 0.0000 + 0.5000i | -0.1913 + 0.4619i |
| 0.3536 + 0.3536i | 0.1913 + 0.4619i | 0.0000 + 0.5000i | -0.1913 + 0.4619i |

ans(:,:,3) =

columns 1-4

| | | | |
|---|---|---|---|
| 0.5000 | 0.5000 | 0.5000 | 0.5000 |
| 0.3536 + 0.3536i | 0.2778 + 0.4157i | 0.1913 + 0.4619i | 0.0975 + 0.4904i |
| 0.0000 + 0.5000i | -0.1913 + 0.4619i | -0.3536 + 0.3536i | -0.4619 + 0.1913i |
| -0.3536 + 0.3536i | -0.4904 + 0.0975i | -0.4619 - 0.1913i | -0.2778 - 0.4157i |
| 0 | 0 | 0 | 0 |
| 0 | 0 | 0 | 0 |
| 0 | 0 | 0 | 0 |
| 0 | 0 | 0 | 0 |

columns 5-8

| | | | |
|---|---|---|---|
| 0 | 0 | 0 | 0 |
| 0 | 0 | 0 | 0 |
| 0 | 0 | 0 | 0 |
| 0 | 0 | 0 | 0 |
| 0.5000 | 0.5000 | 0.5000 | 0.5000 |
| 0.3536 + 0.3536i | 0.2778 + 0.4157i | 0.1913 + 0.4619i | 0.0975 + 0.4904i |
| 0.0000 + 0.5000i | -0.1913 + 0.4619i | -0.3536 + 0.3536i | -0.4619 + 0.1913i |
| -0.3536 + 0.3536i | -0.4904 + 0.0975i | -0.4619 - 0.1913i | -0.2778 - 0.4157i |

ans(:,:,4) =

columns 1-4

| 0.5000 | 0.5000 | 0.5000 | 0.5000 |
| 0.1913 + 0.4619i | 0.0975 + 0.4904i | 0.0000 + 0.5000i | -0.0975 + 0.4904i |
| -0.3536 + 0.3536i | -0.4619 + 0.1913i | -0.5000 + 0.0000i | -0.4619 - 0.1913i |
| -0.4619 - 0.1913i | -0.2778 - 0.4157i | -0.0000 - 0.5000i | 0.2778 - 0.4157i |
| 0 | 0 | 0 | 0 |
| 0 | 0 | 0 | 0 |
| 0 | 0 | 0 | 0 |
| 0 | 0 | 0 | 0 |

columns 5-8

| 0 | 0 | 0 | 0 |
| 0 | 0 | 0 | 0 |
| 0 | 0 | 0 | 0 |
| 0 | 0 | 0 | 0 |
| 0.5000 | 0.5000 | 0.5000 | 0.5000 |
| 0.1913 + 0.4619i | 0.0975 + 0.4904i | 0.0000 + 0.5000i | -0.0975 + 0.4904i |
| -0.3536 + 0.3536i | -0.4619 + 0.1913i | -0.5000 + 0.0000i | -0.4619 - 0.1913i |
| -0.4619 - 0.1913i | -0.2778 - 0.4157i | -0.0000 - 0.5000i | 0.2778 - 0.4157i |

ans(:,:,5) =

columns 1-4

| 0.5000 | 0.5000 | 0.5000 | 0.5000 |
| 0.0000 + 0.5000i | -0.0975 + 0.4904i | -0.1913 + 0.4619i | -0.2778 + 0.4157i |
| -0.5000 + 0.0000i | -0.4619 - 0.1913i | -0.3536 - 0.3536i | -0.1913 - 0.4619i |
| -0.0000 - 0.5000i | 0.2778 - 0.4157i | 0.4619 - 0.1913i | 0.4904 + 0.0975i |
| 0 | 0 | 0 | 0 |
| 0 | 0 | 0 | 0 |
| 0 | 0 | 0 | 0 |
| 0 | 0 | 0 | 0 |

columns 5-8

| 0 | 0 | 0 | 0 |
|---|---|---|---|
| 0 | 0 | 0 | 0 |
| 0 | 0 | 0 | 0 |
| 0 | 0 | 0 | 0 |
| 0.5000 | 0.5000 | 0.5000 | 0.5000 |
| 0.0000 + 0.5000i | -0.0975 + 0.4904i | -0.1913 + 0.4619i | -0.2778 + 0.4157i |
| -0.5000 + 0.0000i | -0.4619 - 0.1913i | -0.3536 - 0.3536i | -0.1913 - 0.4619i |
| -0.0000 - 0.5000i | 0.2778 - 0.4157i | 0.4619 - 0.1913i | 0.4904 + 0.0975i |

ans(:,:,6) =

columns 1-4

| 0.5000 | 0.5000 | 0.5000 | 0.5000 |
|---|---|---|---|
| -0.1913 + 0.4619i | -0.2778 + 0.4157i | -0.3536 + 0.3536i | -0.4157 + 0.2778i |
| -0.3536 - 0.3536i | -0.1913 - 0.4619i | -0.0000 - 0.5000i | 0.1913 - 0.4619i |
| 0.4619 - 0.1913i | 0.4904 + 0.0975i | 0.3536 + 0.3536i | 0.0975 + 0.4904i |
| 0 | 0 | 0 | 0 |
| 0 | 0 | 0 | 0 |
| 0 | 0 | 0 | 0 |
| 0 | 0 | 0 | 0 |

columns 5-8

| 0 | 0 | 0 | 0 |
|---|---|---|---|
| 0 | 0 | 0 | 0 |
| 0 | 0 | 0 | 0 |
| 0 | 0 | 0 | 0 |
| 0.5000 | 0.5000 | 0.5000 | 0.5000 |
| -0.1913 + 0.4619i | -0.2778 + 0.4157i | -0.3536 + 0.3536i | -0.4157 + 0.2778i |
| -0.3536 - 0.3536i | -0.1913 - 0.4619i | -0.0000 - 0.5000i | 0.1913 - 0.4619i |
| 0.4619 - 0.1913i | 0.4904 + 0.0975i | 0.3536 + 0.3536i | 0.0975 + 0.4904i |

ans(:,:,7) =

columns 1-4

| 0.5000 | 0.5000 | 0.5000 | 0.5000 |
| -0.3536 + 0.3536i | -0.4157 + 0.2778i | -0.4619 + 0.1913i | -0.4904 + 0.0975i |
| -0.0000 - 0.5000i | 0.1913 - 0.4619i | 0.3536 - 0.3536i | 0.4619 - 0.1913i |
| 0.3536 + 0.3536i | 0.0975 + 0.4904i | -0.1913 + 0.4619i | -0.4157 + 0.2778i |
| 0 | 0 | 0 | 0 |
| 0 | 0 | 0 | 0 |
| 0 | 0 | 0 | 0 |
| 0 | 0 | 0 | 0 |

columns 5-8

| 0 | 0 | 0 | 0 |
| 0 | 0 | 0 | 0 |
| 0 | 0 | 0 | 0 |
| 0 | 0 | 0 | 0 |
| 0.5000 | 0.5000 | 0.5000 | 0.5000 |
| -0.3536 + 0.3536i | -0.4157 + 0.2778i | -0.4619 + 0.1913i | -0.4904 + 0.0975i |
| -0.0000 - 0.5000i | 0.1913 - 0.4619i | 0.3536 - 0.3536i | 0.4619 - 0.1913i |
| 0.3536 + 0.3536i | 0.0975 + 0.4904i | -0.1913 + 0.4619i | -0.4157 + 0.2778i |

ans(:,:,8) =

columns 1-4

| 0.5000 | 0.5000 | 0.5000 | 0.5000 |
| -0.4619 + 0.1913i | -0.4904 + 0.0975i | -0.5000 + 0.0000i | -0.4904 - 0.0975i |
| 0.3536 - 0.3536i | 0.4619 - 0.1913i | 0.5000 - 0.0000i | 0.4619 + 0.1913i |
| -0.1913 + 0.4619i | -0.4157 + 0.2778i | -0.5000 + 0.0000i | -0.4157 - 0.2778i |
| 0 | 0 | 0 | 0 |
| 0 | 0 | 0 | 0 |
| 0 | 0 | 0 | 0 |
| 0 | 0 | 0 | 0 |

columns 5-8

| 0 | 0 | 0 | 0 |
| 0 | 0 | 0 | 0 |
| 0 | 0 | 0 | 0 |
| 0 | 0 | 0 | 0 |
| 0.5000 | 0.5000 | 0.5000 | 0.5000 |
| -0.4619 + 0.1913i | -0.4904 + 0.0975i | -0.5000 + 0.0000i | -0.4904 - 0.0975i |
| 0.3536 - 0.3536i | 0.4619 - 0.1913i | 0.5000 - 0.0000i | 0.4619 + 0.1913i |
| -0.1913 + 0.4619i | -0.4157 + 0.2778i | -0.5000 + 0.0000i | -0.4157 - 0.2778i |

ans(:,:,9) =

columns 1-4

```
  0.5000              0.5000              0.5000              0.5000
 -0.5000 + 0.0000i   -0.4904 - 0.0975i   -0.4619 - 0.1913i   -0.4157 - 0.2778i
  0.5000 - 0.0000i    0.4619 + 0.1913i    0.3536 + 0.3536i    0.1913 + 0.4619i
 -0.5000 + 0.0000i   -0.4157 - 0.2778i   -0.1913 - 0.4619i    0.0975 - 0.4904i
       0                   0                   0                   0
       0                   0                   0                   0
       0                   0                   0                   0
       0                   0                   0                   0
```

columns 5-8

```
       0                   0                   0                   0
       0                   0                   0                   0
       0                   0                   0                   0
       0                   0                   0                   0
  0.5000              0.5000              0.5000              0.5000
 -0.5000 + 0.0000i   -0.4904 - 0.0975i   -0.4619 - 0.1913i   -0.4157 - 0.2778i
  0.5000 - 0.0000i    0.4619 + 0.1913i    0.3536 + 0.3536i    0.1913 + 0.4619i
 -0.5000 + 0.0000i   -0.4157 - 0.2778i   -0.1913 - 0.4619i    0.0975 - 0.4904i
```

ans(:,:,10) =

columns 1-4

```
  0.5000              0.5000              0.5000              0.5000
 -0.4619 - 0.1913i   -0.4157 - 0.2778i   -0.3536 - 0.3536i   -0.2778 - 0.4157i
  0.3536 + 0.3536i    0.1913 + 0.4619i    0.0000 + 0.5000i   -0.1913 + 0.4619i
 -0.1913 - 0.4619i    0.0975 - 0.4904i    0.3536 - 0.3536i    0.4904 - 0.0975i
       0                   0                   0                   0
       0                   0                   0                   0
       0                   0                   0                   0
       0                   0                   0                   0
```

columns 5-8

| 0 | 0 | 0 | 0 |
|---|---|---|---|
| 0 | 0 | 0 | 0 |
| 0 | 0 | 0 | 0 |
| 0 | 0 | 0 | 0 |
| 0.5000 | 0.5000 | 0.5000 | 0.5000 |
| -0.4619 - 0.1913i | -0.4157 - 0.2778i | -0.3536 - 0.3536i | -0.2778 - 0.4157i |
| 0.3536 + 0.3536i | 0.1913 + 0.4619i | 0.0000 + 0.5000i | -0.1913 + 0.4619i |
| -0.1913 - 0.4619i | 0.0975 - 0.4904i | 0.3536 - 0.3536i | 0.4904 - 0.0975i |

ans(:,:,11) =

columns 1-4

| 0.5000 | 0.5000 | 0.5000 | 0.5000 |
|---|---|---|---|
| -0.3536 - 0.3536i | -0.2778 - 0.4157i | -0.1913 - 0.4619i | -0.0975 - 0.4904i |
| 0.0000 + 0.5000i | -0.1913 + 0.4619i | -0.3536 + 0.3536i | -0.4619 + 0.1913i |
| 0.3536 - 0.3536i | 0.4904 - 0.0975i | 0.4619 + 0.1913i | 0.2778 + 0.4157i |
| 0 | 0 | 0 | 0 |
| 0 | 0 | 0 | 0 |
| 0 | 0 | 0 | 0 |
| 0 | 0 | 0 | 0 |

columns 5-8

| 0 | 0 | 0 | 0 |
|---|---|---|---|
| 0 | 0 | 0 | 0 |
| 0 | 0 | 0 | 0 |
| 0 | 0 | 0 | 0 |
| 0.5000 | 0.5000 | 0.5000 | 0.5000 |
| -0.3536 - 0.3536i | -0.2778 - 0.4157i | -0.1913 - 0.4619i | -0.0975 - 0.4904i |
| 0.0000 + 0.5000i | -0.1913 + 0.4619i | -0.3536 + 0.3536i | -0.4619 + 0.1913i |
| 0.3536 - 0.3536i | 0.4904 - 0.0975i | 0.4619 + 0.1913i | 0.2778 + 0.4157i |

ans(:,:,12) =

columns 1-4

| | | | |
|---|---|---|---|
| 0.5000 | 0.5000 | 0.5000 | 0.5000 |
| -0.1913 - 0.4619i | -0.0975 - 0.4904i | -0.0000 - 0.5000i | 0.0975 - 0.4904i |
| -0.3536 + 0.3536i | -0.4619 + 0.1913i | -0.5000 + 0.0000i | -0.4619 - 0.1913i |
| 0.4619 + 0.1913i | 0.2778 + 0.4157i | 0.0000 + 0.5000i | -0.2778 + 0.4157i |
| 0 | 0 | 0 | 0 |
| 0 | 0 | 0 | 0 |
| 0 | 0 | 0 | 0 |
| 0 | 0 | 0 | 0 |

columns 5-8

| | | | |
|---|---|---|---|
| 0 | 0 | 0 | 0 |
| 0 | 0 | 0 | 0 |
| 0 | 0 | 0 | 0 |
| 0 | 0 | 0 | 0 |
| 0.5000 | 0.5000 | 0.5000 | 0.5000 |
| -0.1913 - 0.4619i | -0.0975 - 0.4904i | -0.0000 - 0.5000i | 0.0975 - 0.4904i |
| -0.3536 + 0.3536i | -0.4619 + 0.1913i | -0.5000 + 0.0000i | -0.4619 - 0.1913i |
| 0.4619 + 0.1913i | 0.2778 + 0.4157i | 0.0000 + 0.5000i | -0.2778 + 0.4157i |

ans(:,:,13) =

columns 1-4

| | | | |
|---|---|---|---|
| 0.5000 | 0.5000 | 0.5000 | 0.5000 |
| -0.0000 - 0.5000i | 0.0975 - 0.4904i | 0.1913 - 0.4619i | 0.2778 - 0.4157i |
| -0.5000 + 0.0000i | -0.4619 - 0.1913i | -0.3536 - 0.3536i | -0.1913 - 0.4619i |
| 0.0000 + 0.5000i | -0.2778 + 0.4157i | -0.4619 + 0.1913i | -0.4904 - 0.0975i |
| 0 | 0 | 0 | 0 |
| 0 | 0 | 0 | 0 |
| 0 | 0 | 0 | 0 |
| 0 | 0 | 0 | 0 |

columns 5-8

| | | | |
|---|---|---|---|
| 0 | 0 | 0 | 0 |
| 0 | 0 | 0 | 0 |
| 0 | 0 | 0 | 0 |
| 0 | 0 | 0 | 0 |
| 0.5000 | 0.5000 | 0.5000 | 0.5000 |
| -0.0000 - 0.5000i | 0.0975 - 0.4904i | 0.1913 - 0.4619i | 0.2778 - 0.4157i |
| -0.5000 + 0.0000i | -0.4619 - 0.1913i | -0.3536 - 0.3536i | -0.1913 - 0.4619i |
| 0.0000 + 0.5000i | -0.2778 + 0.4157i | -0.4619 + 0.1913i | -0.4904 - 0.0975i |

ans(:,:,14) =

columns 1-4

| | | | |
|---|---|---|---|
| 0.5000 | 0.5000 | 0.5000 | 0.5000 |
| 0.1913 - 0.4619i | 0.2778 - 0.4157i | 0.3536 - 0.3536i | 0.4157 - 0.2778i |
| -0.3536 - 0.3536i | -0.1913 - 0.4619i | -0.0000 - 0.5000i | 0.1913 - 0.4619i |
| -0.4619 + 0.1913i | -0.4904 - 0.0975i | -0.3536 - 0.3536i | -0.0975 - 0.4904i |
| 0 | 0 | 0 | 0 |
| 0 | 0 | 0 | 0 |
| 0 | 0 | 0 | 0 |
| 0 | 0 | 0 | 0 |

columns 5-8

| | | | |
|---|---|---|---|
| 0 | 0 | 0 | 0 |
| 0 | 0 | 0 | 0 |
| 0 | 0 | 0 | 0 |
| 0 | 0 | 0 | 0 |
| 0.5000 | 0.5000 | 0.5000 | 0.5000 |
| 0.1913 - 0.4619i | 0.2778 - 0.4157i | 0.3536 - 0.3536i | 0.4157 - 0.2778i |
| -0.3536 - 0.3536i | -0.1913 - 0.4619i | -0.0000 - 0.5000i | 0.1913 - 0.4619i |
| -0.4619 + 0.1913i | -0.4904 - 0.0975i | -0.3536 - 0.3536i | -0.0975 - 0.4904i |

ans(:,:,15) =

columns 1-4

| | | | |
|---|---|---|---|
| 0.5000 | 0.5000 | 0.5000 | 0.5000 |
| 0.3536 - 0.3536i | 0.4157 - 0.2778i | 0.4619 - 0.1913i | 0.4904 - 0.0975i |
| -0.0000 - 0.5000i | 0.1913 - 0.4619i | 0.3536 - 0.3536i | 0.4619 - 0.1913i |
| -0.3536 - 0.3536i | -0.0975 - 0.4904i | 0.1913 - 0.4619i | 0.4157 - 0.2778i |
| 0 | 0 | 0 | 0 |
| 0 | 0 | 0 | 0 |
| 0 | 0 | 0 | 0 |
| 0 | 0 | 0 | 0 |

columns 5-8

| | | | |
|---|---|---|---|
| 0 | 0 | 0 | 0 |
| 0 | 0 | 0 | 0 |
| 0 | 0 | 0 | 0 |
| 0 | 0 | 0 | 0 |
| 0.5000 | 0.5000 | 0.5000 | 0.5000 |
| 0.3536 - 0.3536i | 0.4157 - 0.2778i | 0.4619 - 0.1913i | 0.4904 - 0.0975i |
| -0.0000 - 0.5000i | 0.1913 - 0.4619i | 0.3536 - 0.3536i | 0.4619 - 0.1913i |
| -0.3536 - 0.3536i | -0.0975 - 0.4904i | 0.1913 - 0.4619i | 0.4157 - 0.2778i |

$ans(:,:,16) =$

columns 1-4

| | | | |
|---|---|---|---|
| 0.5000 | 0.5000 | 0.5000 | 0.5000 |
| 0.4619 - 0.1913i | 0.4904 - 0.0975i | 0.5000 | 0.4904 + 0.0975i |
| 0.3536 - 0.3536i | 0.4619 - 0.1913i | 0.5000 | 0.4619 + 0.1913i |
| 0.1913 - 0.4619i | 0.4157 - 0.2778i | 0.5000 | 0.4157 + 0.2778i |
| 0 | 0 | 0 | 0 |
| 0 | 0 | 0 | 0 |
| 0 | 0 | 0 | 0 |
| 0 | 0 | 0 | 0 |

columns 5-8

| | | | |
|---|---|---|---|
| 0 | 0 | 0 | 0 |
| 0 | 0 | 0 | 0 |
| 0 | 0 | 0 | 0 |
| 0 | 0 | 0 | 0 |
| 0.5000 | 0.5000 | 0.5000 | 0.5000 |
| 0.4619 - 0.1913i | 0.4904 - 0.0975i | 0.5000 | 0.4904 + 0.0975i |
| 0.3536 - 0.3536i | 0.4619 - 0.1913i | 0.5000 | 0.4619 + 0.1913i |
| 0.1913 - 0.4619i | 0.4157 - 0.2778i | 0.5000 | 0.4157 + 0.2778i |

Detailed digits of second codebook $C_2$

Hereinafter, digits of codewords belonging to the second codebook $C_2$ for a variety of ranks will be described in detail. (;,;,n) corresponds to an $n^{th}$ codeword in a second codebook corresponding to a corresponding transmission rank. Each of codewords may include at least one column vector.

- Rank 1

(:,:,1) =

    0.7071
         0
         0
         0
    0.7071
         0
         0
         0


(:,:,2) =

    0.7071
         0
         0
         0
    0 + 0.7071i
         0
         0
         0


(:,:,3) =

    0.7071
         0
         0
         0
    -0.7071
         0

         0
         0


(:,:,4) =

    0.7071
         0
         0
         0
    0 - 0.7071i
         0
         0
         0

$(:,:,5) =$

$$0$$
$$0.7071$$
$$0$$
$$0$$
$$0$$
$$0.7071$$
$$0$$
$$0$$

$(:,:,6) =$

$$0$$
$$0.7071$$
$$0$$
$$0$$
$$0$$
$$0 + 0.7071i$$
$$0$$
$$0$$

$(:,:,7) =$

$$0$$
$$0.7071$$
$$0$$
$$0$$
$$0$$
$$-0.7071$$
$$0$$
$$0$$

$(:,:,8) =$

$$0$$
$$0.7071$$
$$0$$
$$0$$
$$0$$
$$0 - 0.7071i$$
$$0$$
$$0$$

(:,:,9) =

0
0
0.7071
0
0
0
0.7071
0

(:,:,10) =

0
0
0.7071
0
0
0
0 + 0.7071i
0

(:,:,11) =

0
0
0.7071
0
0
0
-0.7071
0

$(:,:,12) =$

$$
\begin{array}{c}
0 \\
0 \\
0.7071 \\
0 \\
0 \\
0 \\
0 - 0.7071i \\
0
\end{array}
$$

$(:,:,13) =$

$$
\begin{array}{c}
0 \\
0 \\
0 \\
\\
0.7071 \\
0 \\
0 \\
0 \\
0.7071
\end{array}
$$

$(:,:,14) =$

$$
\begin{array}{c}
0 \\
0 \\
0 \\
0.7071 \\
0 \\
0 \\
0 \\
0 + 0.7071i
\end{array}
$$

(:,:,15) =

0
0
0
0.7071
0
0
0
-0.7071


(:,:,16) =

0
0
0
0.7071
0
0


0
0 - 0.7071i

- Rank2

(:,:,1) =

| 0.5000 | 0.5000 |
|--------|--------|
| 0 | 0 |
| 0 | 0 |
| 0 | 0 |
| 0.5000 | -0.5000 |
| 0 | 0 |
| 0 | 0 |
| 0 | 0 |

(:,:,2) =

| | |
|---|---|
| 0.5000 | 0.5000 |
| 0 | 0 |
| 0 | 0 |
| 0 | 0 |
| 0 + 0.5000i | 0 - 0.5000i |
| 0 | 0 |
| 0 | 0 |
| 0 | 0 |

(:,:,3) =

| | |
|---|---|
| 0 | 0 |
| 0.5000 | 0.5000 |
| 0 | 0 |
| 0 | 0 |
| 0 | 0 |
| 0.5000 | -0.5000 |
| 0 | 0 |
| 0 | 0 |

(:,:,4) =

| | |
|---|---|
| 0 | 0 |
| 0.5000 | 0.5000 |
| 0 | 0 |
| 0 | 0 |
| 0 | 0 |
| 0 + 0.5000i | 0 - 0.5000i |
| 0 | 0 |
| 0 | 0 |

(:,:,5) =

| | |
|---|---|
| 0 | 0 |
| 0 | 0 |
| 0.5000 | 0.5000 |
| 0 | 0 |
| 0 | 0 |
| 0 | 0 |
| 0.5000 | -0.5000 |
| 0 | 0 |

$(:,:,6) =$

$$
\begin{array}{cc}
0 & 0 \\
0 & 0 \\
0.5000 & 0.5000 \\
0 & 0 \\
0 & 0 \\
0 & 0 \\
0 + 0.5000i & 0 - 0.5000i \\
0 & 0
\end{array}
$$

$(:,:,7) =$

$$
\begin{array}{cc}
0 & 0 \\
0 & 0 \\
0 & 0 \\
0.5000 & 0.5000 \\
0 & 0 \\
0 & 0 \\
0 & 0 \\
0.5000 & -0.5000
\end{array}
$$

$(:,:,8) =$

$$
\begin{array}{cc}
0 & 0 \\
0 & 0 \\
0 & 0 \\
0.5000 & 0.5000 \\
0 & 0 \\
0 & 0 \\
0 & 0 \\
0 + 0.5000i & 0 - 0.5000i
\end{array}
$$

(:,:,9) =

```
0.5000          0
     0     0.5000
     0          0
     0          0
0.5000          0
     0    -0.5000
     0          0
     0          0
```

(:,:,10) =

```
0.5000                    0
     0               0.5000
```

```
     0                    0
     0                    0
0 + 0.5000i          0
     0               0 - 0.5000i
     0                    0
     0                    0
```

(:,:,11) =

```
     0          0
0.5000          0
     0     0.5000
     0          0
     0          0
0.5000          0
     0    -0.5000
     0          0
```

(:,:,12) =

$$
\begin{array}{cc}
0 & 0 \\
0.5000 & 0 \\
0 & 0.5000 \\
0 & 0 \\
0 & 0 \\
0 + 0.5000i & 0 \\
0 & 0 - 0.5000i \\
0 & 0
\end{array}
$$

(:,:,13) =

$$
\begin{array}{cc}
0.5000 & 0 \\
0 & 0 \\
0 & 0 \\
0 & 0.5000 \\
0.5000 & 0
\end{array}
$$

$$
\begin{array}{cc}
0 & 0 \\
0 & 0 \\
0 & -0.5000
\end{array}
$$

(:,:,14) =

$$
\begin{array}{cc}
0.5000 & 0 \\
0 & 0 \\
0 & 0 \\
0 & 0.5000 \\
0 + 0.5000i & 0 \\
0 & 0 \\
0 & 0 \\
0 & 0 - 0.5000i
\end{array}
$$

$$(:,:,15) =$$

$$\begin{array}{cc} 0 & 0 \\ 0.5000 & 0 \\ 0 & 0 \\ 0 & 0.5000 \\ 0 & 0 \\ 0.5000 & 0 \\ 0 & 0 \\ 0 & -0.5000 \end{array}$$

$$(:,:,16) =$$

$$\begin{array}{cc} 0 & 0 \\ 0.5000 & 0 \\ 0 & 0 \\ 0 & 0.5000 \\ 0 & 0 \\ 0 + 0.5000i & 0 \\ 0 & 0 \\ 0 & 0 - 0.5000i \end{array}$$

Detailed digits of overall codebook C

A final precoding matrix candidate may be induced by performing inner product with respect to one of codewords belonging to the first codebook $C_1$ and one of codewords belonging to the second codebook $C_2$. That is, the receiver may select a single codeword from the codewords belonging to the first codebook $C_1$ and may select a single codeword from the codewords belonging to the second codebook $C_2$. A combination of the selected two codewords may indicate one of codewords belonging to the overall codebook C, which is described below.

Hereinafter, ans(:,:,m,n) for rank r may indicate an inter product between ans(:,:,m) in the first codebook $C_1$ for rank r and (:,:,n) in the second codebook $C_2$ for rank r. That is, ans(:,:,m,n)= ans(:,:,m) (:,:,n).

For a variety of ranks, the detailed digits of the overall codebook C may be expressed as follows:

- Rank 1
ans(:,:,1,1) =

    0.3536

    0.3536
    0.3536
    0.3536
    0.3536
    0.3536
    0.3536
    0.3536


ans(:,:,2,1) =

    0.3536
    0.3266 + 0.1353i
    0.2500 + 0.2500i
    0.1353 + 0.3266i
    0.3536
    0.3266 + 0.1353i
    0.2500 + 0.2500i
    0.1353 + 0.3266i


ans(:,:,3,1) =

    0.3536
    0.2500 + 0.2500i
    0.0000 + 0.3536i
   -0.2500 + 0.2500i
    0.3536
    0.2500 + 0.2500i
    0.0000 + 0.3536i
   -0.2500 + 0.2500i


ans(:,:,4,1) =

    0.3536
    0.1353 + 0.3266i
   -0.2500 + 0.2500i
   -0.3266 - 0.1353i

```
        0.3536
    0.1353 + 0.3266i
   -0.2500 + 0.2500i
   -0.3266 - 0.1353i
```

ans(:,:,5,1) =

```
        0.3536
    0.0000 + 0.3536i
   -0.3536 + 0.0000i
   -0.0000 - 0.3536i
        0.3536
    0.0000 + 0.3536i
   -0.3536 + 0.0000i
   -0.0000 - 0.3536i
```

ans(:,:,6,1) =

```
        0.3536
   -0.1353 + 0.3266i
   -0.2500 - 0.2500i
    0.3266 - 0.1353i
        0.3536
   -0.1353 + 0.3266i
   -0.2500 - 0.2500i
    0.3266 - 0.1353i
```

ans(:,:,7,1) =

```
        0.3536
   -0.2500 + 0.2500i
   -0.0000 - 0.3536i
    0.2500 + 0.2500i
        0.3536
   -0.2500 + 0.2500i
   -0.0000 - 0.3536i
```

0.2500 + 0.2500i

ans(:,:,8,1) =

0.3536
-0.3266 + 0.1353i
0.2500 - 0.2500i
-0.1353 + 0.3266i
0.3536
-0.3266 + 0.1353i
0.2500 - 0.2500i
-0.1353 + 0.3266i

ans(:,:,9,1) =

0.3536
-0.3536 + 0.0000i
0.3536 - 0.0000i
-0.3536 + 0.0000i
0.3536
-0.3536 + 0.0000i
0.3536 - 0.0000i
-0.3536 + 0.0000i

ans(:,:,10,1) =

0.3536
-0.3266 - 0.1353i
0.2500 + 0.2500i
-0.1353 - 0.3266i
0.3536
-0.3266 - 0.1353i
0.2500 + 0.2500i
-0.1353 - 0.3266i

ans(:,:,11,1) =

0.3536
-0.2500 - 0.2500i
0.0000 + 0.3536i
0.2500 - 0.2500i
0.3536
-0.2500 - 0.2500i
0.0000 + 0.3536i
0.2500 - 0.2500i

ans(:,:,12,1) =

0.3536
-0.1353 - 0.3266i
-0.2500 + 0.2500i
0.3266 + 0.1353i
0.3536
-0.1353 - 0.3266i
-0.2500 + 0.2500i
0.3266 + 0.1353i

ans(:,:,13,1) =

0.3536
-0.0000 - 0.3536i
-0.3536 + 0.0000i
0.0000 + 0.3536i
0.3536
-0.0000 - 0.3536i
-0.3536 + 0.0000i
0.0000 + 0.3536i

ans(:,:,14,1) =

0.3536

```
      0.1353 - 0.3266i
     -0.2500 - 0.2500i
     -0.3266 + 0.1353i
      0.3536
      0.1353 - 0.3266i
     -0.2500 - 0.2500i
     -0.3266 + 0.1353i


ans(:,:,15,1) =

      0.3536
      0.2500 - 0.2500i
     -0.0000 - 0.3536i
    - 0.2500 - 0.2500i
      0.3536
      0.2500 - 0.2500i
     -0.0000 - 0.3536i
     -0.2500 - 0.2500i


ans(:,:,16,1) =

      0.3536
      0.3266 - 0.1353i
      0.2500 - 0.2500i
      0.1353 - 0.3266i
      0.3536
      0.3266 - 0.1353i
      0.2500 - 0.2500i
      0.1353 - 0.3266i


ans(:,:,1,2) =

      0.3536
      0.3536
      0.3536
      0.3536
```

```
        0 + 0.3536i
        0 + 0.3536i
        0 + 0.3536i
        0 + 0.3536i


ans(:,:,2,2) =

   0.3536
   0.3266 + 0.1353i
   0.2500 + 0.2500i
   0.1353 + 0.3266i
        0 + 0.3536i
  -0.1353 + 0.3266i
  -0.2500 + 0.2500i
  -0.3266 + 0.1353i


ans(:,:,3,2) =

   0.3536
   0.2500 + 0.2500i
   0.0000 + 0.3536i
  -0.2500 + 0.2500i
        0 + 0.3536i
  -0.2500 + 0.2500i
  -0.3536 + 0.0000i
  -0.2500 - 0.2500i


ans(:,:,4,2) =

   0.3536
   0.1353 + 0.3266i
  -0.2500 + 0.2500i
  -0.3266 - 0.1353i
        0 + 0.3536i
  -0.3266 + 0.1353i
  -0.2500 - 0.2500i
```

0.1353 - 0.3266i

ans(:,:,5,2) =

    0.3536
    0.0000 + 0.3536i
    -0.3536 + 0.0000i
    -0.0000 - 0.3536i
         0 + 0.3536i
    -0.3536 + 0.0000i
    -0.0000 - 0.3536i
    0.3536 - 0.0000i

ans(:,:,6,2) =

    0.3536
    -0.1353 + 0.3266i
    -0.2500 - 0.2500i
    0.3266 - 0.1353i
         0 + 0.3536i
    -0.3266 - 0.1353i
    0.2500 - 0.2500i
    0.1353 + 0.3266i

ans(:,:,7,2) =

    0.3536
    -0.2500 + 0.2500i
    -0.0000 - 0.3536i
    0.2500 + 0.2500i
         0 + 0.3536i
    -0.2500 - 0.2500i
    0.3536 - 0.0000i
    -0.2500 + 0.2500i

ans(:,:,8,2) =

0.3536
-0.3266 + 0.1353i
0.2500 - 0.2500i
-0.1353 + 0.3266i
0 + 0.3536i
-0.1353 - 0.3266i
0.2500 + 0.2500i
-0.3266 - 0.1353i


ans(:,:,9,2) =

0.3536
-0.3536 + 0.0000i
0.3536 - 0.0000i
-0.3536 + 0.0000i
0 + 0.3536i
-0.0000 - 0.3536i
0.0000 + 0.3536i
-0.0000 - 0.3536i


ans(:,:,10,2) =

0.3536
-0.3266 - 0.1353i
0.2500 + 0.2500i
-0.1353 - 0.3266i
0 + 0.3536i
0.1353 - 0.3266i
-0.2500 + 0.2500i
0.3266 - 0.1353i


ans(:,:,11,2) =

0.3536

-0.2500 - 0.2500i
0.0000 + 0.3536i
0.2500 - 0.2500i
0 + 0.3536i
0.2500 - 0.2500i
-0.3536 + 0.0000i
0.2500 + 0.2500i

ans(:,:,12,2) =

0.3536
-0.1353 - 0.3266i
-0.2500 + 0.2500i
0.3266 + 0.1353i
0 + 0.3536i
0.3266 - 0.1353i
-0.2500 - 0.2500i
-0.1353 + 0.3266i

ans(:,:,13,2) =

0.3536
-0.0000 - 0.3536i
-0.3536 + 0.0000i
0.0000 + 0.3536i
0 + 0.3536i
0.3536 - 0.0000i
-0.0000 - 0.3536i
-0.3536 + 0.0000i

ans(:,:,14,2) =

0.3536
0.1353 - 0.3266i
-0.2500 - 0.2500i
-0.3266 + 0.1353i

0 + 0.3536i
0.3266 + 0.1353i
0.2500 - 0.2500i
-0.1353 - 0.3266i


ans(:,:,15,2) =

0.3536
0.2500  - 0.2500i
-0.0000 - 0.3536i
-0.2500 - 0.2500i
0 + 0.3536i
0.2500 + 0.2500i
0.3536 - 0.0000i
0.2500 - 0.2500i


ans(:,:,16,2) =

0.3536
0.3266 - 0.1353i
0.2500 - 0.2500i
0.1353 - 0.3266i
0 + 0.3536i
0.1353 + 0.3266i
0.2500 + 0.2500i
0.3266 + 0.1353i


ans(:,:,1,3) =

0.3536
0.3536
0.3536
0.3536
-0.3536
-0.3536
-0.3536

-0.3536

ans(:,:,2,3) =

```
 0.3536
 0.3266 + 0.1353i
 0.2500 + 0.2500i
 0.1353 + 0.3266i
-0.3536
-0.3266 - 0.1353i
-0.2500 - 0.2500i
-0.1353 - 0.3266i
```

ans(:,:,3,3) =

```
 0.3536
 0.2500 + 0.2500i
 0.0000 + 0.3536i
-0.2500 + 0.2500i
-0.3536
-0.2500 - 0.2500i
-0.0000 - 0.3536i
 0.2500 - 0.2500i
```

ans(:,:,4,3) =

```
 0.3536
 0.1353 + 0.3266i
-0.2500 + 0.2500i
-0.3266 - 0.1353i
-0.3536
-0.1353 - 0.3266i
 0.2500 - 0.2500i
 0.3266 + 0.1353i
```

ans(:,:,5,3) =

```
 0.3536
 0.0000 + 0.3536i
-0.3536 + 0.0000i
-0.0000 - 0.3536i
-0.3536
-0.0000 - 0.3536i
 0.3536 - 0.0000i
 0.0000 + 0.3536i
```

ans(:,:,6,3) =

```
 0.3536
-0.1353 + 0.3266i
-0.2500 - 0.2500i
 0.3266 - 0.1353i
-0.3536
 0.1353 - 0.3266i
 0.2500 + 0.2500i
-0.3266 + 0.1353i
```

ans(:,:,7,3) =

```
 0.3536
-0.2500 + 0.2500i
-0.0000 - 0.3536i
 0.2500 + 0.2500i
-0.3536
 0.2500 - 0.2500i
 0.0000 + 0.3536i
-0.2500 - 0.2500i
```

ans(:,:,8,3) =

```
 0.3536
```

-0.3266 + 0.1353i
0.2500 - 0.2500i
-0.1353 + 0.3266i
-0.3536
0.3266 - 0.1353i
-0.2500 + 0.2500i
0.1353 - 0.3266i

ans(:,:,9,3) =

0.3536
-0.3536 + 0.0000i
0.3536 - 0.0000i
-0.3536 + 0.0000i
-0.3536
0.3536 - 0.0000i
-0.3536 + 0.0000i
0.3536 - 0.0000i

ans(:,:,10,3) =

0.3536
-0.3266 - 0.1353i
0.2500 + 0.2500i
-0.1353 - 0.3266i
-0.3536
0.3266 + 0.1353i
-0.2500 - 0.2500i
0.1353 + 0.3266i

ans(:,:,11,3) =

0.3536
-0.2500 - 0.2500i
0.0000 + 0.3536i
0.2500 - 0.2500i

```
-0.3536
  0.2500 + 0.2500i
-0.0000 - 0.3536i
-0.2500 + 0.2500i


ans(:,:,12,3) =

  0.3536
-0.1353 - 0.3266i
-0.2500 + 0.2500i
  0.3266 + 0.1353i
-0.3536
  0.1353 + 0.3266i
  0.2500 - 0.2500i
-0.3266 - 0.1353i


ans(:,:,13,3) =

  0.3536
-0.0000 - 0.3536i
-0.3536 + 0.0000i
  0.0000 + 0.3536i
-0.3536
  0.0000 + 0.3536i
  0.3536 - 0.0000i
-0.0000 - 0.3536i


ans(:,:,14,3) =

  0.3536
  0.1353 - 0.3266i
-0.2500 - 0.2500i
-0.3266 + 0.1353i
-0.3536
-0.1353 + 0.3266i
  0.2500 + 0.2500i
```

0.3266 - 0.1353i

ans(:,:,15,3) =

```
 0.3536
 0.2500 - 0.2500i
-0.0000 - 0.3536i
-0.2500 - 0.2500i
-0.3536
-0.2500 + 0.2500i
 0.0000 + 0.3536i
 0.2500 + 0.2500i
```

ans(:,:,16,3) =

```
 0.3536
 0.3266 - 0.1353i
 0.2500 - 0.2500i
 0.1353 - 0.3266i
-0.3536
-0.3266 + 0.1353i
-0.2500 + 0.2500i
-0.1353 + 0.3266i
```

ans(:,:,1,4) =

```
 0.3536
 0.3536
 0.3536
 0.3536
     0 - 0.3536i
     0 - 0.3536i
     0 - 0.3536i
     0 - 0.3536i
```

ans(:,:,2,4) =

```
     0.3536
     0.3266 + 0.1353i
     0.2500 + 0.2500i
     0.1353 + 0.3266i
          0 - 0.3536i
     0.1353 - 0.3266i
     0.2500 - 0.2500i
     0.3266 - 0.1353i
```

ans(:,:,3,4) =

```
     0.3536
     0.2500 + 0.2500i
     0.0000 + 0.3536i
    -0.2500 + 0.2500i
          0 - 0.3536i
     0.2500 - 0.2500i
     0.3536 - 0.0000i
     0.2500 + 0.2500i
```

ans(:,:,4,4) =

```
     0.3536
     0.1353 + 0.3266i
    -0.2500 + 0.2500i
    -0.3266 - 0.1353i
          0 - 0.3536i
     0.3266 - 0.1353i
     0.2500 + 0.2500i
    -0.1353 + 0.3266i
```

ans(:,:,5,4) =

```
     0.3536
```

0.0000 + 0.3536i
-0.3536 + 0.0000i
-0.0000 - 0.3536i
0 - 0.3536i
0.3536 - 0.0000i
0.0000 + 0.3536i
-0.3536 + 0.0000i


ans(:,:,6,4) =

0.3536
-0.1353 + 0.3266i
-0.2500 - 0.2500i
0.3266 - 0.1353i
0 - 0.3536i
0.3266 + 0.1353i
-0.2500 + 0.2500i
-0.1353 - 0.3266i


ans(:,:,7,4) =

0.3536
-0.2500 + 0.2500i
-0.0000 - 0.3536i
0.2500 + 0.2500i
0 - 0.3536i
0.2500 + 0.2500i
-0.3536 + 0.0000i
0.2500 - 0.2500i


ans(:,:,8,4) =

0.3536
-0.3266 + 0.1353i
0.2500 - 0.2500i
-0.1353 + 0.3266i

```
                    0 - 0.3536i
              0.1353 + 0.3266i
             -0.2500 - 0.2500i
              0.3266 + 0.1353i


ans(:,:,9,4) =

              0.3536
             -0.3536 + 0.0000i
              0.3536 - 0.0000i
             -0.3536 + 0.0000i
                    0 - 0.3536i
              0.0000 + 0.3536i
             -0.0000 - 0.3536i
              0.0000 + 0.3536i


ans(:,:,10,4) =

              0.3536
             -0.3266 - 0.1353i
              0.2500 + 0.2500i
             -0.1353 - 0.3266i
                    0 - 0.3536i
             -0.1353 + 0.3266i
              0.2500 - 0.2500i
             -0.3266 + 0.1353i


ans(:,:,11,4) =

              0.3536
             -0.2500 - 0.2500i
              0.0000 + 0.3536i
              0.2500 - 0.2500i
                    0 - 0.3536i
             -0.2500 + 0.2500i
              0.3536 - 0.0000i
```

-0.2500 - 0.2500i

ans(:,:,12,4) =

0.3536
-0.1353 - 0.3266i
- 0.2500 + 0.2500i
0.3266 + 0.1353i
0 - 0.3536i
-0.3266 + 0.1353i
0.2500 + 0.2500i
0.1353 - 0.3266i

ans(:,:,13,4) =

0.3536
-0.0000 - 0.3536i
-0.3536 + 0.0000i
0.0000 + 0.3536i
0 - 0.3536i
-0.3536 + 0.0000i
0.0000 + 0.3536i
0.3536 - 0.0000i

ans(:,:,14,4) =

0.3536
0.1353 - 0.3266i
-0.2500 - 0.2500i
-0.3266 + 0.1353i
0 - 0.3536i
-0.3266 - 0.1353i
-0.2500 + 0.2500i
0.1353 + 0.3266i

ans(:,:,15,4) =

    0.3536
    0.2500 - 0.2500i
   -0.0000 - 0.3536i
   -0.2500 - 0.2500i
        0 - 0.3536i
   -0.2500 - 0.2500i
   -0.3536 + 0.0000i
   -0.2500 + 0.2500i


ans(:,:,16,4) =

    0.3536
    0.3266 - 0.1353i
    0.2500 - 0.2500i
    0.1353 - 0.3266i
        0 - 0.3536i
   -0.1353 - 0.3266i
   -0.2500 - 0.2500i
   -0.3266 - 0.1353i

ans(:,:,1,5) =

    0.3536
    0.3468 + 0.0690i
    0.3266 + 0.1353i
    0.2940 + 0.1964i
    0.3536
    0.3468 + 0.0690i
    0.3266 + 0.1353i
    0.2940 + 0.1964i


ans(:,:,2,5) =

    0.3536

```
         0.2940 + 0.1964i
         0.1353 + 0.3266i
        -0.0690 + 0.3468i
         0.3536
         0.2940 + 0.1964i
         0.1353 + 0.3266i
        -0.0690 + 0.3468i
```

ans(:,:,3,5) =

```
         0.3536
         0.1964 + 0.2940i
        -0.1353 + 0.3266i
        -0.3468 + 0.0690i
         0.3536
         0.1964 + 0.2940i
        -0.1353 + 0.3266i
        -0.3468 + 0.0690i
```

ans(:,:,4,5) =

```
          0.3536
          0.0690 + 0.3468i
         -0.3266 + 0.1353i
         -0.1964 - 0.2940i
          0.3536
          0.0690 + 0.3468i
         -0.3266 + 0.1353i
         -0.1964 - 0.2940i
```

ans(:,:,5,5) =

```
          0.3536
         -0.0690 + 0.3468i
         -0.3266 - 0.1353i
          0.1964 - 0.2940i
```

```
0.3536
-0.0690 + 0.3468i
-0.3266 - 0.1353i
 0.1964 - 0.2940i
```

ans(:,:,6,5) =

```
0.3536
-0.1964 + 0.2940i
-0.1353 - 0.3266i
 0.3468 + 0.0690i
 0.3536
-0.1964 + 0.2940i
-0.1353 - 0.3266i
 0.3468 + 0.0690i
```

ans(:,:,7,5) =

```
0.3536
-0.2940 + 0.1964i
 0.1353 - 0.3266i
 0.0690 + 0.3468i
 0.3536
-0.2940 + 0.1964i
 0.1353 - 0.3266i
 0.0690 + 0.3468i
```

ans(:,:,8,5) =

```
0.3536
-0.3468 + 0.0690i
 0.3266 - 0.1353i
-0.2940 + 0.1964i
 0.3536
-0.3468 + 0.0690i
 0.3266 - 0.1353i
```

-0.2940 + 0.1964i

ans(:,:,9,5) =

0.3536
-0.3468 - 0.0690i
0.3266 + 0.1353i
-0.2940 - 0.1964i
0.3536
-0.3468 - 0.0690i
0.3266 + 0.1353i
-0.2940 - 0.1964i

ans(:,:,10,5) =

0.3536
-0.2940 - 0.1964i
0.1353 + 0.3266i
0.0690 - 0.3468i
0.3536
-0.2940 - 0.1964i
0.1353 + 0.3266i
0.0690 - 0.3468i

ans(:,:,11,5) =

0.3536
-0.1964 - 0.2940i
-0.1353 + 0.3266i
0.3468 - 0.0690i
0.3536
-0.1964 - 0.2940i
-0.1353 + 0.3266i
0.3468 - 0.0690i

ans(:,:,12,5) =

0.3536
-0.0690 - 0.3468i
-0.3266 + 0.1353i
0.1964 + 0.2940i
0.3536
-0.0690 - 0.3468i
-0.3266 + 0.1353i
0.1964 + 0.2940i

ans(:,:,13,5) =

0.3536
0.0690 - 0.3468i
-0.3266 - 0.1353i
-0.1964 + 0.2940i
0.3536
0.0690 - 0.3468i
-0.3266 - 0.1353i
-0.1964 + 0.2940i

ans(:,:,14,5) =

0.3536
0.1964 - 0.2940i
-0.1353 - 0.3266i
-0.3468 - 0.0690i
0.3536
0.1964 - 0.2940i
-0.1353 - 0.3266i
-0.3468 - 0.0690i

ans(:,:,15,5) =

0.3536

```
     0.2940 - 0.1964i
     0.1353 - 0.3266i
    -0.0690 - 0.3468i
     0.3536
     0.2940 - 0.1964i
     0.1353 - 0.3266i
    -0.0690 - 0.3468i
```

ans(:,:,16,5) =

```
     0.3536
     0.3468 - 0.0690i
     0.3266 - 0.1353i
     0.2940 - 0.1964i
     0.3536
     0.3468 - 0.0690i
     0.3266 - 0.1353i
     0.2940 - 0.1964i
```

ans(:,:,1,6) =

```
     0.3536
     0.3468 + 0.0690i
     0.3266 + 0.1353i
     0.2940 + 0.1964i
          0 + 0.3536i
    -0.0690 + 0.3468i
    -0.1353 + 0.3266i
    -0.1964 + 0.2940i
```

ans(:,:,2,6) =

```
     0.3536
     0.2940 + 0.1964i
     0.1353 + 0.3266i
    -0.0690 + 0.3468i
```

```
            0 + 0.3536i
      -0.1964 + 0.2940i
      -0.3266 + 0.1353i
      -0.3468 - 0.0690i
```

ans(:,:,3,6) =

```
        0.3536
        0.1964 + 0.2940i
       -0.1353 + 0.3266i
       -0.3468 + 0.0690i
            0 + 0.3536i
       -0.2940 + 0.1964i
       -0.3266 - 0.1353i
       -0.0690 - 0.3468i
```

ans(:,:,4,6) =

```
        0.3536
        0.0690 + 0.3468i
       -0.3266 + 0.1353i
       -0.1964 - 0.2940i
            0 + 0.3536i
       -0.3468 + 0.0690i
       -0.1353 - 0.3266i
        0.2940 - 0.1964i
```

ans(:,:,5,6) =

```
        0.3536
       -0.0690 + 0.3468i
       -0.3266 - 0.1353i
        0.1964 - 0.2940i
            0 + 0.3536i
       -0.3468 - 0.0690i
        0.1353 - 0.3266i
```

0.2940 + 0.1964i


ans(:,:,6,6) =

0.3536
-0.1964 + 0.2940i
-0.1353 - 0.3266i
0.3468 + 0.0690i
0 + 0.3536i
-0.2940 - 0.1964i
0.3266 - 0.1353i
-0.0690 + 0.3468i


ans(:,:,7,6) =

0.3536
-0.2940 + 0.1964i
0.1353 - 0.3266i
0.0690 + 0.3468i
0 + 0.3536i
-0.1964 - 0.2940i
0.3266 + 0.1353i
-0.3468 + 0.0690i


ans(:,:,8,6) =

0.3536
-0.3468 + 0.0690i
0.3266 - 0.1353i
-0.2940 + 0.1964i
0 + 0.3536i
-0.0690 - 0.3468i
0.1353 + 0.3266i
-0.1964 - 0.2940i

ans(:,:,9,6) =

0.3536
-0.3468 - 0.0690i
0.3266 + 0.1353i
-0.2940 - 0.1964i
0 + 0.3536i
0.0690 - 0.3468i
-0.1353 + 0.3266i
0.1964 - 0.2940i


ans(:,:,10,6) =

0.3536
-0.2940 - 0.1964i
0.1353 + 0.3266i
0.0690 - 0.3468i
0 + 0.3536i
0.1964 - 0.2940i
-0.3266 + 0.1353i
0.3468 + 0.0690i


ans(:,:,11,6) =

0.3536
-0.1964 - 0.2940i
-0.1353 + 0.3266i
0.3468 - 0.0690i
0 + 0.3536i
0.2940 - 0.1964i
-0.3266 - 0.1353i
0.0690 + 0.3468i


ans(:,:,12,6) =

0.3536

-0.0690 - 0.3468i
-0.3266 + 0.1353i
0.1964 + 0.2940i
0 + 0.3536i
0.3468 - 0.0690i
-0.1353 - 0.3266i
-0.2940 + 0.1964i


ans(:,:,13,6) =

0.3536
0.0690 - 0.3468i
-0.3266 - 0.1353i
-0.1964 + 0.2940i
0 + 0.3536i
0.3468 + 0.0690i
0.1353 - 0.3266i
-0.2940 - 0.1964i


ans(:,:,14,6) =

0.3536
0.1964 - 0.2940i
-0.1353 - 0.3266i
-0.3468 - 0.0690i
0 + 0.3536i
0.2940 + 0.1964i
0.3266 - 0.1353i
0.0690 - 0.3468i


ans(:,:,15,6) =

0.3536
0.2940 - 0.1964i
0.1353 - 0.3266i
-0.0690 - 0.3468i

```
                  0 + 0.3536i
             0.1964 + 0.2940i
             0.3266 + 0.1353i
             0.3468 - 0.0690i
```

ans(:,:,16,6) =

```
             0.3536
             0.3468 - 0.0690i
             0.3266 - 0.1353i
             0.2940 - 0.1964i
                  0 + 0.3536i
             0.0690 + 0.3468i
             0.1353 + 0.3266i
             0.1964 + 0.2940i
```

ans(:,:,1,7) =

```
             0.3536
             0.3468 + 0.0690i
             0.3266 + 0.1353i
             0.2940 + 0.1964i
            -0.3536
            -0.3468 - 0.0690i
            -0.3266 - 0.1353i
            -0.2940 - 0.1964i
```

ans(:,:,2,7) =

```
             0.3536
             0.2940 + 0.1964i
             0.1353 + 0.3266i
            -0.0690 + 0.3468i
            -0.3536
            -0.2940 - 0.1964i
            -0.1353 - 0.3266i
```

0.0690 - 0.3468i


ans(:,:,3,7) =

0.3536
0.1964 + 0.2940i
-0.1353 + 0.3266i
-0.3468 + 0.0690i
-0.3536
-0.1964 - 0.2940i
0.1353 - 0.3266i
0.3468 - 0.0690i


ans(:,:,4,7) =

0.3536
0.0690 + 0.3468i
-0.3266 + 0.1353i
-0.1964 - 0.2940i
-0.3536
-0.0690 - 0.3468i
0.3266 - 0.1353i
0.1964 + 0.2940i

ans(:,:,5,7) =

0.3536
-0.0690 + 0.3468i
-0.3266 - 0.1353i
0.1964 - 0.2940i
-0.3536
0.0690 - 0.3468i
0.3266 + 0.1353i
-0.1964 + 0.2940i

ans(:,:,6,7) =

0.3536
-0.1964 + 0.2940i
-0.1353 - 0.3266i
0.3468 + 0.0690i
-0.3536
0.1964 - 0.2940i
0.1353 + 0.3266i
-0.3468 - 0.0690i


ans(:,:,7,7) =

0.3536
-0.2940 + 0.1964i
0.1353 - 0.3266i
0.0690 + 0.3468i
-0.3536
0.2940 - 0.1964i
-0.1353 + 0.3266i
-0.0690 - 0.3468i

ans(:,:,8,7) =

0.3536
-0.3468 + 0.0690i
0.3266 - 0.1353i
-0.2940 + 0.1964i
-0.3536
0.3468 - 0.0690i
-0.3266 + 0.1353i
0.2940 - 0.1964i


ans(:,:,9,7) =

0.3536

-0.3468 - 0.0690i
0.3266 + 0.1353i
-0.2940 - 0.1964i
-0.3536
0.3468 + 0.0690i
-0.3266 - 0.1353i
0.2940 + 0.1964i


ans(:,:,10,7) =

0.3536
-0.2940 - 0.1964i
0.1353 + 0.3266i
0.0690 - 0.3468i
-0.3536
0.2940 + 0.1964i
-0.1353 - 0.3266i
-0.0690 + 0.3468i


ans(:,:,11,7) =

0.3536
-0.1964 - 0.2940i
-0.1353 + 0.3266i
0.3468 - 0.0690i
-0.3536
0.1964 + 0.2940i
0.1353 - 0.3266i
-0.3468 + 0.0690i


ans(:,:,12,7) =

0.3536
-0.0690 - 0.3468i
-0.3266 + 0.1353i
0.1964 + 0.2940i

```
   -0.3536
    0.0690 + 0.3468i
    0.3266 - 0.1353i
   -0.1964 - 0.2940i
```

ans(:,:,13,7) =

```
    0.3536
    0.0690 - 0.3468i
   -0.3266 - 0.1353i
   -0.1964 + 0.2940i
   -0.3536
   -0.0690 + 0.3468i
    0.3266 + 0.1353i
    0.1964 - 0.2940i
```

ans(:,:,14,7) =

```
    0.3536
    0.1964 - 0.2940i
   -0.1353 - 0.3266i
   -0.3468 - 0.0690i
   -0.3536
   -0.1964 + 0.2940i
    0.1353 + 0.3266i
    0.3468 + 0.0690i
```

ans(:,:,15,7) =

```
    0.3536
    0.2940 - 0.1964i
    0.1353 - 0.3266i
   -0.0690 - 0.3468i
   -0.3536
   -0.2940 + 0.1964i
   -0.1353 + 0.3266i
```

0.0690 + 0.3468i

ans(:,:,16,7) =

0.3536
0.3468 - 0.0690i
0.3266 - 0.1353i
0.2940 - 0.1964i
-0.3536
-0.3468 + 0.0690i
-0.3266 + 0.1353i
-0.2940 + 0.1964i

ans(:,:,1,8) =

0.3536
0.3468 + 0.0690i
0.3266 + 0.1353i
0.2940 + 0.1964i
     0 - 0.3536i
0.0690 - 0.3468i
0.1353 - 0.3266i
0.1964 - 0.2940i

ans(:,:,2,8) =

0.3536
0.2940 + 0.1964i
0.1353 + 0.3266i
-0.0690 + 0.3468i
     0 - 0.3536i
0.1964 - 0.2940i
0.3266 - 0.1353i
0.3468 + 0.0690i

ans(:,:,3,8) =

```
        0.3536
0.1964 + 0.2940i
-0.1353 + 0.3266i
-0.3468 + 0.0690i
     0 - 0.3536i
0.2940 - 0.1964i
0.3266 + 0.1353i
0.0690 + 0.3468i
```

ans(:,:,4,8) =

```
        0.3536
0.0690 + 0.3468i
-0.3266 + 0.1353i
-0.1964 - 0.2940i
     0 - 0.3536i
0.3468 - 0.0690i
0.1353 + 0.3266i
-0.2940 + 0.1964i
```

ans(:,:,5,8) =

```
        0.3536
-0.0690 + 0.3468i
-0.3266 - 0.1353i
0.1964 - 0.2940i
     0 - 0.3536i
0.3468 + 0.0690i
-0.1353 + 0.3266i
-0.2940 - 0.1964i
```

ans(:,:,6,8) =

```
        0.3536
```

-0.1964 + 0.2940i
-0.1353 - 0.3266i
0.3468 + 0.0690i
0 - 0.3536i
0.2940 + 0.1964i
-0.3266 + 0.1353i
0.0690 - 0.3468i

ans(:,:,7,8) =

0.3536
-0.2940 + 0.1964i
0.1353 - 0.3266i
0.0690 + 0.3468i
0 - 0.3536i
0.1964 + 0.2940i
-0.3266 - 0.1353i
0.3468 - 0.0690i

ans(:,:,8,8) =

0.3536
-0.3468 + 0.0690i
0.3266 - 0.1353i
-0.2940 + 0.1964i
0 - 0.3536i
0.0690 + 0.3468i
-0.1353 - 0.3266i
0.1964 + 0.2940i

ans(:,:,9,8) =

0.3536
-0.3468 - 0.0690i
0.3266 + 0.1353i
-0.2940 - 0.1964i

0 - 0.3536i
-0.0690 + 0.3468i
0.1353 - 0.3266i
-0.1964 + 0.2940i


ans(:,:,10,8) =


0.3536
-0.2940 - 0.1964i
0.1353 + 0.3266i
0.0690 - 0.3468i
0 - 0.3536i
-0.1964 + 0.2940i
0.3266 - 0.1353i
-0.3468 - 0.0690i


ans(:,:,11,8) =


0.3536
-0.1964 - 0.2940i
-0.1353 + 0.3266i
0.3468 - 0.0690i
0 - 0.3536i
-0.2940 + 0.1964i
0.3266 + 0.1353i
-0.0690 - 0.3468i


ans(:,:,12,8) =


0.3536
-0.0690 - 0.3468i
-0.3266 + 0.1353i
0.1964 + 0.2940i
0 - 0.3536i
-0.3468 + 0.0690i
0.1353 + 0.3266i

0.2940 - 0.1964i


ans(:,:,13,8) =

0.3536
0.0690 - 0.3468i
-0.3266 - 0.1353i
-0.1964 + 0.2940i
0 - 0.3536i
-0.3468 - 0.0690i
-0.1353 + 0.3266i
0.2940 + 0.1964i


ans(:,:,14,8) =

0.3536
0.1964 - 0.2940i
-0.1353 - 0.3266i
-0.3468 - 0.0690i
0 - 0.3536i
-0.2940 - 0.1964i
-0.3266 + 0.1353i
-0.0690 + 0.3468i


ans(:,:,15,8) =

0.3536
0.2940 - 0.1964i
0.1353 - 0.3266i
-0.0690 - 0.3468i
0 - 0.3536i
-0.1964 - 0.2940i
-0.3266 - 0.1353i
-0.3468 + 0.0690i

ans(:,:,16,8) =

0.3536
0.3468 - 0.0690i
0.3266 - 0.1353i
0.2940 - 0.1964i
0 - 0.3536i
-0.0690 - 0.3468i
-0.1353 - 0.3266i
-0.1964 - 0.2940i

ans(:,:,1,9) =

0.3536
0.3266 + 0.1353i
0.2500 + 0.2500i
0.1353 + 0.3266i
0.3536
0.3266 + 0.1353i
0.2500 + 0.2500i
0.1353 + 0.3266i

ans(:,:,2,9) =

0.3536
0.2500 + 0.2500i
0.0000 + 0.3536i
-0.2500 + 0.2500i
0.3536
0.2500 + 0.2500i
0.0000 + 0.3536i
-0.2500 + 0.2500i

ans(:,:,3,9) =

0.3536

```
 0.1353 + 0.3266i
-0.2500 + 0.2500i
-0.3266 - 0.1353i
 0.3536
 0.1353 + 0.3266i
-0.2500 + 0.2500i
-0.3266 - 0.1353i
```

ans(:,:,4,9) =

```
 0.3536
 0.0000 + 0.3536i
-0.3536 + 0.0000i
-0.0000 - 0.3536i
 0.3536
 0.0000 + 0.3536i
-0.3536 + 0.0000i
-0.0000 - 0.3536i
```

ans(:,:,5,9) =

```
 0.3536
-0.1353 + 0.3266i
-0.2500 - 0.2500i
 0.3266 - 0.1353i
 0.3536
-0.1353 + 0.3266i
-0.2500 - 0.2500i
 0.3266 - 0.1353i
```

ans(:,:,6,9) =

```
 0.3536
-0.2500 + 0.2500i
-0.0000 - 0.3536i
 0.2500 + 0.2500i
```

0.3536
-0.2500 + 0.2500i
-0.0000 - 0.3536i
0.2500 + 0.2500i


ans(:,:,7,9) =

0.3536
-0.3266 + 0.1353i
0.2500 - 0.2500i
-0.1353 + 0.3266i
0.3536
-0.3266 + 0.1353i
0.2500 - 0.2500i
-0.1353 + 0.3266i


ans(:,:,8,9) =

0.3536
-0.3536 + 0.0000i
0.3536 - 0.0000i
-0.3536 + 0.0000i
0.3536
-0.3536 + 0.0000i
0.3536 - 0.0000i
-0.3536 + 0.0000i


ans(:,:,9,9) =

0.3536
-0.3266 - 0.1353i
0.2500 + 0.2500i
-0.1353 - 0.3266i
0.3536
-0.3266 - 0.1353i
0.2500 + 0.2500i

-0.1353 - 0.3266i

ans(:,:,10,9) =

0.3536
-0.2500 - 0.2500i
0.0000 + 0.3536i
0.2500 - 0.2500i
0.3536
-0.2500 - 0.2500i
0.0000 + 0.3536i
0.2500 - 0.2500i

ans(:,:,11,9) =

0.3536
-0.1353 - 0.3266i
-0.2500 + 0.2500i
0.3266 + 0.1353i
0.3536
-0.1353 - 0.3266i
-0.2500 + 0.2500i
0.3266 + 0.1353i

ans(:,:,12,9) =

0.3536
-0.0000 - 0.3536i
-0.3536 + 0.0000i
0.0000 + 0.3536i
0.3536
-0.0000 - 0.3536i
-0.3536 + 0.0000i
0.0000 + 0.3536i

ans(:,:,13,9) =

   0.3536
   0.1353 - 0.3266i
  -0.2500 - 0.2500i
  -0.3266 + 0.1353i
   0.3536
   0.1353 - 0.3266i
  -0.2500 - 0.2500i
  -0.3266 + 0.1353i

ans(:,:,14,9) =

   0.3536
   0.2500 - 0.2500i
  -0.0000 - 0.3536i
  -0.2500 - 0.2500i
   0.3536
   0.2500 - 0.2500i
  -0.0000 - 0.3536i
  -0.2500 - 0.2500i

ans(:,:,15,9) =

   0.3536
   0.3266 - 0.1353i
   0.2500 - 0.2500i
   0.1353 - 0.3266i
   0.3536
   0.3266 - 0.1353i
   0.2500 - 0.2500i
   0.1353 - 0.3266i

ans(:,:,16,9) =

   0.3536

```
    0.3536
    0.3536
    0.3536
    0.3536
    0.3536
    0.3536
    0.3536


ans(:,:,1,10) =


    0.3536
    0.3266 + 0.1353i
    0.2500 + 0.2500i
    0.1353 + 0.3266i
         0 + 0.3536i
   -0.1353 + 0.3266i
   -0.2500 + 0.2500i
   -0.3266 + 0.1353i


ans(:,:,2,10) =


    0.3536
    0.2500 + 0.2500i
    0.0000 + 0.3536i
   -0.2500 + 0.2500i
         0 + 0.3536i
   -0.2500 + 0.2500i
   -0.3536 + 0.0000i
   -0.2500 - 0.2500i


ans(:,:,3,10) =


    0.3536
    0.1353 + 0.3266i
   -0.2500 + 0.2500i
   -0.3266 - 0.1353i
```

0 + 0.3536i
-0.3266 + 0.1353i
-0.2500 - 0.2500i
0.1353 - 0.3266i


ans(:,:,4,10) =

0.3536
0.0000 + 0.3536i
-0.3536 + 0.0000i
-0.0000 - 0.3536i
0 + 0.3536i
-0.3536 + 0.0000i
-0.0000 - 0.3536i
0.3536 - 0.0000i


ans(:,:,5,10) =

0.3536
-0.1353 + 0.3266i
-0.2500 - 0.2500i
0.3266 - 0.1353i
0 + 0.3536i
-0.3266 - 0.1353i
0.2500 - 0.2500i
0.1353 + 0.3266i


ans(:,:,6,10) =

0.3536
-0.2500 + 0.2500i
-0.0000 - 0.3536i
0.2500 + 0.2500i
0 + 0.3536i
-0.2500 - 0.2500i
0.3536 - 0.0000i

-0.2500 + 0.2500i


ans(:,:,7,10) =


0.3536
-0.3266 + 0.1353i
0.2500 - 0.2500i
-0.1353 + 0.3266i
0 + 0.3536i
-0.1353 - 0.3266i
0.2500 + 0.2500i
-0.3266 - 0.1353i


ans(:,:,8,10) =


0.3536
-0.3536 + 0.0000i
0.3536 - 0.0000i
-0.3536 + 0.0000i
0 + 0.3536i
-0.0000 - 0.3536i
0.0000 + 0.3536i
-0.0000 - 0.3536i


ans(:,:,9,10) =


0.3536
-0.3266 - 0.1353i
0.2500 + 0.2500i
-0.1353 - 0.3266i
0 + 0.3536i
0.1353 - 0.3266i
-0.2500 + 0.2500i
0.3266 - 0.1353i

ans(:,:,10,10) =

0.3536
-0.2500 - 0.2500i
0.0000 + 0.3536i
0.2500 - 0.2500i
0 + 0.3536i
0.2500 - 0.2500i
-0.3536 + 0.0000i
0.2500 + 0.2500i

ans(:,:,11,10) =

0.3536
-0.1353 - 0.3266i
-0.2500 + 0.2500i
0.3266 + 0.1353i
0 + 0.3536i
0.3266 - 0.1353i
-0.2500 - 0.2500i
-0.1353 + 0.3266i

ans(:,:,12,10) =

0.3536
-0.0000 - 0.3536i
-0.3536 + 0.0000i
0.0000 + 0.3536i
0 + 0.3536i
0.3536 - 0.0000i
-0.0000 - 0.3536i
-0.3536 + 0.0000i

ans(:,:,13,10) =

0.3536

0.1353 - 0.3266i
-0.2500 - 0.2500i
-0.3266 + 0.1353i
0 + 0.3536i
0.3266 + 0.1353i
0.2500 - 0.2500i
-0.1353 - 0.3266i


ans(:,:,14,10) =


0.3536
0.2500 - 0.2500i
-0.0000 - 0.3536i
-0.2500 - 0.2500i
0 + 0.3536i
0.2500 + 0.2500i
0.3536 - 0.0000i
0.2500 - 0.2500i


ans(:,:,15,10) =


0.3536
0.3266 - 0.1353i
0.2500 - 0.2500i
0.1353 - 0.3266i
0 + 0.3536i
0.1353 + 0.3266i
0.2500 + 0.2500i
0.3266 + 0.1353i


ans(:,:,16,10) =


0.3536
0.3536
0.3536
0.3536

```
0 + 0.3536i
0 + 0.3536i
0 + 0.3536i
0 + 0.3536i


ans(:,:,1,11) =

0.3536
0.3266 + 0.1353i
0.2500 + 0.2500i
0.1353 + 0.3266i
-0.3536
-0.3266 - 0.1353i
-0.2500 - 0.2500i
-0.1353 - 0.3266i


ans(:,:,2,11) =

0.3536
0.2500 + 0.2500i
0.0000 + 0.3536i
-0.2500 + 0.2500i
-0.3536
-0.2500 - 0.2500i
-0.0000 - 0.3536i
0.2500 - 0.2500i


ans(:,:,3,11) =

0.3536
0.1353 + 0.3266i
-0.2500 + 0.2500i
-0.3266 - 0.1353i
-0.3536
-0.1353 - 0.3266i
0.2500 - 0.2500i
```

0.3266 + 0.1353i

ans(:,:,4,11) =

0.3536
0.0000 + 0.3536i
-0.3536 + 0.0000i
-0.0000 - 0.3536i
-0.3536
-0.0000 - 0.3536i
0.3536 - 0.0000i
0.0000 + 0.3536i

ans(:,:,5,11) =

0.3536
-0.1353 + 0.3266i
-0.2500 - 0.2500i
0.3266 - 0.1353i
-0.3536
0.1353 - 0.3266i
0.2500 + 0.2500i
-0.3266 + 0.1353i

ans(:,:,6,11) =

0.3536
-0.2500 + 0.2500i
-0.0000 - 0.3536i
0.2500 + 0.2500i
-0.3536
0.2500 - 0.2500i
0.0000 + 0.3536i
-0.2500 - 0.2500i

ans(:,:,7,11) =

0.3536
-0.3266 + 0.1353i
0.2500 - 0.2500i
-0.1353 + 0.3266i
-0.3536
0.3266 - 0.1353i
-0.2500 + 0.2500i
0.1353 - 0.3266i


ans(:,:,8,11) =

0.3536
-0.3536 + 0.0000i
0.3536 - 0.0000i
-0.3536 + 0.0000i
-0.3536
0.3536 - 0.0000i
-0.3536 + 0.0000i
0.3536 - 0.0000i

ans(:,:,9,11) =

0.3536
-0.3266 - 0.1353i
0.2500 + 0.2500i
-0.1353 - 0.3266i
-0.3536
0.3266 + 0.1353i
-0.2500 - 0.2500i
0.1353 + 0.3266i


ans(:,:,10,11) =

0.3536

-0.2500 - 0.2500i
0.0000 + 0.3536i
0.2500 - 0.2500i
-0.3536
0.2500 + 0.2500i
-0.0000 - 0.3536i
-0.2500 + 0.2500i


ans(:,:,11,11) =

0.3536
-0.1353 - 0.3266i
-0.2500 + 0.2500i
0.3266 + 0.1353i
-0.3536
0.1353 + 0.3266i
0.2500 - 0.2500i
-0.3266 - 0.1353i

ans(:,:,12,11) =

0.3536
-0.0000 - 0.3536i
-0.3536 + 0.0000i
0.0000 + 0.3536i
-0.3536
0.0000 + 0.3536i
0.3536 - 0.0000i
-0.0000 - 0.3536i


ans(:,:,13,11) =

0.3536
0.1353 - 0.3266i
-0.2500 - 0.2500i
-0.3266 + 0.1353i

-0.3536
-0.1353 + 0.3266i
0.2500 + 0.2500i
0.3266 - 0.1353i


ans(:,:,14,11) =

0.3536
0.2500 - 0.2500i
-0.0000 - 0.3536i
-0.2500 - 0.2500i
-0.3536
-0.2500 + 0.2500i
0.0000 + 0.3536i
0.2500 + 0.2500i

ans(:,:,15,11) =

0.3536
0.3266 - 0.1353i
0.2500 - 0.2500i
0.1353 - 0.3266i
-0.3536
-0.3266 + 0.1353i
-0.2500 + 0.2500i
-0.1353 + 0.3266i


ans(:,:,16,11) =

0.3536
0.3536
0.3536
0.3536
-0.3536
-0.3536
-0.3536

-0.3536

ans(:,:,1,12) =

```
0.3536
0.3266 + 0.1353i
0.2500 + 0.2500i
0.1353 + 0.3266i
     0 - 0.3536i
0.1353 - 0.3266i
0.2500 - 0.2500i
0.3266 - 0.1353i
```

ans(:,:,2,12) =

```
 0.3536
 0.2500 + 0.2500i
 0.0000 + 0.3536i
-0.2500 + 0.2500i
      0 - 0.3536i
 0.2500 - 0.2500i
 0.3536 - 0.0000i
 0.2500 + 0.2500i
```

ans(:,:,3,12) =

```
 0.3536
 0.1353 + 0.3266i
-0.2500 + 0.2500i
-0.3266 - 0.1353i
      0 - 0.3536i
 0.3266 - 0.1353i
 0.2500 + 0.2500i
-0.1353 + 0.3266i
```

ans(:,:,4,12) =

```
       0.3536
  0.0000 + 0.3536i
 -0.3536 + 0.0000i
 -0.0000 - 0.3536i
       0 - 0.3536i
  0.3536 - 0.0000i
  0.0000 + 0.3536i
 -0.3536 + 0.0000i
```

ans(:,:,5,12) =

```
       0.3536
 -0.1353 + 0.3266i
 -0.2500 - 0.2500i
  0.3266 - 0.1353i
       0 - 0.3536i
  0.3266 + 0.1353i
 -0.2500 + 0.2500i
 -0.1353 - 0.3266i
```

ans(:,:,6,12) =

```
       0.3536
 -0.2500 + 0.2500i
 -0.0000 - 0.3536i
  0.2500 + 0.2500i
       0 - 0.3536i
  0.2500 + 0.2500i
 -0.3536 + 0.0000i
  0.2500 - 0.2500i
```

ans(:,:,7,12) =

```
       0.3536
```

-0.3266 + 0.1353i
0.2500 - 0.2500i
-0.1353 + 0.3266i
0 - 0.3536i
0.1353 + 0.3266i
-0.2500 - 0.2500i
0.3266 + 0.1353i

ans(:,:,8,12) =

0.3536
-0.3536 + 0.0000i
0.3536 - 0.0000i
-0.3536 + 0.0000i
0 - 0.3536i
0.0000 + 0.3536i
-0.0000 - 0.3536i
0.0000 + 0.3536i

ans(:,:,9,12) =

0.3536
-0.3266 - 0.1353i
0.2500 + 0.2500i
-0.1353 - 0.3266i
0 - 0.3536i
-0.1353 + 0.3266i
0.2500 - 0.2500i
-0.3266 + 0.1353i

ans(:,:,10,12) =

0.3536
-0.2500 - 0.2500i
0.0000 + 0.3536i
0.2500 - 0.2500i

0 - 0.3536i
-0.2500 + 0.2500i
0.3536 - 0.0000i
-0.2500 - 0.2500i

ans(:,:,11,12) =

0.3536
-0.1353 - 0.3266i
-0.2500 + 0.2500i
0.3266 + 0.1353i
0 - 0.3536i
-0.3266 + 0.1353i
0.2500 + 0.2500i
0.1353 - 0.3266i

ans(:,:,12,12) =

0.3536
-0.0000 - 0.3536i
-0.3536 + 0.0000i
0.0000 + 0.3536i
0 - 0.3536i
-0.3536 + 0.0000i
0.0000 + 0.3536i
0.3536 - 0.0000i

ans(:,:,13,12) =

0.3536
0.1353 - 0.3266i
-0.2500 - 0.2500i
-0.3266 + 0.1353i
0 - 0.3536i
-0.3266 - 0.1353i
-0.2500 + 0.2500i

0.1353 + 0.3266i


ans(:,:,14,12) =

0.3536
0.2500 - 0.2500i
-0.0000 - 0.3536i
-0.2500 - 0.2500i
0 - 0.3536i
-0.2500 - 0.2500i
-0.3536 + 0.0000i
-0.2500 + 0.2500i


ans(:,:,15,12) =

0.3536
0.3266 - 0.1353i
0.2500 - 0.2500i
0.1353 - 0.3266i
0 - 0.3536i
-0.1353 - 0.3266i
-0.2500 - 0.2500i
-0.3266 - 0.1353i


ans(:,:,16,12) =

0.3536
0.3536
0.3536
0.3536
0 - 0.3536i
0 - 0.3536i
0 - 0.3536i
0 - 0.3536i

ans(:,:,1,13) =

0.3536
0.2940 + 0.1964i
0.1353 + 0.3266i
-0.0690 + 0.3468i
0.3536
0.2940 + 0.1964i
0.1353 + 0.3266i
-0.0690 + 0.3468i

ans(:,:,2,13) =

0.3536
0.1964 + 0.2940i
-0.1353 + 0.3266i
-0.3468 + 0.0690i
0.3536
0.1964 + 0.2940i
-0.1353 + 0.3266i
-0.3468 + 0.0690i

ans(:,:,3,13) =

0.3536
0.0690 + 0.3468i
-0.3266 + 0.1353i
-0.1964 - 0.2940i
0.3536
0.0690 + 0.3468i
-0.3266 + 0.1353i
-0.1964 - 0.2940i

ans(:,:,4,13) =

0.3536

-0.0690 + 0.3468i
-0.3266 - 0.1353i
0.1964 - 0.2940i
0.3536
-0.0690 + 0.3468i
-0.3266 - 0.1353i
0.1964 - 0.2940i


ans(:,:,5,13) =

0.3536
-0.1964 + 0.2940i
-0.1353 - 0.3266i
0.3468 + 0.0690i
0.3536
-0.1964 + 0.2940i
-0.1353 - 0.3266i
0.3468 + 0.0690i


ans(:,:,6,13) =

0.3536
-0.2940 + 0.1964i
0.1353 - 0.3266i
0.0690 + 0.3468i
0.3536
-0.2940 + 0.1964i
0.1353 - 0.3266i
0.0690 + 0.3468i


ans(:,:,7,13) =

0.3536
-0.3468 + 0.0690i
0.3266 - 0.1353i
-0.2940 + 0.1964i

```
            0.3536
     -0.3468 + 0.0690i
      0.3266 - 0.1353i
     -0.2940 + 0.1964i
```

ans(:,:,8,13) =

```
            0.3536
     -0.3468 - 0.0690i
      0.3266 + 0.1353i
     -0.2940 - 0.1964i
            0.3536
     -0.3468 - 0.0690i
      0.3266 + 0.1353i
     -0.2940 - 0.1964i
```

ans(:,:,9,13) =

```
            0.3536
     -0.2940 - 0.1964i
      0.1353 + 0.3266i
      0.0690 - 0.3468i
            0.3536
     -0.2940 - 0.1964i
      0.1353 + 0.3266i
      0.0690 - 0.3468i
```

ans(:,:,10,13) =

```
            0.3536
     -0.1964 - 0.2940i
     -0.1353 + 0.3266i
      0.3468 - 0.0690i
            0.3536
     -0.1964 - 0.2940i
     -0.1353 + 0.3266i
```

0.3468 - 0.0690i

ans(:,:,11,13) =

0.3536
-0.0690 - 0.3468i
-0.3266 + 0.1353i
0.1964 + 0.2940i
0.3536
-0.0690 - 0.3468i
-0.3266 + 0.1353i
0.1964 + 0.2940i

ans(:,:,12,13) =

0.3536
0.0690 - 0.3468i
-0.3266 - 0.1353i
-0.1964 + 0.2940i
0.3536
0.0690 - 0.3468i
-0.3266 - 0.1353i
-0.1964 + 0.2940i

ans(:,:,13,13) =

0.3536
0.1964 - 0.2940i
-0.1353 - 0.3266i
-0.3468 - 0.0690i
0.3536
0.1964 - 0.2940i
-0.1353 - 0.3266i
-0.3468 - 0.0690i

ans(:,:,14,13) =

0.3536
0.2940 - 0.1964i
0.1353 - 0.3266i
-0.0690 - 0.3468i
0.3536
0.2940 - 0.1964i
0.1353 - 0.3266i
-0.0690 - 0.3468i

ans(:,:,15,13) =

0.3536
0.3468 - 0.0690i
0.3266 - 0.1353i
0.2940 - 0.1964i
0.3536
0.3468 - 0.0690i
0.3266 - 0.1353i
0.2940 - 0.1964i

ans(:,:,16,13) =

0.3536
0.3468 + 0.0690i
0.3266 + 0.1353i
0.2940 + 0.1964i
0.3536
0.3468 + 0.0690i
0.3266 + 0.1353i
0.2940 + 0.1964i

ans(:,:,1,14) =

0.3536

0.2940 + 0.1964i
0.1353 + 0.3266i
-0.0690 + 0.3468i
0 + 0.3536i
-0.1964 + 0.2940i
-0.3266 + 0.1353i
-0.3468 - 0.0690i

ans(:,:,2,14) =

0.3536
0.1964 + 0.2940i
-0.1353 + 0.3266i
-0.3468 + 0.0690i
0 + 0.3536i
-0.2940 + 0.1964i
-0.3266 - 0.1353i
-0.0690 - 0.3468i

ans(:,:,3,14) =

0.3536
0.0690 + 0.3468i
-0.3266 + 0.1353i
-0.1964 - 0.2940i
0 + 0.3536i
-0.3468 + 0.0690i
-0.1353 - 0.3266i
0.2940 - 0.1964i

ans(:,:,4,14) =

0.3536
-0.0690 + 0.3468i
-0.3266 - 0.1353i
0.1964 - 0.2940i

```
         0 + 0.3536i
  -0.3468 - 0.0690i
   0.1353 - 0.3266i
   0.2940 + 0.1964i
```

ans(:,:,5,14) =

```
   0.3536
  -0.1964 + 0.2940i
  -0.1353 - 0.3266i
   0.3468 + 0.0690i
        0 + 0.3536i
  -0.2940 - 0.1964i
   0.3266 - 0.1353i
  -0.0690 + 0.3468i
```

ans(:,:,6,14) =

```
   0.3536
  -0.2940 + 0.1964i
   0.1353 - 0.3266i
   0.0690 + 0.3468i
        0 + 0.3536i
  -0.1964 - 0.2940i
   0.3266 + 0.1353i
  -0.3468 + 0.0690i
```

ans(:,:,7,14) =

```
   0.3536
  -0.3468 + 0.0690i
   0.3266 - 0.1353i
  -0.2940 + 0.1964i
        0 + 0.3536i
  -0.0690 - 0.3468i
   0.1353 + 0.3266i
```

-0.1964 - 0.2940i

ans(:,:,8,14) =

```
        0.3536
-0.3468 - 0.0690i
 0.3266 + 0.1353i
-0.2940 - 0.1964i
      0 + 0.3536i
 0.0690 - 0.3468i
-0.1353 + 0.3266i
 0.1964 - 0.2940i
```

ans(:,:,9,14) =

```
        0.3536
-0.2940 - 0.1964i
 0.1353 + 0.3266i
 0.0690 - 0.3468i
      0 + 0.3536i
 0.1964 - 0.2940i
-0.3266 + 0.1353i
 0.3468 + 0.0690i
```

ans(:,:,10,14) =

```
        0.3536
-0.1964 - 0.2940i
-0.1353 + 0.3266i
 0.3468 - 0.0690i
      0 + 0.3536i
 0.2940 - 0.1964i
-0.3266 - 0.1353i
 0.0690 + 0.3468i
```

ans(:,:,11,14) =

0.3536
-0.0690 - 0.3468i
-0.3266 + 0.1353i
0.1964 + 0.2940i
0 + 0.3536i
0.3468 - 0.0690i
-0.1353 - 0.3266i
-0.2940 + 0.1964i

ans(:,:,12,14) =

0.3536
0.0690 - 0.3468i
-0.3266 - 0.1353i
-0.1964 + 0.2940i
0 + 0.3536i
0.3468 + 0.0690i
0.1353 - 0.3266i
-0.2940 - 0.1964i

ans(:,:,13,14) =

0.3536
0.1964 - 0.2940i
-0.1353 - 0.3266i
-0.3468 - 0.0690i
0 + 0.3536i
0.2940 + 0.1964i
0.3266 - 0.1353i
0.0690 - 0.3468i

ans(:,:,14,14) =

0.3536

0.2940 - 0.1964i
0.1353 - 0.3266i
-0.0690 - 0.3468i
     0 + 0.3536i
0.1964 + 0.2940i
0.3266 + 0.1353i
0.3468 - 0.0690i


ans(:,:,15,14) =

0.3536
0.3468 - 0.0690i
0.3266 - 0.1353i
0.2940 - 0.1964i
     0 + 0.3536i
0.0690 + 0.3468i
0.1353 + 0.3266i
0.1964 + 0.2940i


ans(:,:,16,14) =

0.3536
0.3468 + 0.0690i
0.3266 + 0.1353i
0.2940 + 0.1964i
     0 + 0.3536i
-0.0690 + 0.3468i
-0.1353 + 0.3266i
-0.1964 + 0.2940i


ans(:,:,1,15) =

0.3536
0.2940 + 0.1964i
0.1353 + 0.3266i
-0.0690 + 0.3468i

```
-0.3536
-0.2940 - 0.1964i
-0.1353 - 0.3266i
 0.0690 - 0.3468i


ans(:,:,2,15) =

 0.3536
 0.1964 + 0.2940i
-0.1353 + 0.3266i
-0.3468 + 0.0690i
-0.3536
-0.1964 - 0.2940i
 0.1353 - 0.3266i
 0.3468 - 0.0690i


ans(:,:,3,15) =

 0.3536
 0.0690 + 0.3468i
-0.3266 + 0.1353i
-0.1964 - 0.2940i
-0.3536
-0.0690 - 0.3468i
 0.3266 - 0.1353i
 0.1964 + 0.2940i


ans(:,:,4,15) =

 0.3536
-0.0690 + 0.3468i
-0.3266 - 0.1353i
 0.1964 - 0.2940i
-0.3536
 0.0690 - 0.3468i
 0.3266 + 0.1353i
```

-0.1964 + 0.2940i


ans(:,:,5,15) =

   0.3536
-0.1964 + 0.2940i
-0.1353 - 0.3266i
   0.3468 + 0.0690i
-0.3536
   0.1964 - 0.2940i
   0.1353 + 0.3266i
-0.3468 - 0.0690i


ans(:,:,6,15) =

   0.3536
-0.2940 + 0.1964i
   0.1353 - 0.3266i
   0.0690 + 0.3468i
-0.3536
   0.2940 - 0.1964i
-0.1353 + 0.3266i
-0.0690 - 0.3468i


ans(:,:,7,15) =

   0.3536
-0.3468 + 0.0690i
   0.3266 - 0.1353i
-0.2940 + 0.1964i
-0.3536
   0.3468 - 0.0690i
-0.3266 + 0.1353i
   0.2940 - 0.1964i

ans(:,:,8,15) =

0.3536
-0.3468 - 0.0690i
0.3266 + 0.1353i
-0.2940 - 0.1964i
-0.3536
0.3468 + 0.0690i
-0.3266 - 0.1353i
0.2940 + 0.1964i

ans(:,:,9,15) =

0.3536
-0.2940 - 0.1964i
0.1353 + 0.3266i
0.0690 - 0.3468i
-0.3536
0.2940 + 0.1964i
-0.1353 - 0.3266i
-0.0690 + 0.3468i

ans(:,:,10,15) =

0.3536
-0.1964 - 0.2940i
-0.1353 + 0.3266i
0.3468 - 0.0690i
-0.3536
0.1964 + 0.2940i
0.1353 - 0.3266i
-0.3468 + 0.0690i

ans(:,:,11,15) =

0.3536

-0.0690 - 0.3468i
-0.3266 + 0.1353i
0.1964 + 0.2940i
-0.3536
0.0690 + 0.3468i
0.3266 - 0.1353i
-0.1964 - 0.2940i


ans(:,:,12,15) =

0.3536
0.0690 - 0.3468i
-0.3266 - 0.1353i
-0.1964 + 0.2940i
-0.3536
-0.0690 + 0.3468i
0.3266 + 0.1353i
0.1964 - 0.2940i


ans(:,:,13,15) =

0.3536
0.1964 - 0.2940i
-0.1353 - 0.3266i
-0.3468 - 0.0690i
-0.3536
-0.1964 + 0.2940i
0.1353 + 0.3266i
0.3468 + 0.0690i


ans(:,:,14,15) =

0.3536
0.2940 - 0.1964i
0.1353 - 0.3266i
-0.0690 - 0.3468i

-0.3536
-0.2940 + 0.1964i
-0.1353 + 0.3266i
0.0690 + 0.3468i


ans(:,:,15,15) =


0.3536
0.3468 - 0.0690i
0.3266 - 0.1353i
0.2940 - 0.1964i
-0.3536
-0.3468 + 0.0690i
-0.3266 + 0.1353i
-0.2940 + 0.1964i


ans(:,:,16,15) =


0.3536
0.3468 + 0.0690i
0.3266 + 0.1353i
0.2940 + 0.1964i
-0.3536
-0.3468 - 0.0690i
-0.3266 - 0.1353i
-0.2940 - 0.1964i


ans(:,:,1,16) =


0.3536
0.2940 + 0.1964i
0.1353 + 0.3266i
-0.0690 + 0.3468i
0 - 0.3536i
0.1964 - 0.2940i
0.3266 - 0.1353i

0.3468 + 0.0690i

ans(:,:,2,16) =

    0.3536
    0.1964 + 0.2940i
    -0.1353 + 0.3266i
    -0.3468 + 0.0690i
         0 - 0.3536i
    0.2940 - 0.1964i
    0.3266 + 0.1353i
    0.0690 + 0.3468i

ans(:,:,3,16) =

    0.3536
    0.0690 + 0.3468i
    -0.3266 + 0.1353i
    -0.1964 - 0.2940i
         0 - 0.3536i
    0.3468 - 0.0690i
    0.1353 + 0.3266i
    -0.2940 + 0.1964i

ans(:,:,4,16) =

    0.3536
    -0.0690 + 0.3468i
    -0.3266 - 0.1353i
    0.1964 - 0.2940i
         0 - 0.3536i
    0.3468 + 0.0690i
    -0.1353 + 0.3266i
    -0.2940 - 0.1964i

ans(:,:,5,16) =

0.3536
-0.1964 + 0.2940i
-0.1353 - 0.3266i
0.3468 + 0.0690i
0 - 0.3536i
0.2940 + 0.1964i
-0.3266 + 0.1353i
0.0690 - 0.3468i


ans(:,:,6,16) =

0.3536
-0.2940 + 0.1964i
0.1353 - 0.3266i
0.0690 + 0.3468i
0 - 0.3536i
0.1964 + 0.2940i
-0.3266 - 0.1353i
0.3468 - 0.0690i


ans(:,:,7,16) =

0.3536
-0.3468 + 0.0690i
0.3266 - 0.1353i
-0.2940 + 0.1964i
0 - 0.3536i
0.0690 + 0.3468i
-0.1353 - 0.3266i
0.1964 + 0.2940i


ans(:,:,8,16) =

0.3536

-0.3468 - 0.0690i
0.3266 + 0.1353i
-0.2940 - 0.1964i
0 - 0.3536i
-0.0690 + 0.3468i
0.1353 - 0.3266i
-0.1964 + 0.2940i


ans(:,:,9,16) =

0.3536
-0.2940 - 0.1964i
0.1353 + 0.3266i
0.0690 - 0.3468i
0 - 0.3536i
-0.1964 + 0.2940i
0.3266 - 0.1353i
-0.3468 - 0.0690i


ans(:,:,10,16) =

0.3536
-0.1964 - 0.2940i
-0.1353 + 0.3266i
0.3468 - 0.0690i
0 - 0.3536i
-0.2940 + 0.1964i
0.3266 + 0.1353i
-0.0690 - 0.3468i


ans(:,:,11,16) =

0.3536
-0.0690 - 0.3468i
-0.3266 + 0.1353i
0.1964 + 0.2940i

```
                    0 - 0.3536i
               -0.3468 + 0.0690i
                0.1353 + 0.3266i
                0.2940 - 0.1964i
```

ans(:,:,12,16) =

```
                0.3536
                0.0690 - 0.3468i
               -0.3266 - 0.1353i
               -0.1964 + 0.2940i
                     0 - 0.3536i
               -0.3468 - 0.0690i
             -  0.1353 + 0.3266i
                0.2940 + 0.1964i
```

ans(:,:,13,16) =

```
                0.3536
                0.1964 - 0.2940i
               -0.1353 - 0.3266i
               -0.3468 - 0.0690i
                     0 - 0.3536i
               -0.2940 - 0.1964i
               -0.3266 + 0.1353i
               -0.0690 + 0.3468i
```

ans(:,:,14,16) =

```
                0.3536
                0.2940 - 0.1964i
                0.1353 - 0.3266i
               -0.0690 - 0.3468i
                     0 - 0.3536i
               -0.1964 - 0.2940i
               -0.3266 - 0.1353i
```

-0.3468 + 0.0690i

ans(:,:,15,16) =

         0.3536
        0.3468 - 0.0690i
        0.3266 - 0.1353i
        0.2940 - 0.1964i
             0 - 0.3536i
       -0.0690 - 0.3468i
       -0.1353 - 0.3266i
       -0.1964 - 0.2940i

ans(:,:,16,16) =

         0.3536
        0.3468 + 0.0690i
        0.3266 + 0.1353i
        0.2940 + 0.1964i
             0 - 0.3536i
        0.0690 - 0.3468i
        0.1353 - 0.3266i
        0.1964 - 0.2940i

- Rank 2

ans(:,:,1,1) =

        0.2500    0.2500
        0.2500    0.2500
        0.2500    0.2500
        0.2500    0.2500
        0.2500   -0.2500
        0.2500   -0.2500
        0.2500   -0.2500
        0.2500   -0.2500

ans(:,:,2,1) =

| | |
|---|---|
| 0.2500 | 0.2500 |
| 0.2310 + 0.0957i | 0.2310 + 0.0957i |
| 0.1768 + 0.1768i | 0.1768 + 0.1768i |
| 0.0957 + 0.2310i | 0.0957 + 0.2310i |
| 0.2500 | -0.2500 |
| 0.2310 + 0.0957i | -0.2310 - 0.0957i |
| 0.1768 + 0.1768i | -0.1768 - 0.1768i |
| 0.0957 + 0.2310i | -0.0957 - 0.2310i |

ans(:,:,3,1) =

| | |
|---|---|
| 0.2500 | 0.2500 |
| 0.1768 + 0.1768i | 0.1768 + 0.1768i |
| 0.0000 + 0.2500i | 0.0000 + 0.2500i |
| -0.1768 + 0.1768i | -0.1768 + 0.1768i |
| 0.2500 | -0.2500 |
| 0.1768 + 0.1768i | -0.1768 - 0.1768i |
| 0.0000 + 0.2500i | -0.0000 - 0.2500i |
| -0.1768 + 0.1768i | 0.1768 - 0.1768i |

ans(:,:,4,1) =

| | |
|---|---|
| 0.2500 | 0.2500 |
| 0.0957 + 0.2310i | 0.0957 + 0.2310i |
| -0.1768 + 0.1768i | -0.1768 + 0.1768i |
| -0.2310 - 0.0957i | -0.2310 - 0.0957i |
| 0.2500 | -0.2500 |
| 0.0957 + 0.2310i | -0.0957 - 0.2310i |
| -0.1768 + 0.1768i | 0.1768 - 0.1768i |
| -0.2310 - 0.0957i | 0.2310 + 0.0957i |

ans(:,:,5,1) =

```
0.2500             0.2500
0.0000 + 0.2500i   0.0000 + 0.2500i
-0.2500 + 0.0000i  -0.2500 + 0.0000i
-0.0000 - 0.2500i  -0.0000 - 0.2500i
0.2500             -0.2500
0.0000 + 0.2500i   -0.0000 - 0.2500i
-0.2500 + 0.0000i  0.2500 - 0.0000i
-0.0000 - 0.2500i  0.0000 + 0.2500i
```

ans(:,:,6,1) =

```
0.2500             0.2500
-0.0957 + 0.2310i  -0.0957 + 0.2310i
-0.1768 - 0.1768i  -0.1768 - 0.1768i
0.2310 - 0.0957i   0.2310 - 0.0957i
0.2500             -0.2500
-0.0957 + 0.2310i  0.0957 - 0.2310i
-0.1768 - 0.1768i  0.1768 + 0.1768i
0.2310 - 0.0957i   -0.2310 + 0.0957i
```

ans(:,:,7,1) =

```
0.2500             0.2500
-0.1768 + 0.1768i  -0.1768 + 0.1768i
-0.0000 - 0.2500i  -0.0000 - 0.2500i
0.1768 + 0.1768i   0.1768 + 0.1768i
0.2500             -0.2500
-0.1768 + 0.1768i  0.1768 - 0.1768i
-0.0000 - 0.2500i  0.0000 + 0.2500i
0.1768 + 0.1768i   -0.1768 - 0.1768i
```

ans(:,:,8,1) =

```
0.2500             0.2500
-0.2310 + 0.0957i  -0.2310 + 0.0957i
0.1768 - 0.1768i   0.1768 - 0.1768i
```

```
-0.0957 + 0.2310i   -0.0957 + 0.2310i
 0.2500             -0.2500
-0.2310 + 0.0957i    0.2310 - 0.0957i
 0.1768 - 0.1768i   -0.1768 + 0.1768i
-0.0957 + 0.2310i    0.0957 - 0.2310i
```

ans(:,:,9,1) =

```
 0.2500              0.2500
-0.2500 + 0.0000i   -0.2500 + 0.0000i
 0.2500 - 0.0000i    0.2500 - 0.0000i
-0.2500 + 0.0000i   -0.2500 + 0.0000i
 0.2500             -0.2500
-0.2500 + 0.0000i    0.2500 - 0.0000i
 0.2500 - 0.0000i   -0.2500 + 0.0000i
-0.2500 + 0.0000i    0.2500 - 0.0000i
```

ans(:,:,10,1) =

```
 0.2500              0.2500
-0.2310 - 0.0957i   -0.2310 - 0.0957i
 0.1768 + 0.1768i    0.1768 + 0.1768i
-0.0957 - 0.2310i   -0.0957 - 0.2310i
 0.2500             -0.2500
-0.2310 - 0.0957i    0.2310 + 0.0957i
 0.1768 + 0.1768i   -0.1768 - 0.1768i
-0.0957 - 0.2310i    0.0957 + 0.2310i
```

ans(:,:,11,1) =

```
 0.2500              0.2500
-0.1768 - 0.1768i   -0.1768 - 0.1768i
 0.0000 + 0.2500i    0.0000 + 0.2500i
 0.1768 - 0.1768i    0.1768 - 0.1768i
 0.2500             -0.2500
-0.1768 - 0.1768i    0.1768 + 0.1768i
```

```
0.0000 + 0.2500i   -0.0000 - 0.2500i
0.1768 - 0.1768i   -0.1768 + 0.1768i
```

ans(:,:,12,1) =

```
 0.2500            0.2500
-0.0957 - 0.2310i  -0.0957 - 0.2310i
-0.1768 + 0.1768i  -0.1768 + 0.1768i
 0.2310 + 0.0957i   0.2310 + 0.0957i
 0.2500           -0.2500
-0.0957 - 0.2310i   0.0957 + 0.2310i
-0.1768 + 0.1768i   0.1768 - 0.1768i
 0.2310 + 0.0957i  -0.2310 - 0.0957i
```

ans(:,:,13,1) =

```
 0.2500            0.2500
-0.0000 - 0.2500i  -0.0000 - 0.2500i
-0.2500 + 0.0000i  -0.2500 + 0.0000i
 0.0000 + 0.2500i   0.0000 + 0.2500i
 0.2500           -0.2500
-0.0000 - 0.2500i   0.0000 + 0.2500i
-0.2500 + 0.0000i   0.2500 - 0.0000i
 0.0000 + 0.2500i  -0.0000 - 0.2500i
```

ans(:,:,14,1) =

```
 0.2500            0.2500
 0.0957 - 0.2310i   0.0957 - 0.2310i
-0.1768 - 0.1768i  -0.1768 - 0.1768i
-0.2310 + 0.0957i  -0.2310 + 0.0957i
 0.2500           -0.2500
 0.0957 - 0.2310i  -0.0957 + 0.2310i
-0.1768 - 0.1768i   0.1768 + 0.1768i
-0.2310 + 0.0957i   0.2310 - 0.0957i
```

ans(:,:,15,1) =

| | |
|---|---|
| 0.2500 | 0.2500 |
| 0.1768 - 0.1768i | 0.1768 - 0.1768i |
| -0.0000 - 0.2500i | -0.0000 - 0.2500i |
| -0.1768 - 0.1768i | -0.1768 - 0.1768i |
| 0.2500 | -0.2500 |
| 0.1768 - 0.1768i | -0.1768 + 0.1768i |
| -0.0000 - 0.2500i | 0.0000 + 0.2500i |
| -0.1768 - 0.1768i | 0.1768 + 0.1768i |

ans(:,:,16,1) =

| | |
|---|---|
| 0.2500 | 0.2500 |
| 0.2310 - 0.0957i | 0.2310 - 0.0957i |
| 0.1768 - 0.1768i | 0.1768 - 0.1768i |
| 0.0957 - 0.2310i | 0.0957 - 0.2310i |
| 0.2500 | -0.2500 |
| 0.2310 - 0.0957i | -0.2310 + 0.0957i |
| 0.1768 - 0.1768i | -0.1768 + 0.1768i |
| 0.0957 - 0.2310i | -0.0957 + 0.2310i |

ans(:,:,1,2) =

| | |
|---|---|
| 0.2500 | 0.2500 |
| 0.2500 | 0.2500 |
| 0.2500 | 0.2500 |
| 0.2500 | 0.2500 |
| 0 + 0.2500i | 0 - 0.2500i |
| 0 + 0.2500i | 0 - 0.2500i |
| 0 + 0.2500i | 0 - 0.2500i |
| 0 + 0.2500i | 0 - 0.2500i |

ans(:,:,2,2) =

```
            0.2500                  0.2500
     0.2310 + 0.0957i       0.2310 + 0.0957i
     0.1768 + 0.1768i       0.1768 + 0.1768i
     0.0957 + 0.2310i       0.0957 + 0.2310i
            0 + 0.2500i              0 - 0.2500i
    -0.0957 + 0.2310i       0.0957 - 0.2310i
    -0.1768 + 0.1768i       0.1768 - 0.1768i
    -0.2310 + 0.0957i       0.2310 - 0.0957i
```

ans(:,:,3,2) =

```
            0.2500                  0.2500
     0.1768 + 0.1768i       0.1768 + 0.1768i
     0.0000 + 0.2500i       0.0000 + 0.2500i
    -0.1768 + 0.1768i      -0.1768 + 0.1768i
            0 + 0.2500i              0 - 0.2500i
    -0.1768 + 0.1768i       0.1768 - 0.1768i
    -0.2500 + 0.0000i       0.2500 - 0.0000i
    -0.1768 - 0.1768i       0.1768 + 0.1768i
```

ans(:,:,4,2) =

```
            0.2500                  0.2500
     0.0957 + 0.2310i       0.0957 + 0.2310i
    -0.1768 + 0.1768i      -0.1768 + 0.1768i
    -0.2310 - 0.0957i      -0.2310 - 0.0957i
            0 + 0.2500i              0 - 0.2500i
    -0.2310 + 0.0957i       0.2310 - 0.0957i
    -0.1768 - 0.1768i       0.1768 + 0.1768i
     0.0957 - 0.2310i      -0.0957 + 0.2310i
```

ans(:,:,5,2) =

```
            0.2500                  0.2500
     0.0000 + 0.2500i       0.0000 + 0.2500i
    -0.2500 + 0.0000i      -0.2500 + 0.0000i
```

```
-0.0000 - 0.2500i   -0.0000 - 0.2500i
       0 + 0.2500i          0 - 0.2500i
-0.2500 + 0.0000i    0.2500 - 0.0000i
-0.0000 - 0.2500i    0.0000 + 0.2500i
 0.2500 - 0.0000i   -0.2500 + 0.0000i
```

ans(:,:,6,2) =

```
      0.2500                0.2500
-0.0957 + 0.2310i   -0.0957 + 0.2310i
-0.1768 - 0.1768i   -0.1768 - 0.1768i
 0.2310 - 0.0957i    0.2310 - 0.0957i
       0 + 0.2500i          0 - 0.2500i
-0.2310 - 0.0957i    0.2310 + 0.0957i
 0.1768 - 0.1768i   -0.1768 + 0.1768i
 0.0957 + 0.2310i   -0.0957 - 0.2310i
```

ans(:,:,7,2) =

```
      0.2500                0.2500
-0.1768 + 0.1768i   -0.1768 + 0.1768i
-0.0000 - 0.2500i   -0.0000 - 0.2500i
 0.1768 + 0.1768i    0.1768 + 0.1768i
       0 + 0.2500i          0 - 0.2500i
-0.1768 - 0.1768i    0.1768 + 0.1768i
 0.2500 - 0.0000i   -0.2500 + 0.0000i
-0.1768 + 0.1768i    0.1768 - 0.1768i
```

ans(:,:,8,2) =

```
      0.2500                0.2500
-0.2310 + 0.0957i   -0.2310 + 0.0957i
 0.1768 - 0.1768i    0.1768 - 0.1768i
-0.0957 + 0.2310i   -0.0957 + 0.2310i
       0 + 0.2500i          0 - 0.2500i
-0.0957 - 0.2310i    0.0957 + 0.2310i
```

```
0.1768 + 0.1768i    -0.1768 - 0.1768i
-0.2310 - 0.0957i    0.2310 + 0.0957i
```

ans(:,:,9,2) =

```
0.2500              0.2500
-0.2500 + 0.0000i   -0.2500 + 0.0000i
0.2500 - 0.0000i    0.2500 - 0.0000i
-0.2500 + 0.0000i   -0.2500 + 0.0000i
       0 + 0.2500i          0 - 0.2500i
-0.0000 - 0.2500i    0.0000 + 0.2500i
 0.0000 + 0.2500i   -0.0000 - 0.2500i
-0.0000 - 0.2500i    0.0000 + 0.2500i
```

ans(:,:,10,2) =

```
0.2500              0.2500
-0.2310 - 0.0957i   -0.2310 - 0.0957i
 0.1768 + 0.1768i    0.1768 + 0.1768i
-0.0957 - 0.2310i   -0.0957 - 0.2310i
       0 + 0.2500i          0 - 0.2500i
 0.0957 - 0.2310i   -0.0957 + 0.2310i
-0.1768 + 0.1768i    0.1768 - 0.1768i
 0.2310 - 0.0957i   -0.2310 + 0.0957i
```

ans(:,:,11,2) =

```
0.2500              0.2500
-0.1768 - 0.1768i   -0.1768 - 0.1768i
 0.0000 + 0.2500i    0.0000 + 0.2500i
 0.1768 - 0.1768i    0.1768 - 0.1768i
       0 + 0.2500i          0 - 0.2500i
 0.1768 - 0.1768i   -0.1768 + 0.1768i
-0.2500 + 0.0000i    0.2500 - 0.0000i
 0.1768 + 0.1768i   -0.1768 - 0.1768i
```

ans(:,:,12,2) =

```
  0.2500              0.2500
 -0.0957 - 0.2310i   -0.0957 - 0.2310i
 -0.1768 + 0.1768i   -0.1768 + 0.1768i
  0.2310 + 0.0957i    0.2310 + 0.0957i
       0 + 0.2500i         0 - 0.2500i
  0.2310 - 0.0957i   -0.2310 + 0.0957i
 -0.1768 - 0.1768i    0.1768 + 0.1768i
 -0.0957 + 0.2310i    0.0957 - 0.2310i
```

ans(:,:,13,2) =

```
  0.2500              0.2500
 -0.0000 - 0.2500i   -0.0000 - 0.2500i
 -0.2500 + 0.0000i   -0.2500 + 0.0000i
  0.0000 + 0.2500i    0.0000 + 0.2500i
       0 + 0.2500i         0 - 0.2500i
  0.2500 - 0.0000i   -0.2500 + 0.0000i
 -0.0000 - 0.2500i    0.0000 + 0.2500i
 -0.2500 + 0.0000i    0.2500 - 0.0000i
```

ans(:,:,14,2) =

```
  0.2500              0.2500
  0.0957 - 0.2310i    0.0957 - 0.2310i
 -0.1768 - 0.1768i   -0.1768 - 0.1768i
 -0.2310 + 0.0957i   -0.2310 + 0.0957i
       0 + 0.2500i         0 - 0.2500i
  0.2310 + 0.0957i   -0.2310 - 0.0957i
  0.1768 - 0.1768i   -0.1768 + 0.1768i
 -0.0957 - 0.2310i    0.0957 + 0.2310i
```

ans(:,:,15,2) =

```
        0.2500                  0.2500
        0.1768 - 0.1768i    0.1768 - 0.1768i
       -0.0000 - 0.2500i   -0.0000 - 0.2500i
       -0.1768 - 0.1768i   -0.1768 - 0.1768i
             0 + 0.2500i          0 - 0.2500i
        0.1768 + 0.1768i   -0.1768 - 0.1768i
        0.2500 - 0.0000i   -0.2500 + 0.0000i
        0.1768 - 0.1768i   -0.1768 + 0.1768i
```

ans(:,:,16,2) =

```
        0.2500                  0.2500
        0.2310 - 0.0957i    0.2310 - 0.0957i
        0.1768 - 0.1768i    0.1768 - 0.1768i
        0.0957 - 0.2310i    0.0957 - 0.2310i
             0 + 0.2500i          0 - 0.2500i
        0.0957 + 0.2310i   -0.0957 - 0.2310i
        0.1768 + 0.1768i   -0.1768 - 0.1768i
        0.2310 + 0.0957i   -0.2310 - 0.0957i
```

ans(:,:,1,3) =

```
        0.2500                  0.2500
        0.2452 + 0.0488i    0.2452 + 0.0488i
        0.2310 + 0.0957i    0.2310 + 0.0957i
        0.2079 + 0.1389i    0.2079 + 0.1389i
        0.2500                 -0.2500
        0.2452 + 0.0488i   -0.2452 - 0.0488i
        0.2310 + 0.0957i   -0.2310 - 0.0957i
        0.2079 + 0.1389i   -0.2079 - 0.1389i
```

ans(:,:,2,3) =

```
        0.2500                  0.2500
        0.2079 + 0.1389i    0.2079 + 0.1389i
        0.0957 + 0.2310i    0.0957 + 0.2310i
```

```
-0.0488 + 0.2452i    -0.0488 + 0.2452i
 0.2500                -0.2500
 0.2079 + 0.1389i    -0.2079 - 0.1389i
 0.0957 + 0.2310i    -0.0957 - 0.2310i
-0.0488 + 0.2452i     0.0488 - 0.2452i
```

ans(:,:,3,3) =

```
 0.2500                0.2500
 0.1389 + 0.2079i     0.1389 + 0.2079i
-0.0957 + 0.2310i    -0.0957 + 0.2310i
-0.2452 + 0.0488i    -0.2452 + 0.0488i
 0.2500               -0.2500
 0.1389 + 0.2079i    -0.1389 - 0.2079i
-0.0957 + 0.2310i     0.0957 - 0.2310i
-0.2452 + 0.0488i     0.2452 - 0.0488i
```

ans(:,:,4,3) =

```
 0.2500                0.2500
 0.0488 + 0.2452i     0.0488 + 0.2452i
-0.2310 + 0.0957i    -0.2310 + 0.0957i
-0.1389 - 0.2079i    -0.1389 - 0.2079i
 0.2500               -0.2500
 0.0488 + 0.2452i    -0.0488 - 0.2452i
-0.2310 + 0.0957i     0.2310 - 0.0957i
-0.1389 - 0.2079i     0.1389 + 0.2079i
```

ans(:,:,5,3) =

```
 0.2500                0.2500
-0.0488 + 0.2452i    -0.0488 + 0.2452i
-0.2310 - 0.0957i    -0.2310 - 0.0957i
 0.1389 - 0.2079i     0.1389 - 0.2079i
 0.2500               -0.2500
-0.0488 + 0.2452i     0.0488 - 0.2452i
```

```
-0.2310 - 0.0957i    0.2310 + 0.0957i
 0.1389 - 0.2079i   -0.1389 + 0.2079i
```

ans(:,:,6,3) =

```
 0.2500             0.2500
-0.1389 + 0.2079i  -0.1389 + 0.2079i
-0.0957 - 0.2310i  -0.0957 - 0.2310i
 0.2452 + 0.0488i   0.2452 + 0.0488i
 0.2500            -0.2500
-0.1389 + 0.2079i   0.1389 - 0.2079i
-0.0957 - 0.2310i   0.0957 + 0.2310i
 0.2452 + 0.0488i  -0.2452 - 0.0488i
```

ans(:,:,7,3) =

```
 0.2500             0.2500
-0.2079 + 0.1389i  -0.2079 + 0.1389i
 0.0957 - 0.2310i   0.0957 - 0.2310i
 0.0488 + 0.2452i   0.0488 + 0.2452i
 0.2500            -0.2500
-0.2079 + 0.1389i   0.2079 - 0.1389i
 0.0957 - 0.2310i  -0.0957 + 0.2310i
 0.0488 + 0.2452i  -0.0488 - 0.2452i
```

ans(:,:,8,3) =

```
 0.2500             0.2500
-0.2452 + 0.0488i  -0.2452 + 0.0488i
 0.2310 - 0.0957i   0.2310 - 0.0957i
-0.2079 + 0.1389i  -0.2079 + 0.1389i
 0.2500            -0.2500
-0.2452 + 0.0488i   0.2452 - 0.0488i
 0.2310 - 0.0957i  -0.2310 + 0.0957i
-0.2079 + 0.1389i   0.2079 - 0.1389i
```

ans(:,:,9,3) =

```
 0.2500              0.2500
-0.2452 - 0.0488i   -0.2452 - 0.0488i
 0.2310 + 0.0957i    0.2310 + 0.0957i
-0.2079 - 0.1389i   -0.2079 - 0.1389i
 0.2500             -0.2500
-0.2452 - 0.0488i    0.2452 + 0.0488i
 0.2310 + 0.0957i   -0.2310 - 0.0957i
-0.2079 - 0.1389i    0.2079 + 0.1389i
```

ans(:,:,10,3) =

```
 0.2500              0.2500
-0.2079 - 0.1389i   -0.2079 - 0.1389i
 0.0957 + 0.2310i    0.0957 + 0.2310i
 0.0488 - 0.2452i    0.0488 - 0.2452i
 0.2500             -0.2500
-0.2079 - 0.1389i    0.2079 + 0.1389i
 0.0957 + 0.2310i   -0.0957 - 0.2310i
 0.0488 - 0.2452i   -0.0488 + 0.2452i
```

ans(:,:,11,3) =

```
 0.2500              0.2500
-0.1389 - 0.2079i   -0.1389 - 0.2079i
-0.0957 + 0.2310i   -0.0957 + 0.2310i
 0.2452 - 0.0488i    0.2452 - 0.0488i
 0.2500             -0.2500
-0.1389 - 0.2079i    0.1389 + 0.2079i
-0.0957 + 0.2310i    0.0957 - 0.2310i
 0.2452 - 0.0488i   -0.2452 + 0.0488i
```

ans(:,:,12,3) =

```
    0.2500              0.2500
-0.0488 - 0.2452i   -0.0488 - 0.2452i
-0.2310 + 0.0957i   -0.2310 + 0.0957i
 0.1389 + 0.2079i    0.1389 + 0.2079i
    0.2500             -0.2500
-0.0488 - 0.2452i    0.0488 + 0.2452i
-0.2310 + 0.0957i    0 .2310 - 0.0957i
 0.1389 + 0.2079i   -0.1389 - 0.2079i
```

ans(:,:,13,3) =

```
    0.2500              0.2500
 0.0488 - 0.2452i    0.0488 - 0.2452i
-0.2310 - 0.0957i   -0.2310 - 0.0957i
-0.1389 + 0.2079i   -0.1389 + 0.2079i
    0.2500             -0.2500
 0.0488 - 0.2452i   -0.0488 + 0.2452i
-0.2310 - 0.0957i    0.2310 + 0.0957i
-0.1389 + 0.2079i    0.1389 - 0.2079i
```

ans(:,:,14,3) =

```
    0.2500              0.2500
 0.1389 - 0.2079i    0.1389 - 0.2079i
-0.0957 - 0.2310i   -0.0957 - 0.2310i
-0.2452 - 0.0488i   -0.2452 - 0.0488i
    0.2500             -0.2500
 0.1389 - 0.2079i   -0.1389 + 0.2079i
-0.0957 - 0.2310i    0.0957 + 0.2310i
-0.2452 - 0.0488i    0.2452 + 0.0488i
```

ans(:,:,15,3) =

```
    0.2500              0.2500
 0.2079 - 0.1389i    0.2079 - 0.1389i
 0.0957 - 0.2310i    0.0957 - 0.2310i
```

```
-0.0488 - 0.2452i   -0.0488 - 0.2452i
 0.2500              -0.2500
 0.2079 - 0.1389i   -0.2079 + 0.1389i
 0.0957 - 0.2310i   -0.0957 + 0.2310i
-0.0488 - 0.2452i    0.0488 + 0.2452i
```

ans(:,:,16,3) =

```
 0.2500              0.2500
 0.2452 - 0.0488i    0.2452 - 0.0488i
 0.2310 - 0.0957i    0.2310 - 0.0957i
 0.2079 - 0.1389i    0.2079 - 0.1389i
 0.2500             -0.2500
 0.2452 - 0.0488i   -0.2452 + 0.0488i
 0.2310 - 0.0957i   -0.2310 + 0.0957i
 0.2079 - 0.1389i   -0.2079 + 0.1389i
```

ans(:,:,1,4) =

```
 0.2500              0.2500
 0.2452 + 0.0488i    0.2452 + 0.0488i
 0.2310 + 0.0957i    0.2310 + 0.0957i
 0.2079 + 0.1389i    0.2079 + 0.1389i
 0 + 0.2500i         0 - 0.2500i
-0.0488 + 0.2452i    0.0488 - 0.2452i
-0.0957 + 0.2310i    0.0957 - 0.2310i
-0.1389 + 0.2079i    0.1389 - 0.2079i
```

ans(:,:,2,4) =

```
 0.2500              0.2500
 0.2079 + 0.1389i    0.2079 + 0.1389i
 0.0957 + 0.2310i    0.0957 + 0.2310i
-0.0488 + 0.2452i   -0.0488 + 0.2452i
 0 + 0.2500i         0 - 0.2500i
-0.1389 + 0.2079i    0.1389 - 0.2079i
```

```
-0.2310 + 0.0957i    0.2310 - 0.0957i
-0.2452 - 0.0488i    0.2452 + 0.0488i
```

ans(:,:,3,4) =

```
 0.2500               0.2500
 0.1389 + 0.2079i     0.1389 + 0.2079i
-0.0957 + 0.2310i    -0.0957 + 0.2310i
-0.2452 + 0.0488i    -0.2452 + 0.0488i
      0 + 0.2500i          0 - 0.2500i
-0.2079 + 0.1389i     0.2079 - 0.1389i
-0.2310 - 0.0957i     0.2310 + 0.0957i
-0.0488 - 0.2452i     0.0488 + 0.2452i
```

ans(:,:,4,4) =

```
 0.2500               0.2500
 0.0488 + 0.2452i     0.0488 + 0.2452i
-0.2310 + 0.0957i    -0.2310 + 0.0957i
-0.1389 - 0.2079i    -0.1389 - 0.2079i
      0 + 0.2500i          0 - 0.2500i
-0.2452 + 0.0488i     0.2452 - 0.0488i
-0.0957 - 0.2310i     0.0957 + 0.2310i
 0.2079 - 0.1389i    -0.2079 + 0.1389i
```

ans(:,:,5,4) =

```
 0.2500               0.2500
-0.0488 + 0.2452i    -0.0488 + 0.2452i
-0.2310 - 0.0957i    -0.2310 - 0.0957i
 0.1389 - 0.2079i     0.1389 - 0.2079i
      0 + 0.2500i          0 - 0.2500i
-0.2452 - 0.0488i     0.2452 + 0.0488i
 0.0957 - 0.2310i    -0.0957 + 0.2310i
 0.2079 + 0.1389i    -0.2079 - 0.1389i
```

ans(:,:,6,4) =

$$\begin{array}{ll} 0.2500 & 0.2500 \\ -0.1389 + 0.2079i & -0.1389 + 0.2079i \\ -0.0957 - 0.2310i & -0.0957 - 0.2310i \\ 0.2452 + 0.0488i & 0.2452 + 0.0488i \\ 0 + 0.2500i & 0 - 0.2500i \\ -0.2079 - 0.1389i & 0.2079 + 0.1389i \\ 0.2310 - 0.0957i & -0.2310 + 0.0957i \\ -0.0488 + 0.2452i & 0.0488 - 0.2452i \end{array}$$

ans(:,:,7,4) =

$$\begin{array}{ll} 0.2500 & 0.2500 \\ -0.2079 + 0.1389i & -0.2079 + 0.1389i \\ 0.0957 - 0.2310i & 0.0957 - 0.2310i \\ 0.0488 + 0.2452i & 0.0488 + 0.2452i \\ 0 + 0.2500i & 0 - 0.2500i \\ -0.1389 - 0.2079i & 0.1389 + 0.2079i \\ 0.2310 + 0.0957i & -0.2310 - 0.0957i \\ -0.2452 + 0.0488i & 0.2452 - 0.0488i \end{array}$$

ans(:,:,8,4) =

$$\begin{array}{ll} 0.2500 & 0.2500 \\ -0.2452 + 0.0488i & -0.2452 + 0.0488i \\ 0.2310 - 0.0957i & 0.2310 - 0.0957i \\ -0.2079 + 0.1389i & -0.2079 + 0.1389i \\ 0 + 0.2500i & 0 - 0.2500i \\ -0.0488 - 0.2452i & 0.0488 + 0.2452i \\ 0.0957 + 0.2310i & -0.0957 - 0.2310i \\ -0.1389 - 0.2079i & 0.1389 + 0.2079i \end{array}$$

ans(:,:,9,4) =

```
       0.2500            0.2500
-0.2452 - 0.0488i  -0.2452 - 0.0488i
 0.2310 + 0.0957i   0.2310 + 0.0957i
-0.2079 - 0.1389i  -0.2079 - 0.1389i
      0 + 0.2500i        0 - 0.2500i
 0.0488 - 0.2452i  -0.0488 + 0.2452i
-0.0957 + 0.2310i   0.0957 - 0.2310i
 0.1389 - 0.2079i  -0.1389 + 0.2079i
```

ans(:,:,10,4) =

```
       0.2500            0.2500
-0.2079 - 0.1389i  -0.2079 - 0.1389i
 0.0957 + 0.2310i   0.0957 + 0.2310i
 0.0488 - 0.2452i   0.0488 - 0.2452i
      0 + 0.2500i        0 - 0.2500i
 0.1389 - 0.2079i  -0.1389 + 0.2079i
-0.2310 + 0.0957i   0.2310 - 0.0957i
 0.2452 + 0.0488i  -0.2452 - 0.0488i
```

ans(:,:,11,4) =

```
       0.2500            0.2500
-0.1389 - 0.2079i  -0.1389 - 0.2079i
-0.0957 + 0.2310i  -0.0957 + 0.2310i
 0.2452 - 0.0488i   0.2452 - 0.0488i
      0 + 0.2500i        0 - 0.2500i
 0.2079 - 0.1389i  -0.2079 + 0.1389i
-0.2310 - 0.0957i   0.2310 + 0.0957i
 0.0488 + 0.2452i  -0.0488 - 0.2452i
```

ans(:,:,12,4) =

```
       0.2500            0.2500
-0.0488 - 0.2452i  -0.0488 - 0.2452i
-0.2310 + 0.0957i  -0.2310 + 0.0957i
```

```
0.1389 + 0.2079i    0.1389 + 0.2079i
       0 + 0.2500i         0 - 0.2500i
0.2452 - 0.0488i   -0.2452 + 0.0488i
-0.0957 - 0.2310i    0.0957 + 0.2310i
-0.2079 + 0.1389i    0.2079 - 0.1389i
```

ans(:,:,13,4) =

```
0.2500              0.2500
0.0488 - 0.2452i    0.0488 - 0.2452i
-0.2310 - 0.0957i   -0.2310 - 0.0957i
-0.1389 + 0.2079i   -0.1389 + 0.2079i
       0 + 0.2500i         0 - 0.2500i
0.2452 + 0.0488i   -0.2452 - 0.0488i
0.0957 - 0.2310i   -0.0957 + 0.2310i
-0.2079 - 0.1389i    0.2079 + 0.1389i
```

ans(:,:,14,4) =

```
0.2500              0.2500
0.1389 - 0.2079i    0.1389 - 0.2079i
-0.0957 - 0.2310i   -0.0957 - 0.2310i
-0.2452 - 0.0488i   -0.2452 - 0.0488i
       0 + 0.2500i         0 - 0.2500i
0.2079 + 0.1389i   -0.2079 - 0.1389i
0.2310 - 0.0957i   -0.2310 + 0.0957i
0.0488 - 0.2452i   -0.0488 + 0.2452i
```

ans(:,:,15,4) =

```
0.2500              0.2500
0.2079 - 0.1389i    0.2079 - 0.1389i
0.0957 - 0.2310i    0.0957 - 0.2310i
-0.0488 - 0.2452i   -0.0488 - 0.2452i
       0 + 0.2500i         0 - 0.2500i
0.1389 + 0.2079i   -0.1389 - 0.2079i
```

```
0.2310 + 0.0957i    -0.2310 - 0.0957i
0.2452 - 0.0488i    -0.2452 + 0.0488i
```

ans(:,:,16,4) =

```
0.2500              0.2500
0.2452 - 0.0488i    0.2452 - 0.0488i
0.2310 - 0.0957i    0.2310 - 0.0957i
0.2079 - 0.1389i    0.2079 - 0.1389i
     0 + 0.2500i         0 - 0.2500i
0.0488 + 0.2452i   -0.0488 - 0.2452i
0.0957 + 0.2310i   -0.0957 - 0.2310i
0.1389 + 0.2079i   -0.1389 - 0.2079i
```

ans(:,:,1,5) =

```
0.2500              0.2500
0.2310 + 0.0957i    0.2310 + 0.0957i
0.1768 + 0.1768i    0.1768 + 0.1768i
0.0957 + 0.2310i    0.0957 + 0.2310i
0.2500             -0.2500
0.2310 + 0.0957i   -0.2310 - 0.0957i
0.1768 + 0.1768i   -0.1768 - 0.1768i
0.0957 + 0.2310i   -0.0957 - 0.2310i
```

ans(:,:,2,5) =

```
0.2500              0.2500
0.1768 + 0.1768i    0.1768 + 0.1768i
0.0000 + 0.2500i    0.0000 + 0.2500i
-0.1768 + 0.1768i   -0.1768 + 0.1768i
0.2500             -0.2500
0.1768 + 0.1768i   -0.1768 - 0.1768i
0.0000 + 0.2500i   -0.0000 - 0.2500i
-0.1768 + 0.1768i   0.1768 - 0.1768i
```

ans(:,:,3,5) =

```
 0.2500              0.2500
 0.0957 + 0.2310i    0.0957 + 0.2310i
-0.1768 + 0.1768i   -0.1768 + 0.1768i
-0.2310 - 0.0957i   -0.2310 - 0.0957i
 0.2500             -0.2500
 0.0957 + 0.2310i   -0.0957 - 0.2310i
-0.1768 + 0.1768i    0.1768 - 0.1768i
-0.2310 - 0.0957i    0.2310 + 0.0957i
```

ans(:,:,4,5) =

```
 0.2500              0.2500
 0.0000 + 0.2500i    0.0000 + 0.2500i
-0.2500 + 0.0000i   -0.2500 + 0.0000i
-0.0000 - 0.2500i   -0.0000 - 0.2500i
 0.2500             -0.2500
 0.0000 + 0.2500i   -0.0000 - 0.2500i
-0.2500 + 0.0000i    0.2500 - 0.0000i
-0.0000 - 0.2500i    0.0000 + 0.2500i
```

ans(:,:,5,5) =

```
 0.2500              0.2500
-0.0957 + 0.2310i   -0.0957 + 0.2310i
-0.1768 - 0.1768i   -0.1768 - 0.1768i
 0.2310 - 0.0957i    0.2310 - 0.0957i
 0.2500             -0.2500
-0.0957 + 0.2310i    0.0957 - 0.2310i
-0.1768 - 0.1768i    0.1768 + 0.1768i
 0.2310 - 0.0957i   -0.2310 + 0.0957i
```

ans(:,:,6,5) =

```
   0.2500              0.2500
  -0.1768 + 0.1768i   -0.1768 + 0.1768i
  -0.0000 - 0.2500i   -0.0000 - 0.2500i
   0.1768 + 0.1768i    0.1768 + 0.1768i
   0.2500             -0.2500
  -0.1768 + 0.1768i    0.1768 - 0.1768i
  -0.0000 - 0.2500i    0.0000 + 0.2500i
   0.1768 + 0.1768i   -0.1768 - 0.1768i
```

ans(:,:,7,5) =

```
   0.2500              0.2500
  -0.2310 + 0.0957i   -0.2310 + 0.0957i
   0.1768 - 0.1768i    0.1768 - 0.1768i
  -0.0957 + 0.2310i   -0.0957 + 0.2310i
   0.2500             -0.2500
  -0.2310 + 0.0957i    0.2310 - 0.0957i
   0.1768 - 0.1768i   -0.1768 + 0.1768i
  -0.0957 + 0.2310i    0 .0957 - 0.2310i
```

ans(:,:,8,5) =

```
   0.2500              0.2500
  -0.2500 + 0.0000i   -0.2500 + 0.0000i
   0.2500 - 0.0000i    0.2500 - 0.0000i
  -0.2500 + 0.0000i   -0.2500 + 0.0000i
   0.2500             -0.2500
  -0.2500 + 0.0000i    0.2500 - 0.0000i
   0.2500 - 0.0000i   -0.2500 + 0.0000i
  -0.2500 + 0.0000i    0.2500 - 0.0000i
```

ans(:,:,9,5) =

```
   0.2500              0.2500
  -0.2310 - 0.0957i   -0.2310 - 0.0957i
   0.1768 + 0.1768i    0.1768 + 0.1768i
```

```
-0.0957 - 0.2310i    -0.0957 - 0.2310i
 0.2500              -0.2500
-0.2310 - 0.0957i     0.2310 + 0.0957i
 0.1768 + 0.1768i    -0.1768 - 0.1768i
-0.0957 - 0.2310i     0.0957 + 0.2310i
```

ans(:,:,10,5) =

```
 0.2500               0.2500
-0.1768 - 0.1768i    -0.1768 - 0.1768i
 0.0000 + 0.2500i     0.0000 + 0.2500i
 0.1768 - 0.1768i     0.1768 - 0.1768i
 0.2500              -0.2500
-0.1768 - 0.1768i     0.1768 + 0.1768i
 0.0000 + 0.2500i    -0.0000 - 0.2500i
 0.1768 - 0.1768i    -0.1768 + 0.1768i
```

ans(:,:,11,5) =

```
 0.2500               0.2500
-0.0957 - 0.2310i    -0.0957 - 0.2310i
-0.1768 + 0.1768i    -0.1768 + 0.1768i
 0.2310 + 0.0957i     0.2310 + 0.0957i
 0.2500              -0.2500
-0.0957 - 0.2310i     0.0957 + 0.2310i
-0.1768 + 0.1768i     0.1768 - 0.1768i
 0.2310 + 0.0957i    -0.2310 - 0.0957i
```

ans(:,:,12,5) =

```
 0.2500               0.2500
-0.0000 - 0.2500i    -0.0000 - 0.2500i
-0.2500 + 0.0000i    -0.2500 + 0.0000i
 0.0000 + 0.2500i     0.0000 + 0.2500i
 0.2500              -0.2500
-0.0000 - 0.2500i     0.0000 + 0.2500i
```

-0.2500 + 0.0000i    0.2500 - 0.0000i
0.0000 + 0.2500i    -0.0000 - 0.2500i

ans(:,:,13,5) =

0.2500          0.2500
0.0957 - 0.2310i    0.0957 - 0.2310i
-0.1768 - 0.1768i   -0.1768 - 0.1768i
-0.2310 + 0.0957i   -0.2310 + 0.0957i
0.2500         -0.2500
0.0957 - 0.2310i   -0.0957 + 0.2310i
-0.1768 - 0.1768i   0.1768 + 0.1768i
-0.2310 + 0.0957i   0.2310 - 0.0957i

ans(:,:,14,5) =

0.2500          0.2500
0.1768 - 0.1768i    0.1768 - 0.1768i
-0.0000 - 0.2500i   -0.0000 - 0.2500i
-0.1768 - 0.1768i   -0.1768 - 0.1768i
0.2500         -0.2500
0.1768 - 0.1768i   -0.1768 + 0.1768i
-0.0000 - 0.2500i   0.0000 + 0.2500i
-0.1768 - 0.1768i   0.1768 + 0.1768i

ans(:,:,15,5) =

0.2500          0.2500
0.2310 - 0.0957i    0.2310 - 0.0957i
0.1768 - 0.1768i    0.1768 - 0.1768i
0.0957 - 0.2310i    0.0957 - 0.2310i
0.2500         -0.2500
0.2310 - 0.0957i   -0.2310 + 0.0957i
0.1768 - 0.1768i   -0.1768 + 0.1768i
0.0957 - 0.2310i   -0.0957 + 0.2310i

ans(:,:,16,5) =

```
0.2500     0.2500
0.2500     0.2500
0.2500     0.2500
0.2500     0.2500
0.2500    -0.2500
0.2500    -0.2500
0.2500    -0.2500
0.2500    -0.2500
```

ans(:,:,1,6) =

```
0.2500              0.2500
0.2310 + 0.0957i    0.2310 + 0.0957i
0.1768 + 0.1768i    0.1768 + 0.1768i
0.0957 + 0.2310i    0.0957 + 0.2310i
     0 + 0.2500i         0 - 0.2500i
-0.0957 + 0.2310i    0.0957 - 0.2310i
-0.1768 + 0.1768i    0.1768 - 0.1768i
-0.2310 + 0.0957i    0.2310 - 0.0957i
```

ans(:,:,2,6) =

```
0.2500              0.2500
0.1768 + 0.1768i    0.1768 + 0.1768i
0.0000 + 0.2500i    0.0000 + 0.2500i
-0.1768 + 0.1768i   -0.1768 + 0.1768i
     0 + 0.2500i         0 - 0.2500i
-0.1768 + 0.1768i    0.1768 - 0.1768i
-0.2500 + 0.0000i    0.2500 - 0.0000i
-0.1768 - 0.1768i    0.1768 + 0.1768i
```

ans(:,:,3,6) =

```
        0.2500              0.2500
   0.0957 + 0.2310i    0.0957 + 0.2310i
  -0.1768 + 0.1768i   -0.1768 + 0.1768i
  -0.2310 - 0.0957i   -0.2310 - 0.0957i
        0 + 0.2500i          0 - 0.2500i
  -0.2310 + 0.0957i    0.2310 - 0.0957i
  -0.1768 - 0.1768i    0.1768 + 0.1768i
   0.0957 - 0.2310i   -0.0957 + 0.2310i
```

ans(:,:,4,6) =

```
        0.2500              0.2500
   0.0000 + 0.2500i    0.0000 + 0.2500i
  -0.2500 + 0.0000i   -0.2500 + 0.0000i
  -0.0000 - 0.2500i   -0.0000 - 0.2500i
        0 + 0.2500i          0 - 0.2500i
  -0.2500 + 0.0000i    0.2500 - 0.0000i
  -0.0000 - 0.2500i    0.0000 + 0.2500i
   0.2500 - 0.0000i   -0.2500 + 0.0000i
```

ans(:,:,5,6) =

```
        0.2500              0.2500
  -0.0957 + 0.2310i   -0.0957 + 0.2310i
  -0.1768 - 0.1768i   -0.1768 - 0.1768i
   0.2310 - 0.0957i    0.2310 - 0.0957i
        0 + 0.2500i          0 - 0.2500i
  -0.2310 - 0.0957i    0.2310 + 0.0957i
   0.1768 - 0.1768i   -0.1768 + 0.1768i
   0.0957 + 0.2310i   -0.0957 - 0.2310i
```

ans(:,:,6,6) =

```
        0.2500              0.2500
  -0.1768 + 0.1768i   -0.1768 + 0.1768i
  -0.0000 - 0.2500i   -0.0000 - 0.2500i
```

$$0.1768 + 0.1768i \quad 0.1768 + 0.1768i$$
$$0 + 0.2500i \quad 0 - 0.2500i$$
$$-0.1768 - 0.1768i \quad 0.1768 + 0.1768i$$
$$0.2500 - 0.0000i \quad -0.2500 + 0.0000i$$
$$-0.1768 + 0.1768i \quad 0.1768 - 0.1768i$$

ans(:,:,7,6) =

$$0.2500 \quad 0.2500$$
$$-0.2310 + 0.0957i \quad -0.2310 + 0.0957i$$
$$0.1768 - 0.1768i \quad 0.1768 - 0.1768i$$
$$-0.0957 + 0.2310i \quad -0.0957 + 0.2310i$$
$$0 + 0.2500i \quad 0 - 0.2500i$$
$$-0.0957 - 0.2310i \quad 0.0957 + 0.2310i$$
$$0.1768 + 0.1768i \quad -0.1768 - 0.1768i$$
$$-0.2310 - 0.0957i \quad 0.2310 + 0.0957i$$

ans(:,:,8,6) =

$$0.2500 \quad 0.2500$$
$$-0.2500 + 0.0000i \quad -0.2500 + 0.0000i$$
$$0.2500 - 0.0000i \quad 0.2500 - 0.0000i$$
$$-0.2500 + 0.0000i \quad -0.2500 + 0.0000i$$
$$0 + 0.2500i \quad 0 - 0.2500i$$
$$-0.0000 - 0.2500i \quad 0.0000 + 0.2500i$$
$$0.0000 + 0.2500i \quad -0.0000 - 0.2500i$$
$$-0.0000 - 0.2500i \quad 0.0000 + 0.2500i$$

ans(:,:,9,6) =

$$0.2500 \quad 0.2500$$
$$-0.2310 - 0.0957i \quad -0.2310 - 0.0957i$$
$$0.1768 + 0.1768i \quad 0.1768 + 0.1768i$$
$$-0.0957 - 0.2310i \quad -0.0957 - 0.2310i$$
$$0 + 0.2500i \quad 0 - 0.2500i$$
$$0.0957 - 0.2310i \quad -0.0957 + 0.2310i$$

```
      -0.1768 + 0.1768i     0.1768 - 0.1768i
      0.2310 - 0.0957i    -0.2310 + 0.0957i


ans(:,:,10,6) =

       0.2500                0.2500
      -0.1768 - 0.1768i    -0.1768 - 0.1768i
       0.0000 + 0.2500i     0.0000 + 0.2500i
       0.1768 - 0.1768i     0.1768 - 0.1768i
            0 + 0.2500i          0 - 0.2500i
       0.1768 - 0.1768i    -0.1768 + 0.1768i
      -0.2500 + 0.0000i     0.2500 - 0.0000i
       0.1768 + 0.1768i    -0.1768 - 0.1768i


ans(:,:,11,6) =

       0.2500                0.2500
      -0.0957 - 0.2310i    -0.0957 - 0.2310i
      -0.1768 + 0.1768i    -0.1768 + 0.1768i
       0.2310 + 0.0957i     0.2310 + 0.0957i
            0 + 0.2500i          0 - 0.2500i
       0.2310 - 0.0957i    -0.2310 + 0.0957i
      -0.1768 - 0.1768i     0.1768 + 0.1768i
      -0.0957 + 0.2310i     0.0957 - 0.2310i


ans(:,:,12,6) =

       0.2500                0.2500
      -0.0000 - 0.2500i    -0.0000 - 0.2500i
      -0.2500 + 0.0000i    -0.2500 + 0.0000i
       0.0000 + 0.2500i     0.0000 + 0.2500i
            0 + 0.2500i          0 - 0.2500i
       0.2500 - 0.0000i    -0.2500 + 0.0000i
      -0.0000 - 0.2500i     0.0000 + 0.2500i
      -0.2500 + 0.0000i     0.2500 - 0.0000i
```

ans(:,:,13,6) =

```
   0.2500             0.2500
   0.0957 - 0.2310i   0.0957 - 0.2310i
 - 0.1768 - 0.1768i  -0.1768 - 0.1768i
  -0.2310 + 0.0957i  -0.2310 + 0.0957i
        0 + 0.2500i        0 - 0.2500i
   0.2310 + 0.0957i  -0.2310 - 0.0957i
   0.1768 - 0.1768i  -0.1768 + 0.1768i
  -0.0957 - 0.2310i   0.0957 + 0.2310i
```

ans(:,:,14,6) =

```
   0.2500             0.2500
   0.1768 - 0.1768i   0.1768 - 0.1768i
  -0.0000 - 0.2500i  -0.0000 - 0.2500i
  -0.1768 - 0.1768i  -0.1768 - 0.1768i
        0 + 0.2500i        0 - 0.2500i
   0.1768 + 0.1768i  -0.1768 - 0.1768i
   0.2500 - 0.0000i  -0.2500 + 0.0000i
   0.1768 - 0.1768i  -0.1768 + 0.1768i
```

ans(:,:,15,6) =

```
   0.2500             0.2500
   0.2310 - 0.0957i   0.2310 - 0.0957i
   0.1768 - 0.1768i   0.1768 - 0.1768i
   0.0957 - 0.2310i   0.0957 - 0.2310i
        0 + 0.2500i        0 - 0.2500i
   0.0957 + 0.2310i  -0.0957 - 0.2310i
   0.1768 + 0.1768i  -0.1768 - 0.1768i
   0.2310 + 0.0957i  -0.2310 - 0.0957i
```

ans(:,:,16,6) =

```
        0.2500              0.2500
        0.2500              0.2500
        0.2500              0.2500
        0.2500              0.2500
          0 + 0.2500i         0 - 0.2500i
          0 + 0.2500i         0 - 0.2500i
          0 + 0.2500i         0 - 0.2500i
          0 + 0.2500i         0 - 0.2500i
```

ans(:,:,1,7) =

```
        0.2500              0.2500
        0.2079 + 0.1389i     0.2079 + 0.1389i
        0.0957 + 0.2310i     0.0957 + 0.2310i
       -0.0488 + 0.2452i    -0.0488 + 0.2452i
        0.2500             -0.2500
        0.2079 + 0.1389i    -0.2079 - 0.1389i
        0.0957 + 0.2310i    -0.0957 - 0.2310i
       -0.0488 + 0.2452i     0.0488 - 0.2452i
```

ans(:,:,2,7) =

```
        0.2500              0.2500
        0.1389 + 0.2079i     0.1389 + 0.2079i
       -0.0957 + 0.2310i    -0.0957 + 0.2310i
       -0.2452 + 0.0488i    -0.2452 + 0.0488i
        0.2500             -0.2500
        0.1389 + 0.2079i    -0.1389 - 0.2079i
       -0.0957 + 0.2310i     0.0957 - 0.2310i
       -0.2452 + 0.0488i     0.2452 - 0.0488i
```

ans(:,:,3,7) =

```
        0.2500              0.2500
        0.0488 + 0.2452i     0.0488 + 0.2452i
       -0.2310 + 0.0957i    -0.2310 + 0.0957i
```

```
-0.1389 - 0.2079i    -0.1389 - 0.2079i
 0.2500                -0.2500
 0.0488 + 0.2452i     -0.0488 - 0.2452i
-0.2310 + 0.0957i      0.2310 - 0.0957i
-0.1389 - 0.2079i      0.1389 + 0.2079i
```

ans(:,:,4,7) =

```
 0.2500                0.2500
-0.0488 + 0.2452i     -0.0488 + 0.2452i
-0.2310 - 0.0957i     -0.2310 - 0.0957i
 0.1389 - 0.2079i      0.1389 - 0.2079i
 0.2500               -0.2500
-0.0488 + 0.2452i      0.0488 - 0.2452i
-0.2310 - 0.0957i      0.2310 + 0.0957i
 0.1389 - 0.2079i     -0.1389 + 0.2079i
```

ans(:,:,5,7) =

```
 0.2500                0.2500
-0.1389 + 0.2079i     -0.1389 + 0.2079i
-0.0957 - 0.2310i     -0.0957 - 0.2310i
 0.2452 + 0.0488i      0.2452 + 0.0488i
 0.2500               -0.2500
-0.1389 + 0.2079i      0.1389 - 0.2079i
-0.0957 - 0.2310i      0.0957 + 0.2310i
 0.2452 + 0.0488i     -0.2452 - 0.0488i
```

ans(:,:,6,7) =

```
 0.2500                0.2500
-0.2079 + 0.1389i     -0.2079 + 0.1389i
 0.0957 - 0.2310i      0.0957 - 0.2310i
 0.0488 + 0.2452i      0.0488 + 0.2452i
 0.2500               -0.2500
-0.2079 + 0.1389i      0.2079 - 0.1389i
```

```
0.0957 - 0.2310i    -0.0957 + 0.2310i
0.0488 + 0.2452i    -0.0488 - 0.2452i
```

ans(:,:,7,7) =

```
 0.2500              0.2500
-0.2452 + 0.0488i   -0.2452 + 0.0488i
 0.2310 - 0.0957i    0.2310 - 0.0957i
-0.2079 + 0.1389i   -0.2079 + 0.1389i
 0.2500             -0.2500
-0.2452 + 0.0488i    0.2452 - 0.0488i
 0.2310 - 0.0957i   -0.2310 + 0.0957i
-0.2079 + 0.1389i    0.2079 - 0.1389i
```

ans(:,:,8,7) =

```
 0.2500              0.2500
-0.2452 - 0.0488i   -0.2452 - 0.0488i
 0.2310 + 0.0957i    0.2310 + 0.0957i
-0.2079 - 0.1389i   -0.2079 - 0.1389i
 0.2500             -0.2500
-0.2452 - 0.0488i    0.2452 + 0.0488i
 0.2310 + 0.0957i   -0.2310 - 0.0957i
-0.2079 - 0.1389i    0.2079 + 0.1389i
```

ans(:,:,9,7) =

```
 0.2500              0.2500
-0.2079 - 0.1389i   -0.2079 - 0.1389i
 0.0957 + 0.2310i    0.0957 + 0.2310i
 0.0488 - 0.2452i    0.0488 - 0.2452i
 0.2500             -0.2500
-0.2079 - 0.1389i    0.2079 + 0.1389i
 0.0957 + 0.2310i   -0.0957 - 0.2310i
 0.0488 - 0.2452i   -0.0488 + 0.2452i
```

ans(:,:,10,7) =

```
   0.2500              0.2500
  -0.1389 - 0.2079i   -0.1389 - 0.2079i
  -0.0957 + 0.2310i   -0.0957 + 0.2310i
   0.2452 - 0.0488i    0.2452 - 0.0488i
   0.2500             -0.2500
  -0.1389 - 0.2079i    0.1389 + 0.2079i
  -0.0957 + 0.2310i    0.0957 - 0.2310i
   0.2452 - 0.0488i   -0.2452 + 0.0488i
```

ans(:,:,11,7) =

```
   0.2500              0.2500
  -0.0488 - 0.2452i   -0.0488 - 0.2452i
  -0.2310 + 0.0957i   -0.2310 + 0.0957i
   0.1389 + 0.2079i    0.1389 + 0.2079i
   0.2500             -0.2500
  -0.0488 - 0.2452i    0.0488 + 0.2452i
  -0.2310 + 0.0957i    0.2310 - 0.0957i
   0.1389 + 0.2079i   -0.1389 - 0.2079i
```

ans(:,:,12,7) =

```
   0.2500              0.2500
   0.0488 - 0.2452i    0.0488 - 0.2452i
  -0.2310 - 0.0957i   -0.2310 - 0.0957i
  -0.1389 + 0.2079i   -0.1389 + 0.2079i
   0.2500             -0.2500
   0.0488 - 0.2452i   -0.0488 + 0.2452i
  -0.2310 - 0.0957i    0.2310 + 0.0957i
  -0.1389 + 0.2079i    0.1389 - 0.2079i
```

ans(:,:,13,7) =

```
0.2500              0.2500
0.1389 - 0.2079i   0.1389 - 0.2079i
-0.0957 - 0.2310i  -0.0957 - 0.2310i
-0.2452 - 0.0488i  -0.2452 - 0.0488i
0.2500             -0.2500
0.1389 - 0.2079i   -0.1389 + 0.2079i
-0.0957 - 0.2310i   0.0957 + 0.2310i
-0.2452 - 0.0488i   0.2452 + 0.0488i
```

ans(:,:,14,7) =

```
0.2500              0.2500
0.2079 - 0.1389i   0.2079 - 0.1389i
0.0957 - 0.2310i   0.0957 - 0.2310i
-0.0488 - 0.2452i  -0.0488 - 0.2452i
0.2500             -0.2500
0.2079 - 0.1389i   -0.2079 + 0.1389i
0.0957 - 0.2310i   -0.0957 + 0.2310i
-0.0488 - 0.2452i   0.0488 + 0.2452i
```

ans(:,:,15,7) =

```
0.2500              0.2500
0.2452 - 0.0488i   0.2452 - 0.0488i
0.2310 - 0.0957i   0.2310 - 0.0957i
0.2079 - 0.1389i   0.2079 - 0.1389i
0.2500             -0.2500
0.2452 - 0.0488i   -0.2452 + 0.0488i
0.2310 - 0.0957i   -0.2310 + 0.0957i
0.2079 - 0.1389i   -0.2079 + 0.1389i
```

ans(:,:,16,7) =

```
0.2500              0.2500
0.2452 + 0.0488i   0.2452 + 0.0488i
0.2310 + 0.0957i   0.2310 + 0.0957i
```

```
0.2079 + 0.1389i     0.2079 + 0.1389i
0.2500               -0.2500
0.2452 + 0.0488i     -0.2452 - 0.0488i
0.2310 + 0.0957i     -0.2310 - 0.0957i
0.2079 + 0.1389i     -0.2079 - 0.1389i
```

ans(:,:,1,8) =

```
0.2500               0.2500
0.2079 + 0.1389i     0.2079 + 0.1389i
0.0957 + 0.2310i     0.0957 + 0.2310i
-0.0488 + 0.2452i    -0.0488 + 0.2452i
     0 + 0.2500i          0 - 0.2500i
-0.1389 + 0.2079i    0.1389 - 0.2079i
-0.2310 + 0.0957i    0.2310 - 0.0957i
-0.2452 - 0.0488i    0.2452 + 0.0488i
```

ans(:,:,2,8) =

```
0.2500               0.2500
0.1389 + 0.2079i     0.1389 + 0.2079i
-0.0957 + 0.2310i    -0.0957 + 0.2310i
-0.2452 + 0.0488i    -0.2452 + 0.0488i
     0 + 0.2500i          0 - 0.2500i
-0.2079 + 0.1389i    0.2079 - 0.1389i
-0.2310 - 0.0957i    0.2310 + 0.0957i
-0.0488 - 0.2452i    0.0488 + 0.2452i
```

ans(:,:,3,8) =

```
0.2500               0.2500
0.0488 + 0.2452i     0.0488 + 0.2452i
-0.2310 + 0.0957i    -0.2310 + 0.0957i
-0.1389 - 0.2079i    -0.1389 - 0.2079i
     0 + 0.2500i          0 - 0.2500i
-0.2452 + 0.0488i    0.2452 - 0.0488i
```

-0.0957 - 0.2310i     0.0957 + 0.2310i
0.2079 - 0.1389i     -0.2079 + 0.1389i

ans(:,:,4,8) =

0.2500            0.2500
-0.0488 + 0.2452i    -0.0488 + 0.2452i
-0.2310 - 0.0957i    -0.2310 - 0.0957i
0.1389 - 0.2079i     0.1389 - 0.2079i
0 + 0.2500i        0 - 0.2500i
-0.2452 - 0.0488i    0.2452 + 0.0488i
0.0957 - 0.2310i    -0.0957 + 0.2310i
0.2079 + 0.1389i    -0.2079 - 0.1389i

ans(:,:,5,8) =

0.2500            0.2500
-0.1389 + 0.2079i    -0.1389 + 0.2079i
-0.0957 - 0.2310i    -0.0957 - 0.2310i
0.2452 + 0.0488i     0.2452 + 0.0488i
0 + 0.2500i        0 - 0.2500i
-0.2079 - 0.1389i    0.2079 + 0.1389i
0.2310 - 0.0957i    -0.2310 + 0.0957i
-0.0488 + 0.2452i    0.0488 - 0.2452i

ans(:,:,6,8) =

0.2500            0.2500
-0.2079 + 0.1389i    -0.2079 + 0.1389i
0.0957 - 0.2310i     0.0957 - 0.2310i
0.0488 + 0.2452i     0.0488 + 0.2452i
0 + 0.2500i        0 - 0.2500i
-0.1389 - 0.2079i    0.1389 + 0.2079i
0.2310 + 0.0957i    -0.2310 - 0.0957i
-0.2452 + 0.0488i    0.2452 - 0.0488i

ans(:,:,7,8) =

```
      0.2500            0.2500
-0.2452 + 0.0488i  -0.2452 + 0.0488i
 0.2310 - 0.0957i   0.2310 - 0.0957i
-0.2079 + 0.1389i  -0.2079 + 0.1389i
        0 + 0.2500i         0 - 0.2500i
-0.0488 - 0.2452i   0.0488 + 0.2452i
 0.0957 + 0.2310i  -0.0957 - 0.2310i
-0.1389 - 0.2079i   0.1389 + 0.2079i
```

ans(:,:,8,8) =

```
      0.2500            0.2500
-0.2452 - 0.0488i  -0.2452 - 0.0488i
 0.2310 + 0.0957i   0.2310 + 0.0957i
-0.2079 - 0.1389i  -0.2079 - 0.1389i
        0 + 0.2500i         0 - 0.2500i
 0.0488 - 0.2452i  -0.0488 + 0.2452i
-0.0957 + 0.2310i   0.0957 - 0.2310i
 0.1389 - 0.2079i  -0.1389 + 0.2079i
```

ans(:,:,9,8) =

```
      0.2500            0.2500
-0.2079 - 0.1389i  -0.2079 - 0.1389i
 0.0957 + 0.2310i   0.0957 + 0.2310i
 0.0488 - 0.2452i   0.0488 - 0.2452i
        0 + 0.2500i         0 - 0.2500i
 0.1389 - 0.2079i  -0.1389 + 0.2079i
-0.2310 + 0.0957i   0.2310 - 0.0957i
 0.2452 + 0.0488i  -0.2452 - 0.0488i
```

ans(:,:,10,8) =

```
    0.2500              0.2500
-0.1389 - 0.2079i   -0.1389 - 0.2079i
-0.0957 + 0.2310i   -0.0957 + 0.2310i
 0.2452 - 0.0488i    0.2452 - 0.0488i
        0 + 0.2500i          0 - 0.2500i
 0.2079 - 0.1389i   -0.2079 + 0.1389i
-0.2310 - 0.0957i    0.2310 + 0.0957i
 0.0488 + 0.2452i   -0.0488 - 0.2452i
```

ans(:,:,11,8) =

```
    0.2500              0.2500
-0.0488 - 0.2452i   -0.0488 - 0.2452i
-0.2310 + 0.0957i   -0.2310 + 0.0957i
 0.1389 + 0.2079i    0.1389 + 0.2079i
        0 + 0.2500i          0 - 0.2500i
 0.2452 - 0.0488i   -0.2452 + 0.0488i
-0.0957 - 0.2310i    0.0957 + 0.2310i
-0.2079 + 0.1389i    0.2079 - 0.1389i
```

ans(:,:,12,8) =

```
    0.2500              0.2500
 0.0488 - 0.2452i    0.0488 - 0.2452i
-0.2310 - 0.0957i   -0.2310 - 0.0957i
-0.1389 + 0.2079i   -0.1389 + 0.2079i
        0 + 0.2500i          0 - 0.2500i
 0.2452 + 0.0488i   -0.2452 - 0.0488i
 0.0957 - 0.2310i   -0.0957 + 0.2310i
-0.2079 - 0.1389i    0.2079 + 0.1389i
```

ans(:,:,13,8) =

```
    0.2500              0.2500
 0.1389 - 0.2079i    0.1389 - 0.2079i
-0.0957 - 0.2310i   -0.0957 - 0.2310i
```

```
-0.2452 - 0.0488i    -0.2452 - 0.0488i
        0 + 0.2500i          0 - 0.2500i
 0.2079 + 0.1389i   -0.2079 - 0.1389i
 0.2310 - 0.0957i   -0.2310 + 0.0957i
 0.0488 - 0.2452i   -0.0488 + 0.2452i
```

ans(:,:,14,8) =

```
 0.2500               0.2500
 0.2079 - 0.1389i    0.2079 - 0.1389i
 0.0957 - 0.2310i    0.0957 - 0.2310i
-0.0488 - 0.2452i   -0.0488 - 0.2452i
        0 + 0.2500i          0 - 0.2500i
 0.1389 + 0.2079i   -0.1389 - 0.2079i
 0.2310 + 0.0957i   -0.2310 - 0.0957i
 0.2452 - 0.0488i   -0.2452 + 0.0488i
```

ans(:,:,15,8) =

```
 0.2500               0.2500
 0.2452 - 0.0488i    0.2452 - 0.0488i
 0.2310 - 0.0957i    0.2310 - 0.0957i
 0.2079 - 0.1389i    0.2079 - 0.1389i
        0 + 0.2500i          0 - 0.2500i
 0.0488 + 0.2452i   -0.0488 - 0.2452i
 0.0957 + 0.2310i   -0.0957 - 0.2310i
 0.1389 + 0.2079i   -0.1389 - 0.2079i
```

ans(:,:,16,8) =

```
 0.2500               0.2500
 0.2452 + 0.0488i    0.2452 + 0.0488i
 0.2310 + 0.0957i    0.2310 + 0.0957i
 0.2079 + 0.1389i    0.2079 + 0.1389i
        0 + 0.2500i          0 - 0.2500i
-0.0488 + 0.2452i    0.0488 - 0.2452i
```

```
-0.0957 + 0.2310i    0.0957 - 0.2310i
-0.1389 + 0.2079i    0.1389 - 0.2079i
```

ans(:,:,1,9) =

```
0.2500              0.2500
0.2500              0.2452 + 0.0488i
0.2500              0.2310 + 0.0957i
0.2500              0.2079 + 0.1389i
0.2500             -0.2500
0.2500             -0.2452 - 0.0488i
0.2500             -0.2310 - 0.0957i
0.2500             -0.2079 - 0.1389i
```

ans(:,:,2,9) =

```
0.2500              0.2500
0.2310 + 0.0957i    0.2079 + 0.1389i
0.1768 + 0.1768i    0.0957 + 0.2310i
0.0957 + 0.2310i   -0.0488 + 0.2452i
0.2500             -0.2500
0.2310 + 0.0957i   -0.2079 - 0.1389i
0.1768 + 0.1768i   -0.0957 - 0.2310i
0.0957 + 0.2310i    0.0488 - 0.2452i
```

ans(:,:,3,9) =

```
0.2500              0.2500
0.1768 + 0.1768i    0.1389 + 0.2079i
0.0000 + 0.2500i   -0.0957 + 0.2310i
-0.1768 + 0.1768i  -0.2452 + 0.0488i
0.2500             -0.2500
0.1768 + 0.1768i   -0.1389 - 0.2079i
0.0000 + 0.2500i    0.0957 - 0.2310i
-0.1768 + 0.1768i   0.2452 - 0.0488i
```

171

ans(:,:,4,9) =

```
  0.2500            0.2500
  0.0957 + 0.2310i   0.0488 + 0.2452i
 -0.1768 + 0.1768i  -0.2310 + 0.0957i
 -0.2310 - 0.0957i  -0.1389 - 0.2079i
  0.2500           -0.2500
  0.0957 + 0.2310i  -0.0488 - 0.2452i
 -0.1768 + 0.1768i   0.2310 - 0.0957i
 -0.2310 - 0.0957i   0.1389 + 0.2079i
```

ans(:,:,5,9) =

```
  0.2500            0.2500
  0.0000 + 0.2500i  -0.0488 + 0.2452i
 -0.2500 + 0.0000i  -0.2310 - 0.0957i
 -0.0000 - 0.2500i   0.1389 - 0.2079i
  0.2500           -0.2500
  0.0000 + 0.2500i   0.0488 - 0.2452i
 -0.2500 + 0.0000i   0.2310 + 0.0957i
 -0.0000 - 0.2500i  -0.1389 + 0.2079i
```

ans(:,:,6,9) =

```
  0.2500            0.2500
 -0.0957 + 0.2310i  -0.1389 + 0.2079i
 -0.1768 - 0.1768i  -0.0957 - 0.2310i
  0.2310 - 0.0957i   0.2452 + 0.0488i
  0.2500           -0.2500
 -0.0957 + 0.2310i   0.1389 - 0.2079i
 -0.1768 - 0.1768i   0.0957 + 0.2310i
  0.2310 - 0.0957i  -0.2452 - 0.0488i
```

ans(:,:,7,9) =

```
  0.2500                0.2500
 -0.1768 + 0.1768i     -0.2079 + 0.1389i
 -0.0000 - 0.2500i      0.0957 - 0.2310i
  0.1768 + 0.1768i      0.0488 + 0.2452i
  0.2500               -0.2500
 -0.1768 + 0.1768i      0.2079 - 0.1389i
 -0.0000 - 0.2500i     -0.0957 + 0.2310i
  0.1768 + 0.1768i     -0.0488 - 0.2452i
```

ans(:,:,8,9) =

```
  0.2500                0.2500
 -0.2310 + 0.0957i     -0.2452 + 0.0488i
  0.1768 - 0.1768i      0.2310 - 0.0957i
 -0.0957 + 0.2310i     -0.2079 + 0.1389i
  0.2500               -0.2500
 -0.2310 + 0.0957i      0.2452 - 0.0488i
  0.1768 - 0.1768i     -0.2310 + 0.0957i
 -0.0957 + 0.2310i      0.2079 - 0.1389i
```

ans(:,:,9,9) =

```
  0.2500                0.2500
 -0.2500 + 0.0000i     -0.2452 - 0.0488i
  0.2500 - 0.0000i      0.2310 + 0.0957i
 -0.2500 + 0.0000i     -0.2079 - 0.1389i
  0.2500               -0.2500
 -0.2500 + 0.0000i      0.2452 + 0.0488i
  0.2500 - 0.0000i     -0.2310 - 0.0957i
 -0.2500 + 0.0000i      0.2079 + 0.1389i
```

ans(:,:,10,9) =

```
  0.2500                0.2500
 -0.2310 - 0.0957i    - 0.2079 - 0.1389i
  0.1768 + 0.1768i      0.0957 + 0.2310i
```

```
-0.0957 - 0.2310i    0.0488 - 0.2452i
 0.2500             -0.2500
-0.2310 - 0.0957i    0.2079 + 0.1389i
 0.1768 + 0.1768i   -0.0957 - 0.2310i
-0.0957 - 0.2310i   -0.0488 + 0.2452i
```

ans(:,:,11,9) =

```
 0.2500              0.2500
-0.1768 - 0.1768i   -0.1389 - 0.2079i
 0.0000 + 0.2500i   -0.0957 + 0.2310i
 0.1768 - 0.1768i    0.2452 - 0.0488i
 0.2500             -0.2500
-0.1768 - 0.1768i    0.1389 + 0.2079i
 0.0000 + 0.2500i    0.0957 - 0.2310i
 0.1768 - 0.1768i   -0.2452 + 0.0488i
```

ans(:,:,12,9) =

```
 0.2500              0.2500
-0.0957 - 0.2310i   -0.0488 - 0.2452i
-0.1768 + 0.1768i   -0.2310 + 0.0957i
 0.2310 + 0.0957i    0.1389 + 0.2079i
 0.2500             -0.2500
-0.0957 - 0.2310i    0.0488 + 0.2452i
-0.1768 + 0.1768i    0.2310 - 0.0957i
 0.2310 + 0.0957i   -0.1389 - 0.2079i
```

ans(:,:,13,9) =

```
 0.2500              0.2500
-0.0000 - 0.2500i    0.0488 - 0.2452i
-0.2500 + 0.0000i   -0.2310 - 0.0957i
 0.0000 + 0.2500i   -0.1389 + 0.2079i
 0.2500             -0.2500
-0.0000 - 0.2500i   -0.0488 + 0.2452i
```

```
-0.2500 + 0.0000i    0.2310 + 0.0957i
 0.0000 + 0.2500i    0.1389 - 0.2079i
```

ans(:,:,14,9) =

```
 0.2500              0.2500
 0.0957 - 0.2310i    0.1389 - 0.2079i
-0.1768 - 0.1768i   -0.0957 - 0.2310i
-0.2310 + 0.0957i   -0.2452 - 0.0488i
 0.2500             -0.2500
 0.0957 - 0.2310i   -0.1389 + 0.2079i
-0.1768 - 0.1768i    0.0957 + 0.2310i
-0.2310 + 0.0957i    0.2452 + 0.0488i
```

ans(:,:,15,9) =

```
 0.2500              0.2500
 0.1768 - 0.1768i    0.2079 - 0.1389i
-0.0000 - 0.2500i    0.0957 - 0.2310i
-0.1768 - 0.1768i   -0.0488 - 0.2452i
 0.2500             -0.2500
 0.1768 - 0.1768i   -0.2079 + 0.1389i
-0.0000 - 0.2500i   -0.0957 + 0.2310i
-0.1768 - 0.1768i    0.0488 + 0.2452i
```

ans(:,:,16,9) =

```
0.2500              0.2500
0.2310 - 0.0957i    0.2452 - 0.0488i
0.1768 - 0.1768i    0.2310 - 0.0957i
0.0957 - 0.2310i    0.2079 - 0.1389i
0.2500             -0.2500
0.2310 - 0.0957i   -0.2452 + 0.0488i
0.1768 - 0.1768i   -0.2310 + 0.0957i
0.0957 - 0.2310i   -0.2079 + 0.1389i
```

EP 2 564 518 B1

ans(:,:,1,10) =

```
       0.2500              0.2500
       0.2500          0.2452 + 0.0488i
       0.2500          0.2310 + 0.0957i
       0.2500          0.2079 + 0.1389i
   0 + 0.2500i             0 - 0.2500i
   0 + 0.2500i          0.0488 - 0.2452i
   0 + 0.2500i          0.0957 - 0.2310i
   0 + 0.2500i          0.1389 - 0.2079i
```

ans(:,:,2,10) =

```
       0.2500              0.2500
   0.2310 + 0.0957i     0.2079 + 0.1389i
   0.1768 + 0.1768i     0.0957 + 0.2310i
   0.0957 + 0.2310i    -0.0488 + 0.2452i
       0 + 0.2500i          0 - 0.2500i
  -0.0957 + 0.2310i     0.1389 - 0.2079i
  -0.1768 + 0.1768i     0.2310 - 0.0957i
  -0.2310 + 0.0957i     0.2452 + 0.0488i
```

ans(:,:,3,10) =

```
       0.2500              0.2500
   0.1768 + 0.1768i     0.1389 + 0.2079i
   0.0000 + 0.2500i    -0.0957 + 0.2310i
  -0.1768 + 0.1768i    -0.2452 + 0.0488i
       0 + 0.2500i          0 - 0.2500i
  -0.1768 + 0.1768i     0.2079 - 0.1389i
  -0.2500 + 0.0000i     0.2310 + 0.0957i
  -0.1768 - 0.1768i     0.0488 + 0.2452i
```

ans(:,:,4,10) =

176

```
   0.2500              0.2500
   0.0957 + 0.2310i    0.0488 + 0.2452i
  -0.1768 + 0.1768i   -0.2310 + 0.0957i
  -0.2310 - 0.0957i   -0.1389 - 0.2079i
        0 + 0.2500i          0 - 0.2500i
  -0.2310 + 0.0957i    0.2452 - 0.0488i
  -0.1768 - 0.1768i    0.0957 + 0.2310i
   0.0957 - 0.2310i   -0.2079 + 0.1389i


ans(:,:,5,10) =

   0.2500              0.2500
   0.0000 + 0.2500i   -0.0488 + 0.2452i
  -0.2500 + 0.0000i   -0.2310 - 0.0957i
  -0.0000 - 0.2500i    0.1389 - 0.2079i
        0 + 0.2500i          0 - 0.2500i
  -0.2500 + 0.0000i    0.2452 + 0.0488i
  -0.0000 - 0.2500i   -0.0957 + 0.2310i
   0.2500 - 0.0000i   -0.2079 - 0.1389i


ans(:,:,6,10) =

   0.2500              0.2500
  -0.0957 + 0.2310i   -0.1389 + 0.2079i
  -0.1768 - 0.1768i   -0.0957 - 0.2310i
   0.2310 - 0.0957i    0.2452 + 0.0488i
        0 + 0.2500i          0 - 0.2500i
  -0.2310 - 0.0957i    0.2079 + 0.1389i
   0.1768 - 0.1768i   -0.2310 + 0.0957i
   0.0957 + 0.2310i    0.0488 - 0.2452i


ans(:,:,7,10) =

   0.2500              0.2500
  -0.1768 + 0.1768i   -0.2079 + 0.1389i
  -0.0000 - 0.2500i    0.0957 - 0.2310i
```

$$
\begin{array}{ll}
0.1768 + 0.1768i & 0.0488 + 0.2452i \\
0 + 0.2500i & 0 - 0.2500i \\
-0.1768 - 0.1768i & 0.1389 + 0.2079i \\
0.2500 - 0.0000i & -0.2310 - 0.0957i \\
-0.1768 + 0.1768i & 0.2452 - 0.0488i
\end{array}
$$

ans(:,:,8,10) =

$$
\begin{array}{ll}
0.2500 & 0.2500 \\
-0.2310 + 0.0957i & -0.2452 + 0.0488i \\
0.1768 - 0.1768i & 0.2310 - 0.0957i \\
-0.0957 + 0.2310i & -0.2079 + 0.1389i \\
0 + 0.2500i & 0 - 0.2500i \\
-0.0957 - 0.2310i & 0.0488 + 0.2452i \\
0.1768 + 0.1768i & -0.0957 - 0.2310i \\
-0.2310 - 0.0957i & 0.1389 + 0.2079i
\end{array}
$$

ans(:,:,9,10) =

$$
\begin{array}{ll}
0.2500 & 0.2500 \\
-0.2500 + 0.0000i & -0.2452 - 0.0488i \\
0.2500 - 0.0000i & 0.2310 + 0.0957i \\
-0.2500 + 0.0000i & -0.2079 - 0.1389i \\
0 + 0.2500i & 0 - 0.2500i \\
-0.0000 - 0.2500i & -0.0488 + 0.2452i \\
0.0000 + 0.2500i & 0.0957 - 0.2310i \\
-0.0000 - 0.2500i & -0.1389 + 0.2079i
\end{array}
$$

ans(:,:,10,10) =

$$
\begin{array}{ll}
0.2500 & 0.2500 \\
-0.2310 - 0.0957i & -0.2079 - 0.1389i \\
0.1768 + 0.1768i & 0.0957 + 0.2310i \\
-0.0957 - 0.2310i & 0.0488 - 0.2452i \\
0 + 0.2500i & 0 - 0.2500i \\
0.0957 - 0.2310i & -0.1389 + 0.2079i
\end{array}
$$

-0.1768 + 0.1768i     0.2310 - 0.0957i
0.2310 - 0.0957i     -0.2452 - 0.0488i


ans(:,:,11,10) =

0.2500           0.2500
-0.1768 - 0.1768i    -0.1389 - 0.2079i
0.0000 + 0.2500i    -0.0957 + 0.2310i
0.1768 - 0.1768i     0.2452 - 0.0488i
0 + 0.2500i        0 - 0.2500i
0.1768 - 0.1768i    -0.2079 + 0.1389i
-0.2500 + 0.0000i    0.2310 + 0.0957i
0.1768 + 0.1768i    -0.0488 - 0.2452i


ans(:,:,12,10) =

0.2500           0.2500
-0.0957 - 0.2310i    -0.0488 - 0.2452i
-0.1768 + 0.1768i    -0.2310 + 0.0957i
0.2310 + 0.0957i     0.1389 + 0.2079i
0 + 0.2500i        0 - 0.2500i
0.2310 - 0.0957i    -0.2452 + 0.0488i
-0.1768 - 0.1768i    0.0957 + 0.2310i
-0.0957 + 0.2310i    0.2079 - 0.1389i


ans(:,:,13,10) =

0.2500           0.2500
-0.0000 - 0.2500i    0.0488 - 0.2452i
-0.2500 + 0.0000i    -0.2310 - 0.0957i
0.0000 + 0.2500i    -0.1389 + 0.2079i
0 + 0.2500i        0 - 0.2500i
0.2500 - 0.0000i    -0.2452 - 0.0488i
-0.0000 - 0.2500i    -0.0957 + 0.2310i
-0.2500 + 0.0000i    0.2079 + 0.1389i

ans(:,:,14,10) =

```
        0.2500              0.2500
  0.0957 - 0.2310i     0.1389 - 0.2079i
 -0.1768 - 0.1768i    -0.0957 - 0.2310i
 -0.2310 + 0.0957i    -0.2452 - 0.0488i
       0 + 0.2500i           0 - 0.2500i
  0.2310 + 0.0957i    -0.2079 - 0.1389i
  0.1768 - 0.1768i    -0.2310 + 0.0957i
 -0.0957 - 0.2310i    -0.0488 + 0.2452i
```

ans(:,:,15,10) =

```
        0.2500              0.2500
  0.1768 - 0.1768i     0.2079 - 0.1389i
 -0.0000 - 0.2500i     0.0957 - 0.2310i
 -0.1768 - 0.1768i    -0.0488 - 0.2452i
       0 + 0.2500i           0 - 0.2500i
  0.1768 + 0.1768i    -0.1389 - 0.2079i
  0.2500 - 0.0000i    -0.2310 - 0.0957i
  0.1768 - 0.1768i    -0.2452 + 0.0488i
```

ans(:,:,16,10) =

```
        0.2500              0.2500
  0.2310 - 0.0957i     0.2452 - 0.0488i
  0.1768 - 0.1768i     0.2310 - 0.0957i
  0.0957 - 0.2310i     0.2079 - 0.1389i
       0 + 0.2500i           0 - 0.2500i
  0.0957 + 0.2310i    -0.0488 - 0.2452i
  0.1768 + 0.1768i    -0.0957 - 0.2310i
  0.2310 + 0.0957i    -0.1389 - 0.2079i
```

ans(:,:,1,11) =

```
      0.2500              0.2500
0.2452 + 0.0488i    0.2310 + 0.0957i
0.2310 + 0.0957i    0.1768 + 0.1768i
0.2079 + 0.1389i    0.0957 + 0.2310i
      0.2500             -0.2500
0.2452 + 0.0488i   -0.2310 - 0.0957i
0.2310 + 0.0957i   -0.1768 - 0.1768i
0.2079 + 0.1389i   -0.0957 - 0.2310i
```

ans(:,:,2,11) =

```
      0.2500              0.2500
0.2079 + 0.1389i    0.1768 + 0.1768i
0.0957 + 0.2310i    0.0000 + 0.2500i
-0.0488 + 0.2452i   -0.1768 + 0.1768i
      0.2500             -0.2500
0.2079 + 0.1389i   -0.1768 - 0.1768i
0.0957 + 0.2310i   -0.0000 - 0.2500i
-0.0488 + 0.2452i    0.1768 - 0.1768i
```

ans(:,:,3,11) =

```
      0.2500              0.2500
0.1389 + 0.2079i    0.0957 + 0.2310i
-0.0957 + 0.2310i   -0.1768 + 0.1768i
-0.2452 + 0.0488i   -0.2310 - 0.0957i
      0.2500             -0.2500
0.1389 + 0.2079i   -0.0957 - 0.2310i
-0.0957 + 0.2310i    0.1768 - 0.1768i
-0.2452 + 0.0488i    0.2310 + 0.0957i
```

ans(:,:,4,11) =

```
      0.2500              0.2500
0.0488 + 0.2452i    0.0000 + 0.2500i
-0.2310 + 0.0957i   -0.2500 + 0.0000i
```

```
-0.1389 - 0.2079i    -0.0000 - 0.2500i
 0.2500                -0.2500
 0.0488 + 0.2452i    -0.0000 - 0.2500i
-0.2310 + 0.0957i     0.2500 - 0.0000i
-0.1389 - 0.2079i     0.0000 + 0.2500i
```

ans(:,:,5,11) =

```
 0.2500                0.2500
-0.0488 + 0.2452i    -0.0957 + 0.2310i
-0.2310 - 0.0957i    -0.1768 - 0.1768i
 0.1389 - 0.2079i     0.2310 - 0.0957i
 0.2500                -0.2500
-0.0488 + 0.2452i     0.0957 - 0.2310i
-0.2310 - 0.0957i     0.1768 + 0.1768i
 0.1389 - 0.2079i    -0.2310 + 0.0957i
```

ans(:,:,6,11) =

```
 0.2500                0.2500
-0.1389 + 0.2079i    -0.1768 + 0.1768i
-0.0957 - 0.2310i    -0.0000 - 0.2500i
 0.2452 + 0.0488i     0.1768 + 0.1768i
 0.2500                -0.2500
-0.1389 + 0.2079i     0.1768 - 0.1768i
-0.0957 - 0.2310i     0.0000 + 0.2500i
 0.2452 + 0.0488i    -0.1768 - 0.1768i
```

ans(:,:,7,11) =

```
 0.2500                0.2500
-0.2079 + 0.1389i    -0.2310 + 0.0957i
 0.0957 - 0.2310i     0.1768 - 0.1768i
 0.0488 + 0.2452i    -0.0957 + 0.2310i
 0.2500                -0.2500
-0.2079 + 0.1389i     0.2310 - 0.0957i
```

182

```
0.0957 - 0.2310i    -0.1768 + 0.1768i
0.0488 + 0.2452i     0.0957 - 0.2310i
```

ans(:,:,8,11) =

```
 0.2500              0.2500
-0.2452 + 0.0488i   -0.2500 + 0.0000i
 0.2310 - 0.0957i    0.2500 - 0.0000i
-0.2079 + 0.1389i   -0.2500 + 0.0000i
 0.2500             -0.2500
-0.2452 + 0.0488i    0.2500 - 0.0000i
 0.2310 - 0.0957i   -0.2500 + 0.0000i
-0.2079 + 0.1389i    0.2500 - 0.0000i
```

ans(:,:,9,11) =

```
 0.2500              0.2500
-0.2452 - 0.0488i   -0.2310 - 0.0957i
 0.2310 + 0.0957i    0.1768 + 0.1768i
-0.2079 - 0.1389i   -0.0957 - 0.2310i
 0.2500             -0.2500
-0.2452 - 0.0488i    0.2310 + 0.0957i
 0.2310 + 0.0957i   -0.1768 - 0.1768i
-0.2079 - 0.1389i    0.0957 + 0.2310i
```

ans(:,:,10,11) =

```
 0.2500              0.2500
-0.2079 - 0.1389i   -0.1768 - 0.1768i
 0.0957 + 0.2310i    0.0000 + 0.2500i
 0.0488 - 0.2452i    0.1768 - 0.1768i
 0.2500             -0.2500
-0.2079 - 0.1389i    0.1768 + 0.1768i
 0.0957 + 0.2310i   -0.0000 - 0.2500i
 0.0488 - 0.2452i   -0.1768 + 0.1768i
```

ans(:,:,11,11) =

| 0.2500 | 0.2500 |
| --- | --- |
| -0.1389 - 0.2079i | -0.0957 - 0.2310i |
| -0.0957 + 0.2310i | -0.1768 + 0.1768i |
| 0.2452 - 0.0488i | 0.2310 + 0.0957i |
| 0.2500 | -0.2500 |
| -0.1389 - 0.2079i | 0.0957 + 0.2310i |
| -0.0957 + 0.2310i | 0.1768 - 0.1768i |
| 0.2452 - 0.0488i | -0.2310 - 0.0957i |

ans(:,:,12,11) =

| 0.2500 | 0.2500 |
| --- | --- |
| -0.0488 - 0.2452i | - 0.0000 - 0.2500i |
| -0.2310 + 0.0957i | -0.2500 + 0.0000i |
| 0.1389 + 0.2079i | 0.0000 + 0.2500i |
| 0.2500 | -0.2500 |
| -0.0488 - 0.2452i | 0.0000 + 0.2500i |
| -0.2310 + 0.0957i | 0.2500 - 0.0000i |
| 0.1389 + 0.2079i | -0.0000 - 0.2500i |

ans(:,:,13,11) =

| 0.2500 | 0.2500 |
| --- | --- |
| 0.0488 - 0.2452i | 0.0957 - 0.2310i |
| -0.2310 - 0.0957i | -0.1768 - 0.1768i |
| -0.1389 + 0.2079i | -0.2310 + 0.0957i |
| 0.2500 | -0.2500 |
| 0.0488 - 0.2452i | -0.0957 + 0.2310i |
| -0.2310 - 0.0957i | 0.1768 + 0.1768i |
| -0.1389 + 0.2079i | 0.2310 - 0.0957i |

ans(:,:,14,11) =

```
     0.2500              0.2500
    0.1389 - 0.2079i    0.1768 - 0.1768i
   -0.0957 - 0.2310i   -0.0000 - 0.2500i
   -0.2452 - 0.0488i   -0.1768 - 0.1768i
    0.2500             -0.2500
    0.1389 - 0.2079i   -0.1768 + 0.1768i
   -0.0957 - 0.2310i    0.0000 + 0.2500i
   -0.2452 - 0.0488i    0.1768 + 0.1768i
```

ans(:,:,15,11) =

```
     0.2500              0.2500
    0.2079 - 0.1389i    0.2310 - 0.0957i
    0.0957 - 0.2310i    0.1768 - 0.1768i
   -0.0488 - 0.2452i    0.0957 - 0.2310i
    0.2500             -0.2500
    0.2079 - 0.1389i   -0.2310 + 0.0957i
    0.0957 - 0.2310i   -0.1768 + 0.1768i
   -0.0488 - 0.2452i   -0.0957 + 0.2310i
```

ans(:,:,16,11) =

```
     0.2500              0.2500
    0.2452 - 0.0488i     0.2500
    0.2310 - 0.0957i     0.2500
    0.2079 - 0.1389i     0.2500
    0.2500              -0.2500
    0.2452 - 0.0488i    -0.2500
    0.2310 - 0.0957i    -0.2500
    0.2079 - 0.1389i    -0.2500
```

ans(:,:,1,12) =

```
     0.2500              0.2500
    0.2452 + 0.0488i    0.2310 + 0.0957i
    0.2310 + 0.0957i    0.1768 + 0.1768i
```

```
       0.2079 + 0.1389i      0.0957 + 0.2310i
              0 + 0.2500i             0 - 0.2500i
      -0.0488 + 0.2452i      0.0957 - 0.2310i
      -0.0957 + 0.2310i      0.1768 - 0.1768i
      -0.1389 + 0.2079i      0.2310 - 0.0957i
```

ans(:,:,2,12) =

```
       0.2500                   0.2500
       0.2079 + 0.1389i      0.1768 + 0.1768i
       0.0957 + 0.2310i      0.0000 + 0.2500i
      -0.0488 + 0.2452i     -0.1768 + 0.1768i
              0 + 0.2500i             0 - 0.2500i
      -0.1389 + 0.2079i      0.1768 - 0.1768i
      -0.2310 + 0.0957i      0.2500 - 0.0000i
      -0.2452 - 0.0488i      0.1768 + 0.1768i
```

ans(:,:,3,12) =

```
       0.2500                   0.2500
       0.1389 + 0.2079i      0.0957 + 0.2310i
      -0.0957 + 0.2310i     -0.1768 + 0.1768i
      -0.2452 + 0.0488i     -0.2310 - 0.0957i
              0 + 0.2500i             0 - 0.2500i
      -0.2079 + 0.1389i      0.2310 - 0.0957i
      -0.2310 - 0.0957i      0.1768 + 0.1768i
      -0.0488 - 0.2452i     -0.0957 + 0.2310i
```

ans(:,:,4,12) =

```
       0.2500                   0.2500
       0.0488 + 0.2452i      0.0000 + 0.2500i
      -0.2310 + 0.0957i     -0.2500 + 0.0000i
      -0.1389 - 0.2079i     -0.0000 - 0.2500i
              0 + 0.2500i             0 - 0.2500i
      -0.2452 + 0.0488i      0.2500 - 0.0000i
```

```
-0.0957 - 0.2310i    0.0000 + 0.2500i
 0.2079 - 0.1389i   -0.2500 + 0.0000i
```

ans(:,:,5,12) =

```
 0.2500              0.2500
-0.0488 + 0.2452i   -0.0957 + 0.2310i
-0.2310 - 0.0957i   -0.1768 - 0.1768i
 0.1389 - 0.2079i    0.2310 - 0.0957i
      0 + 0.2500i         0 - 0.2500i
-0.2452 - 0.0488i    0.2310 + 0.0957i
 0.0957 - 0.2310i   -0.1768 + 0.1768i
 0.2079 + 0.1389i   -0.0957 - 0.2310i
```

ans(:,:,6,12) =

```
 0.2500              0.2500
-0.1389 + 0.2079i   -0.1768 + 0.1768i
-0.0957 - 0.2310i   -0.0000 - 0.2500i
 0.2452 + 0.0488i    0.1768 + 0.1768i
      0 + 0.2500i         0 - 0.2500i
-0.2079 - 0.1389i    0.1768 + 0.1768i
 0.2310 - 0.0957i   -0.2500 + 0.0000i
-0.0488 + 0.2452i    0.1768 - 0.1768i
```

ans(:,:,7,12) =

```
 0.2500              0.2500
-0.2079 + 0.1389i   -0.2310 + 0.0957i
 0.0957 - 0.2310i    0.1768 - 0.1768i
 0.0488 + 0.2452i   -0.0957 + 0.2310i
      0 + 0.2500i         0 - 0.2500i
-0.1389 - 0.2079i    0.0957 + 0.2310i
 0.2310 + 0.0957i   - 0.1768 - 0.1768i
-0.2452 + 0.0488i    0.2310 + 0.0957i
```

ans(:,:,8,12) =

```
        0.2500              0.2500
-0.2452 + 0.0488i   -0.2500 + 0.0000i
 0.2310 - 0.0957i    0.2500 - 0.0000i
-0.2079 + 0.1389i   -0.2500 + 0.0000i
        0 + 0.2500i          0 - 0.2500i
-0.0488 - 0.2452i    0.0000 + 0.2500i
 0.0957 + 0.2310i   -0.0000 - 0.2500i
-0.1389 - 0.2079i    0.0000 + 0.2500i
```

ans(:,:,9,12) =

```
        0.2500              0.2500
-0.2452 - 0.0488i   -0.2310 - 0.0957i
 0.2310 + 0.0957i    0.1768 + 0.1768i
-0.2079 - 0.1389i   -0.0957 - 0.2310i
        0 + 0.2500i          0 - 0.2500i
 0.0488 - 0.2452i   -0.0957 + 0.2310i
-0.0957 + 0.2310i    0.1768 - 0.1768i
 0.1389 - 0.2079i   -0.2310 + 0.0957i
```

ans(:,:,10,12) =

```
        0.2500              0.2500
-0.2079 - 0.1389i   -0.1768 - 0.1768i
 0.0957 + 0.2310i    0.0000 + 0.2500i
 0.0488 - 0.2452i    0.1768 - 0.1768i
        0 + 0.2500i          0 - 0.2500i
 0.1389 - 0.2079i   -0.1768 + 0.1768i
-0.2310 + 0.0957i    0.2500 - 0.0000i
 0.2452 + 0.0488i   -0.1768 - 0.1768i
```

ans(:,:,11,12) =

```
       0.2500            0.2500
  -0.1389 - 0.2079i  -0.0957 - 0.2310i
  -0.0957 + 0.2310i  -0.1768 + 0.1768i
   0.2452 - 0.0488i   0.2310 + 0.0957i
         0 + 0.2500i          0 - 0.2500i
   0.2079 - 0.1389i  -0.2310 + 0.0957i
  -0.2310 - 0.0957i   0.1768 + 0.1768i
   0.0488 + 0.2452i   0.0957 - 0.2310i
```

ans(:,:,12,12) =

```
       0.2500            0.2500
  -0.0488 - 0.2452i  -0.0000 - 0.2500i
  -0.2310 + 0.0957i  -0.2500 + 0.0000i
   0.1389 + 0.2079i   0.0000 + 0.2500i
         0 + 0.2500i          0 - 0.2500i
   0.2452 - 0.0488i  -0.2500 + 0.0000i
  -0.0957 - 0.2310i   0.0000 + 0.2500i
  -0.2079 + 0.1389i   0.2500 - 0.0000i
```

ans(:,:,13,12) =

```
       0.2500            0.2500
   0.0488 - 0.2452i   0.0957 - 0.2310i
  -0.2310 - 0.0957i  -0.1768 - 0.1768i
  -0.1389 + 0.2079i  -0.2310 + 0.0957i
         0 + 0.2500i          0 - 0.2500i
   0.2452 + 0.0488i  -0.2310 - 0.0957i
   0.0957 - 0.2310i  -0.1768 + 0.1768i
  -0.2079 - 0.1389i   0.0957 + 0.2310i
```

ans(:,:,14,12) =

```
       0.2500            0.2500
   0.1389 - 0.2079i   0.1768 - 0.1768i
  -0.0957 - 0.2310i  -0.0000 - 0.2500i
```

```
-0.2452 - 0.0488i   -0.1768 - 0.1768i
        0 + 0.2500i          0 - 0.2500i
 0.2079 + 0.1389i   -0.1768 - 0.1768i
 0.2310 - 0.0957i   -0.2500 + 0.0000i
 0.0488 - 0.2452i   -0.1768 + 0.1768i
```

ans(:,:,15,12) =

```
 0.2500              0.2500
 0.2079 - 0.1389i    0.2310 - 0.0957i
 0.0957 - 0.2310i    0.1768 - 0.1768i
-0.0488 - 0.2452i    0.0957 - 0.2310i
        0 + 0.2500i          0 - 0.2500i
 0.1389 + 0.2079i   -0.0957 - 0.2310i
 0.2310 + 0.0957i   -0.1768 - 0.1768i
 0.2452 - 0.0488i   -0.2310 - 0.0957i
```

ans(:,:,16,12) =

```
 0.2500              0.2500
 0.2452 - 0.0488i    0.2500
 0.2310 - 0.0957i    0.2500
 0.2079 - 0.1389i    0.2500
        0 + 0.2500i          0 - 0.2500i
 0.0488 + 0.2452i          0 - 0.2500i
 0.0957 + 0.2310i          0 - 0.2500i
 0.1389 + 0.2079i          0 - 0.2500i
```

ans(:,:,1,13) =

```
 0.2500              0.2500
 0.2500              0.2079 + 0.1389i
 0.2500              0.0957 + 0.2310i
 0.2500             -0.0488 + 0.2452i
 0.2500             -0.2500
 0.2500             -0.2079 - 0.1389i
```

```
         0.2500              -0.0957 - 0.2310i
         0.2500               0.0488 - 0.2452i


ans(:,:,2,13) =


         0.2500               0.2500
         0.2310 + 0.0957i      0.1389 + 0.2079i
         0.1768 + 0.1768i     -0.0957 + 0.2310i
         0.0957 + 0.2310i     -0.2452 + 0.0488i
         0.2500               -0.2500
         0.2310 + 0.0957i     -0.1389 - 0.2079i
         0.1768 + 0.1768i      0.0957 - 0.2310i
         0.0957 + 0.2310i      0.2452 - 0.0488i


ans(:,:,3,13) =


         0.2500               0.2500
         0.1768 + 0.1768i      0.0488 + 0.2452i
         0.0000 + 0.2500i     -0.2310 + 0.0957i
        -0.1768 + 0.1768i     -0.1389 - 0.2079i
         0.2500               -0.2500
         0.1768 + 0.1768i     -0.0488 - 0.2452i
         0.0000 + 0.2500i      0.2310 - 0.0957i
        -0.1768 + 0.1768i      0.1389 + 0.2079i


ans(:,:,4,13) =


         0.2500               0.2500
         0.0957 + 0.2310i     -0.0488 + 0.2452i
        -0.1768 + 0.1768i     -0.2310 - 0.0957i
        -0.2310 - 0.0957i      0.1389 - 0.2079i
         0.2500               -0.2500
         0.0957 + 0.2310i      0.0488 - 0.2452i
        -0.1768 + 0.1768i      0.2310 + 0.0957i
        -0.2310 - 0.0957i     -0.1389 + 0.2079i
```

ans(:,:,5,13) =

| | |
|---|---|
| 0.2500 | 0.2500 |
| 0.0000 + 0.2500i | -0.1389 + 0.2079i |
| -0.2500 + 0.0000i | -0.0957 - 0.2310i |
| -0.0000 - 0.2500i | 0.2452 + 0.0488i |
| 0.2500 | -0.2500 |
| 0.0000 + 0.2500i | 0.1389 - 0.2079i |
| -0.2500 + 0.0000i | 0.0957 + 0.2310i |
| -0.0000 - 0.2500i | -0.2452 - 0.0488i |

ans(:,:,6,13) =

| | |
|---|---|
| 0.2500 | 0.2500 |
| -0.0957 + 0.2310i | -0.2079 + 0.1389i |
| -0.1768 - 0.1768i | 0.0957 - 0.2310i |
| 0.2310 - 0.0957i | 0.0488 + 0.2452i |
| 0.2500 | -0.2500 |
| -0.0957 + 0.2310i | 0.2079 - 0.1389i |
| -0.1768 - 0.1768i | -0.0957 + 0.2310i |
| 0.2310 - 0.0957i | -0.0488 - 0.2452i |

ans(:,:,7,13) =

| | |
|---|---|
| 0.2500 | 0.2500 |
| -0.1768 + 0.1768i | -0.2452 + 0.0488i |
| -0.0000 - 0.2500i | 0.2310 - 0.0957i |
| 0.1768 + 0.1768i | -0.2079 + 0.1389i |
| 0.2500 | -0.2500 |
| -0.1768 + 0.1768i | 0.2452 - 0.0488i |
| -0.0000 - 0.2500i | -0.2310 + 0.0957i |
| 0.1768 + 0.1768i | 0.2079 - 0.1389i |

ans(:,:,8,13) =

```
            0.2500              0.2500
  -0.2310 + 0.0957i    -0.2452 - 0.0488i
   0.1768 - 0.1768i     0.2310 + 0.0957i
  -0.0957 + 0.2310i    -0.2079 - 0.1389i
            0.2500             -0.2500
  -0.2310 + 0.0957i     0.2452 + 0.0488i
   0.1768 - 0.1768i    -0.2310 - 0.0957i
  -0.0957 + 0.2310i     0.2079 + 0.1389i
```

ans(:,:,9,13) =

```
            0.2500              0.2500
  -0.2500 + 0.0000i    -0.2079 - 0.1389i
   0.2500 - 0.0000i     0.0957 + 0.2310i
  -0.2500 + 0.0000i     0.0488 - 0.2452i
            0.2500             -0.2500
  -0.2500 + 0.0000i     0.2079 + 0.1389i
   0.2500 - 0.0000i    -0.0957 - 0.2310i
  -0.2500 + 0.0000i    -0.0488 + 0.2452i
```

ans(:,:,10,13) =

```
            0.2500              0.2500
  -0.2310 - 0.0957i    -0.1389 - 0.2079i
   0.1768 + 0.1768i    -0.0957 + 0.2310i
  -0.0957 - 0.2310i     0.2452 - 0.0488i
            0.2500             -0.2500
  -0.2310 - 0.0957i     0.1389 + 0.2079i
   0.1768 + 0.1768i     0.0957 - 0.2310i
  -0.0957 - 0.2310i    -0.2452 + 0.0488i
```

ans(:,:,11,13) =

```
            0.2500              0.2500
  -0.1768 - 0.1768i    -0.0488 - 0.2452i
   0.0000 + 0.2500i    -0.2310 + 0.0957i
```

```
0.1768 - 0.1768i    0.1389 + 0.2079i
0.2500              -0.2500
-0.1768 - 0.1768i    0.0488 + 0.2452i
0.0000 + 0.2500i     0.2310 - 0.0957i
0.1768 - 0.1768i    -0.1389 - 0.2079i
```

ans(:,:,12,13) =

```
0.2500              0.2500
-0.0957 - 0.2310i    0.0488 - 0.2452i
-0.1768 + 0.1768i   -0.2310 - 0.0957i
0.2310 + 0.0957i    -0.1389 + 0.2079i
0.2500              -0.2500
-0.0957 - 0.2310i   -0.0488 + 0.2452i
-0.1768 + 0.1768i    0.2310 + 0.0957i
0.2310 + 0.0957i     0.1389 - 0.2079i
```

ans(:,:,13,13) =

```
0.2500              0.2500
-0.0000 - 0.2500i    0.1389 - 0.2079i
-0.2500 + 0.0000i   -0.0957 - 0.2310i
0.0000 + 0.2500i    -0.2452 - 0.0488i
0.2500              -0.2500
-0.0000 - 0.2500i   -0.1389 + 0.2079i
-0.2500 + 0.0000i    0.0957 + 0.2310i
0.0000 + 0.2500i     0.2452 + 0.0488i
```

ans(:,:,14,13) =

```
0.2500              0.2500
0.0957 - 0.2310i     0.2079 - 0.1389i
-0.1768 - 0.1768i    0.0957 - 0.2310i
-0.2310 + 0.0957i   -0.0488 - 0.2452i
0.2500              -0.2500
0.0957 - 0.2310i    -0.2079 + 0.1389i
```

```
-0.1768 - 0.1768i   -0.0957 + 0.2310i
-0.2310 + 0.0957i    0.0488 + 0.2452i
```

ans(:,:,15,13) =

```
 0.2500              0.2500
 0.1768 - 0.1768i    0.2452 - 0.0488i
-0.0000 - 0.2500i    0.2310 - 0.0957i
-0.1768 - 0.1768i    0.2079 - 0.1389i
 0.2500             -0.2500
 0.1768 - 0.1768i   -0.2452 + 0.0488i
-0.0000 - 0.2500i   -0.2310 + 0.0957i
-0.1768 - 0.1768i   -0.2079 + 0.1389i
```

ans(:,:,16,13) =

```
0.2500              0.2500
0.2310 - 0.0957i    0.2452 + 0.0488i
0.1768 - 0.1768i    0.2310 + 0.0957i
0.0957 - 0.2310i    0.2079 + 0.1389i
0.2500             -0.2500
0.2310 - 0.0957i   -0.2452 - 0.0488i
0.1768 - 0.1768i   -0.2310 - 0.0957i
0.0957 - 0.2310i   -0.2079 - 0.1389i
```

ans(:,:,1,14) =

```
0.2500              0.2500
0.2500              0.2079 + 0.1389i
0.2500              0.0957 + 0.2310i
0.2500             -0.0488 + 0.2452i
     0 + 0.2500i         0 - 0.2500i
     0 + 0.2500i    0.1389 - 0.2079i
     0 + 0.2500i    0.2310 - 0.0957i
     0 + 0.2500i    0.2452 + 0.0488i
```

ans(:,:,2,14) =

```
        0.2500              0.2500
 0.2310 + 0.0957i     0.1389 + 0.2079i
 0.1768 + 0.1768i    -0.0957 + 0.2310i
 0.0957 + 0.2310i    -0.2452 + 0.0488i
        0 + 0.2500i           0 - 0.2500i
-0.0957 + 0.2310i     0.2079 - 0.1389i
-0.1768 + 0.1768i     0.2310 + 0.0957i
-0.2310 + 0.0957i     0.0488 + 0.2452i
```

ans(:,:,3,14) =

```
        0.2500              0.2500
 0.1768 + 0.1768i     0.0488 + 0.2452i
 0.0000 + 0.2500i    -0.2310 + 0.0957i
-0.1768 + 0.1768i    -0.1389 - 0.2079i
        0 + 0.2500i           0 - 0.2500i
-0.1768 + 0.1768i     0.2452 - 0.0488i
-0.2500 + 0.0000i     0.0957 + 0.2310i
-0.1768 - 0.1768i    -0.2079 + 0.1389i
```

ans(:,:,4,14) =

```
        0.2500              0.2500
 0.0957 + 0.2310i    -0.0488 + 0.2452i
-0.1768 + 0.1768i    -0.2310 - 0.0957i
-0.2310 - 0.0957i     0.1389 - 0.2079i
        0 + 0.2500i           0 - 0.2500i
-0.2310 + 0.0957i     0.2452 + 0.0488i
-0.1768 - 0.1768i    -0.0957 + 0.2310i
 0.0957 - 0.2310i    -0.2079 - 0.1389i
```

ans(:,:,5,14) =

```
    0.2500              0.2500
 0.0000 + 0.2500i   -0.1389 + 0.2079i
-0.2500 + 0.0000i   -0.0957 - 0.2310i
-0.0000 - 0.2500i    0.2452 + 0.0488i
        0 + 0.2500i          0 - 0.2500i
-0.2500 + 0.0000i    0.2079 + 0.1389i
-0.0000 - 0.2500i   -0.2310 + 0.0957i
 0.2500 - 0.0000i    0.0488 - 0.2452i
```

ans(:,:,6,14) =

```
    0.2500              0.2500
-0.0957 + 0.2310i   -0.2079 + 0.1389i
-0.1768 - 0.1768i    0.0957 - 0.2310i
 0.2310 - 0.0957i    0.0488 + 0.2452i
        0 + 0.2500i          0 - 0.2500i
-0.2310 - 0.0957i    0.1389 + 0.2079i
 0.1768 - 0.1768i   -0.2310 - 0.0957i
 0.0957 + 0.2310i    0.2452 - 0.0488i
```

ans(:,:,7,14) =

```
    0.2500              0.2500
-0.1768 + 0.1768i   -0.2452 + 0.0488i
-0.0000 - 0.2500i    0.2310 - 0.0957i
 0.1768 + 0.1768i   -0.2079 + 0.1389i
        0 + 0.2500i          0 - 0.2500i
-0.1768 - 0.1768i    0.0488 + 0.2452i
 0.2500 - 0.0000i   -0.0957 - 0.2310i
-0.1768 + 0.1768i    0.1389 + 0.2079i
```

ans(:,:,8,14) =

```
    0.2500              0.2500
-0.2310 + 0.0957i   -0.2452 - 0.0488i
 0.1768 - 0.1768i    0.2310 + 0.0957i
```

```
-0.0957 + 0.2310i   -0.2079 - 0.1389i
        0 + 0.2500i           0 - 0.2500i
-0.0957 - 0.2310i   -0.0488 + 0.2452i
 0.1768 + 0.1768i    0.0957 - 0.2310i
-0.2310 - 0.0957i   -0.1389 + 0.2079i
```

ans(:,:,9,14) =

```
 0.2500              0.2500
-0.2500 + 0.0000i   -0.2079 - 0.1389i
 0.2500 - 0.0000i    0.0957 + 0.2310i
-0.2500 + 0.0000i    0.0488 - 0.2452i
        0 + 0.2500i           0 - 0.2500i
-0.0000 - 0.2500i   -0.1389 + 0.2079i
 0.0000 + 0.2500i    0.2310 - 0.0957i
-0.0000 - 0.2500i   -0.2452 - 0.0488i
```

ans(:,:,10,14) =

```
 0.2500              0.2500
-0.2310 - 0.0957i   -0.1389 - 0.2079i
 0.1768 + 0.1768i   -0.0957 + 0.2310i
-0.0957 - 0.2310i    0.2452 - 0.0488i
        0 + 0.2500i           0 - 0.2500i
 0.0957 - 0.2310i   -0.2079 + 0.1389i
-0.1768 + 0.1768i    0.2310 + 0.0957i
 0.2310 - 0.0957i   -0.0488 - 0.2452i
```

ans(:,:,11,14) =

```
 0.2500              0.2500
-0.1768 - 0.1768i   -0.0488 - 0.2452i
 0.0000 + 0.2500i   - 0.2310 + 0.0957i
 0.1768 - 0.1768i    0.1389 + 0.2079i
        0 + 0.2500i           0 - 0.2500i
 0.1768 - 0.1768i   -0.2452 + 0.0488i
```

```
-0.2500 + 0.0000i    0.0957 + 0.2310i
 0.1768 + 0.1768i    0.2079 - 0.1389i
```

ans(:,:,12,14) =

```
 0.2500              0.2500
-0.0957 - 0.2310i    0.0488 - 0.2452i
-0.1768 + 0.1768i   -0.2310 - 0.0957i
 0.2310 + 0.0957i   -0.1389 + 0.2079i
        0 + 0.2500i          0 - 0.2500i
 0.2310 - 0.0957i   -0.2452 - 0.0488i
-0.1768 - 0.1768i   -0.0957 + 0.2310i
-0.0957 + 0.2310i    0.2079 + 0.1389i
```

ans(:,:,13,14) =

```
 0.2500              0.2500
-0.0000 - 0.2500i    0.1389 - 0.2079i
-0.2500 + 0.0000i   -0.0957 - 0.2310i
 0.0000 + 0.2500i   -0.2452 - 0.0488i
        0 + 0.2500i          0 - 0.2500i
 0.2500 - 0.0000i   -0.2079 - 0.1389i
-0.0000 - 0.2500i   -0.2310 + 0.0957i
-0.2500 + 0.0000i   -0.0488 + 0.2452i
```

ans(:,:,14,14) =

```
 0.2500              0.2500
 0.0957 - 0.2310i    0.2079 - 0.1389i
-0.1768 - 0.1768i    0.0957 - 0.2310i
-0.2310 + 0.0957i   -0.0488 - 0.2452i
        0 + 0.2500i          0 - 0.2500i
 0.2310 + 0.0957i   -0.1389 - 0.2079i
 0.1768 - 0.1768i   -0.2310 - 0.0957i
-0.0957 - 0.2310i   -0.2452 + 0.0488i
```

ans(:,:,15,14) =

```
        0.2500            0.2500
0.1768 - 0.1768i   0.2452 - 0.0488i
-0.0000 - 0.2500i   0.2310 - 0.0957i
-0.1768 - 0.1768i   0.2079 - 0.1389i
         0 + 0.2500i           0 - 0.2500i
0.1768 + 0.1768i  -0.0488 - 0.2452i
0.2500 - 0.0000i  -0.0957 - 0.2310i
0.1768 - 0.1768i  -0.1389 - 0.2079i
```

ans(:,:,16,14) =

```
        0.2500            0.2500
0.2310 - 0.0957i   0.2452 + 0.0488i
0.1768 - 0.1768i   0.2310 + 0.0957i
0.0957 - 0.2310i   0.2079 + 0.1389i
         0 + 0.2500i           0 - 0.2500i
0.0957 + 0.2310i   0.0488 - 0.2452i
0.1768 + 0.1768i   0.0957 - 0.2310i
0.2310 + 0.0957i   0.1389 - 0.2079i
```

ans(:,:,1,15) =

```
        0.2500            0.2500
0.2452 + 0.0488i   0.2079 + 0.1389i
0.2310 + 0.0957i   0.0957 + 0.2310i
0.2079 + 0.1389i  -0.0488 + 0.2452i
0.2500            -0.2500
0.2452 + 0.0488i  -0.2079 - 0.1389i
0.2310 + 0.0957i  -0.0957 - 0.2310i
0.2079 + 0.1389i   0.0488 - 0.2452i
```

ans(:,:,2,15) =

**200**

```
       0.2500              0.2500
   0.2079 + 0.1389i    0.1389 + 0.2079i
   0.0957 + 0.2310i   -0.0957 + 0.2310i
  -0.0488 + 0.2452i   -0.2452 + 0.0488i
       0.2500             -0.2500
   0.2079 + 0.1389i   -0.1389 - 0.2079i
   0.0957 + 0.2310i    0.0957 - 0.2310i
  -0.0488 + 0.2452i    0.2452 - 0.0488i
```

ans(:,:,3,15) =

```
       0.2500              0.2500
   0.1389 + 0.2079i    0.0488 + 0.2452i
  -0.0957 + 0.2310i   -0.2310 + 0.0957i
  -0.2452 + 0.0488i   -0.1389 - 0.2079i
       0.2500             -0.2500
   0.1389 + 0.2079i   -0.0488 - 0.2452i
  -0.0957 + 0.2310i    0.2310 - 0.0957i
  -0.2452 + 0.0488i    0.1389 + 0.2079i
```

ans(:,:,4,15) =

```
       0.2500              0.2500
   0.0488 + 0.2452i   -0.0488 + 0.2452i
  -0.2310 + 0.0957i   -0.2310 - 0.0957i
  -0.1389 - 0.2079i    0.1389 - 0.2079i
       0.2500             -0.2500
   0.0488 + 0.2452i    0.0488 - 0.2452i
  -0.2310 + 0.0957i    0.2310 + 0.0957i
  -0.1389 - 0.2079i   -0.1389 + 0.2079i
```

ans(:,:,5,15) =

```
       0.2500              0.2500
  -0.0488 + 0.2452i   -0.1389 + 0.2079i
  -0.2310 - 0.0957i   -0.0957 - 0.2310i
```

```
0.1389 - 0.2079i      0.2452 + 0.0488i
0.2500               -0.2500
-0.0488 + 0.2452i     0.1389 - 0.2079i
-0.2310 - 0.0957i     0.0957 + 0.2310i
0.1389 - 0.2079i     -0.2452 - 0.0488i
```

ans(:,:,6,15) =

```
0.2500                0.2500
-0.1389 + 0.2079i    -0.2079 + 0.1389i
-0.0957 - 0.2310i     0.0957 - 0.2310i
0.2452 + 0.0488i      0.0488 + 0.2452i
0.2500               -0.2500
-0.1389 + 0.2079i     0.2079 - 0.1389i
-0.0957 - 0.2310i    -0.0957 + 0.2310i
0.2452 + 0.0488i     -0.0488 - 0.2452i
```

ans(:,:,7,15) =

```
0.2500                0.2500
-0.2079 + 0.1389i    -0.2452 + 0.0488i
0.0957 - 0.2310i      0.2310 - 0.0957i
0.0488 + 0.2452i     -0.2079 + 0.1389i
0.2500               -0.2500
-0.2079 + 0.1389i     0.2452 - 0.0488i
0.0957 - 0.2310i     -0.2310 + 0.0957i
0.0488 + 0.2452i      0.2079 - 0.1389i
```

ans(:,:,8,15) =

```
0.2500                0.2500
-0.2452 + 0.0488i    -0.2452 - 0.0488i
0.2310 - 0.0957i      0.2310 + 0.0957i
-0.2079 + 0.1389i    -0.2079 - 0.1389i
0.2500               -0.2500
-0.2452 + 0.0488i     0.2452 + 0.0488i
```

```
          0.2310 - 0.0957i   -0.2310 - 0.0957i
         -0.2079 + 0.1389i    0.2079 + 0.1389i
```

ans(:,:,9,15) =

```
          0.2500             0.2500
         -0.2452 - 0.0488i  -0.2079 - 0.1389i
          0.2310 + 0.0957i   0.0957 + 0.2310i
         -0.2079 - 0.1389i   0.0488 - 0.2452i
          0.2500            -0.2500
         -0.2452 - 0.0488i   0.2079 + 0.1389i
          0.2310 + 0.0957i  -0.0957 - 0.2310i
         -0.2079 - 0.1389i  -0.0488 + 0.2452i
```

ans(:,:,10,15) =

```
          0.2500             0.2500
         -0.2079 - 0.1389i  -0.1389 - 0.2079i
          0.0957 + 0.2310i  -0.0957 + 0.2310i
          0.0488 - 0.2452i   0.2452 - 0.0488i
          0.2500            -0.2500
         -0.2079 - 0.1389i   0.1389 + 0.2079i
          0.0957 + 0.2310i   0.0957 - 0.2310i
          0.0488 - 0.2452i  -0.2452 + 0.0488i
```

ans(:,:,11,15) =

```
          0.2500             0.2500
         -0.1389 - 0.2079i  -0.0488 - 0.2452i
         -0.0957 + 0.2310i  -0.2310 + 0.0957i
          0.2452 - 0.0488i   0.1389 + 0.2079i
          0.2500            -0.2500
         -0.1389 - 0.2079i   0.0488 + 0.2452i
         -0.0957 + 0.2310i   0.2310 - 0.0957i
          0.2452 - 0.0488i  -0.1389 - 0.2079i
```

ans(:,:,12,15) =

|          |          |
|----------|----------|
| 0.2500           | 0.2500            |
| -0.0488 - 0.2452i | 0.0488 - 0.2452i  |
| -0.2310 + 0.0957i | -0.2310 - 0.0957i |
| 0.1389 + 0.2079i  | -0.1389 + 0.2079i |
| 0.2500            | -0.2500           |
| -0.0488 - 0.2452i | -0.0488 + 0.2452i |
| -0.2310 + 0.0957i | 0.2310 + 0.0957i  |
| 0.1389 + 0.2079i  | 0.1389 - 0.2079i  |

ans(:,:,13,15) =

|          |          |
|----------|----------|
| 0.2500            | 0.2500            |
| 0.0488 - 0.2452i  | 0.1389 - 0.2079i  |
| -0.2310 - 0.0957i | -0.0957 - 0.2310i |
| -0.1389 + 0.2079i | -0.2452 - 0.0488i |
| 0.2500            | -0.2500           |
| 0.0488 - 0.2452i  | -0.1389 + 0.2079i |
| -0.2310 - 0.0957i | 0.0957 + 0.2310i  |
| -0.1389 + 0.2079i | 0.2452 + 0.0488i  |

ans(:,:,14,15) =

|          |          |
|----------|----------|
| 0.2500            | 0.2500            |
| 0.1389 - 0.2079i  | 0.2079 - 0.1389i  |
| -0.0957 - 0.2310i | 0.0957 - 0.2310i  |
| -0.2452 - 0.0488i | -0.0488 - 0.2452i |
| 0.2500            | -0.2500           |
| 0.1389 - 0.2079i  | -0.2079 + 0.1389i |
| -0.0957 - 0.2310i | -0.0957 + 0.2310i |
| -0.2452 - 0.0488i | 0.0488 + 0.2452i  |

ans(:,:,15,15) =

```
     0.2500               0.2500
0.2079 - 0.1389i     0.2452 - 0.0488i
0.0957 - 0.2310i     0.2310 - 0.0957i
-0.0488 - 0.2452i    0.2079 - 0.1389i
     0.2500               -0.2500
0.2079 - 0.1389i     -0.2452 + 0.0488i
0.0957 - 0.2310i     -0.2310 + 0.0957i
-0.0488 - 0.2452i    -0.2079 + 0.1389i
```

ans(:,:,16,15) =

```
     0.2500               0.2500
0.2452 - 0.0488i     0.2452 + 0.0488i
0.2310 - 0.0957i     0.2310 + 0.0957i
0.2079 - 0.1389i     0.2079 + 0.1389i
     0.2500               -0.2500
0.2452 - 0.0488i     -0.2452 - 0.0488i
0.2310 - 0.0957i     -0.2310 - 0.0957i
0.2079 - 0.1389i     -0.2079 - 0.1389i
```

ans(:,:,1,16) =

```
     0.2500               0.2500
0.2452 + 0.0488i     0.2079 + 0.1389i
0.2310 + 0.0957i     0.0957 + 0.2310i
0.2079 + 0.1389i     -0.0488 + 0.2452i
        0 + 0.2500i           0 - 0.2500i
-0.0488 + 0.2452i    0.1389 - 0.2079i
-0.0957 + 0.2310i    0.2310 - 0.0957i
-0.1389 + 0.2079i    0.2452 + 0.0488i
```

ans(:,:,2,16) =

```
     0.2500               0.2500
0.2079 + 0.1389i     0.1389 + 0.2079i
0.0957 + 0.2310i     -0.0957 + 0.2310i
```

```
-0.0488 + 0.2452i   -0.2452 + 0.0488i
         0 + 0.2500i           0 - 0.2500i
-0.1389 + 0.2079i   0.2079 - 0.1389i
-0.2310 + 0.0957i   0.2310 + 0.0957i
-0.2452 - 0.0488i   0.0488 + 0.2452i
```

ans(:,:,3,16) =

```
0.2500              0.2500
0.1389 + 0.2079i    0.0488 + 0.2452i
-0.0957 + 0.2310i   -0.2310 + 0.0957i
-0.2452 + 0.0488i   -0.1389 - 0.2079i
         0 + 0.2500i           0 - 0.2500i
-0.2079 + 0.1389i   0.2452 - 0.0488i
-0.2310 - 0.0957i   0.0957 + 0.2310i
-0.0488 - 0.2452i   -0.2079 + 0.1389i
```

ans(:,:,4,16) =

```
0.2500              0.2500
0.0488 + 0.2452i    -0.0488 + 0.2452i
-0.2310 + 0.0957i   -0.2310 - 0.0957i
-0.1389 - 0.2079i   0.1389 - 0.2079i
         0 + 0.2500i           0 - 0.2500i
-0.2452 + 0.0488i   0.2452 + 0.0488i
-0.0957 - 0.2310i   -0.0957 + 0.2310i
0.2079 - 0.1389i    -0.2079 - 0.1389i
```

ans(:,:,5,16) =

```
0.2500              0.2500
-0.0488 + 0.2452i   -0.1389 + 0.2079i
-0.2310 - 0.0957i   -0.0957 - 0.2310i
0.1389 - 0.2079i    0.2452 + 0.0488i
         0 + 0.2500i           0 - 0.2500i
-0.2452 - 0.0488i   0.2079 + 0.1389i
```

0.0957 - 0.2310i    -0.2310 + 0.0957i
0.2079 + 0.1389i    0.0488 - 0.2452i

ans(:,:,6,16) =

```
0.2500              0.2500
-0.1389 + 0.2079i   -0.2079 + 0.1389i
-0.0957 - 0.2310i    0.0957 - 0.2310i
0.2452 + 0.0488i    0.0488 + 0.2452i
        0 + 0.2500i          0 - 0.2500i
-0.2079 - 0.1389i    0.1389 + 0.2079i
0.2310 - 0.0957i    -0.2310 - 0.0957i
-0.0488 + 0.2452i    0.2452 - 0.0488i
```

ans(:,:,7,16) =

```
0.2500              0.2500
-0.2079 + 0.1389i   -0.2452 + 0.0488i
0.0957 - 0.2310i    0.2310 - 0.0957i
0.0488 + 0.2452i    -0.2079 + 0.1389i
        0 + 0.2500i          0 - 0.2500i
-0.1389 - 0.2079i    0.0488 + 0.2452i
0.2310 + 0.0957i    -0.0957 - 0.2310i
-0.2452 + 0.0488i    0.1389 + 0.2079i
```

ans(:,:,8,16) =

```
0.2500              0.2500
-0.2452 + 0.0488i   -0.2452 - 0.0488i
0.2310 - 0.0957i    0.2310 + 0.0957i
-0.2079 + 0.1389i   -0.2079 - 0.1389i
        0 + 0.2500i          0 - 0.2500i
-0.0488 - 0.2452i   - 0.0488 + 0.2452i
0.0957 + 0.2310i    0.0957 - 0.2310i
-0.1389 - 0.2079i   -0.1389 + 0.2079i
```

ans(:,:,9,16) =

```
    0.2500              0.2500
-0.2452 - 0.0488i   -0.2079 - 0.1389i
 0.2310 + 0.0957i    0.0957 + 0.2310i
-0.2079 - 0.1389i    0.0488 - 0.2452i
        0 + 0.2500i          0 - 0.2500i
 0.0488 - 0.2452i   -0.1389 + 0.2079i
-0.0957 + 0.2310i    0.2310 - 0.0957i
 0.1389 - 0.2079i   -0.2452 - 0.0488i
```

ans(:,:,10,16) =

```
    0.2500              0.2500
-0.2079 - 0.1389i   -0.1389 - 0.2079i
 0.0957 + 0.2310i   -0.0957 + 0.2310i
 0.0488 - 0.2452i    0.2452 - 0.0488i
        0 + 0.2500i          0 - 0.2500i
 0.1389 - 0.2079i   -0.2079 + 0.1389i
-0.2310 + 0.0957i    0.2310 + 0.0957i
 0.2452 + 0.0488i   -0.0488 - 0.2452i
```

ans(:,:,11,16) =

```
    0.2500              0.2500
-0.1389 - 0.2079i   -0.0488 - 0.2452i
-0.0957 + 0.2310i   -0.2310 + 0.0957i
 0.2452 - 0.0488i    0.1389 + 0.2079i
        0 + 0.2500i          0 - 0.2500i
 0.2079 - 0.1389i   -0.2452 + 0.0488i
-0.2310 - 0.0957i    0.0957 + 0.2310i
 0.0488 + 0.2452i    0.2079 - 0.1389i
```

ans(:,:,12,16) =

```
        0.2500            0.2500
 -0.0488 - 0.2452i   0.0488 - 0.2452i
 -0.2310 + 0.0957i  -0.2310 - 0.0957i
  0.1389 + 0.2079i  -0.1389 + 0.2079i
        0 + 0.2500i         0 - 0.2500i
  0.2452 - 0.0488i  -0.2452 - 0.0488i
 -0.0957 - 0.2310i  -0.0957 + 0.2310i
 -0.2079 + 0.1389i   0.2079 + 0.1389i
```

ans(:,:,13,16) =

```
        0.2500            0.2500
  0.0488 - 0.2452i   0.1389 - 0.2079i
 -0.2310 - 0.0957i  -0.0957 - 0.2310i
 -0.1389 + 0.2079i  -0.2452 - 0.0488i
        0 + 0.2500i         0 - 0.2500i
  0.2452 + 0.0488i  -0.2079 - 0.1389i
  0.0957 - 0.2310i  -0.2310 + 0.0957i
 -0.2079 - 0.1389i  -0.0488 + 0.2452i
```

ans(:,:,14,16) =

```
        0.2500            0.2500
  0.1389 - 0.2079i   0.2079 - 0.1389i
 -0.0957 - 0.2310i   0.0957 - 0.2310i
 -0.2452 - 0.0488i  -0.0488 - 0.2452i
        0 + 0.2500i         0 - 0.2500i
  0.2079 + 0.1389i  -0.1389 - 0.2079i
  0.2310 - 0.0957i  -0.2310 - 0.0957i
  0.0488 - 0.2452i  -0.2452 + 0.0488i
```

ans(:,:,15,16) =

```
        0.2500            0.2500
  0.2079 - 0.1389i   0.2452 - 0.0488i
  0.0957 - 0.2310i   0.2310 - 0.0957i
```

$$\begin{array}{cc} 0 + 0.2500i & 0 - 0.2500i \\ 0.1389 + 0.2079i & -0.0488 - 0.2452i \\ 0.2310 + 0.0957i & -0.0957 - 0.2310i \\ 0.2452 - 0.0488i & -0.1389 - 0.2079i \end{array}$$

$$ans(:,:,16,16) =$$

$$\begin{array}{cc} 0.2500 & 0.2500 \\ 0.2452 - 0.0488i & 0.2452 + 0.0488i \\ 0.2310 - 0.0957i & 0.2310 + 0.0957i \\ 0.2079 - 0.1389i & 0.2079 + 0.1389i \\ 0 + 0.2500i & 0 - 0.2500i \\ 0.0488 + 0.2452i & 0.0488 - 0.2452i \\ 0.0957 + 0.2310i & 0.0957 - 0.2310i \\ 0.1389 + 0.2079i & 0.1389 - 0.2079i \end{array}$$

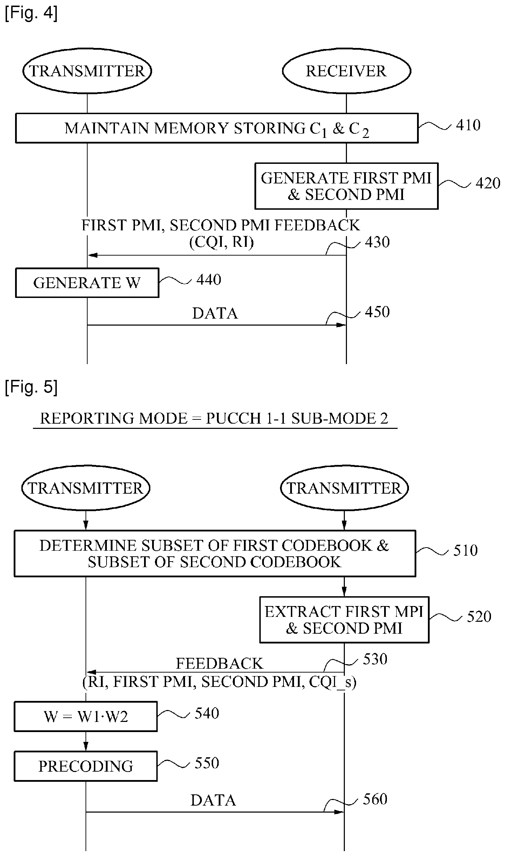

FIG. 4 illustrates an example of a communication method of a receiver and a transmitter that share channel information using two codebooks.

Referring to FIG. 4, the transmitter and the receiver may maintain a memory storing a first codebook $C_1$ and a second codebook $C_2$.

At 420, the receiver may generate a first precoding matrix indicator from the first codebook $C_1$, and may generate a second precoding matrix indicator from the second codebook $C_2$ based on a state of a channel formed from the transmitter to the receiver. In this example, the first precoding matrix indicator may indicate one of first codewords included in the first codebook $C_1$, and the second precoding matrix indicator may indicate one of second codewords included in the second codebook $C_2$. A combination of the first precoding matrix indicator and the second precoding matrix indicator may indicate a recommended precoding matrix. For example, when the first precoding matrix indicator indicates $W_1$ and the second precoding matrix indicator indicates $W_2$, the recommended precoding matrix W may be calculated as $W_1 W_2$.

At 430, the receiver may transmit the first precoding matrix indicator and the second precoding matrix indicator to the transmitter. The receiver may further transmit channel quality information indicating the quality of the channel and a rank indicator indicating a preferred rank.

At 440, the transmitter may extract $W_1$ from the first codebook $C_1$, and extract $W_2$ from the second codebook $C_2$, based on the first precoding matrix indicator and the second precoding matrix indicator and then generate a precoding matrix W based on $W_1$ and $W_2$. As described above, W may correspond to a function of $W_1$ and $W_2$, for example, $W=W_1 W_2$.

At 450, the transmitter may precode at least one data stream based on the precoding matrix W and may transmit data. The transmitter may transmit the data using a plurality of transmit antennas, for example, 2, 4, 8, and the like.

An example in which the first codebook $C_1$ and the second codebook $C_2$ independently exist is described. As described above, the receiver may transmit, to the transmitter, the first precoding matrix indicator indicating the first codeword $W_1$ included in the first codebook $C_1$ and the second precoding matrix indicator indicating the second codeword $W_2$ included in the second codebook $C_2$. The transmitter may extract the first codeword $W_1$ from the first codebook $C_1$, and extract the second codeword $W_2$ from the second codebook $C_2$, based on the first precoding matrix indicator and the second precoding matrix indicator and then calculate the precoding matrix W according to a predetermined function, for example, $W=W_1 W_2$. The calculated precoding matrix may be used to precode a data stream.

As another example, the overall codebook C in which the first codebook $C_1$ and the second codebook $C_2$ are integrated may exist. That is, probable candidates of the precoding matrix W may be calculated and thereby be pre-stored as the overall codebook C. In this example, the precoding matrix candidates included in the overall codebook C may be indicated by the first precoding matrix indicator and the second precoding matrix indicator. To indicate one of the candidates included in the overall codebook C, the receiver may transmit the first precoding matrix indicator and the second precoding matrix indicator to the transmitter. The transmitter may extract one of the candidates based on the first precoding matrix indicator and the second precoding matrix. The extracted candidate may be used to precode a data stream as a precoding matrix.

Accordingly, an example in which the first codebook $C_1$ and the second codebook $C_2$ are stored in the transmitter and the receiver may exist. An example in which the overall codebook C instead of the first codebook $C_1$ and the second codebook $C_2$ is stored may exist. In the above examples, only difference lies in that the precoding matrix W is calculated by substantially using $W_1$ and $W_2$. Accordingly, to store the overall codebook C in the transmitter and the receiver may be understood to be substantially equivalent to store the first codebook $C_1$ and the second codebook $C_2$ in the transmitter and the receiver.

Reporting modes

As described above, the receiver may feed back, to the transmitter, a rank indicator, a first precoding matrix indicator, a second precoding matrix indicator, channel quality information (CQI), and the like. Hereinafter, a variety of reporting modes will be introduced.

1. PUCCH 1-1 sub-mode 2

In PUCCH 1-1 sub-mode 2, the receiver may feed back, to the transmitter via a physical uplink control channel (PUCCH), a rank indicator, a first precoding matrix indicator extracted from a subset of a first codebook $C_1$, a second precoding matrix indicator extracted from a subset of a second codebook $C_2$, CQI, and the like. That is, the receiver may use a previously fed back rank indicator as a presumption. CQI corresponds to CQI_s and denotes subband CQI.

- For each rank, the subset of the first codebook $C_1$ and the subset of the second codebook $C_2$ may guarantee the whole payload size for the first precoding matrix indicator, the second precoding matrix indicator, and CQI(s) to be used within maximum N bits, for example, 11 bits.

  *For each rank, the subset of the first codebook $C_1$ and the subset of the second codebook $C_2$ may be fixed.
  *For each rank the subset of the first codebook $C_1$ and the subset of the second codebook $C_2$ may be independently present or may be integrated and thereby be present.

2. PUCCH 1-1 sub-mode 1

In PUCCH 1-1 sub-mode 1, the first precoding matrix indicator and the rank indicator may be fed back from the receiver to the transmitter in the same subframe.
To determine the subset of the first codebook $C_1$ and the subset of the second codebook $C_2$ from the first codebook $C_1$ and the second codebook $C_2$ may be performed dependent on a final codebook design. In particular, it may be performed to guarantee that the whole payload size may sufficiently decrease.

- A recommended precoding matrix may be indicated in two subframes based on the previously fed back rank indicator.

  *In one subframe, the rank indicator and the first precoding matrix indicator extracted from the subset of the first codebook $C_1$ may be commonly encoded and be fed back from the receiver to the transmitter.
  *In another subframe, wideband CQI and the second precoding matrix indicator extracted from the subset of the second codebook $C_2$ may be fed back from the receiver to the transmitter. When the subset of the second codebook $C_2$ includes only a single element, the second precoding matrix indicator may not be fed back.

3. PUCCH 2-1 sub-mode 1

In PUCCH 2-1 sub-mode 1, a recommended precoding matrix may be indicated in three subframes based on the previously fed back rank indicator.

  *In one subframe, the rank indicator and a one-bit precoder type indicator (PTI) may be fed back from the receiver to the transmitter. The PTI may have a single bit size and information to be fed back may be determined based on a value of PTI.
  *In another subframe, when PTI = '0', the first precoding matrix indicator extracted from the subset of the first codebook $C_1$ may be reported(*fed back. When PTI = '1', the second precoding matrix indicator extracted from the subset of the second codebook $C_2$ and wideband CQI may be fed back from the receiver to the transmitter.
  *In still another subframe, when PTI = '0', wideband CQI and the second precoding matrix indicator extracted from the subset of the second codebook C2 may be fed back from the receiver to the transmitter. When PTI = '1', subband CQI and the second precoding matrix indicator extracted from the subset of the second codebook $C_2$ may be fed back from the receiver to the transmitter.

- When the transmitter has two and four transmit antennas, PTI may be regarded as '1' and may not be separately signaled.

Codebook subset for ranks 1, 2, 3, and 4

1. Definition of $\mathbf{W}_1^{(k)}$ for rank 1 and rank 2:

Similar to the aforementioned suggestion 3, definition may be made as follows:

$$\mathbf{B} = \begin{bmatrix} \mathbf{b}_0 & \mathbf{b}_1 & \cdots & \mathbf{b}_{31} \end{bmatrix} \quad ,$$

$$\begin{bmatrix} \mathbf{B} \end{bmatrix}_{1+m,1+n} = e^{j\frac{2\pi mn}{32}},$$

$$m = 0,1,2,3, n = 0,1,\cdots 31$$

$$\mathbf{X}^{(k)} \in \left\{ \frac{1}{2} \begin{bmatrix} \mathbf{b}_{2k\bmod 32} & \mathbf{b}_{(2k+1)\bmod 32} & \mathbf{b}_{(2k+2)\bmod 32} & \mathbf{b}_{(2k+3)\bmod 32} \end{bmatrix} : k = 0,1,\cdots,15 \right\}$$

$$\mathbf{W}_1^{(k)} = \begin{bmatrix} \mathbf{X}^{(k)} & \mathbf{0} \\ \mathbf{0} & \mathbf{X}^{(k)} \end{bmatrix}$$

$$C_{1,(1,2)} = \left\{ \mathbf{W}_1^{(0)}, \mathbf{W}_1^{(1)}, \mathbf{W}_1^{(2)}, \cdots, \mathbf{W}_1^{(15)} \right\}$$

In this example, $[\mathbf{B}]_{1+m,1+n}$ indicates an element present in an $(1+m)^{th}$ row and an $(1+n)^{th}$ column among elements belonging to B, and $b_z (z=0, 1, 2, .., 31)$ corresponds to a $z^{th}$ column vector of the matrix B, and a mod b denotes a remainder when a is divided by b.

2. Definition of $\mathbf{W}_1^{(k)}$ for rank 3 and rank 4:

Similar to the aforementioned suggestion 3, definition may be made as follows:

$$\mathbf{B} = \begin{bmatrix} \mathbf{b}_0 & \mathbf{b}_1 & \cdots & \mathbf{b}_{15} \end{bmatrix} \quad ,$$

$$\begin{bmatrix} \mathbf{B} \end{bmatrix}_{1+m,1+n} = e^{j\frac{2\pi mn}{32}},$$

$$m = 0,1,2,3, n = 0,1,\cdots 15$$

$$\mathbf{X}^{(k)} \in \left\{ \frac{1}{2} \begin{bmatrix} \mathbf{b}_{4k\bmod 16} & \mathbf{b}_{(4k+1)\bmod 16} & \cdots & \mathbf{b}_{(4k+7)\bmod 16} \end{bmatrix} : k = 0,1,2,3 \right\}$$

$$W_1^{(k)} = \begin{bmatrix} X^{(k)} & 0 \\ 0 & X^{(k)} \end{bmatrix}$$

A. Subset of first codebook and subset of second codebook for PUCCH 2-1 sub-mode 1:

i. For ranks 2, 3, and 4, when the subset of the first codebook includes four bits and the subset of the second codebook includes two bits:

1. For rank 2:

Hereinafter, the subset of the first codebook may be referred to as 'C$_1$' and the subset of the second codebook may be referred to as 'C$_2$'. The subset C$_2$ of the second codebook may be defined as follows:

$$W_2 \in C_2 = \left\{ \frac{1}{\sqrt{2}} \begin{bmatrix} Y_1 & Y_2 \\ Y_1 & -Y_2 \end{bmatrix}, \frac{1}{\sqrt{2}} \begin{bmatrix} Y_1 & Y_2 \\ jY_1 & -jY_2 \end{bmatrix} \right\}$$

$$(Y_1, Y_2) \in \left\{ (\tilde{e}_1, \tilde{e}_1), (\tilde{e}_3, \tilde{e}_3) \right\} \text{ or } (Y_1, Y_2) \in \left\{ (\tilde{e}_2, \tilde{e}_2), (\tilde{e}_4, \tilde{e}_4) \right\}$$

2. For rank 3:

$$W_2 \in C_2 = \left\{ \frac{1}{\sqrt{3}\sqrt{2}} \begin{bmatrix} Y_1 & Y_2 \\ Y_1 & -Y_2 \end{bmatrix} \right\}$$

$$(Y_1, Y_2) \in \left\{ (e_1, [e_1 \quad e_5]), (e_2, [e_2 \quad e_6]), (e_3, [e_3 \quad e_7]), (e_4, [e_4 \quad e_8]) \right\}$$

or

$$W_2 \in C_2 = \left\{ \frac{1}{\sqrt{3}\sqrt{2}} \begin{bmatrix} Y_1 & Y_2 \\ Y_1 & -Y_2 \end{bmatrix} \right\}$$

$$(Y_1, Y_2) \in \left\{ (e_5, [e_1 \quad e_5]), (e_6, [e_2 \quad e_6]), (e_7, [e_3 \quad e_7]), (e_8, [e_4 \quad e_8]) \right\}$$

$$W_2 \in C_2 = \left\{ \frac{1}{\sqrt{3}\sqrt{2}} \begin{bmatrix} Y_1 & Y_2 \\ Y_1 & -Y_2 \end{bmatrix} \right\}$$

$$(Y_1, Y_2) \in \left\{ ([e_1 \quad e_5], e_5), ([e_2 \quad e_6], e_6), ([e_3 \quad e_7], e_7), ([e_4 \quad e_8], e_8), \right\}$$

or

$$W_2 \in C_2 = \left\{ \frac{1}{\sqrt{3}\sqrt{2}} \begin{bmatrix} \mathbf{Y}_1 & \mathbf{Y}_2 \\ \mathbf{Y}_1 & -\mathbf{Y}_2 \end{bmatrix} \right\}$$

$$(\mathbf{Y}_1, \mathbf{Y}_2) \in \left\{ ([\mathbf{e}_5 \quad \mathbf{e}_1], \mathbf{e}_1), ([\mathbf{e}_6 \quad \mathbf{e}_2], \mathbf{e}_2), ([\mathbf{e}_7 \quad \mathbf{e}_3], \mathbf{e}_3), ([\mathbf{e}_8 \quad \mathbf{e}_4], \mathbf{e}_4) \right\}$$

3. For rank 4:

$$W_2 \in C_2 = \left\{ \frac{1}{\sqrt{4}\sqrt{2}} \begin{bmatrix} \mathbf{Y} & \mathbf{Y} \\ \mathbf{Y} & -\mathbf{Y} \end{bmatrix} \right\}$$

$$\mathbf{Y} \in \left\{ [\mathbf{e}_1 \quad \mathbf{e}_5], [\mathbf{e}_2 \quad \mathbf{e}_6], [\mathbf{e}_3 \quad \mathbf{e}_7], [\mathbf{e}_4 \quad \mathbf{e}_8] \right\}$$

or

$$W_2 \in C_2 = \left\{ \frac{1}{\sqrt{4}\sqrt{2}} \begin{bmatrix} \mathbf{Y} & \mathbf{Y} \\ \mathbf{Y} & -\mathbf{Y} \end{bmatrix}, \frac{1}{\sqrt{4}\sqrt{2}} \begin{bmatrix} \mathbf{Y} & \mathbf{Y} \\ j\mathbf{Y} & -j\mathbf{Y} \end{bmatrix} \right\}$$

$$\mathbf{Y} \in \left\{ [\mathbf{e}_1 \quad \mathbf{e}_5], [\mathbf{e}_3 \quad \mathbf{e}_7] \right\} \text{ or } \mathbf{Y} \in \left\{ [\mathbf{e}_2 \quad \mathbf{e}_6], [\mathbf{e}_4 \quad \mathbf{e}_8] \right\}$$

B. Subset of first codebook and subset of second codebook for PUCCH 1-1 sub-mode 2:

i. For ranks 3 and 4, when the subset of the first codebook includes a single bit and the subset of the second codebook includes three bits:

1. For rank 3:

$$C_1 = \left\{ \mathbf{W}_1^{(0)}, \mathbf{W}_1^{(2)} \right\} \text{ or } C_1 = \left\{ \mathbf{W}_1^{(1)}, \mathbf{W}_1^{(3)} \right\}$$

$$W_2 \in C_2 = \left\{ \frac{1}{\sqrt{2}} \begin{bmatrix} \mathbf{Y}_1 & \mathbf{Y}_2 \\ \mathbf{Y}_1 & -\mathbf{Y}_2 \end{bmatrix} \right\}$$

$$\left(\mathbf{Y}_1,\mathbf{Y}_2\right) \in \left\{ \begin{array}{l} \left(\mathbf{e}_1,\begin{bmatrix}\mathbf{e}_1 & \mathbf{e}_5\end{bmatrix}\right),\left(\mathbf{e}_2,\begin{bmatrix}\mathbf{e}_2 & \mathbf{e}_6\end{bmatrix}\right),\left(\mathbf{e}_3,\begin{bmatrix}\mathbf{e}_3 & \mathbf{e}_7\end{bmatrix}\right),\left(\mathbf{e}_4,\begin{bmatrix}\mathbf{e}_4 & \mathbf{e}_8\end{bmatrix}\right), \\ \left(\begin{bmatrix}\mathbf{e}_1 & \mathbf{e}_5\end{bmatrix},\mathbf{e}_5\right),\left(\begin{bmatrix}\mathbf{e}_2 & \mathbf{e}_6\end{bmatrix},\mathbf{e}_6\right),\left(\begin{bmatrix}\mathbf{e}_3 & \mathbf{e}_7\end{bmatrix},\mathbf{e}_7\right),\left(\begin{bmatrix}\mathbf{e}_4 & \mathbf{e}_8\end{bmatrix},\mathbf{e}_8\right) \end{array} \right\}$$

2. For rank 4:

$$C_1 = \left\{ \mathbf{W}_1^{(0)},\mathbf{W}_1^{(2)} \right\} \text{ or } C_1 = \left\{ \mathbf{W}_1^{(1)},\mathbf{W}_1^{(3)} \right\}$$

$$\mathbf{W}_2 \in C_2 = \left\{ \frac{1}{\sqrt{2}}\begin{bmatrix}\mathbf{Y} & \mathbf{Y} \\ \mathbf{Y} & -\mathbf{Y}\end{bmatrix}, \frac{1}{\sqrt{2}}\begin{bmatrix}\mathbf{Y} & \mathbf{Y} \\ j\mathbf{Y} & -j\mathbf{Y}\end{bmatrix} \right\}$$

$$\mathbf{Y} \in \left\{ \begin{bmatrix}\mathbf{e}_1 & \mathbf{e}_5\end{bmatrix},\begin{bmatrix}\mathbf{e}_2 & \mathbf{e}_6\end{bmatrix},\begin{bmatrix}\mathbf{e}_3 & \mathbf{e}_7\end{bmatrix},\begin{bmatrix}\mathbf{e}_4 & \mathbf{e}_8\end{bmatrix} \right\}$$

ii. When the subset of the first codebook includes two bits and the subset of the second codebook includes two bits:

1. For rank 1:

$$C_1 = \left\{ \mathbf{W}_1^{(2)},\mathbf{W}_1^{(6)},\mathbf{W}_1^{(10)},\mathbf{W}_1^{(14)} \right\} \text{ or } C_1 = \left\{ \mathbf{W}_1^{(0)},\mathbf{W}_1^{(4)},\mathbf{W}_1^{(8)},\mathbf{W}_1^{(12)} \right\}$$

$$\mathbf{W}_2 \in C_2 = \left\{ \frac{1}{\sqrt{2}}\begin{bmatrix}\mathbf{Y} \\ \mathbf{Y}\end{bmatrix} \right\}$$

$$\mathbf{Y} \in \left\{ \tilde{\mathbf{e}}_1,\tilde{\mathbf{e}}_2,\tilde{\mathbf{e}}_3,\tilde{\mathbf{e}}_4 \right\}$$

or

$$\mathbf{W}_2 \in C_2 = \left\{ \frac{1}{\sqrt{2}}\begin{bmatrix}\mathbf{Y} \\ \mathbf{Y}\end{bmatrix}, \frac{1}{\sqrt{2}}\begin{bmatrix}\mathbf{Y} \\ j\mathbf{Y}\end{bmatrix} \right\}$$

$$\mathbf{Y} \in \left\{ \tilde{\mathbf{e}}_1,\tilde{\mathbf{e}}_3 \right\} \text{ or } \mathbf{Y} \in \left\{ \tilde{\mathbf{e}}_2,\tilde{\mathbf{e}}_4 \right\}$$

2. For rank 2:

$$C_1 = \left\{ W_1^{(2)}, W_1^{(6)}, W_1^{(10)}, W_1^{(14)} \right\} \text{ or } C_1 = \left\{ W_1^{(0)}, W_1^{(4)}, W_1^{(8)}, W_1^{(12)} \right\}$$

$$W_2 \in C_2 = \left\{ \frac{1}{\sqrt{2}\sqrt{2}} \begin{bmatrix} Y_1 & Y_2 \\ Y_1 & -Y_2 \end{bmatrix}, \frac{1}{\sqrt{2}\sqrt{2}} \begin{bmatrix} Y_1 & Y_2 \\ jY_1 & -jY_2 \end{bmatrix} \right\}$$

$$(Y_1, Y_2) \in \left\{ (\tilde{e}_1, \tilde{e}_1), (\tilde{e}_3, \tilde{e}_3) \right\} \text{ or } (Y_1, Y_2) \in \left\{ (\tilde{e}_2, \tilde{e}_2), (\tilde{e}_4, \tilde{e}_4) \right\}$$

or

$$W_2 \in C_2 = \left\{ \frac{1}{\sqrt{2}\sqrt{2}} \begin{bmatrix} Y_1 & Y_2 \\ Y_1 & -Y_2 \end{bmatrix} \right\}$$

$$(Y_1, Y_2) \in \left\{ (\tilde{e}_1, \tilde{e}_1), (\tilde{e}_2, \tilde{e}_2), (\tilde{e}_3, \tilde{e}_3), (\tilde{e}_4, \tilde{e}_4) \right\}$$

3. For rank 3:

$$C_1 = \left\{ W_1^{(0)}, W_1^{(1)}, W_1^{(2)}, W_1^{(3)} \right\}$$

$$W_2 \in C_2 = \left\{ \frac{1}{\sqrt{3}\sqrt{2}} \begin{bmatrix} Y_1 & Y_2 \\ Y_1 & -Y_2 \end{bmatrix} \right\}$$

$$(Y_1, Y_2) \in \left\{ (e_1, [e_1 \quad e_5]), (e_2, [e_2 \quad e_6]), (e_3, [e_3 \quad e_7]), (e_4, [e_4 \quad e_8]) \right\}$$

or

$$C_1 = \left\{ W_1^{(0)}, W_1^{(1)}, W_1^{(2)}, W_1^{(3)} \right\}$$

$$W_2 \in C_2 = \left\{ \frac{1}{\sqrt{3}\sqrt{2}} \begin{bmatrix} Y_1 & Y_2 \\ Y_1 & -Y_2 \end{bmatrix} \right\}$$

$$(Y_1, Y_2) \in \left\{ \left(e_5, [e_1 \quad e_5]\right), \left(e_6, [e_2 \quad e_6]\right), \left(e_7, [e_3 \quad e_7]\right), \left(e_8, [e_4 \quad e_8]\right) \right\}$$

or

$$C_1 = \left\{ W_1^{(0)}, W_1^{(1)}, W_1^{(2)}, W_1^{(3)} \right\}$$

$$W_2 \in C_2 = \left\{ \frac{1}{\sqrt{3}\sqrt{2}} \begin{bmatrix} Y_1 & Y_2 \\ Y_1 & -Y_2 \end{bmatrix} \right\}$$

$$(Y_1, Y_2) \in \left\{ \left([e_1 \quad e_5], e_5\right), \left([e_2 \quad e_6], e_6\right), \left([e_3 \quad e_7], e_7\right), \left([e_4 \quad e_8], e_8\right), \right\}$$

or

$$C_1 = \left\{ W_1^{(0)}, W_1^{(1)}, W_1^{(2)}, W_1^{(3)} \right\}$$

$$W_2 \in C_2 = \left\{ \frac{1}{\sqrt{3}\sqrt{2}} \begin{bmatrix} Y_1 & Y_2 \\ Y_1 & -Y_2 \end{bmatrix} \right\}$$

$$(Y_1, Y_2) \in \left\{ \left([e_5 \quad e_1], e_1\right), \left([e_6 \quad e_2], e_2\right), \left([e_7 \quad e_3], e_3\right), \left([e_8 \quad e_4], e_4\right) \right\}$$

4. For rank 4:

$$C_1 = \left\{ W_1^{(0)}, W_1^{(1)}, W_1^{(2)}, W_1^{(3)} \right\}$$

$$W_2 \in C_2 = \left\{ \frac{1}{\sqrt{4}\sqrt{2}} \begin{bmatrix} Y & Y \\ Y & -Y \end{bmatrix} \right\}$$

$$Y \in \left\{ \; \begin{bmatrix} \mathbf{e}_1 & \mathbf{e}_5 \end{bmatrix}, \begin{bmatrix} \mathbf{e}_2 & \mathbf{e}_6 \end{bmatrix}, \begin{bmatrix} \mathbf{e}_3 & \mathbf{e}_7 \end{bmatrix}, \begin{bmatrix} \mathbf{e}_4 & \mathbf{e}_8 \end{bmatrix} \; \right\}$$

or

$$C_1 = \left\{ \; \mathbf{W}_1^{(0)}, \mathbf{W}_1^{(1)}, \mathbf{W}_1^{(2)}, \mathbf{W}_1^{(3)} \right\}$$

$$\mathbf{W}_2 \in C_2 = \left\{ \frac{1}{\sqrt{4\sqrt{2}}} \begin{bmatrix} \mathbf{Y} & \mathbf{Y} \\ \mathbf{Y} & -\mathbf{Y} \end{bmatrix}, \; \frac{1}{\sqrt{4\sqrt{2}}} \begin{bmatrix} \mathbf{Y} & \mathbf{Y} \\ j\mathbf{Y} & -j\mathbf{Y} \end{bmatrix} \right\}$$

$$Y \in \left\{ \; \begin{bmatrix} \mathbf{e}_1 & \mathbf{e}_5 \end{bmatrix}, \begin{bmatrix} \mathbf{e}_3 & \mathbf{e}_7 \end{bmatrix} \right\} \text{ or } Y \in \left\{ \; \begin{bmatrix} \mathbf{e}_2 & \mathbf{e}_6 \end{bmatrix}, \begin{bmatrix} \mathbf{e}_4 & \mathbf{e}_8 \end{bmatrix} \right\}$$

iii. When the subset of the first codebook includes three bits and the subset of the second codebook includes a single bit:

1. For rank 1:

$$C_1 = \left\{ \; \mathbf{W}_1^{(0)}, \mathbf{W}_1^{(2)}, \mathbf{W}_1^{(4)}, \mathbf{W}_1^{(6)}, \mathbf{W}_1^{(8)}, \mathbf{W}_1^{(10)}, \mathbf{W}_1^{(12)}, \mathbf{W}_1^{(14)} \right\}$$

$$\mathbf{W}_2 \in C_2 = \left\{ \frac{1}{\sqrt{2}} \begin{bmatrix} \mathbf{Y} \\ \mathbf{Y} \end{bmatrix} \right\}$$

$$Y \in \left\{ \; \tilde{\mathbf{e}}_1, \tilde{\mathbf{e}}_3 \right\}$$

or

$$\mathbf{W}_2 \in C_2 = \left\{ \frac{1}{\sqrt{2}} \begin{bmatrix} \mathbf{Y} \\ \mathbf{Y} \end{bmatrix}, \; \frac{1}{\sqrt{2}} \begin{bmatrix} \mathbf{Y} \\ j\mathbf{Y} \end{bmatrix} \right\}$$

$$Y \in \left\{ \; \tilde{\mathbf{e}}_1 \right\} \text{ or } Y \in \left\{ \; \tilde{\mathbf{e}}_2 \right\} \text{ or } Y \in \left\{ \; \tilde{\mathbf{e}}_3 \right\} \text{ or } Y \in \left\{ \; \tilde{\mathbf{e}}_4 \right\}$$

or

$$W_2 \in C_2 = \left\{ \frac{1}{\sqrt{2}} \begin{bmatrix} Y \\ Y \end{bmatrix}, \frac{1}{\sqrt{2}} \begin{bmatrix} Y \\ -Y \end{bmatrix} \right\}$$

$$Y \in \left\{ \tilde{e}_1 \right\} \text{ or } Y \in \left\{ \tilde{e}_2 \right\} \text{ or } Y \in \left\{ \tilde{e}_3 \right\} \text{ or } Y \in \left\{ \tilde{e}_4 \right\}$$

2. For rank 2:

$$C_1 = \left\{ \mathbf{W}_1^{(0)}, \mathbf{W}_1^{(2)}, \mathbf{W}_1^{(4)}, \mathbf{W}_1^{(6)}, \mathbf{W}_1^{(8)}, \mathbf{W}_1^{(10)}, \mathbf{W}_1^{(12)}, \mathbf{W}_1^{(14)} \right\}$$

$$W_2 \in C_2 = \left\{ \frac{1}{\sqrt{2}\sqrt{2}} \begin{bmatrix} Y_1 & Y_2 \\ Y_1 & -Y_2 \end{bmatrix}, \frac{1}{\sqrt{2}\sqrt{2}} \begin{bmatrix} Y_1 & Y_2 \\ jY_1 & -jY_2 \end{bmatrix} \right\}$$

$$(Y_1, Y_2) \in \left\{ \left( \tilde{e}_1, \tilde{e}_1 \right) \right\} \text{ or } (Y_1, Y_2) \in \left\{ \left( \tilde{e}_2, \tilde{e}_2 \right) \right\}$$

or

$$(Y_1, Y_2) \in \left\{ \left( \tilde{e}_3, \tilde{e}_3 \right) \right\} \text{ or } (Y_1, Y_2) \in \left\{ \left( \tilde{e}_4, \tilde{e}_4 \right) \right\}$$

or

$$W_2 \in C_2 = \left\{ \frac{1}{\sqrt{2}\sqrt{2}} \begin{bmatrix} Y_1 & Y_2 \\ Y_1 & -Y_2 \end{bmatrix} \right\}$$

$$(Y_1, Y_2) \in \left\{ \left( \tilde{e}_1, \tilde{e}_1 \right), \left( \tilde{e}_3, \tilde{e}_3 \right) \right\} \text{ or } (Y_1, Y_2) \in \left\{ \left( \tilde{e}_2, \tilde{e}_2 \right), \left( \tilde{e}_4, \tilde{e}_4 \right) \right\}$$

3. For rank 3 and rank 4:

The subset $C_1$ of the first codebook and the subset $C_2$ of the second codebook for rank 3 and rank 4 may be the same as the subset $C_1$ of the 2-bit first codebook and the subset $C_2$ of the 2-bit second codebook that are described above. For rank 3 and rank 4, the subset $C_1$ of the first codebook may have only a size of two bits.

iv. When the subset of the first codebook includes four bits and the subset of the second codebook includes zero bit:

1. For rank 1:

$$C_1 = \left\{ \mathbf{W}_1^{(0)}, \mathbf{W}_1^{(1)}, \mathbf{W}_1^{(2)}, \cdots, \mathbf{W}_1^{(15)} \right\}$$

$$\mathbf{W}_2 \in C_2 = \left\{ \frac{1}{\sqrt{2}} \begin{bmatrix} \mathbf{Y} \\ \mathbf{Y} \end{bmatrix} \right\}$$

$$\mathbf{Y} \in \left\{ \tilde{\mathbf{e}}_1 \right\} \text{ or } \mathbf{Y} \in \left\{ \tilde{\mathbf{e}}_2 \right\} \text{ or } \mathbf{Y} \in \left\{ \tilde{\mathbf{e}}_3 \right\} \text{ or } \mathbf{Y} \in \left\{ \tilde{\mathbf{e}}_4 \right\}$$

or

$$C_1 = \left\{ \mathbf{W}_1^{(0)}, \mathbf{W}_1^{(2)}, \mathbf{W}_1^{(4)}, \cdots, \mathbf{W}_1^{(14)} \right\}$$

with

$$\mathbf{W}_2 \in C_2 = \left\{ \frac{1}{\sqrt{2}} \begin{bmatrix} \mathbf{Y} \\ \mathbf{Y} \end{bmatrix} \right\}$$

$$\mathbf{Y} \in \left\{ \tilde{\mathbf{e}}_1 \right\}$$

or

$$C_1 = \left\{ \mathbf{W}_1^{(1)}, \mathbf{W}_1^{(3)}, \mathbf{W}_1^{(5)}, \cdots, \mathbf{W}_1^{(15)} \right\}$$

with

$$\mathbf{W}_2 \in C_2 = \left\{ \frac{1}{\sqrt{2}} \begin{bmatrix} \mathbf{Y} \\ -\mathbf{Y} \end{bmatrix} \right\}$$

$$\mathbf{Y} \in \left\{ \tilde{\mathbf{e}}_1 \right\}$$

2. For rank 2:

$$C_1 = \left\{ \mathbf{W}_1^{(0)}, \mathbf{W}_1^{(1)}, \mathbf{W}_1^{(2)}, \cdots, \mathbf{W}_1^{(15)} \right\}$$

$$\mathbf{W}_2 \in C_2 = \left\{ \frac{1}{\sqrt{2}\sqrt{2}} \begin{bmatrix} \mathbf{Y}_1 & \mathbf{Y}_2 \\ \mathbf{Y}_1 & -\mathbf{Y}_2 \end{bmatrix} \right\}$$

$$(\mathbf{Y}_1, \mathbf{Y}_2) \in \left\{ \left( \tilde{\mathbf{e}}_1, \tilde{\mathbf{e}}_1 \right) \right\} \text{ or } (\mathbf{Y}_1, \mathbf{Y}_2) \in \left\{ \left( \tilde{\mathbf{e}}_2, \tilde{\mathbf{e}}_2 \right) \right\}$$

or

$$(\mathbf{Y}_1, \mathbf{Y}_2) \in \left\{ \left( \tilde{\mathbf{e}}_3, \tilde{\mathbf{e}}_3 \right) \right\} \text{ or } (\mathbf{Y}_1, \mathbf{Y}_2) \in \left\{ \left( \tilde{\mathbf{e}}_4, \tilde{\mathbf{e}}_4 \right) \right\}$$

3. For rank 3 and rank 4:

The subset $C_1$ of the first codebook and the subset $C_2$ of the second codebook for rank 3 and rank 4 may be the same as the subset $C_1$ of the 2-bit first codebook and the subset $C_2$ of the 2-bit second codebook that are described above. For rank 3 and rank 4, the subset $C_1$ of the first codebook may have only a size of two bits.

C. Subset of first codebook for PUCCH 1-1 sub-mode 1 when a rank indicator and a first precoding matrix indicator are commonly encoded:

i. Five bits of common encoding of rank indicator and first precoding matrix indicator-example 1:

1. For rank 1 and rank 2:

$$C_1 = \left\{ \mathbf{W}_1^{(0)}, \mathbf{W}_1^{(2)}, \mathbf{W}_1^{(4)}, \mathbf{W}_1^{(6)}, \mathbf{W}_1^{(8)}, \mathbf{W}_1^{(10)}, \mathbf{W}_1^{(12)}, \mathbf{W}_1^{(14)} \right\}$$

or

$$C_1 = \left\{ \mathbf{W}_1^{(1)}, \mathbf{W}_1^{(3)}, \mathbf{W}_1^{(5)}, \mathbf{W}_1^{(7)}, \mathbf{W}_1^{(9)}, \mathbf{W}_1^{(11)}, \mathbf{W}_1^{(13)}, \mathbf{W}_1^{(15)} \right\}$$

2. For rank 3 and rank 4:

$$C_1 = \left\{ \mathbf{W}_1^{(1)}, \mathbf{W}_1^{(3)} \right\}$$

or

$$C_1 = \left\{ \mathbf{W}_1^{(1)}, \mathbf{W}_1^{(3)} \right\}$$

3. For rank 5 and rank 6:

$$C_1 = \left\{ \mathbf{W}_1^{(0)}, \mathbf{W}_1^{(1)}, \mathbf{W}_1^{(2)}, \mathbf{W}_1^{(3)} \right\}$$

4. For rank 7:

$$C_1 = \left\{ \mathbf{W}_1^{(0)}, \mathbf{W}_1^{(1)}, \mathbf{W}_1^{(2)} \right\}$$

5. For rank 8:

$$C_1 = \left\{ \mathbf{W}_1^{(0)} \right\}$$

ii. Five bits of common encoding of rank indicator and first precoding matrix indicator-example 2:

1. For rank 1 and rank 2:

$$C_1 = \left\{ \mathbf{W}_1^{(0)}, \mathbf{W}_1^{(2)}, \mathbf{W}_1^{(4)}, \mathbf{W}_1^{(6)}, \mathbf{W}_1^{(8)}, \mathbf{W}_1^{(10)}, \mathbf{W}_1^{(12)}, \mathbf{W}_1^{(14)} \right\}$$

or

$$C_1 = \left\{ \mathbf{W}_1^{(1)}, \mathbf{W}_1^{(3)}, \mathbf{W}_1^{(5)}, \mathbf{W}_1^{(7)}, \mathbf{W}_1^{(9)}, \mathbf{W}_1^{(11)}, \mathbf{W}_1^{(13)}, \mathbf{W}_1^{(15)} \right\}$$

2. For rank 3 and rank 4:

$$C_1 = \left\{ \mathbf{W}_1^{(0)}, \mathbf{W}_1^{(1)}, \mathbf{W}_1^{(2)}, \mathbf{W}_1^{(3)} \right\}$$

3. For rank 5 and rank 6:

$$C_1 = \left\{ \mathbf{W}_1^{(0)}, \mathbf{W}_1^{(1)}, \mathbf{W}_1^{(2)} \right\}$$

4. For rank 7:

$$C_1 = \left\{ \mathbf{W}_1^{(0)} \right\}$$

5. For rank 8:

$$C_1 = \left\{ \mathbf{W}_1^{(0)} \right\}$$

Other expressions

Detailed digits of the full first codebook $C_1$ and the full second codebook $C_2$ are expressed above using ans(;,;,n) for each of various ranks. The aforementioned expression scheme may be complex and thus, the full first codebook $C_1$ and the full second codebook $C_2$ are expressed below using a relatively simple expression scheme. $i_1$ ma y correspond to a first precoding matrix indicator and $i_2$ ma y correspond to a second precoding matrix indicator. $\varphi_n$ and $v_m$ ma y be expressed as follows:

$$\varphi_n = e^{j\pi n/2}$$

$$v_m = \begin{bmatrix} 1 & e^{j2\pi n/32} & e^{j4\pi n/32} & e^{j6\pi n/32} \end{bmatrix}^{\mathrm{T}}$$

In this example, the first codebook $C_1$ and the second codebook $C_2$ for rank 1 may be simply expressed by the following tables. The following tables may represent the over all codebook C in which the first codebook $C_1$ and the second codebook $C_2$ are integrated.

- First codebook $C_1$ and second codebook $C_2$ for rank 1:

| $i_1$ | $i_2$ | | | | | | | |
| --- | --- | --- | --- | --- | --- | --- | --- | --- |
| | 0 | 1 | 2 | 3 | 4 | 5 | 6 | 7 |
| 0--15 | $W_{2i_1,0}^{(1)}$ | $W_{2i_1,1}^{(1)}$ | $W_{2i_1,2}^{(1)}$ | $W_{2i_1,3}^{(1)}$ | $W_{2i_1+1,0}^{(1)}$ | $W_{2i_1+1,1}^{(1)}$ | $W_{2i_1+1,2}^{(1)}$ | $W_{2i_1+1,3}^{(1)}$ |

| $i_1$ | $i_2$ | | | | | | | |
| --- | --- | --- | --- | --- | --- | --- | --- | --- |
| | 8 | 9 | 10 | 11 | 12 | 13 | 14 | 15 |
| 0--14 | $W_{2i_1+2,0}^{(1)}$ | $W_{2i_1+2,1}^{(1)}$ | $W_{2i_1+2,2}^{(1)}$ | $W_{2i_1+2,3}^{(1)}$ | $W_{2i_1+3,0}^{(1)}$ | $W_{2i_1+3,1}^{(1)}$ | $W_{2i_1+3,2}^{(1)}$ | $W_{2i_1+3,3}^{(1)}$ |

(continued)

| $i_1$ | $i_2$ | | | | | | | |
|---|---|---|---|---|---|---|---|---|
| | **8** | **9** | **10** | **11** | **12** | **13** | **14** | **15** |
| 15 | $W_{0,0}^{(1)}$ | $W_{0,1}^{(1)}$ | $W_{0,2}^{(1)}$ | $W_{0,3}^{(1)}$ | $W_{1,0}^{(1)}$ | $W_{1,1}^{(1)}$ | $W_{1,2}^{(1)}$ | $W_{1,3}^{(1)}$ |

where $\quad W_{m,n}^{(1)} = \dfrac{1}{\sqrt{8}} \begin{bmatrix} v_m \\ \varphi_n v_m \end{bmatrix}$

- First codebook $C_1$ and second codebook $C_2$ for rank 2:

| $i_1$ | $i_2$ | | | |
|---|---|---|---|---|
| | **0** | **1** | **2** | **3** |
| 0--14 | $W_{2i_1,2i_1,0}^{(2)}$ | $W_{2i_1,2i_1,1}^{(2)}$ | $W_{2i_1+1,2i_1+1,0}^{(2)}$ | $W_{2i_1+1,2i_1+1,1}^{(2)}$ |
| 15 | $W_{30,30,0}^{(2)}$ | $W_{30,30,1}^{(2)}$ | $W_{31,31,0}^{(2)}$ | $W_{31,31,1}^{(2)}$ |

| $i_1$ | $i_2$ | | | |
|---|---|---|---|---|
| | **4** | **5** | **6** | **7** |
| 0--14 | $W_{2i_1+2,2i_1+2,0}^{(2)}$ | $W_{2i_1+2,2i_1+2,1}^{(2)}$ | $W_{2i_1+3,2i_1+3,0}^{(2)}$ | $W_{2i_1+3,2i_1+3,1}^{(2)}$ |
| 15 | $W_{0,0,0}^{(2)}$ | $W_{0,0,1}^{(2)}$ | $W_{1,1,0}^{(2)}$ | $W_{1,1,1}^{(2)}$ |

| $i_1$ | $i_2$ | | | |
|---|---|---|---|---|
| | **8** | **9** | **10** | **11** |
| 0--14 | $W_{2i_1,2i_1+1,0}^{(2)}$ | $W_{2i_1,2i_1+1,1}^{(2)}$ | $W_{2i_1+1,2i_1+2,0}^{(2)}$ | $W_{2i_1+1,2i_1+2,1}^{(2)}$ |
| 15 | $W_{30,31,0}^{(2)}$ | $W_{30,31,1}^{(2)}$ | $W_{31,0,0}^{(2)}$ | $W_{31,0,1}^{(2)}$ |

| $i_1$ | $i_2$ | | | |
|---|---|---|---|---|
| | **12** | **13** | **14** | **15** |
| 0--14 | $W_{2i_1,2i_1+3,0}^{(2)}$ | $W_{2i_1,2i_1+3,1}^{(2)}$ | $W_{2i_1+1,2i_1+3,0}^{(2)}$ | $W_{2i_1+1,2i_1+3,1}^{(2)}$ |
| 15 | $W_{30,1,0}^{(2)}$ | $W_{30,1,1}^{(2)}$ | $W_{31,1,0}^{(2)}$ | $W_{31,1,1}^{(2)}$ |

where· $\quad W_{m,m',n}^{(2)} = \dfrac{1}{4} \begin{bmatrix} v_m & v_{m'} \\ \varphi_n v_m & -\varphi_n v_{m'} \end{bmatrix}$

- First codebook $C_1$ and second codebook $C_2$ for rank 3:

| $i_1$ | $i_2$ | | | |
|---|---|---|---|---|
| | **0** | **1** | **2** | **3** |
| 0--3 | $W^{(3)}_{4i_1,4i_1,4i_1+4}$ | $W^{(3)}_{4i_1+4,4i_1,4i_1+4}$ | $\widetilde{W}^{(3)}_{4i_1,4i_1+4,4i_1+4}$ | $\widetilde{\widetilde{W}}^{(3)}_{4i_1+4,4i_1,4i_1}$ |

| $i_1$ | $i_2$ | | | |
|---|---|---|---|---|
| | **4** | **5** | **6** | **7** |
| 0--3 | $W^{(3)}_{4i_1+1,4i_1+1,4i_1+5}$ | $W^{(3)}_{4i_1+5,4i_1+1,4i_1+5}$ | $\widetilde{W}^{(3)}_{4i_1+1,4i_1+5,4i_1+5}$ | $\widetilde{\widetilde{W}}^{(3)}_{4i_1+5,4i_1+1,4i_1+1}$ |

| $i_1$ | $i_2$ | | | |
|---|---|---|---|---|
| | **8** | **9** | **10** | **11** |
| 0--3 | $W^{(3)}_{4i_1+2,4i_1+2,4i_1+6}$ | $W^{(3)}_{4i_1+6,4i_1+2,4i_1+6}$ | $\widetilde{W}^{(3)}_{4i_1+2,4i_1+6,4i_1+6}$ | $\widetilde{\widetilde{W}}^{(3)}_{4i_1+6,4i_1+2,4i_1+2}$ |

| $i_1$ | $i_2$ | | | |
|---|---|---|---|---|
| | **12** | **13** | **14** | **15** |
| 0-3 | $W^{(3)}_{4i_1+3,4i_1+3,4i_1+7}$ | $W^{(3)}_{4i_1+7,4i_1+3,4i_1+7}$ | $\widetilde{W}^{(3)}_{4i_1+3,4i_1+7,4i_1+7}$ | $\widetilde{\widetilde{W}}^{(3)}_{4i_1+7,4i_1+3,4i_1+3}$ |

where·

$$W^{(3)}_{m,m',m''} = \frac{1}{\sqrt{24}}\begin{bmatrix} v_m & v_{m'} & v_{m''} \\ v_m & -v_{m'} & -v_m \end{bmatrix}, \qquad \widetilde{W}^{(3)}_{m,m',m''} = \frac{1}{\sqrt{24}}\begin{bmatrix} v_m & v_{m'} & v_{m''} \\ v_m & v_{m'} & -v_m \end{bmatrix}$$

- First codebook $C_1$ and second codebook $C_2$ for rank 4:

| $i_1$ | $i_2$ | | | |
|---|---|---|---|---|
| | **0** | **1** | **2** | **3** |
| 0--3 | $W^{(4)}_{4i_1,4i_1+4,0}$ | $W^{(4)}_{4i_1,4i_1+4,1}$ | $W^{(4)}_{4i_1+1,4i_1+5,0}$ | $W^{(4)}_{4i_1+1,4i_1+5,1}$ |

| $i_1$ | $i_2$ | | | |
|---|---|---|---|---|
| | **4** | **5** | **6** | **7** |
| 0--3 | $W^{(4)}_{4i_1+2,4i_1+6,0}$ | $W^{(4)}_{4i_1+2,4i_1+6,1}$ | $W^{(4)}_{4i_1+3,4i_1+7,0}$ | $W^{(4)}_{4i_1+3,4i_1+7,1}$ |

where·

$$W^{(4)}_{m,m',n} = \frac{1}{\sqrt{32}}\begin{bmatrix} v_m & v_{m'} & v_m & v_{m'} \\ \varphi_n v_m & \varphi_n v_{m'} & -\varphi_n v_m & -\varphi_n v_{m'} \end{bmatrix}$$

- First codebook $C_1$ and second codebook $C_2$ for rank 5:

225

| $i_1$ | $i_2$ |
|---|---|
| | 0 |
| 0--3 | $W_{i_1}^{(5)} = \dfrac{1}{\sqrt{40}}\begin{bmatrix} v_{2i_1} & v_{2i_1} & v_{2i_1+8} & v_{2i_1+8} & v_{2i_1+16} \\ v_{2i_1} & -v_{2i_1} & v_{2i_1+8} & -v_{2i_1+8} & v_{2i_1+16} \end{bmatrix}$ |

- First codebook $C_1$ and second codebook $C_2$ for rank 6:

| $i_1$ | $i_2$ |
|---|---|
| | 0 |
| 0--3 | $W_{i_1}^{(6)} = \dfrac{1}{\sqrt{48}}\begin{bmatrix} v_{2i_1} & v_{2i_1} & v_{2i_1+8} & v_{2i_1+8} & v_{2i_1+16} & v_{2i_1+16} \\ v_{2i_1} & -v_{2i_1} & v_{2i_1+8} & -v_{2i_1+8} & v_{2i_1+16} & -v_{2i_1+16} \end{bmatrix}$ |

- First codebook $C_1$ and second codebook $C_2$ for rank 7:

| $i_1$ | $i_2$ |
|---|---|
| | 0 |
| 0--3 | $W_{i_1}^{(7)} = \dfrac{1}{\sqrt{56}}\begin{bmatrix} v_{2i_1} & v_{2i_1} & v_{2i_1+8} & v_{2i_1+8} & v_{2i_1+16} & v_{2i_1+16} & v_{2i_1+24} \\ v_{2i_1} & -v_{2i_1} & v_{2i_1+8} & -v_{2i_1+8} & v_{2i_1+16} & -v_{2i_1+16} & v_{2i_1+24} \end{bmatrix}$ |

- First codebook $C_1$ and second codebook $C_2$ for rank 8:

| $i_1$ | $i_2$ |
|---|---|
| | 0 |
| 0 | $W_{i_1}^{(8)} = \dfrac{1}{8}\begin{bmatrix} v_{2i_1} & v_{2i_1} & v_{2i_1+8} & v_{2i_1+8} & v_{2i_1+16} & v_{2i_1+16} & v_{2i_1+24} & v_{2i_1+24} \\ v_{2i_1} & -v_{2i_1} & v_{2i_1+8} & -v_{2i_1+8} & v_{2i_1+16} & -v_{2i_1+16} & v_{2i_1+24} & -v_{2i_1+24} \end{bmatrix}$ |

The aforementioned simple expression of the full first codebook $C_1$ and the full second codebook $C_2$ may also be applicable to the subset of the first codebook $C_1$ and the subset of the second codebook $C_2$.

A. Subset of first codebook and subset of second codebook for PUCCH 2-1 sub-mode 1:

i. For ranks 2, 3, and 4, when the subset of the first codebook includes four bits and the subset of the second codebook includes two bits:

The subset of the first codebook and the subset of the second codebook for rank r may be defined by selecting subsequent $i_1$ and/or $i_2$ from the full first codebook $C_1$ and the full second codebook $C_2$ for rank r that are described above.
For example, the following subset of the first codebook and the subset of the second codebook for rank 2 may be defined by selecting $i_2 = \{0,1,4,5\}$ or $\{0,2,4,6\}$ from the full first codebook $C_1$ and the full second codebook $C_2$ for rank 2.

1. For rank2:

$$i_2 = \{0,1,4,5\} \text{ or } \{0,2,4,6\}$$

2. For rank 3:

$$i_2 = \{0,4,8,12\} \text{ or } \{1,5,9,13\} \text{ or } \{2,6,10,14\} \text{ or } \{3,7,11,15\}$$

3. For rank 4:

$$i_2 = \{0,2,4,6\} \text{ or } \{0,1,4,5\} \text{ or } \{2,3,6,7\}$$

B. Subset of first codebook and subset of second codebook for PUCCH 1-1 sub-mode 2:

i. For ranks 3 and 4. when the subset of the first codebook includes a single bit and the subset of the second codebook includes three bits:

1. For rank 3:

$$i_1 = \{0,2\} \text{ or } \{1,3\}$$

$$i_2 = \{0,1,2,3,8,9,10,11\}$$

2. For rank 4:

$$i_1 = \{0,2\} \text{ or } \{1,3\}$$

$$i_2 = \{0,1,2,3,4,5,6,7\}$$

ii. When the subset of the first codebook includes two bits and the subset of the second codebook includes two bits:

1. For rank1:

$$i_1 = \{0,4,8,12\} \text{ or } \{2,6,10,14\}$$

$$i_2 = \{0,1,8,9\} \text{ or } \{4,5,12,13\} \text{ or } \{0,4,8,12\}$$

2. For rank 2:

$$i_1 = \{0,4,8,12\} \text{ or } \{2,6,10,14\}$$

$$i_2 = \{0,1,4,5\} \text{ or } \{2,3,6,7\} \text{ or } \{0,2,4,6\}$$

3. For rank 3:

$$i_1 = \{0,1,2,3\}$$

$$i_2 = \{0,4,8,12\} \text{ or } \{1,5,9,13\} \text{ or } \{2,6,10,14\} \text{ or } \{3,7,11,15\}$$

4. For rank 4:

$$i_1 = \{0,1,2,3\}$$

$$i_2 = \{0,2,4,6\} \text{ or } \{0,1,4,5\} \text{ or } \{2,3,6,7\}$$

iii. When the subset of the first codebook includes three bits and the subset of the second codebook includes a single bit:

1. For rank 1:

$$i_1 = \{0,2,4,6,8,10,12,14\}$$

$$i_2 = \{0,8\} \text{ or } \{0,1\} \text{ or } \{4,5\} \text{ or } \{8,9\} \text{ or } \{12,13\} \text{ or } \{0,2\} \text{ or } \{4,6\} \text{ or } \{8,10\} \text{ or } \{12,14\}$$

2. For rank 2:

$$i_1 = \{0, 2, 4, 6, 8, 10, 12, 14\}$$

$$i_2 = \{0,1\} \text{ or } \{2,3\} \text{ or } \{4,5\} \text{ or } \{6,7\} \text{ or } \{0,4\} \text{ or } \{2,6\}$$

3. For rank 3 and rank 4:

The subset $C_1$ of the first codebook and the subset $C_2$ of the second codebook for rank 3 and rank 4 may be the same as the subset $C_1$ of the two-bit first codebook and the subset $C_2$ of the two-bit second codebook that are described above.

iv. When the subset of the first codebook includes four bits and the subset of the second codebook includes zero bit:

1. For rank 1:

$$i_1 = \{0, 1, 2, ..., 16\}$$

$$i_2 = \{0\} \text{ or } \{4\} \text{ or } \{8\} \text{ or } \{12\}$$

or

$$i_1 = \{0, 2, 4, ..., 14\} \quad \text{with} \quad i_2 = \{0\} \quad \text{and} \quad i_1 = \{1, 3, 5, ..., 15\}$$

with

$$i_2 = \{2\}$$

2. For rank 2:

$$i_1 = \{0, 1, 2, ..., 16\}$$

$$i_2 = \{0\} \text{ or } \{2\} \text{ or } \{4\} \text{ or } \{6\}$$

3. For rank 3 and rank 4:

The subset $C_1$ of the first codebook and the subset $C_2$ of the second codebook for rank 3 and rank 4 may be the same as the subset $C_1$ of the two-bit first codebook and the subset $C_2$ of the two-bit second codebook that are described above.

C. Subset of first codebook for PUCCH 1-1 sub-mode 1 when a rank indicator and a first precoding matrix indicator are commonly encoded:

i. Five bits of common encoding of rank indicator and first precoding matrix indicator-example 1:

1. For rank 1 and rank 2:

$i_1 = \{0,2,4,...,14\}$ or $i_1 = \{1,3,5,...,15\}$

2. For rank 3 and rank 4:

$i_1 = \{0,2\}$ or $i_1 = \{1,3\}$

3. For rank 5 and rank 6:

$i_1 = \{0,1,2,3\}$

4. For rank 7:

$i_1 = \{0,1,2\}$

5. For rank 8:

$i_1 = \{0\}$

ii. Five bits of common encoding of rank indicator and first precoding matrix indicator-example 2:

1. For rank 1 and rank 2:

$i_1 = \{0,2,4,...,14\}$ or $i_1 = \{1,3,5,...,15\}$

2. For rank 3 and rank 4:

$i_1 = \{0,1,2, 3\}$

3. For rank 5 and rank 6:

$i_1 = \{0,1,2\}$

4. For rank 7:

$i_1 = \{0\}$

5. For rank 8:

$i_1 = \{0\}$
Description related to the subset of the first codebook and the subset of the second codebook varying based on a reporting mode is described above.
Detailed digits of the subset of the first codebook and the subset of the second codebook with respect to some reporting modes may follow as:

1. Subset of first codebook and subset of second codebook in PUCCH 1-1 sub-mode 2:

(1) For rank 1:

For example, when the subset of the first codebook includes three bits and the subset of the second codebook includes a single bit, the subset of the first codebook may include ans(;,;,n=1), ans(;,;,n=3), ans(;,;,n=5), ans(;,;,n=7), ans(;,;,n=9), ans(;,;,n=11), ans(;,;,n=13), and ans(;,;,n=15) that are described above.

That is, codewords included in the subset of the first codebook may be expressed as follows:

ans(:,:,1)=

columns 1-4

| 0.5000 | 0.5000 | 0.5000 | 0.5000 |
|--------|--------|--------|--------|
| 0.5000 | 0.4904 + 0.0975i | 0.4619 + 0.1913i | 0.4157 + 0.2778i |
| 0.5000 | 0.4619 + 0.1913i | 0.3536 + 0.3536i | 0.1913 + 0.4619i |
| 0.5000 | 0.4157 + 0.2778i | 0.1913 + 0.4619i | -0.0975 + 0.4904i |
| 0 | 0 | 0 | 0 |
| 0 | 0 | 0 | 0 |
| 0 | 0 | 0 | 0 |
| 0 | 0 | 0 | 0 |

columns 5-8

| 0 | 0 | 0 | 0 |
|---|---|---|---|

| 0 | 0 | 0 | 0 |
| 0 | 0 | 0 | 0 |
| 0 | 0 | 0 | 0 |
| 0.5000 | 0.5000 | 0.5000 | 0.5000 |
| 0.5000 | 0.4904 + 0.0975i | 0.4619 + 0.1913i | 0.4157 + 0.2778i |
| 0.5000 | 0.4619 + 0.1913i | 0.3536 + 0.3536i | 0.1913 + 0.4619i |
| 0.5000 | 0.4157 + 0.2778i | 0.1913 + 0.4619i | -0.0975 + 0.4904i |

ans(:,:,3) =

columns 1-4

| 0.5000 | 0.5000 | 0.5000 | 0.5000 |
| 0.3536 + 0.3536i | 0.2778 + 0.4157i | 0.1913 + 0.4619i | 0.0975 + 0.4904i |
| 0.0000 + 0.5000i | -0.1913 + 0.4619i | -0.3536 + 0.3536i | -0.4619 + 0.1913i |
| -0.3536 + 0.3536i | -0.4904 + 0.0975i | -0.4619 - 0.1913i | -0.2778 - 0.4157i |
| 0 | 0 | 0 | 0 |
| 0 | 0 | 0 | 0 |
| 0 | 0 | 0 | 0 |
| 0 | 0 | 0 | 0 |

columns 5-8

| 0 | 0 | 0 | 0 |
| 0 | 0 | 0 | 0 |
| 0 | 0 | 0 | 0 |
| 0 | 0 | 0 | 0 |
| 0.5000 | 0.5000 | 0.5000 | 0.5000 |
| 0.3536 + 0.3536i | 0.2778 + 0.4157i | 0.1913 + 0.4619i | 0.0975 + 0.4904i |
| 0.0000 + 0.5000i | -0.1913 + 0.4619i | -0.3536 + 0.3536i | -0.4619 + 0.1913i |
| -0.3536 + 0.3536i | -0.4904 + 0.0975i | -0.4619 - 0.1913i | -0.2778 - 0.4157i |

ans(:,:,5) =

columns 1-4

| 0.5000 | 0.5000 | 0.5000 | 0.5000 |
| 0.0000 + 0.5000i | -0.0975 + 0.4904i | -0.1913 + 0.4619i | -0.2778 + 0.4157i |

```
-0.5000 + 0.0000i    -0.4619 - 0.1913i    -0.3536 - 0.3536i    -0.1913 - 0.4619i
-0.0000 - 0.5000i     0.2778 - 0.4157i     0.4619 - 0.1913i     0.4904 + 0.0975i
       0                     0                     0                     0
       0                     0                     0                     0
       0                     0                     0                     0
       0                     0                     0                     0
```

columns 5-8

```
0                    0                    0                    0
0                    0                    0                    0
0                    0                    0                    0
0                    0                    0                    0
0.5000               0.5000               0.5000               0.5000
0.0000 + 0.5000i    -0.0975 + 0.4904i    -0.1913 + 0.4619i    -0.2778 + 0.4157i
-0.5000 + 0.0000i   -0.4619 - 0.1913i    -0.3536 - 0.3536i    -0.1913 - 0.4619i
-0.0000 - 0.5000i    0.2778 - 0.4157i     0.4619 - 0.1913i     0.4904 + 0.0975i
```

ans(:,:,7) =

columns 1-4

```
      0.5000               0.5000               0.5000               0.5000
     -0.3536 + 0.3536i    -0.4157 + 0.2778i    -0.4619 + 0.1913i    -0.4904 + 0.0975i
     -0.0000 - 0.5000i     0.1913 - 0.4619i     0.3536 - 0.3536i     0.4619 - 0.1913i
      0.3536 + 0.3536i     0.0975 + 0.4904i    -0.1913 + 0.4619i    -0.4157 + 0.2778i
       0                    0                    0                    0
       0                    0                    0                    0
       0                    0                    0                    0
       0                    0                    0                    0
```

columns 5-8

```
0                    0                    0                    0
0                    0                    0                    0
0                    0                    0                    0
0                    0                    0                    0
0.5000               0.5000               0.5000               0.5000
-0.3536 + 0.3536i   -0.4157 + 0.2778i    -0.4619 + 0.1913i    -0.4904 + 0.0975i
```

-0.0000 - 0.5000i    0.1913 - 0.4619i    0.3536 - 0.3536i    0.4619 - 0.1913i
0.3536 + 0.3536i    0.0975 + 0.4904i    -0.1913 + 0.4619i    -0.4157 + 0.2778i

ans(:,:,9) =

columns 1-4

| 0.5000 | 0.5000 | 0.5000 | 0.5000 |
|---|---|---|---|
| -0.5000 + 0.0000i | -0.4904 - 0.0975i | -0.4619 - 0.1913i | -0.4157 - 0.2778i |
| 0.5000 - 0.0000i | 0.4619 + 0.1913i | 0.3536 + 0.3536i | 0.1913 + 0.4619i |
| -0.5000 + 0.0000i | -0.4157 - 0.2778i | -0.1913 - 0.4619i | 0.0975 - 0.4904i |
| 0 | 0 | 0 | 0 |
| 0 | 0 | 0 | 0 |
| 0 | 0 | 0 | 0 |
| 0 | 0 | 0 | 0 |

columns 5-8

| 0 | 0 | 0 | 0 |
|---|---|---|---|
| 0 | 0 | 0 | 0 |
| 0 | 0 | 0 | 0 |
| 0 | 0 | 0 | 0 |
| 0.5000 | 0.5000 | 0.5000 | 0.5000 |
| -0.5000 + 0.0000i | -0.4904 - 0.0975i | -0.4619 - 0.1913i | -0.4157 - 0.2778i |
| 0.5000 - 0.0000i | 0.4619 + 0.1913i | 0.3536 + 0.3536i | 0.1913 + 0.4619i |
| -0.5000 + 0.0000i | -0.4157 - 0.2778i | -0.1913 - 0.4619i | 0.0975 - 0.4904i |

ans(:,:,11) =

columns 1-4

| 0.5000 | 0.5000 | 0.5000 | 0.5000 |
|---|---|---|---|
| -0.3536 - 0.3536i | -0.2778 - 0.4157i | -0.1913 - 0.4619i | -0.0975 - 0.4904i |
| 0.0000 + 0.5000i | -0.1913 + 0.4619i | -0.3536 + 0.3536i | -0.4619 + 0.1913i |
| 0.3536 - 0.3536i | 0.4904 - 0.0975i | 0.4619 + 0.1913i | 0.2778 + 0.4157i |
| 0 | 0 | 0 | 0 |
| 0 | 0 | 0 | 0 |

|   |   |   |   |
|---|---|---|---|
| 0 | 0 | 0 | 0 |
| 0 | 0 | 0 | 0 |

columns 5-8

|   |   |   |   |
|---|---|---|---|
| 0 | 0 | 0 | 0 |
| 0 | 0 | 0 | 0 |
| 0 | 0 | 0 | 0 |
| 0 | 0 | 0 | 0 |
| 0.5000 | 0.5000 | 0.5000 | 0.5000 |
| -0.3536 - 0.3536i | -0.2778 - 0.4157i | -0.1913 - 0.4619i | -0.0975 - 0.4904i |
| 0.0000 + 0.5000i | -0.1913 + 0.4619i | -0.3536 + 0.3536i | -0.4619 + 0.1913i |
| 0.3536 - 0.3536i | 0.4904 - 0.0975i | 0.4619 + 0.1913i | 0.2778 + 0.4157i |

ans(:,:,13) =

columns 1-4

|   |   |   |   |
|---|---|---|---|
| 0.5000 | 0.5000 | 0.5000 | 0.5000 |
| -0.0000 - 0.5000i | 0.0975 - 0.4904i | 0.1913 - 0.4619i | 0.2778 - 0.4157i |
| -0.5000 + 0.0000i | -0.4619 - 0.1913i | -0.3536 - 0.3536i | -0.1913 - 0.4619i |
| 0.0000 + 0.5000i | -0.2778 + 0.4157i | -0.4619 + 0.1913i | -0.4904 - 0.0975i |
| 0 | 0 | 0 | 0 |
| 0 | 0 | 0 | 0 |
| 0 | 0 | 0 | 0 |
| 0 | 0 | 0 | 0 |

columns 5-8

|   |   |   |   |
|---|---|---|---|
| 0 | 0 | 0 | 0 |
| 0 | 0 | 0 | 0 |
| 0 | 0 | 0 | 0 |
| 0 | 0 | 0 | 0 |
| 0.5000 | 0.5000 | 0.5000 | 0.5000 |
| -0.0000 - 0.5000i | 0.0975 - 0.4904i | 0.1913 - 0.4619i | 0.2778 - 0.4157i |
| -0.5000 + 0.0000i | -0.4619 - 0.1913i | -0.3536 - 0.3536i | -0.1913 - 0.4619i |
| 0.0000 + 0.5000i | -0.2778 + 0.4157i | -0.4619 + 0.1913i | -0.4904 - 0.0975i |

ans(:,:,15) =

columns 1-4

| 0.5000 | 0.5000 | 0.5000 | 0.5000 |
| 0.3536 - 0.3536i | 0.4157 - 0.2778i | 0.4619 - 0.1913i | 0.4904 - 0.0975i |
| -0.0000 - 0.5000i | 0.1913 - 0.4619i | 0.3536 - 0.3536i | 0.4619 - 0.1913i |
| -0.3536 - 0.3536i | -0.0975 - 0.4904i | 0.1913 - 0.4619i | 0.4157 - 0.2778i |
| 0 | 0 | 0 | 0 |
| 0 | 0 | 0 | 0 |
| 0 | 0 | 0 | 0 |
| 0 | 0 | 0 | 0 |

columns 5-8

| 0 | 0 | 0 | 0 |
| 0 | 0 | 0 | 0 |
| 0 | 0 | 0 | 0 |
| 0 | 0 | 0 | 0 |
| 0.5000 | 0.5000 | 0.5000 | 0.5000 |
| 0.3536 - 0.3536i | 0.4157 - 0.2778i | 0.4619 - 0.1913i | 0.4904 - 0.0975i |
| -0.0000 - 0.5000i | 0.1913 - 0.4619i | 0.3536 - 0.3536i | 0.4619 - 0.1913i |
| -0.3536 - 0.3536i | -0.0975 - 0.4904i | 0.1913 - 0.4619i | 0.4157 - 0.2778i |

The subset of the second codebook may include (:,:,n=1) and (:,:,n=3) for rank 1 that are described above.

That is, codewords included in the subset of the second codebook may be expressed as follows:

$$(:,:,1) =$$

$$0.7071$$
$$0$$
$$0$$
$$0$$
$$0.7071$$
$$0$$
$$0$$
$$0$$

$$(:,:,3) =$$

$$0.7071$$
$$0$$
$$0$$
$$0$$
$$-0.7071$$
$$0$$
$$0$$
$$0$$

A combination of a first precoding matrix indicator selected from the subset of the first codebook and a second precoding matrix indicator selected from the subset of the second codebook may indicate one of precoding matrix candidates disclosed in the following overall codebook.

$\mathrm{ans}(:,:,1,1) =$

ans(:,:,1,1) =

0.3536
0.3536
0.3536
0.3536
0.3536
0.3536
0.3536
0.3536

ans(:,:,3,1) =

0.3536
0.2500 + 0.2500i
0.0000 + 0.3536i
-0.2500 + 0.2500i
0.3536

0.2500 + 0.2500i
0.0000 + 0.3536i
-0.2500 + 0.2500i

ans(:,:,5,1) =

0.3536
0.0000 + 0.3536i
-0.3536 + 0.0000i
-0.0000 - 0.3536i
0.3536
0.0000 + 0.3536i
-0.3536 + 0.0000i
-0.0000 - 0.3536i

ans(:,:,7,1) =

```
   0.3536
  -0.2500 + 0.2500i
  -0.0000 - 0.3536i
   0.2500 + 0.2500i
   0.3536
  -0.2500 + 0.2500i
  -0.0000 - 0.3536i
   0.2500 + 0.2500i
```

ans(:,:,9,1) =

```
   0.3536
  -0.3536 + 0.0000i
   0.3536 - 0.0000i
  -0.3536 + 0.0000i
   0.3536
  -0.3536 + 0.0000i
   0.3536 - 0.0000i
  -0.3536 + 0.0000i
```

ans(:,:,11,1) =

```
 0.3536
-0.2500 - 0.2500i
 0.0000 + 0.3536i
 0.2500 - 0.2500i
 0.3536
-0.2500 - 0.2500i
 0.0000 + 0.3536i
 0.2500 - 0.2500i
```

ans(:,:,13,1) =

```
 0.3536
-0.0000 - 0.3536i
-0.3536 + 0.0000i
 0.0000 + 0.3536i
 0.3536
-0.0000 - 0.3536i
-0.3536 + 0.0000i
 0.0000 + 0.3536i
```

ans(:,:,15,1) =

```
 0.3536
 0.2500 - 0.2500i
-0.0000 - 0.3536i
-0.2500 - 0.2500i
 0.3536
 0.2500 - 0.2500i
-0.0000 - 0.3536i

-0.2500 - 0.2500i
```

ans(:,:,1,3) =

0.3536
0.3536
0.3536
0.3536
-0.3536
-0.3536
-0.3536
-0.3536

ans(:,:,3,3) =

0.3536
0.2500 + 0.2500i
0.0000 + 0.3536i
-0.2500 + 0.2500i
-0.3536
-0.2500 - 0.2500i
-0.0000 - 0.3536i
0.2500 - 0.2500i

ans(:,:,5,3) =

0.3536
0.0000 + 0.3536i
-0.3536 + 0.0000i
- 0.0000 - 0.3536i
-0.3536
-0.0000 - 0.3536i
0.3536 - 0.0000i
0.0000 + 0.3536i

ans(:,:,7,3) =

```
    0.3536
-0.2500 + 0.2500i
-0.0000 - 0.3536i
    0.2500 + 0.2500i
-0.3536
    0.2500 - 0.2500i
    0.0000 + 0.3536i
-0.2500 - 0.2500i
```


ans(:,:,9,3) =

```
    0.3536
-0.3536 + 0.0000i
    0.3536 - 0.0000i
-0.3536 + 0.0000i
-0.3536
    0.3536 - 0.0000i
-0.3536 + 0.0000i
    0.3536 - 0.0000i
```


ans(:,:,11,3) =

```
    0.3536
-0.2500 - 0.2500i
    0.0000 + 0.3536i
    0.2500 - 0.2500i
-0.3536
    0.2500 + 0.2500i
-0.0000 - 0.3536i
-0.2500 + 0.2500i
```


ans(:,:,13,3) =

```
    0.3536
-0.0000 - 0.3536i
-0.3536 + 0.0000i
```

$$0.0000 + 0.3536i$$
$$-0.3536$$
$$0.0000 + 0.3536i$$
$$0.3536 - 0.0000i$$
$$-0.0000 - 0.3536i$$

$$\text{ans}(:,:,15,3) =$$

$$0.3536$$
$$0.2500 - 0.2500i$$
$$-0.0000 - 0.3536i$$
$$-0.2500 - 0.2500i$$
$$-0.3536$$
$$-0.2500 + 0.2500i$$
$$0.0000 + 0.3536i$$

$$0.2500 + 0.2500i$$

As described above, in PUCCH 1-1 sub-mode 2, the subset of the first codebook and the subset of the second codebook for rank 1 may be variuosly determined and thus, the overall codebook may also be determined to be different from Table 1.

(2) For rank 2:

For example, when the subset of the first codebook includes three bits and the subset of the second codebook includes a single bit, the subset of the first codebook may include ans(;,;,n=1), ans(;,;,n=3), ans(;,;,n=5), ans(;,;,n=7), ans(;,;,n=9), ans(;,;,n=11), ans(;,;,n=13), and ans(;,;,n=15) that are described above. Detailed digits of codewords included in the subset of the first codebook are described above. The subset of the second codebook may include (;,;,n=1) and (;,;,n=2) for rank 2 that are described above.

That is, the codewords included in the subset of the second codebook may be expressed as follows:

$$(:,:,1) =$$

$$0.5000 \qquad 0.5000$$

$$0 \qquad 0$$
$$0 \qquad 0$$
$$0 \qquad 0$$
$$0.5000 \quad -0.5000$$
$$0 \qquad 0$$
$$0 \qquad 0$$
$$0 \qquad 0$$

$$(:,:,2) =$$

| | |
|---|---|
| 0.5000 | 0.5000 |
| 0 | 0 |
| 0 | 0 |
| 0 | 0 |
| 0 + 0.5000i | 0 - 0.5000i |
| 0 | 0 |
| 0 | 0 |
| 0 | 0 |

The combination of the first precoding matrix indicator selected from the subset of the first codebook and the second precoding matrix indicator selected from the subset of the second codebook may indicate one of precoding matrix candidates disclosed in the following overall codebook.

$$ans(:,:,1,1) =$$

| | |
|---|---|
| 0.2500 | 0.2500 |
| 0.2500 | 0.2500 |
| 0.2500 | 0.2500 |
| 0.2500 | 0.2500 |
| 0.2500 | -0.2500 |
| 0.2500 | -0.2500 |
| 0.2500 | -0.2500 |
| 0.2500 | -0.2500 |

$$ans(:,:,3,1) =$$

```
        0.2500              0.2500
    0.1768 + 0.1768i    0.1768 + 0.1768i
    0.0000 + 0.2500i    0.0000 + 0.2500i
   -0.1768 + 0.1768i   -0.1768 + 0.1768i
        0.2500             -0.2500
    0.1768 + 0.1768i   -0.1768 - 0.1768i
    0.0000 + 0.2500i   -0.0000 - 0.2500i
   -0.1768 + 0.1768i    0.1768 - 0.1768i
```

ans(:,:,5,1) =

```
        0.2500              0.2500
    0.0000 + 0.2500i    0.0000 + 0.2500i
   -0.2500 + 0.0000i   -0.2500 + 0.0000i
   -0.0000 - 0.2500i   -0.0000 - 0.2500i
        0.2500             -0.2500
    0.0000 + 0.2500i   -0.0000 - 0.2500i
   -0.2500 + 0.0000i    0.2500 - 0.0000i
   -0.0000 - 0.2500i    0.0000 + 0.2500i
```

ans(:,:,7,1) =

```
        0.2500              0.2500
   -0.1768 + 0.1768i   -0.1768 + 0.1768i
   -0.0000 - 0.2500i   -0.0000 - 0.2500i
    0.1768 + 0.1768i    0.1768 + 0.1768i
        0.2500             -0.2500
   -0.1768 + 0.1768i    0.1768 - 0.1768i
   -0.0000 - 0.2500i    0.0000 + 0.2500i
    0.1768 + 0.1768i   -0.1768 - 0.1768i
```

ans(:,:,9,1) =

```
        0.2500              0.2500
   -0.2500 + 0.0000i   -0.2500 + 0.0000i
```

```
0.2500 - 0.0000i    0.2500 - 0.0000i
-0.2500 + 0.0000i   -0.2500 + 0.0000i
0.2500              -0.2500
-0.2500 + 0.0000i   0.2500 - 0.0000i
0.2500 - 0.0000i    -0.2500 + 0.0000i
-0.2500 + 0.0000i   0.2500 - 0.0000i
```

ans(:,:,11,1) =

```
0.2500              0.2500
-0.1768 - 0.1768i   -0.1768 - 0.1768i
0.0000 + 0.2500i    0.0000 + 0.2500i
0.1768 - 0.1768i    0.1768 - 0.1768i
0.2500              -0.2500
-0.1768 - 0.1768i   0.1768 + 0.1768i
0.0000 + 0.2500i    -0.0000 - 0.2500i
0.1768 - 0.1768i    -0.1768 + 0.1768i
```

ans(:,:,13,1) =

```
0.2500              0.2500
-0.0000 - 0.2500i   -0.0000 - 0.2500i
-0.2500 + 0.0000i   -0.2500 + 0.0000i
0.0000 + 0.2500i    0.0000 + 0.2500i
0.2500              -0.2500
-0.0000 - 0.2500i   0.0000 + 0.2500i
-0.2500 + 0.0000i   0.2500 - 0.0000i
0.0000 + 0.2500i    -0.0000 - 0.2500i
```

ans(:,:,15,1) =

```
0.2500              0.2500
0.1768 - 0.1768i    0.1768 - 0.1768i
-0.0000 - 0.2500i   -0.0000 - 0.2500i
-0.1768 - 0.1768i   -0.1768 - 0.1768i
0.2500              -0.2500
```

```
0.1768 - 0.1768i   -0.1768 + 0.1768i
-0.0000 - 0.2500i    0.0000 + 0.2500i

  - 0.1768 - 0.1768i    0.1768 + 0.1768i
```

ans(:,:,1,2) =

```
0.2500            0.2500
0.2500            0.2500
0.2500            0.2500
0.2500            0.2500
    0 + 0.2500i       0 - 0.2500i
    0 + 0.2500i       0 - 0.2500i
    0 + 0.2500i       0 - 0.2500i
    0 + 0.2500i       0 - 0.2500i
```

ans(:,:,3,2) =

```
0.2500            0.2500
0.1768 + 0.1768i   0.1768 + 0.1768i
0.0000 + 0.2500i   0.0000 + 0.2500i
-0.1768 + 0.1768i  -0.1768 + 0.1768i
    0 + 0.2500i        0 - 0.2500i
-0.1768 + 0.1768i   0.1768 - 0.1768i
-0.2500 + 0.0000i   0.2500 - 0.0000i
-0.1768 - 0.1768i   0.1768 + 0.1768i
```

ans(:,:,5,2) =

```
0.2500            0.2500
0.0000 + 0.2500i   0.0000 + 0.2500i
-0.2500 + 0.0000i  -0.2500 + 0.0000i
-0.0000 - 0.2500i  -0.0000 - 0.2500i
    0 + 0.2500i        0 - 0.2500i
-0.2500 + 0.0000i   0.2500 - 0.0000i
-0.0000 - 0.2500i   0.0000 + 0.2500i
```

246

0.2500 - 0.0000i   -0.2500 + 0.0000i

ans(:,:,7,2) =

```
 0.2500            0.2500
-0.1768 + 0.1768i  -0.1768 + 0.1768i
-0.0000 - 0.2500i  -0.0000 - 0.2500i
 0.1768 + 0.1768i   0.1768 + 0.1768i
      0 + 0.2500i        0 - 0.2500i
-0.1768 - 0.1768i   0.1768 + 0.1768i
 0.2500 - 0.0000i  -0.2500 + 0.0000i
-0.1768 + 0.1768i   0.1768 - 0.1768i
```

ans(:,:,9,2) =

```
 0.2500            0.2500
-0.2500 + 0.0000i  -0.2500 + 0.0000i
 0.2500 - 0.0000i   0.2500 - 0.0000i
-0.2500 + 0.0000i  -0.2500 + 0.0000i
      0 + 0.2500i        0 - 0.2500i
-0.0000 - 0.2500i   0.0000 + 0.2500i
 0.0000 + 0.2500i  -0.0000 - 0.2500i
-0.0000 - 0.2500i   0.0000 + 0.2500i
```

ans(:,:,11,2) =

```
 0.2500            0.2500
-0.1768 - 0.1768i  -0.1768 - 0.1768i
 0.0000 + 0.2500i   0.0000 + 0.2500i
 0.1768 - 0.1768i   0.1768 - 0.1768i
      0 + 0.2500i        0 - 0.2500i
 0.1768 - 0.1768i  -0.1768 + 0.1768i
-0.2500 + 0.0000i   0.2500 - 0.0000i
 0.1768 + 0.1768i  -0.1768 - 0.1768i
```

$$\mathrm{ans}(:,:,13,2) =$$

$$
\begin{array}{ll}
0.2500 & 0.2500 \\
-0.0000 - 0.2500i & -0.0000 - 0.2500i \\
-0.2500 + 0.0000i & -0.2500 + 0.0000i \\
0.0000 + 0.2500i & 0.0000 + 0.2500i \\
0 + 0.2500i & 0 - 0.2500i \\
0.2500 - 0.0000i & -0.2500 + 0.0000i \\
-0.0000 - 0.2500i & 0.0000 + 0.2500i \\
-0.2500 + 0.0000i & 0.2500 - 0.0000i
\end{array}
$$

$$\mathrm{ans}(:,:,15,2) =$$

$$
\begin{array}{ll}
0.2500 & 0.2500 \\
0.1768 - 0.1768i & 0.1768 - 0.1768i \\
-0.0000 - 0.2500i & -0.0000 - 0.2500i \\
-0.1768 - 0.1768i & -0.1768 - 0.1768i \\
0 + 0.2500i & 0 - 0.2500i \\
0.1768 + 0.1768i & -0.1768 - 0.1768i \\
0.2500 - 0.0000i & -0.2500 + 0.0000i \\
0.1768 - 0.1768i & -0.1768 + 0.1768i
\end{array}
$$

FIG. 5 illustrates an example of a communication method of a transmitter and a receiver that operate in PUCCH 1-1 sub-mode 2.

At 510, the transmitter and the receiver may determine a subset of a first codebook and a subset of a second codebook that are described above. The subset of the first codebook and the subset of the second codebook may be individually stored in the transmitter and the receiver. The overall codebook in which the subset of the first codebook and the subset of the second codebook are integrated may be stored in the transmitter and the receiver.

At 520, the receiver may select a single codeword from the subset of the first codebook or the overall codebook and extract the selected codeword as a first precoding matrix indicator, and may select a single codeword from the subset of the second codebook or the overall codebook and extract the selected codeword as the second precoding matrix indicator.

At 530, the receiver may feed back the first precoding matrix indicator and the second precoding matrix indicator to the transmitter. The receiver may further feed back a rank indicator and CQI_s.

At 540, the transmitter may calculate W by performing inner product between $W_1$ and $W_2$. $W_1$ may be present in the subset of the first codebook and be indicated by the first precoding matrix indicator, and $W_2$ may be present in the subset of the second codebook and be indicated by the second precoding matrix indicator.

At 550, the transmitter may precode a data stream based on the precoding matrix W. At 560, the transmitter may transmit data.

2. Subset of first codebook and subset of second codebook in PUCCH 2-1 sub-mode 1, 2:

(1) For rank 2:

For example, the subset of the first codebook may include ans(:,:,n=1), ans(:,:,n=2), ans(:,:,n=3), ... , ans(:,:,n=16) for rank 2 that are described above.

The subset of the second codebook may include (:,:, n=1), (:,:, n=3), (:,:, n=5), and (:,:, n=7) for rank 2 that are described above. That is, detailed codewords of the subset of the second codebook may be expressed as follows:

$$(:,:,1) =$$

$$\begin{matrix} 0.5000 & 0.5000 \\ 0 & 0 \\ 0 & 0 \\ 0 & 0 \\ 0.5000 & -0.5000 \\ 0 & 0 \\ 0 & 0 \\ 0 & 0 \end{matrix}$$

$$(:,:,3) =$$

$$\begin{matrix} 0 & 0 \\ 0.5000 & 0.5000 \\ 0 & 0 \\ 0 & 0 \\ 0 & 0 \\ 0.5000 & -0.5000 \\ 0 & 0 \\ 0 & 0 \end{matrix}$$

$$(:,:,5) =$$

$$\begin{matrix} 0 & 0 \\ 0 & 0 \\ 0.5000 & 0.5000 \\ 0 & 0 \\ 0 & 0 \\ 0 & 0 \\ 0.5000 & -0.5000 \\ 0 & 0 \end{matrix}$$

$$(:,:,7) =$$

$$\begin{matrix} 0 & 0 \\ 0 & 0 \\ 0 & 0 \\ 0.5000 & 0.5000 \\ 0 & 0 \\ 0 & 0 \\ 0 & 0 \\ 0.5000 & -0.5000 \end{matrix}$$

The combination of the first precoding matrix indicator selected from the subset of the first codebook and the second precoding matrix indicator selected from the subset of the second codebook may indicate one of precoding matrix candidates disclosed in the following overall codebook.

ans(:,:,1,1) =

```
0.2500     0.2500
0.2500     0.2500
0.2500     0.2500
0.2500     0.2500
0.2500    -0.2500
0.2500    - 0.2500
0.2500    -0.2500
0.2500    -0.2500
```

ans(:,:,2,1) =

```
0.2500              0.2500
0.2310 + 0.0957i    0.2310 + 0.0957i
0.1768 + 0.1768i    0.1768 + 0.1768i
0.0957 + 0.2310i    0.0957 + 0.2310i
0.2500             -0.2500
0.2310 + 0.0957i   -0.2310 - 0.0957i
0.1768 + 0.1768i   -0.1768 - 0.1768i
0.0957 + 0.2310i   -0.0957 - 0.2310i
```

ans(:,:,3,1) =

```
0.2500              0.2500
0.1768 + 0.1768i    0.1768 + 0.1768i
0.0000 + 0.2500i    0.0000 + 0.2500i
-0.1768 + 0.1768i  -0.1768 + 0.1768i
0.2500             -0.2500
0.1768 + 0.1768i   -0.1768 - 0.1768i
0.0000 + 0.2500i   -0.0000 - 0.2500i
-0.1768 + 0.1768i   0.1768 - 0.1768i
```

ans(:,:,4,1) =

```
 0.2500              0.2500
 0.0957 + 0.2310i    0.0957 + 0.2310i
-0.1768 + 0.1768i   -0.1768 + 0.1768i
-0.2310 - 0.0957i   -0.2310 - 0.0957i
 0.2500             -0.2500
 0.0957 + 0.2310i   -0.0957 - 0.2310i
-0.1768 + 0.1768i    0.1768 - 0.1768i
-0.2310 - 0.0957i    0.2310 + 0.0957i
```

ans(:,:,5,1) =

```
 0.2500              0.2500
 0.0000 + 0.2500i    0.0000 + 0.2500i
-0.2500 + 0.0000i   -0.2500 + 0.0000i
-0.0000 - 0.2500i   -0.0000 - 0.2500i
 0.2500             -0.2500
 0.0000 + 0.2500i   -0.0000 - 0.2500i
-0.2500 + 0.0000i    0.2500 - 0.0000i
-0.0000 - 0.2500i    0.0000 + 0.2500i
```

ans(:,:,6,1) =

```
 0.2500              0.2500
-0.0957 + 0.2310i   -0.0957 + 0.2310i
-0.1768 - 0.1768i   -0.1768 - 0.1768i
 0.2310 - 0.0957i    0.2310 - 0.0957i
 0.2500             -0.2500
-0.0957 + 0.2310i    0.0957 - 0.2310i
-0.1768 - 0.1768i    0.1768 + 0.1768i
 0.2310 - 0.0957i   -0.2310 + 0.0957i
```

ans(:,:,7,1) =

```
 0.2500              0.2500
-0.1768 + 0.1768i   -0.1768 + 0.1768i
-0.0000 - 0.2500i   -0.0000 - 0.2500i
 0.1768 + 0.1768i    0.1768 + 0.1768i
 0.2500             -0.2500
-0.1768 + 0.1768i    0.1768 - 0.1768i
-0.0000 - 0.2500i    0.0000 + 0.2500i
 0.1768 + 0.1768i   -0.1768 - 0.1768i
```

ans(:,:,8,1) =

```
 0.2500              0.2500
-0.2310 + 0.0957i   -0.2310 + 0.0957i
 0.1768 - 0.1768i    0.1768 - 0.1768i
-0.0957 + 0.2310i   -0.0957 + 0.2310i
 0.2500             -0.2500
-0.2310 + 0.0957i    0.2310 - 0.0957i
 0.1768 - 0.1768i   -0.1768 + 0.1768i
-0.0957 + 0.2310i    0.0957 - 0.2310i
```

ans(:,:,9,1) =

```
 0.2500              0.2500
-0.2500 + 0.0000i   -0.2500 + 0.0000i
 0.2500 - 0.0000i    0.2500 - 0.0000i
-0.2500 + 0.0000i   -0.2500 + 0.0000i
 0.2500             -0.2500
-0.2500 + 0.0000i    0.2500 - 0.0000i
 0.2500 - 0.0000i   -0.2500 + 0.0000i
-0.2500 + 0.0000i    0.2500 - 0.0000i
```

ans(:,:,10,1) =

```
 0.2500              0.2500
-0.2310 - 0.0957i   -0.2310 - 0.0957i
 0.1768 + 0.1768i    0.1768 + 0.1768i
```

```
-0.0957 - 0.2310i   -0.0957 - 0.2310i
 0.2500             -0.2500
-0.2310 - 0.0957i    0.2310 + 0.0957i
 0.1768 + 0.1768i   -0.1768 - 0.1768i
-0.0957 - 0.2310i    0.0957 + 0.2310i
```

ans(:,:,11,1) =

```
 0.2500             0.2500
-0.1768 - 0.1768i   -0.1768 - 0.1768i
 0.0000 + 0.2500i    0.0000 + 0.2500i
 0.1768 - 0.1768i    0.1768 - 0.1768i
 0.2500             -0.2500
-0.1768 - 0.1768i    0.1768 + 0.1768i
 0.0000 + 0.2500i   -0.0000 - 0.2500i
 0.1768 - 0.1768i   -0.1768 + 0.1768i
```

ans(:,:,12,1) =

```
 0.2500             0.2500
-0.0957 - 0.2310i   -0.0957 - 0.2310i
-0.1768 + 0.1768i   -0.1768 + 0.1768i
 0.2310 + 0.0957i    0.2310 + 0.0957i
 0.2500             -0.2500
-0.0957 - 0.2310i    0.0957 + 0.2310i
-0.1768 + 0.1768i    0.1768 - 0.1768i
 0.2310 + 0.0957i   -0.2310 - 0.0957i
```

ans(:,:,13,1) =

```
 0.2500             0.2500
-0.0000 - 0.2500i   -0.0000 - 0.2500i
-0.2500 + 0.0000i   -0.2500 + 0.0000i
 0.0000 + 0.2500i    0.0000 + 0.2500i
 0.2500             -0.2500
-0.0000 - 0.2500i    0.0000 + 0.2500i
```

```
-0.2500 + 0.0000i    0.2500 - 0.0000i
 0.0000 + 0.2500i   -0.0000 - 0.2500i


ans(:,:,14,1) =

 0.2500              0.2500
 0.0957 - 0.2310i    0.0957 - 0.2310i
-0.1768 - 0.1768i   -0.1768 - 0.1768i
-0.2310 + 0.0957i   -0.2310 + 0.0957i
 0.2500             -0.2500
 0.0957 - 0.2310i   -0.0957 + 0.2310i
-0.1768 - 0.1768i    0.1768 + 0.1768i
-0.2310 + 0.0957i    0.2310 - 0.0957i


ans(:,:,15,1) =

 0.2500              0.2500
 0.1768 - 0.1768i    0.1768 - 0.1768i
-0.0000 - 0.2500i   -0.0000 - 0.2500i
-0.1768 - 0.1768i   -0.1768 - 0.1768i
 0.2500             -0.2500
 0.1768 - 0.1768i   -0.1768 + 0.1768i
-0.0000 - 0.2500i    0.0000 + 0.2500i
-0.1768 - 0.1768i    0.1768 + 0.1768i


ans(:,:,16,1) =

 0.2500              0.2500
 0.2310 - 0.0957i    0.2310 - 0.0957i
 0.1768 - 0.1768i    0.1768 - 0.1768i
 0.0957 - 0.2310i    0.0957 - 0.2310i
 0.2500             -0.2500
 0.2310 - 0.0957i   -0.2310 + 0.0957i
 0.1768 - 0.1768i   -0.1768 + 0.1768i
 0.0957 - 0.2310i   -0.0957 + 0.2310i


ans(:,:,1,3) =

 0.2500              0.2500
 0.2452 + 0.0488i    0.2452 + 0.0488i
 0.2310 + 0.0957i    0.2310 + 0.0957i
 0.2079 + 0.1389i    0.2079 + 0.1389i
 0.2500             -0.2500
 0.2452 + 0.0488i   -0.2452 - 0.0488i
 0.2310 + 0.0957i   -0.2310 - 0.0957i
 0.2079 + 0.1389i   -0.2079 - 0.1389i
```

ans(:,:,2,3) =

|  |  |
| --- | --- |
| 0.2500 | 0.2500 |
| 0.2079 + 0.1389i | 0.2079 + 0.1389i |
| 0.0957 + 0.2310i | 0.0957 + 0.2310i |
| -0.0488 + 0.2452i | -0.0488 + 0.2452i |
| 0.2500 | -0.2500 |
| 0.2079 + 0.1389i | -0.2079 - 0.1389i |
| 0.0957 + 0.2310i | -0.0957 - 0.2310i |
| -0.0488 + 0.2452i | 0.0488 - 0.2452i |

ans(:,:,3,3) =

|  |  |
| --- | --- |
| 0.2500 | 0.2500 |
| 0.1389 + 0.2079i | 0.1389 + 0.2079i |
| -0.0957 + 0.2310i | -0.0957 + 0.2310i |
| -0.2452 + 0.0488i | -0.2452 + 0.0488i |
| 0.2500 | -0.2500 |
| 0.1389 + 0.2079i | -0.1389 - 0.2079i |
| -0.0957 + 0.2310i | 0.0957 - 0.2310i |
| -0.2452 + 0.0488i | 0.2452 - 0.0488i |

ans(:,:,4,3) =

|  |  |
| --- | --- |
| 0.2500 | 0.2500 |
| 0.0488 + 0.2452i | 0.0488 + 0.2452i |
| -0.2310 + 0.0957i | -0.2310 + 0.0957i |
| -0.1389 - 0.2079i | -0.1389 - 0.2079i |
| 0.2500 | -0.2500 |
| 0.0488 + 0.2452i | -0.0488 - 0.2452i |
| -0.2310 + 0.0957i | 0.2310 - 0.0957i |
| -0.1389 - 0.2079i | 0.1389 + 0.2079i |

ans(:,:,5,3) =

|  |  |
| --- | --- |
| 0.2500 | 0.2500 |
| -0.0488 + 0.2452i | -0.0488 + 0.2452i |
| -0.2310 - 0.0957i | -0.2310 - 0.0957i |
| 0.1389 - 0.2079i | 0.1389 - 0.2079i |
| 0.2500 | -0.2500 |
| -0.0488 + 0.2452i | 0.0488 - 0.2452i |
| -0.2310 - 0.0957i | 0.2310 + 0.0957i |
| 0.1389 - 0.2079i | -0.1389 + 0.2079i |

ans(:,:,6,3) =

```
   0.2500             0.2500
-0.1389 + 0.2079i   -0.1389 + 0.2079i
-0.0957 - 0.2310i   -0.0957 - 0.2310i
 0.2452 + 0.0488i    0.2452 + 0.0488i
   0.2500            -0.2500
-0.1389 + 0.2079i    0.1389 - 0.2079i
-0.0957 - 0.2310i    0.0957 + 0.2310i
 0.2452 + 0.0488i   -0.2452 - 0.0488i
```

ans(:,:,7,3) =

```
   0.2500             0.2500
-0.2079 + 0.1389i   -0.2079 + 0.1389i
 0.0957 - 0.2310i    0.0957 - 0.2310i


 0.0488 + 0.2452i    0.0488 + 0.2452i
   0.2500            -0.2500
-0.2079 + 0.1389i    0.2079 - 0.1389i
 0.0957 - 0.2310i   -0.0957 + 0.2310i
 0.0488 + 0.2452i   -0.0488 - 0.2452i
```

ans(:,:,8,3) =

```
   0.2500             0.2500
-0.2452 + 0.0488i   -0.2452 + 0.0488i
 0.2310 - 0.0957i    0.2310 - 0.0957i
-0.2079 + 0.1389i   -0.2079 + 0.1389i
   0.2500            -0.2500
-0.2452 + 0.0488i    0.2452 - 0.0488i
 0.2310 - 0.0957i   -0.2310 + 0.0957i
-0.2079 + 0.1389i    0.2079 - 0.1389i
```

ans(:,:,9,3) =

```
   0.2500             0.2500
-0.2452 - 0.0488i   -0.2452 - 0.0488i
 0.2310 + 0.0957i    0.2310 + 0.0957i
-0.2079 - 0.1389i   -0.2079 - 0.1389i
   0.2500            -0.2500
-0.2452 - 0.0488i    0.2452 + 0.0488i
 0.2310 + 0.0957i   -0.2310 - 0.0957i
-0.2079 - 0.1389i    0.2079 + 0.1389i
```

ans(:,:,10,3) =

```
    0.2500             0.2500
 -0.2079 - 0.1389i  -0.2079 - 0.1389i
  0.0957 + 0.2310i   0.0957 + 0.2310i
  0.0488 - 0.2452i   0.0488 - 0.2452i
  0.2500            -0.2500
 -0.2079 - 0.1389i   0.2079 + 0.1389i


  0.0957 + 0.2310i  -0.0957 - 0.2310i
  0.0488 - 0.2452i  -0.0488 + 0.2452i
```

ans(:,:,11,3) =

```
    0.2500             0.2500
 -0.1389 - 0.2079i  -0.1389 - 0.2079i
 -0.0957 + 0.2310i  -0.0957 + 0.2310i
  0.2452 - 0.0488i   0.2452 - 0.0488i
  0.2500            -0.2500
 -0.1389 - 0.2079i   0.1389 + 0.2079i
 -0.0957 + 0.2310i   0.0957 - 0.2310i
  0.2452 - 0.0488i  -0.2452 + 0.0488i
```

ans(:,:,12,3) =

```
    0.2500             0.2500
 -0.0488 - 0.2452i  -0.0488 - 0.2452i
 -0.2310 + 0.0957i  -0.2310 + 0.0957i
  0.1389 + 0.2079i   0.1389 + 0.2079i
  0.2500            -0.2500
 -0.0488 - 0.2452i   0.0488 + 0.2452i
 -0.2310 + 0.0957i   0.2310 - 0.0957i
  0.1389 + 0.2079i  -0.1389 - 0.2079i
```

ans(:,:,13,3) =

```
    0.2500             0.2500
  0.0488 - 0.2452i   0.0488 - 0.2452i
 -0.2310 - 0.0957i  -0.2310 - 0.0957i
 -0.1389 + 0.2079i  -0.1389 + 0.2079i
  0.2500            -0.2500
  0.0488 - 0.2452i  -0.0488 + 0.2452i
 -0.2310 - 0.0957i   0.2310 + 0.0957i
 -0.1389 + 0.2079i   0.1389 - 0.2079i
```

ans(:,:,14,3) =

```
  0.2500            0.2500
  0.1389 - 0.2079i   0.1389 - 0.2079i
 -0.0957 - 0.2310i  -0.0957 - 0.2310i
 -0.2452 - 0.0488i  -0.2452 - 0.0488i
  0.2500           -0.2500
  0.1389 - 0.2079i  -0.1389 + 0.2079i
 -0.0957 - 0.2310i   0.0957 + 0.2310i
 -0.2452 - 0.0488i   0.2452 + 0.0488i
```

ans(:,:,15,3) =

```
  0.2500            0.2500
  0.2079 - 0.1389i   0.2079 - 0.1389i
  0.0957 - 0.2310i   0.0957 - 0.2310i
 -0.0488 - 0.2452i  -0.0488 - 0.2452i
  0.2500           -0.2500
  0.2079 - 0.1389i  -0.2079 + 0.1389i
  0.0957 - 0.2310i  -0.0957 + 0.2310i
 -0.0488 - 0.2452i   0.0488 + 0.2452i
```

ans(:,:,16,3) =

```
  0.2500            0.2500
  0.2452 - 0.0488i   0.2452 - 0.0488i
  0.2310 - 0.0957i   0.2310 - 0.0957i
  0.2079 - 0.1389i   0.2079 - 0.1389i
  0.2500           -0.2500
  0.2452 - 0.0488i  -0.2452 + 0.0488i
  0.2310 - 0.0957i  -0.2310 + 0.0957i
  0.2079 - 0.1389i  -0.2079 + 0.1389i
```

ans(:,:,1,5) =

```
  0.2500            0.2500
  0.2310 + 0.0957i   0.2310 + 0.0957i
  0.1768 + 0.1768i   0.1768 + 0.1768i
  0.0957 + 0.2310i   0.0957 + 0.2310i
  0.2500           -0.2500
  0.2310 + 0.0957i  -0.2310 - 0.0957i
  0.1768 + 0.1768i  -0.1768 - 0.1768i
  0.0957 + 0.2310i  -0.0957 - 0.2310i
```

ans(:,:,2,5) =

```
   0.2500                0.2500
   0.1768 + 0.1768i      0.1768 + 0.1768i
   0.0000 + 0.2500i      0.0000 + 0.2500i
  -0.1768 + 0.1768i     -0.1768 + 0.1768i
   0.2500               -0.2500
   0.1768 + 0.1768i     -0.1768 - 0.1768i
   0.0000 + 0.2500i     -0.0000 - 0.2500i
  -0.1768 + 0.1768i      0.1768 - 0.1768i
```

ans(:,:,3,5) =

```
   0.2500                0.2500
   0.0957 + 0.2310i      0.0957 + 0.2310i
  -0.1768 + 0.1768i     -0.1768 + 0.1768i
  -0.2310 - 0.0957i     -0.2310 - 0.0957i
   0.2500               -0.2500
   0.0957 + 0.2310i     -0.0957 - 0.2310i
  -0.1768 + 0.1768i      0.1768 - 0.1768i
  -0.2310 - 0.0957i      0.2310 + 0.0957i
```

ans(:,:,4,5) =

```
   0.2500                0.2500
   0.0000 + 0.2500i      0.0000 + 0.2500i
  -0.2500 + 0.0000i     -0.2500 + 0.0000i

  -0.0000 - 0.2500i     -0.0000 - 0.2500i
   0.2500               -0.2500
   0.0000 + 0.2500i     -0.0000 - 0.2500i
  -0.2500 + 0.0000i      0.2500 - 0.0000i
  -0.0000 - 0.2500i      0.0000 + 0.2500i
```

ans(:,:,5,5) =

```
   0.2500                0.2500
  -0.0957 + 0.2310i     -0.0957 + 0.2310i
  -0.1768 - 0.1768i     -0.1768 - 0.1768i
   0.2310 - 0.0957i      0.2310 - 0.0957i
   0.2500               -0.2500
  -0.0957 + 0.2310i      0.0957 - 0.2310i
  -0.1768 - 0.1768i      0.1768 + 0.1768i
   0.2310 - 0.0957i     -0.2310 + 0.0957i
```

ans(:,:,6,5) =

```
   0.2500              0.2500
-0.1768 + 0.1768i   -0.1768 + 0.1768i
-0.0000 - 0.2500i   -0.0000 - 0.2500i
 0.1768 + 0.1768i    0.1768 + 0.1768i
 0.2500             -0.2500
-0.1768 + 0.1768i    0.1768 - 0.1768i
-0.0000 - 0.2500i    0.0000 + 0.2500i
 0.1768 + 0.1768i   -0.1768 - 0.1768i
```

ans(:,:,7,5) =

```
   0.2500              0.2500
-0.2310 + 0.0957i   -0.2310 + 0.0957i
 0.1768 - 0.1768i    0.1768 - 0.1768i
-0.0957 + 0.2310i   -0.0957 + 0.2310i
 0.2500             -0.2500
-0.2310 + 0.0957i    0.2310 - 0.0957i

 0.1768 - 0.1768i   -0.1768 + 0.1768i
-0.0957 + 0.2310i    0.0957 - 0.2310i
```

ans(:,:,8,5) =

```
   0.2500              0.2500
-0.2500 + 0.0000i   -0.2500 + 0.0000i
 0.2500 - 0.0000i    0.2500 - 0.0000i
-0.2500 + 0.0000i   -0.2500 + 0.0000i
 0.2500             -0.2500
-0.2500 + 0.0000i    0.2500 - 0.0000i
 0.2500 - 0.0000i   -0.2500 + 0.0000i
-0.2500 + 0.0000i    0.2500 - 0.0000i
```

ans(:,:,9,5) =

```
   0.2500              0.2500
-0.2310 - 0.0957i   -0.2310 - 0.0957i
 0.1768 + 0.1768i    0.1768 + 0.1768i
-0.0957 - 0.2310i   -0.0957 - 0.2310i
 0.2500             -0.2500
-0.2310 - 0.0957i    0.2310 + 0.0957i
 0.1768 + 0.1768i   -0.1768 - 0.1768i
-0.0957 - 0.2310i    0.0957 + 0.2310i
```

ans(:,:,10,5) =

```
 0.2500            0.2500
-0.1768 - 0.1768i  -0.1768 - 0.1768i
 0.0000 + 0.2500i   0.0000 + 0.2500i
 0.1768 - 0.1768i   0.1768 - 0.1768i
 0.2500            -0.2500
-0.1768 - 0.1768i   0.1768 + 0.1768i
 0.0000 + 0.2500i  -0.0000 - 0.2500i
 0.1768 - 0.1768i  -0.1768 + 0.1768i
```

ans(:,:,11,5) =

```
 0.2500            0.2500
-0.0957 - 0.2310i  -0.0957 - 0.2310i
-0.1768 + 0.1768i  -0.1768 + 0.1768i
 0.2310 + 0.0957i   0.2310 + 0.0957i
 0.2500            -0.2500
-0.0957 - 0.2310i   0.0957 + 0.2310i
-0.1768 + 0.1768i   0.1768 - 0.1768i
 0.2310 + 0.0957i  -0.2310 - 0.0957i
```

ans(:,:,12,5) =

```
 0.2500            0.2500
-0.0000 - 0.2500i  -0.0000 - 0.2500i
-0.2500 + 0.0000i  -0.2500 + 0.0000i
 0.0000 + 0.2500i   0.0000 + 0.2500i
 0.2500            -0.2500
-0.0000 - 0.2500i   0.0000 + 0.2500i
-0.2500 + 0.0000i   0.2500 - 0.0000i
 0.0000 + 0.2500i  -0.0000 - 0.2500i
```

ans(:,:,13,5) =

```
 0.2500            0.2500
 0.0957 - 0.2310i   0.0957 - 0.2310i
-0.1768 - 0.1768i  -0.1768 - 0.1768i
-0.2310 + 0.0957i  -0.2310 + 0.0957i
 0.2500            -0.2500
 0.0957 - 0.2310i  -0.0957 + 0.2310i
-0.1768 - 0.1768i   0.1768 + 0.1768i
-0.2310 + 0.0957i   0.2310 - 0.0957i
```

ans(:,:,14,5) =

```
          0.2500                 0.2500
        0.1768 - 0.1768i       0.1768 - 0.1768i
       -0.0000 - 0.2500i      -0.0000 - 0.2500i
       -0.1768 - 0.1768i      -0.1768 - 0.1768i
          0.2500                -0.2500
        0.1768 - 0.1768i      -0.1768 + 0.1768i
       -0.0000 - 0.2500i       0.0000 + 0.2500i
       -0.1768 - 0.1768i       0.1768 + 0.1768i
```

ans(:,:,15,5) =

```
          0.2500                 0.2500
        0.2310 - 0.0957i       0.2310 - 0.0957i
        0.1768 - 0.1768i       0.1768 - 0.1768i
        0.0957 - 0.2310i       0.0957 - 0.2310i
          0.2500                -0.2500
        0.2310 - 0.0957i      -0.2310 + 0.0957i
        0.1768 - 0.1768i      -0.1768 + 0.1768i
        0.0957 - 0.2310i      -0.0957 + 0.2310i
```

ans(:,:,16,5) =

```
          0.2500      0.2500
          0.2500      0.2500
          0.2500      0.2500
          0.2500      0.2500
          0.2500     -0.2500
          0.2500     -0.2500
          0.2500     -0.2500
          0.2500     -0.2500
```

ans(:,:,1,7) =

```
          0.2500                 0.2500
        0.2079 + 0.1389i       0.2079 + 0.1389i
        0.0957 + 0.2310i       0.0957 + 0.2310i

       -0.0488 + 0.2452i      -0.0488 + 0.2452i
          0.2500                -0.2500
        0.2079 + 0.1389i      -0.2079 - 0.1389i
        0.0957 + 0.2310i      -0.0957 - 0.2310i
       -0.0488 + 0.2452i       0.0488 - 0.2452i
```

ans(:,:,2,7) =

```
     0.2500              0.2500
   0.1389 + 0.2079i    0.1389 + 0.2079i
  -0.0957 + 0.2310i   -0.0957 + 0.2310i
  -0.2452 + 0.0488i   -0.2452 + 0.0488i
     0.2500             -0.2500
   0.1389 + 0.2079i   -0.1389 - 0.2079i
  -0.0957 + 0.2310i    0.0957 - 0.2310i
  -0.2452 + 0.0488i    0.2452 - 0.0488i
```

ans(:,:,3,7) =

```
     0.2500              0.2500
   0.0488 + 0.2452i    0.0488 + 0.2452i
  -0.2310 + 0.0957i   -0.2310 + 0.0957i
  -0.1389 - 0.2079i   -0.1389 - 0.2079i
     0.2500             -0.2500
   0.0488 + 0.2452i   -0.0488 - 0.2452i
  -0.2310 + 0.0957i    0.2310 - 0.0957i
  -0.1389 - 0.2079i    0.1389 + 0.2079i
```

ans(:,:,4,7) =

```
     0.2500              0.2500
  -0.0488 + 0.2452i   -0.0488 + 0.2452i
  -0.2310 - 0.0957i   -0.2310 - 0.0957i
   0.1389 - 0.2079i    0.1389 - 0.2079i
     0.2500             -0.2500
  -0.0488 + 0.2452i    0.0488 - 0.2452i
```

```
  -0.2310 - 0.0957i    0.2310 + 0.0957i
   0.1389 - 0.2079i   -0.1389 + 0.2079i
```

ans(:,:,5,7) =

```
     0.2500              0.2500
  -0.1389 + 0.2079i   -0.1389 + 0.2079i
  -0.0957 - 0.2310i   -0.0957 - 0.2310i
   0.2452 + 0.0488i    0.2452 + 0.0488i
     0.2500             -0.2500
  -0.1389 + 0.2079i    0.1389 - 0.2079i
  -0.0957 - 0.2310i    0.0957 + 0.2310i
   0.2452 + 0.0488i   -0.2452 - 0.0488i
```

ans(:,:,6,7) =

```
  0.2500              0.2500
 -0.2079 + 0.1389i   -0.2079 + 0.1389i
  0.0957 - 0.2310i    0.0957 - 0.2310i
  0.0488 + 0.2452i    0.0488 + 0.2452i
  0.2500             -0.2500
 -0.2079 + 0.1389i    0.2079 - 0.1389i
  0.0957 - 0.2310i   -0.0957 + 0.2310i
  0.0488 + 0.2452i   -0.0488 - 0.2452i
```

ans(:,:,7,7) =

```
  0.2500              0.2500
 -0.2452 + 0.0488i   -0.2452 + 0.0488i
  0.2310 - 0.0957i    0.2310 - 0.0957i
 -0.2079 + 0.1389i   -0.2079 + 0.1389i
  0.2500             -0.2500
 -0.2452 + 0.0488i    0.2452 - 0.0488i
  0.2310 - 0.0957i   -0.2310 + 0.0957i
 -0.2079 + 0.1389i    0.2079 - 0.1389i
```

ans(:,:,8,7) =

```
  0.2500              0.2500
 -0.2452 - 0.0488i   -0.2452 - 0.0488i
  0.2310 + 0.0957i    0.2310 + 0.0957i
 -0.2079 - 0.1389i   -0.2079 - 0.1389i
  0.2500             -0.2500
 -0.2452 - 0.0488i    0.2452 + 0.0488i
  0.2310 + 0.0957i   -0.2310 - 0.0957i
 -0.2079 - 0.1389i    0.2079 + 0.1389i
```

ans(:,:,9,7) =

```
  0.2500              0.2500
 -0.2079 - 0.1389i   -0.2079 - 0.1389i
  0.0957 + 0.2310i    0.0957 + 0.2310i
  0.0488 - 0.2452i    0.0488 - 0.2452i
  0.2500             -0.2500
 -0.2079 - 0.1389i    0.2079 + 0.1389i
  0.0957 + 0.2310i   -0.0957 - 0.2310i
  0.0488 - 0.2452i   -0.0488 + 0.2452i
```

ans(:,:,10,7) =

```
  0.2500              0.2500
-0.1389 - 0.2079i   -0.1389 - 0.2079i
-0.0957 + 0.2310i   -0.0957 + 0.2310i
  0.2452 - 0.0488i    0.2452 - 0.0488i
  0.2500             -0.2500
-0.1389 - 0.2079i     0.1389 + 0.2079i
-0.0957 + 0.2310i     0.0957 - 0.2310i
  0.2452 - 0.0488i   -0.2452 + 0.0488i
```

ans(:,:,11,7) =

```
  0.2500              0.2500
-0.0488 - 0.2452i   -0.0488 - 0.2452i
-0.2310 + 0.0957i   -0.2310 + 0.0957i
  0.1389 + 0.2079i    0.1389 + 0.2079i
  0.2500             -0.2500
-0.0488 - 0.2452i     0.0488 + 0.2452i
-0.2310 + 0.0957i     0.2310 - 0.0957i
  0.1389 + 0.2079i   -0.1389 - 0.2079i
```

ans(:,:,12,7) =

```
  0.2500              0.2500
  0.0488 - 0.2452i    0.0488 - 0.2452i
-0.2310 - 0.0957i   -0.2310 - 0.0957i
-0.1389 + 0.2079i   -0.1389 + 0.2079i
  0.2500             -0.2500
  0.0488 - 0.2452i   -0.0488 + 0.2452i
-0.2310 - 0.0957i     0.2310 + 0.0957i
-0.1389 + 0.2079i     0.1389 - 0.2079i
```

ans(:,:,13,7) =

```
  0.2500              0.2500
  0.1389 - 0.2079i    0.1389 - 0.2079i
-0.0957 - 0.2310i   -0.0957 - 0.2310i
-0.2452 - 0.0488i   -0.2452 - 0.0488i
  0.2500             -0.2500
  0.1389 - 0.2079i   -0.1389 + 0.2079i
-0.0957 - 0.2310i     0.0957 + 0.2310i
-0.2452 - 0.0488i     0.2452 + 0.0488i
```

ans(:,:,14,7) =

$$
\begin{array}{cc}
0.2500 & 0.2500 \\
0.2079 - 0.1389i & 0.2079 - 0.1389i \\
0.0957 - 0.2310i & 0.0957 - 0.2310i
\end{array}
$$

$$
\begin{array}{cc}
-0.0488 - 0.2452i & -0.0488 - 0.2452i \\
0.2500 & -0.2500 \\
0.2079 - 0.1389i & -0.2079 + 0.1389i \\
0.0957 - 0.2310i & -0.0957 + 0.2310i \\
-0.0488 - 0.2452i & 0.0488 + 0.2452i
\end{array}
$$

ans(:,:,15,7) =

$$
\begin{array}{cc}
0.2500 & 0.2500 \\
0.2452 - 0.0488i & 0.2452 - 0.0488i \\
0.2310 - 0.0957i & 0.2310 - 0.0957i \\
0.2079 - 0.1389i & 0.2079 - 0.1389i \\
0.2500 & -0.2500 \\
0.2452 - 0.0488i & -0.2452 + 0.0488i \\
0.2310 - 0.0957i & -0.2310 + 0.0957i \\
0.2079 - 0.1389i & -0.2079 + 0.1389i
\end{array}
$$

ans(:,:,16,7) =

$$
\begin{array}{cc}
0.2500 & 0.2500 \\
0.2452 + 0.0488i & 0.2452 + 0.0488i \\
0.2310 + 0.0957i & 0.2310 + 0.0957i \\
0.2079 + 0.1389i & 0.2079 + 0.1389i \\
0.2500 & -0.2500 \\
0.2452 + 0.0488i & -0.2452 - 0.0488i \\
0.2310 + 0.0957i & -0.2310 - 0.0957i \\
0.2079 + 0.1389i & -0.2079 - 0.1389i
\end{array}
$$

(2) For rank 4:

For example, the subset of the first codebook may include ans(:,:,n=1), ans(:,:,n=2), ans(:,:,n=3), and ans(:,:,n=4) for rank 4 that are described above.

The subset of the second codebook may include (:,:, n=1), (:,:, n=3), (:,:, n=5), and (:,:, n=7) that are described above.

The combination of the first precoding matrix indicator selected from the subset of the first codebook and the second precoding matrix indicator selected from the subset of the second codebook may indicate one of precoding matrix candidates disclosed in the following overall codebook.

$$
ans(:,:,1,1) =
$$

```
0.1768          0.1768              0.1768          0.1768
0.1768          0.0000 + 0.1768i    0.1768          0.0000 + 0.1768i
0.1768         -0.1768 + 0.0000i    0.1768         -0.1768 + 0.0000i
0.1768         -0.0000 - 0.1768i    0.1768         -0.0000 - 0.1768i
0.1768          0.1768             -0.1768         -0.1768
0.1768          0.0000 + 0.1768i   -0.1768         -0.0000 - 0.1768i
0.1768         -0.1768 + 0.0000i   -0.1768          0.1768 - 0.0000i
0.1768         -0.0000 - 0.1768i   -0.1768          0.0000 + 0.1768i
```

ans(:,:,2,1) =

```
0.1768          0.1768              0.1768          0.1768
    0 + 0.1768i -0.1768 + 0.0000i       0 + 0.1768i -0.1768 + 0.0000i
-0.1768          0.1768 - 0.0000i   -0.1768          0.1768 - 0.0000i
    0 - 0.1768i -0.1768 + 0.0000i       0 - 0.1768i -0.1768 + 0.0000i
0.1768          0.1768             -0.1768         -0.1768
    0 + 0.1768i -0.1768 + 0.0000i       0 - 0.1768i  0.1768 - 0.0000i
-0.1768          0.1768 - 0.0000i    0.1768         -0.1768 + 0.0000i
    0 - 0.1768i -0.1768 + 0.0000i       0 + 0.1768i  0.1768 - 0.0000i
```

ans(:,:,3,1) =

```
 0.1768          0.1768              0.1768          0.1768
-0.1768         -0.0000 - 0.1768i   -0.1768         -0.0000 - 0.1768i
 0.1768         -0.1768 + 0.0000i    0.1768         -0.1768 + 0.0000i
-0.1768          0.0000 + 0.1768i   -0.1768          0.0000 + 0.1768i
 0.1768          0.1768             -0.1768         -0.1768
-0.1768         -0.0000 - 0.1768i    0.1768          0.0000 + 0.1768i
 0.1768         -0.1768 + 0.0000i   -0.1768          0.1768 - 0.0000i
-0.1768          0.0000 + 0.1768i    0.1768         -0.0000 - 0.1768i
```

ans(:,:,4,1) =

| 0.1768 | 0.1768 | 0.1768 | 0.1768 |
|---|---|---|---|
| 0 - 0.1768i | 0.1768 - 0.0000i | 0 - 0.1768i | 0.1768 - 0.0000i |
| -0.1768 | 0.1768 - 0.0000i | -0.1768 | 0.1768 - 0.0000i |
| 0 + 0.1768i | 0.1768 - 0.0000i | 0 + 0.1768i | 0.1768 - 0.0000i |
| 0.1768 | 0.1768 | -0.1768 | -0.1768 |
| 0 - 0.1768i | 0.1768 - 0.0000i | 0 + 0.1768i | -0.1768 + 0.0000i |
| -0.1768 | 0.1768 - 0.0000i | 0.1768 | -0.1768 + 0.0000i |
| 0 + 0.1768i | 0.1768 - 0.0000i | 0 - 0.1768i | -0.1768 + 0.0000i |

ans(:,:,1,3) =

| 0.1768 | 0.1768 | 0.1768 | 0.1768 |
|---|---|---|---|
| 0.1633 + 0.0676i | -0.0676 + 0.1633i | 0.1633 + 0.0676i | -0.0676 + 0.1633i |
| 0.1250 + 0.1250i | -0.1250 - 0.1250i | 0.1250 + 0.1250i | -0.1250 - 0.1250i |
| 0.0676 + 0.1633i | 0.1633 - 0.0676i | 0.0676 + 0.1633i | 0.1633 - 0.0676i |
| 0.1768 | 0.1768 | -0.1768 | -0.1768 |
| 0.1633 + 0.0676i | -0.0676 + 0.1633i | -0.1633 - 0.0676i | 0.0676 - 0.1633i |
| 0.1250 + 0.1250i | -0.1250 - 0.1250i | -0.1250 - 0.1250i | 0.1250 + 0.1250i |
| 0.0676 + 0.1633i | 0.1633 - 0.0676i | -0.0676 - 0.1633i | -0.1633 + 0.0676i |

ans(:,:,2,3) =

| 0.1768 | 0.1768 | 0.1768 | 0.1768 |
|---|---|---|---|
| -0.0676 + 0.1633i | -0.1633 - 0.0676i | -0.0676 + 0.1633i | -0.1633 - 0.0676i |
| -0.1250 - 0.1250i | 0.1250 + 0.1250i | -0.1250 - 0.1250i | 0.1250 + 0.1250i |
| 0.1633 - 0.0676i | -0.0676 - 0.1633i | 0.1633 - 0.0676i | -0.0676 - 0.1633i |
| 0.1768 | 0.1768 | -0.1768 | -0.1768 |
| -0.0676 + 0.1633i | -0.1633 - 0.0676i | 0.0676 - 0.1633i | 0.1633 + 0.0676i |
| -0.1250 - 0.1250i | 0.1250 + 0.1250i | 0.1250 + 0.1250i | -0.1250 - 0.1250i |
| 0.1633 - 0.0676i | -0.0676 - 0.1633i | -0.1633 + 0.0676i | 0.0676 + 0.1633i |

ans(:,:,3,3) =

```
    0.1768              0.1768              0.1768              0.1768
-0.1633 - 0.0676i    0.0676 - 0.1633i   -0.1633 - 0.0676i    0.0676 - 0.1633i
 0.1250 + 0.1250i   -0.1250 - 0.1250i    0.1250 + 0.1250i   -0.1250 - 0.1250i
-0.0676 - 0.1633i   -0.1633 + 0.0676i   -0.0676 - 0.1633i   -0.1633 + 0.0676i
    0.1768              0.1768             -0.1768             -0.1768
-0.1633 - 0.0676i    0.0676 - 0.1633i    0.1633 + 0.0676i   -0.0676 + 0.1633i
 0.1250 + 0.1250i   -0.1250 - 0.1250i   -0.1250 - 0.1250i    0.1250 + 0.1250i
-0.0676 - 0.1633i   -0.1633 + 0.0676i    0.0676 + 0.1633i    0.1633 - 0.0676i
```

ans(:,:,4,3) =

```
    0.1768              0.1768              0.1768              0.1768
 0.0676 - 0.1633i    0.1633 + 0.0676i    0.0676 - 0.1633i    0.1633 + 0.0676i
-0.1250 - 0.1250i    0.1250 + 0.1250i   -0.1250 - 0.1250i    0.1250 + 0.1250i
-0.1633 + 0.0676i    0.0676 + 0.1633i   -0.1633 + 0.0676i    0.0676 + 0.1633i
    0.1768              0.1768             -0.1768             -0.1768
 0.0676 - 0.1633i    0.1633 + 0.0676i   -0.0676 + 0.1633i   -0.1633 - 0.0676i
-0.1250 - 0.1250i    0.1250 + 0.1250i    0.1250 + 0.1250i   -0.1250 - 0.1250i
-0.1633 + 0.0676i    0.0676 + 0.1633i    0.1633 - 0.0676i   -0.0676 - 0.1633i
```

ans(:,:,1,5) =

```
    0.1768              0.1768              0.1768              0.1768
 0.1250 + 0.1250i   -0.1250 + 0.1250i    0.1250 + 0.1250i   -0.1250 + 0.1250i
 0.0000 + 0.1768i   -0.0000 - 0.1768i    0.0000 + 0.1768i   -0.0000 - 0.1768i
-0.1250 + 0.1250i    0.1250 + 0.1250i   -0.1250 + 0.1250i    0.1250 + 0.1250i
    0.1768              0.1768             -0.1768             -0.1768
 0.1250 + 0.1250i   -0.1250 + 0.1250i   -0.1250 - 0.1250i    0.1250 - 0.1250i
 0.0000 + 0.1768i   -0.0000 - 0.1768i   -0.0000 - 0.1768i    0.0000 + 0.1768i
-0.1250 + 0.1250i    0.1250 + 0.1250i    0.1250 - 0.1250i   -0.1250 - 0.1250i
```

ans(:,:,2,5) =

```
    0.1768              0.1768              0.1768              0.1768
-0.1250 + 0.1250i   -0.1250 - 0.1250i   -0.1250 + 0.1250i   -0.1250 - 0.1250i
```

| | | | |
|---|---|---|---|
| -0.0000 - 0.1768i | 0.0000 + 0.1768i | -0.0000 - 0.1768i | 0.0000 + 0.1768i |
| 0.1250 + 0.1250i | 0.1250 - 0.1250i | 0.1250 + 0.1250i | 0.1250 - 0.1250i |
| 0.1768 | 0.1768 | -0.1768 | -0.1768 |
| -0.1250 + 0.1250i | -0.1250 - 0.1250i | 0.1250 - 0.1250i | 0.1250 + 0.1250i |
| -0.0000 - 0.1768i | 0.0000 + 0.1768i | 0.0000 + 0.1768i | -0.0000 - 0.1768i |
| 0.1250 + 0.1250i | 0.1250 - 0.1250i | -0.1250 - 0.1250i | -0.1250 + 0.1250i |

ans(:,:,3,5) =

| | | | |
|---|---|---|---|
| 0.1768 | 0.1768 | 0.1768 | 0.1768 |
| -0.1250 - 0.1250i | 0.1250 - 0.1250i | -0.1250 - 0.1250i | 0.1250 - 0.1250i |
| 0.0000 + 0.1768i | -0.0000 - 0.1768i | 0.0000 + 0.1768i | -0.0000 - 0.1768i |
| 0.1250 - 0.1250i | -0.1250 - 0.1250i | 0.1250 - 0.1250i | -0.1250 - 0.1250i |
| 0.1768 | 0.1768 | -0.1768 | -0.1768 |
| -0.1250 - 0.1250i | 0.1250 - 0.1250i | 0.1250 + 0.1250i | -0.1250 + 0.1250i |
| 0.0000 + 0.1768i | -0.0000 - 0.1768i | -0.0000 - 0.1768i | 0.0000 + 0.1768i |
| 0.1250 - 0.1250i | -0.1250 - 0.1250i | -0.1250 + 0.1250i | 0.1250 + 0.1250i |

ans(:,:,4,5) =

| | | | |
|---|---|---|---|
| 0.1768 | 0.1768 | 0.1768 | 0.1768 |
| 0.1250 - 0.1250i | 0.1250 + 0.1250i | 0.1250 - 0.1250i | 0.1250 + 0.1250i |
| -0.0000 - 0.1768i | 0.0000 + 0.1768i | -0.0000 - 0.1768i | 0.0000 + 0.1768i |
| -0.1250 - 0.1250i | -0.1250 + 0.1250i | -0.1250 - 0.1250i | -0.1250 + 0.1250i |
| 0.1768 | 0.1768 | -0.1768 | -0.1768 |
| 0.1250 - 0.1250i | 0.1250 + 0.1250i | -0.1250 + 0.1250i | -0.1250 - 0.1250i |
| -0.0000 - 0.1768i | 0.0000 + 0.1768i | 0.0000 + 0.1768i | -0.0000 - 0.1768i |
| -0.1250 - 0.1250i | -0.1250 + 0.1250i | 0.1250 + 0.1250i | 0.1250 - 0.1250i |

ans(:,:,1,7) =

| | | | |
|---|---|---|---|
| 0.1768 | 0.1768 | 0.1768 | 0.1768 |
| 0.0676 + 0.1633i | -0.1633 + 0.0676i | 0.0676 + 0.1633i | -0.1633 + 0.0676i |
| -0.1250 + 0.1250i | 0.1250 - 0.1250i | -0.1250 + 0.1250i | 0.1250 - 0.1250i |
| -0.1633 - 0.0676i | -0.0676 + 0.1633i | -0.1633 - 0.0676i | -0.0676 + 0.1633i |
| 0.1768 | 0.1768 | -0.1768 | -0.1768 |

$$\begin{array}{cccc}
0.0676 + 0.1633i & -0.1633 + 0.0676i & -0.0676 - 0.1633i & 0.1633 - 0.0676i \\
-0.1250 + 0.1250i & 0.1250 - 0.1250i & 0.1250 - 0.1250i & -0.1250 + 0.1250i \\
-0.1633 - 0.0676i & -0.0676 + 0.1633i & 0.1633 + 0.0676i & 0.0676 - 0.1633i
\end{array}$$

ans(:,:,2,7) =

$$\begin{array}{cccc}
0.1768 & 0.1768 & 0.1768 & 0.1768 \\
-0.1633 + 0.0676i & -0.0676 - 0.1633i & -0.1633 + 0.0676i & -0.0676 - 0.1633i \\
0.1250 - 0.1250i & -0.1250 + 0.1250i & 0.1250 - 0.1250i & -0.1250 + 0.1250i \\
-0.0676 + 0.1633i & 0.1633 + 0.0676i & -0.0676 + 0.1633i & 0.1633 + 0.0676i \\
0.1768 & 0.1768 & -0.1768 & -0.1768 \\
-0.1633 + 0.0676i & -0.0676 - 0.1633i & 0.1633 - 0.0676i & 0.0676 + 0.1633i \\
0.1250 - 0.1250i & -0.1250 + 0.1250i & -0.1250 + 0.1250i & 0.1250 - 0.1250i \\
-0.0676 + 0.1633i & 0.1633 + 0.0676i & 0.0676 - 0.1633i & -0.1633 - 0.0676i
\end{array}$$

ans(:,:,3,7) =

$$\begin{array}{cccc}
0.1768 & 0.1768 & 0.1768 & 0.1768 \\
-0.0676 - 0.1633i & 0.1633 - 0.0676i & -0.0676 - 0.1633i & 0.1633 - 0.0676i \\
-0.1250 + 0.1250i & 0.1250 - 0.1250i & -0.1250 + 0.1250i & 0.1250 - 0.1250i \\
0.1633 + 0.0676i & 0.0676 - 0.1633i & 0.1633 + 0.0676i & 0.0676 - 0.1633i \\
0.1768 & 0.1768 & -0.1768 & -0.1768 \\
-0.0676 - 0.1633i & 0.1633 - 0.0676i & 0.0676 + 0.1633i & -0.1633 + 0.0676i \\
-0.1250 + 0.1250i & 0.1250 - 0.1250i & 0.1250 - 0.1250i & -0.1250 + 0.1250i \\
0.1633 + 0.0676i & 0.0676 - 0.1633i & -0.1633 - 0.0676i & -0.0676 + 0.1633i
\end{array}$$

ans(:,:,4,7) =

$$\begin{array}{cccc}
0.1768 & 0.1768 & 0.1768 & 0.1768 \\
0.1633 - 0.0676i & 0.0676 + 0.1633i & 0.1633 - 0.0676i & 0.0676 + 0.1633i \\
0.1250 - 0.1250i & -0.1250 + 0.1250i & 0.1250 - 0.1250i & -0.1250 + 0.1250i \\
0.0676 - 0.1633i & -0.1633 - 0.0676i & 0.0676 - 0.1633i & -0.1633 - 0.0676i \\
0.1768 & 0.1768 & -0.1768 & -0.1768 \\
0.1633 - 0.0676i & 0.0676 + 0.1633i & -0.1633 + 0.0676i & -0.0676 - 0.1633i \\
0.1250 - 0.1250i & -0.1250 + 0.1250i & -0.1250 + 0.1250i & 0.1250 - 0.1250i \\
0.0676 - 0.1633i & -0.1633 - 0.0676i & -0.0676 + 0.1633i & 0.1633 + 0.0676i
\end{array}$$

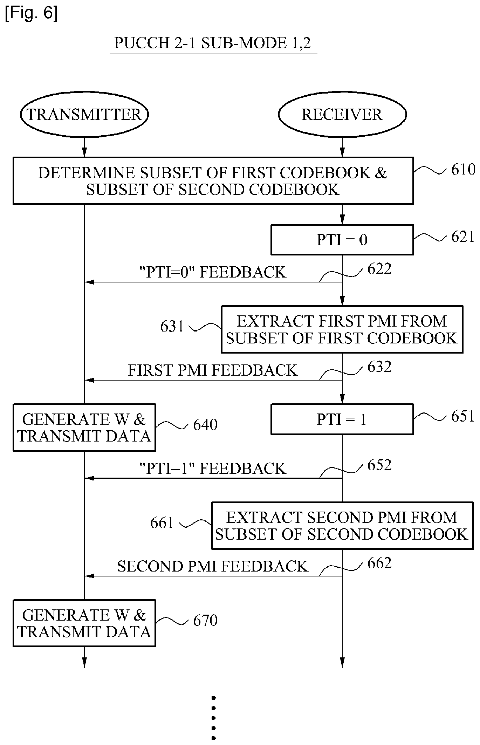

FIG. 6 illustrates an example of a communication method of a transmitter and a receiver that operate in PUCCH 2-1 sub-modes 1 and 2.

At 610, the transmitter and the receiver may determine a subset of a first codebook and a subset of a second codebook that are described above. The subset of the first codebook and the subset of the second codebook may be individually stored in the transmitter and the receiver. The overall codebook in which the subset of the first codebook and the subset of the second codebook are integrated may be stored in the transmitter and the receiver.

At 621, the receiver may determine PTI as '0'. At 622, the receiver may feed back PTI = 0 to the transmitter. At 631, the receiver may extract a first precoding matrix indicator from the subset of the first codebook. When a point in time when the receiver feeds back a precoding matrix indicator is a first reporting point in time in PTI = 0, the receiver may feed back the first precoding matrix indicator to the transmitter at the first reporting point in time at 632. CQI, a rank indicator, and the like may be further fed back.

At 640, the transmitter may generate W based on the first precoding matrix indicator, and perform precoding using W and transmit data. While PTI = 0, the aforementioned process may be repeated.

When the receiver determines PTI = 1 at 651, the receiver may feed back PTI = 1 to the transmitter at 652. At 661, the receiver may extract a second precoding matrix indicator from the subset of the second codebook. When a point in time when the receiver feeds back a precoding matrix indicator is a second reporting point in time in PTI = 0 , the receiver may feed back the second precoding matrix indicator to the transmitter at the second reporting point in time at 662. CQI, a rank indicator, and the like may be further fed back.

At 670, the transmitter may generate W based on the second precoding matrix indicator, and perform precoding using W and transmit data. The transmitter may generate new W by updating the second precoding matrix indicator based on the previously used W. While PTI = 0, the aforementioned process may be repeated.

A number of examples have been described above. Nevertheless, it should be understood that various modifications may be made. For example, suitable results may be achieved if the described techniques are performed in a different order and/or if components in a described system, architecture, device, or circuit are combined in a different manner and/or replaced or supplemented by other components. . Accordingly, other implementations are within the scope of the following claims.

## Claims

1. A communication method of a receiver in a multiple input multiple output communication system comprising a transmitter having eight transmit antennas and the receiver, the communication method comprising:

   extracting, from a memory storing a first codebook having a 3-bit size and a second codebook having a one-bit size, a 3-bit first precoding matrix indicator corresponding to a first codeword included in the first codebook and a one-bit second precoding matrix indicator corresponding to a second codeword included in the second codebook; and

   transmitting, to the transmitter, the 3-bit first precoding matrix indicator and the one-bit second precoding matrix indicator, wherein the combination of the 3-bit first precoding matrix indicator and the one-bit second precoding matrix indicator indicates one of recommended precoding matrix candidates disclosed in the following Table 1 or Table 2,
   wherein

$$W_{m,n}^{(1)} = \frac{1}{\sqrt{8}} \begin{bmatrix} v_m \\ \varphi_n v_m \end{bmatrix}, \quad W_{m,m',n}^{(2)} = \frac{1}{4} \begin{bmatrix} v_m & v_{m'} \\ \varphi_n v_m & -\varphi_n v_{m'} \end{bmatrix}, \quad \varphi_n = e^{j\pi n/2}$$

$$v_m = \begin{bmatrix} 1 & e^{j2\pi m/32} & e^{j4\pi m/32} & e^{j6\pi m/32} \end{bmatrix}^{\mathrm{T}}$$

and , and wherein W denotes a precoding matrix, v denotes a column vector, and m and n are variables.

[Table 1]

| | |
|---|---|
| $W^{(1)}_{0,0}$ | $W^{(1)}_{0,2}$ |
| $W^{(1)}_{4,0}$ | $W^{(1)}_{4,2}$ |
| $W^{(1)}_{8,0}$ | $W^{(1)}_{8,2}$ |
| $W^{(1)}_{12,0}$ | $W^{(1)}_{12,2}$ |
| $W^{(1)}_{16,0}$ | $W^{(1)}_{16,2}$ |
| $W^{(1)}_{20,0}$ | $W^{(1)}_{20,2}$ |
| $W^{(1)}_{24,0}$ | $W^{(1)}_{24,2}$ |
| $W^{(1)}_{28,0}$ | $W^{(1)}_{28,2}$ |

[Table 2]

| $W^{(2)}_{0,0,0}$ | $W^{(2)}_{0,0,1}$ |
|---|---|
| $W^{(2)}_{4,4,0}$ | $W^{(2)}_{4,4,1}$ |
| $W^{(2)}_{8,8,0}$ | $W^{(2)}_{8,8,1}$ |
| $W^{(2)}_{12,12,0}$ | $W^{(2)}_{12,12,1}$ |
| $W^{(2)}_{16,16,0}$ | $W^{(2)}_{16,16,1}$ |
| $W^{(2)}_{20,20,0}$ | $W^{(2)}_{20,20,1}$ |
| $W^{(2)}_{24,24,0}$ | $W^{(2)}_{24,24,1}$ |
| $W^{(2)}_{28,28,0}$ | $W^{(2)}_{28,28,1}$ |

2. The communication method of claim 1, wherein the extracting comprises extracting, from the first codebook and the second codebook, the 3-bit first precoding matrix indicator and the one-bit second precoding matrix indicator respectively so that a combination of the 3-bit first precoding matrix indicator and the one-bit second precoding matrix indicator indicates a single recommended precoding matrix.

3. A communication method of a transmitter in a multiple input multiple output communication system comprising the transmitter having eight transmit antennas and a receiver, the communication method comprising:

receiving, from the receiver, a 3-bit first precoding matrix indicator corresponding to a first codeword included in a first codebook and a one-bit second precoding matrix indicator corresponding to a second codeword included in a second codebook;
accessing a memory that stores the first codebook and the second codebook; and
generating a precoding matrix using the first precoding matrix indicator and the second precoding matrix indicator, wherein a combination of the first precoding matrix indicator and the second precoding matrix indicator indicates one of recommended precoding matrix candidates disclosed in one of Table 1 and Table 2 of claim 1.

**Patentansprüche**

1. Kommunikationsverfahren eines Empfängers in einem Mehrfacheingang-Mehrfachausgang-Kommunikationssystem, das einen Sender mit acht Sendeantennen und den Empfänger umfasst, wobei das Kommunikationsverfahren Folgendes umfasst:

Extrahieren eines ersten 3-Bit-Vorcodierungsmatrixanzeigers, der einem ersten Codewort entspricht, das in dem ersten Codebuch enthalten ist, und eines zweiten Ein-Bit-Vorcodierungsmatrixanzeigers, der einem zweiten Codewort entspricht, das in dem zweiten Codebuch enthalten ist, aus einem Speicher, der ein erstes Codebuch mit einer 3-Bit-Größe und ein zweites Codebuch mit einer Ein-Bit-Größe speichert; und
Übertragen des ersten 3-Bit-Vorcodierungsmatrixanzeigers und des zweiten Ein-Bit-Vorcodierungsmatrixanzeigers an den Sender,
wobei die Kombination aus dem ersten 3-Bit-Vorcodierungsmatrixanzeiger und dem zweiten Ein-Bit-Vorcodierungsmatrixanzeiger einen der empfohlenen Vorcodierungsmatrixkandidaten anzeigt, die in der folgenden Tabelle 1 oder Tabelle 2 offenbart werden,

| Tabelle 1 | |
|---|---|
| $W^{(1)}_{0,0}$ | $W^{(1)}_{0,2}$ |
| $W^{(1)}_{4,0}$ | $W^{(1)}_{4,2}$ |
| $W^{(1)}_{8,0}$ | $W^{(1)}_{8,2}$ |
| $W^{(1)}_{12,0}$ | $W^{(1)}_{12,2}$ |

(fortgesetzt)

| Tabelle 1 | |
|---|---|
| $W_{16,0}^{(1)}$ | $W_{16,2}^{(1)}$ |
| $W_{20,0}^{(1)}$ | $W_{20,2}^{(1)}$ |
| $W_{24,0}^{(1)}$ | $W_{24,2}^{(1)}$ |
| $W_{28,0}^{(1)}$ | $W_{28,2}^{(1)}$ |

| Tabelle 2 | |
|---|---|
| $W_{0,0,0}^{(2)}$ | $W_{0,0,1}^{(2)}$ |
| $W_{4,4,0}^{(2)}$ | $W_{4,4,1}^{(2)}$ |
| $W_{8,8,0}^{(2)}$ | $W_{8,8,1}^{(2)}$ |
| $W_{12,12,0}^{(2)}$ | $W_{12,12,1}^{(2)}$ |
| $W_{16,16,0}^{(2)}$ | $W_{16,16,1}^{(2)}$ |
| $W_{20,20,0}^{(2)}$ | $W_{20,20,1}^{(2)}$ |
| $W_{24,24,0}^{(2)}$ | $W_{24,24,1}^{(2)}$ |
| $W_{28,28,0}^{(2)}$ | $W_{28,28,1}^{(2)}$ |

wobei:

$$W_{m,n}^{(1)} = \frac{1}{\sqrt{8}} \begin{bmatrix} v_m \\ \varphi_n v_m \end{bmatrix}$$

$$W_{m,m',n}^{(2)} = \frac{1}{4} \begin{bmatrix} v_m & v_{m'} \\ \varphi_n v_m & -\varphi_n v_{m'} \end{bmatrix}$$

$$v_m = \begin{bmatrix} 1 & e^{j2\pi n/32} & e^{j4\pi n/32} & e^{j6\pi n/32} \end{bmatrix}^{\mathrm{T}}$$

$$\varphi_n = e^{j\pi n/2}$$

**2.** Kommunikationsverfahren nach Anspruch 1, wobei das Extrahieren das Extrahieren des ersten 3-Bit-Vorcodierungsmatrixanzeigers bzw. des zweiten Ein-Bit-Vorcodierungsmatrixanzeigers aus dem ersten Codebuch und dem zweiten Codebuch umfasst, so dass eine Kombination aus dem ersten 3-Bit-Vorcodierungsmatrixanzeiger und dem zweiten Ein-Bit-Vorcodierungsmatrixanzeiger eine einzige empfohlene Vorcodierungsmatrix anzeigt.

**3.** Kommunikationsverfahren eines Senders in einem Mehrfacheingang-Mehrfachausgang-Kommunikationssystem, das den Sender mit acht Sendeantennen und einen Empfänger umfasst, wobei das Kommunikationsverfahren Folgendes umfasst:

Empfangen eines ersten 3-Bit-Vorcodierungsmatrixanzeigers, der einem ersten Codewort entspricht, das in einem ersten Codebuch enthalten ist, und eines zweiten Ein-Bit-Vorcodierungsmatrixanzeigers, der einem zweiten Codewort entspricht, das in einem zweiten Codebuch enthalten ist, von dem Empfänger;
Zugreifen auf einen Speicher, der das erste Codebuch und das zweite Codebuch speichert; und
Erzeugen einer Vorcodierungsmatrix unter Verwenden des ersten Vorcodierungsmatrixanzeigers und des zweiten Vorcodierungsmatrixanzeigers,
wobei eine Kombination aus dem ersten Vorcodierungsmatrixanzeiger und dem zweiten Vorcodierungsmatrixanzeiger einen der empfohlenen Vorcodierungsmatrixkandidaten anzeigt, die in Tabelle 1 oder Tabelle 2 nach Anspruch 1 offenbart werden.

## Revendications

**1.** Procédé de communication d'un récepteur dans un système de communication à entrées multiples et sorties multiples comprenant un émetteur ayant huit antennes de transmission et le récepteur, le procédé de communication comprenant :

extraire, à partir d'une mémoire stockant un premier livre de codes ayant une taille de 3 bits et un deuxième livre de codes ayant une taille d'un bit, un premier indicateur de matrice de précodage à 3 bits correspondant à un premier mot de code inclus dans le premier livre de codes et un deuxième indicateur de matrice de précodage à un bit correspondant à un deuxième mot de code inclus dans le deuxième livre de codes ; et
transmettre, à l'émetteur, le premier indicateur de matrice de précodage à 3 bits et le deuxième indicateur de matrice de précodage à un bit,
où la combinaison du premier indicateur de matrice de précodage à 3 bits et du deuxième indicateur de matrice de précodage à un bit indique l'un des candidats de matrice de précodage recommandés décrits dans le tableau 1 ou le tableau 2 suivant,

| Tableau 1 | |
|---|---|
| $W_{0,0}^{(1)}$ | $W_{0,2}^{(1)}$ |
| $W_{4,0}^{(1)}$ | $W_{4,2}^{(1)}$ |
| $W_{8,0}^{(1)}$ | $W_{8,2}^{(1)}$ |
| $W_{12,0}^{(1)}$ | $W_{12,2}^{(1)}$ |
| $W_{16,0}^{(1)}$ | $W_{16,2}^{(1)}$ |
| $W_{20,0}^{(1)}$ | $W_{20,2}^{(1)}$ |

(suite)

| Tableau 1 | |
|---|---|
| $W_{24,0}^{(1)}$ | $W_{24,2}^{(1)}$ |
| $W_{28,0}^{(1)}$ | $W_{28,2}^{(1)}$ |

| Tableau 2 | |
|---|---|
| $W_{0,0,0}^{(2)}$ | $W_{0,0,1}^{(2)}$ |
| $W_{4,4,0}^{(2)}$ | $W_{4,4,1}^{(2)}$ |
| $W_{8,8,0}^{(2)}$ | $W_{8,8,1}^{(2)}$ |
| $W_{12,12,0}^{(2)}$ | $W_{12,12,1}^{(2)}$ |
| $W_{16,16,0}^{(2)}$ | $W_{16,16,1}^{(2)}$ |
| $W_{20,20,0}^{(2)}$ | $W_{20,20,1}^{(2)}$ |
| $W_{24,24,0}^{(2)}$ | $W_{24,24,1}^{(2)}$ |
| $W_{28,28,0}^{(2)}$ | $W_{28,28,1}^{(2)}$ |

où :

$$W_{m,n}^{(1)} = \frac{1}{\sqrt{8}} \begin{bmatrix} v_m \\ \varphi_n v_m \end{bmatrix}$$

$$W_{m,m',n}^{(2)} = \frac{1}{4} \begin{bmatrix} v_m & v_{m'} \\ \varphi_n v_m & -\varphi_n v_{m'} \end{bmatrix}$$

$$v_m = \begin{bmatrix} 1 & e^{j2\pi n/32} & e^{j4\pi n/32} & e^{j6\pi n/32} \end{bmatrix}^{\mathrm{T}}$$

$$\varphi_n = e^{j\pi n/2}$$

**2.** Procédé de communication selon la revendication 1, où l'extraction comprend l'extraction, à partir du premier livre de codes et du deuxième livre de codes, du premier indicateur de matrice de précodage à 3 bits et du deuxième indicateur de matrice de précodage à un bit respectivement de telle sorte qu'une combinaison du premier indicateur de matrice de précodage à 3 bits et du deuxième indicateur de matrice de précodage à un bit indique une matrice de précodage recommandée unique.

3. Procédé de communication d'un émetteur dans un système de communication à entrées multiples et sorties multiples comprenant l'émetteur ayant huit antennes de transmission et un récepteur, le procédé de communication comprenant :

recevoir, à partir du récepteur, un premier indicateur de matrice de précodage à 3 bits correspondant à un premier mot de code inclus dans un premier livre de codes et un deuxième indicateur de matrice de précodage à un bit correspondant à un deuxième mot de code inclus dans un deuxième livre de codes ;
accéder à une mémoire qui stocke le premier livre de codes et le deuxième livre de codes ; et
générer une matrice de précodage en utilisant le premier indicateur de matrice de précodage et le deuxième indicateur de matrice de précodage,
où une combinaison du premier indicateur de matrice de précodage et du deuxième indicateur de matrice de précodage indique l'un des candidats de matrice de précodage recommandés décrits dans l'un des tableaux 1 et 2 selon la revendication 1.

[Fig. 1]

[Fig. 2]

[Fig. 3]

$$W = f(w_1, w_2)$$

[Fig. 4]

[Fig. 5]

REPORTING MODE = PUCCH 1-1 SUB-MODE 2

[Fig. 6]

PUCCH 2-1 SUB-MODE 1,2

```
  ┌───────────┐              ┌──────────┐
  │TRANSMITTER│              │ RECEIVER │
  └───────────┘              └──────────┘
        │                         │
        ▼                         ▼
  ┌────────────────────────────────────────┐
  │ DETERMINE SUBSET OF FIRST CODEBOOK &    │  ～ 610
  │ SUBSET OF SECOND CODEBOOK               │
  └────────────────────────────────────────┘
        │                         │
        │                  ┌──────────────┐
        │                  │   PTI = 0    │   ～ 621
        │                  └──────────────┘
        │     "PTI=0" FEEDBACK      ／ 622
        │◄────────────────────────
        │                  ┌──────────────────────┐
        │          631 ～  │ EXTRACT FIRST PMI FROM│
        │                  │ SUBSET OF FIRST       │
        │                  │ CODEBOOK              │
        │                  └──────────────────────┘
        │     FIRST PMI FEEDBACK    ／ 632
        │◄────────────────────────
  ┌──────────────┐         ┌──────────────┐
  │ GENERATE W & │ ～ 640   │   PTI = 1    │  ～ 651
  │ TRANSMIT DATA│         └──────────────┘
  └──────────────┘
        │     "PTI=1" FEEDBACK      ／ 652
        │◄────────────────────────
        │                  ┌────────────────────────┐
        │          661 ～  │ EXTRACT SECOND PMI FROM │
        │                  │ SUBSET OF SECOND        │
        │                  │ CODEBOOK                │
        │                  └────────────────────────┘
        │     SECOND PMI FEEDBACK   ／ 662
        │◄────────────────────────
  ┌──────────────┐
  │ GENERATE W & │ ～ 670
  │ TRANSMIT DATA│
  └──────────────┘
        │                         │
        ▼                         ▼
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HUAWEI.** Downlink 8TX codebook. *3GPP DRAFT; R1-101066*
- **TEXAS INSTRUMENTS.** Possible Refinement on 8Tx Codebook Design. *3GPP DRAFT; R1-102104*
- **FUJITSU.** 8 Tx Codebook for LET-Advanced. *3GPP DRAFT; R1-101024*
- **CATT.** Codebook design for8Tx DL MIMO. *3GPP DRAFT; R1-100890*